# EUROPEAN PATENT SPECIFICATION

(11) **EP 2 060 345 B1**
(45) Date of publication and mention of the grant of the patent: **11.11.2015**
(21) Application number: 07807308.7
(22) Date of filing: 07.09.2007
(51) Int. Cl.: C22C 18/00, B22F 1/00, B22F 9/04, C09D 5/10, C09D 7/12, C09D 201/00, C22C 18/04

(54) **Zn ALLOY PARTICLES FOR HIGHLY ANTICORROSIVE AND RUST-INHIBITING PAINT, PROCESS FOR PRODUCTION OF THE PARTICLES, HIGHLY ANTICORROSIVE AND RUST-INHIBITING PAINT CONTAINING THE PARTICLES, HIGHLY CORROSION-RESISTING STEEL MATERIAL COATED WITH THE PAINT, AND STEEL STRUCTURES MADE BY USING THE STEEL MATERIAL**
ZN-LEGIERUNGSTEILCHEN FÜR HOCH KORROSIONSSCHÜTZENDE UND ROSTHEMMENDE FARBE, VERFAHREN ZUR HERSTELLUNG DER TEILCHEN, DIE TEILCHEN ENTHALTENDE HOCH KORROSIONSSCHÜTZENDE FARBE, MIT DER FARBE BESCHICHTETES KORROSIONSBESTÄNDIGES STAHLMATERIAL UND DURCH VERWENDUNG DES STAHLMATERIALS HERGESTELLTE STAHLSTRUKTUREN
PARTICULES D'ALLIAGE DE Zn POUR PEINTURE HAUTEMENT ANTICORROSIVE ET ANTIROUILLE, PROCÉDÉ DE PRODUCTION DES PARTICULES, PEINTURE HAUTEMENT ANTICORROSIVE ET ANTIROUILLE CONTENANT LES PARTICULES, MATÉRIAU EN ACIER HAUTEMENT RÉSISTANT A LA CORROSION REVÊTU AVEC LA PEINTURE, ET STRUCTURES EN ACIER FAI

(30) Priority: 08.09.2006 JP 2006244346; 13.04.2007 JP 2007106040; 04.09.2007 JP 2007229254
(43) Date of publication of application: 20.05.2009
(73) Proprietor: Nippon Steel & Sumitomo Metal Corporation, Tokyo 100-8071 (JP)
(72) Inventor: KATOH, Kenji, Tokyo 100-8071 (JP); NAGASAWA, Makoto, Tokyo 100-8071 (JP); ITO, Minoru, Tokyo 100-8071 (JP); KANEKO, Michio, Tokyo 100-8071 (JP); IMAI, Shiro, Yokohama-shi, Kanagawa 2210052 (JP); KOMINAMI, Masatoshi, Kitakyushu-shi Fukuoka 805-8501 (JP); TERAKAWA, Toshiro, Himeji-shi Hyogo 671-1241 (JP); KUMAI, Takashi, Himeji-shi Hyogo 671-1241 (JP)
(74) Representative: Vossius & Partner Patentanwälte Rechtsanwälte mbB
(86) International application number: PCT/JP2007/067901
(87) International publication number: WO 2008/029960

(56) References cited:
- JP-A- 10 280 012
- JP-A- 58 129 070
- JP-A- 59 052 645
- JP-A- 2004 315 871
- JP-A- 2005 336 432
- US-A- 3 464 906

## Description

### TECHNICAL FIELD

The present invention relates to Zn alloy particles for high corrosion resistance rust protection paint having physical fracture facets and/or cracks and imparting remarkably superior high corrosion resistance and rust protection, a method of production of said Zn alloy particles, a high corrosion resistance rust protection paint containing said Zn alloy particles, a high corrosion resistance steel material coated with said paint, and a steel structure having said steel material.

### BACKGROUND ART

As a countermeasure to corrosion of ferrous metal materials, much use has been made of zinc-rich paints made using a zinc powder containing unavoidable impurities as a pigment and organic materials and/or inorganic materials as a vehicle (liquid binder ingredient).

Zinc-rich paints are mainly used as primers for heavy duty corrosion protection paint. The corrosion protection mechanism features the sacrificial corrosion protection of the zinc powder contained in a coat.

Further, the corrosion protection of a coat of a zinc-rich paint is strongly dependent on the extent of the sacrificial corrosion protection of the zinc powder, so depending on the usage environment, the rate of consumption of the zinc sometimes becomes larger and the corrosion protection on the ferrous metal material will not last long.

Therefore, in the past, the practice has been to increase the content of the zinc powder in the coat or increase the coat thickness, but as a result a drop in the adhesion with the surface of the steel material, cracking or sagging of the coat, etc. easily occur.

In the end, it is difficult to realize both the corrosion protection performance of the coat and the physical properties or coating ability. Measures increasing the content of the zinc powder in the coat are not perfect.

In view of this situation, development of a high performance zinc-rich paint able to maintain the advantages of conventional zinc-rich paints and furthermore exhibit a sacrificial corrosion protection over a long period of time has been hoped for. Up until now, various proposals have been made.

For example, Japanese Patent Publication (A) No. 59-52645 and Japanese Patent Publication (A) No. 59-167249 propose an organic-based zinc-rich paint containing not only a zinc powder, but also a Zn-Mg alloy powder, while Japanese Patent Publication (A) No. 59-198142 proposes an organic-based zinc-rich paint containing not only a zinc powder, but also a Zn-Mg alloy powder and Mn powder.

Furthermore, Japanese Patent Publication (A) No. 1-311178 discloses the long lasting corrosion protection performance of a Zn-(5 to 15%)Mg alloy powder in an organic paint, while Japanese Patent Publication (A) No. 2-73932 discloses the long lasting corrosion protection performance of an organic coat containing an Zn-Mg alloy powder with a metal structure comprised of Zn and MgZn₂.

Further, Japanese Patent Publication (A) No. 11-343422 proposes a rust protection pigment for an organic-based corrosion resistant paint containing flake-shaped particles of Zn alloy containing Al, Mg, etc.

In addition to the above, Japanese Patent Publication (A) No. 2001-164194 proposes an organic-based zinc-rich paint obtained by crushing an ingot of Zn-Al-Mg-based alloy powder where over 50% of the alloy powder is an Al/Zn/Zn₂Mg eutectic structure, while Japanese Patent Publication (A) No. 2005-314501 proposes an organic-based paint for improving the corrosion resistance of cut parts of a high corrosion resistance galvannealed steel material containing a powder of a Zn-Al alloy containing Mg or Si, having a spherical or oval shape, and having a value of the ratio of maximum size and minimum size (maximum size/minimum size) of 1 to 1.5.

The above proposals try to improve the corrosion protection performance of an organic-based paint and the corrosion resistance by the combination of a new alloy powder.

However, a general organic-based paint has the secondary problems of deteriorating in a composite environment of UV rays, moisture, oxygen, etc. and requiring maintenance in relatively short cycles.

In such a situation, several proposals have been made up to now for the purpose of improving the corrosion protection performance of inorganic-based paints not having such defects of organic-based paints.

For example, while different in object from the present invention, Japanese Patent Publication (A) No. 61-213270 proposes a paint composition containing a mixture of a zinc powder and Mg or Mg alloy for the purpose of inhibiting paint deterioration at the time of welding and cutting.

On the other hand, Japanese Patent Publication (A) No. 2000-80309 proposes a corrosion resistant paint having three types of phases, a Zn phase, Zn-Mg alloy phase, and Zn and Mg solid solution phase, as main ingredients and having these mixed in inorganic-based paint as powder particles and a corrosion resistant ferrous metal material coated with this paint.

The proposal of Japanese Patent Publication (A) No. 2000-80309 is noteworthy as being a fundamental means for improving corrosion resistance, but according to studies of the inventors, there are actually both cases where the corrosion resistance is improved and cases where the improvement in the corrosion resistance is not clear. There are questions as to the stability of the effect of improvement of the corrosion resistance.

Further, Japanese Patent Publication (A) No. 2002-285102 and Japanese Patent Publication (A) No. 2005-336431 propose an inorganic-based corrosion resistant paint containing flake-shaped particles of a Zn alloy containing Mg etc. and a corrosion resistant ferrous metal material coated with that paint.

However, including the proposal of Japanese Patent Publication (A) No. 11-343422, in the above proposals, the particles have flake shapes, so the new problem is caused that spray coating is difficult.

### DISCLOSURE OF THE INVENTION

The present invention has as its object the provision of Zn alloy particles for high corrosion resistance rust protection paint having coatability and economy able to impart unprecedented, long lasting superior corrosion resistance and rust prevention to a ferrous metal material etc., a method of production of said Zn alloy particles, a high corrosion resistance rust prevention paint containing said Zn alloy particles, and a high corrosion resistance ferrous metal material and steel structure coated with that paint and as a result greatly extended in maintenance cycles.

The inventors engages in various studies and as a result newly discovered that non-flake-shaped particles comprised of Mg in 0.01 mass% to 30 mass% and a balance of Zn containing unavoidable impurities and having physical fracture facets and/or cracks exhibit remarkably superior corrosion resistance, rust protection, and coatability. This discovery is a discovery forming the basis of the present invention.

Furthermore, the inventors studied in detail the possibility of further improvement of the corrosion resistance and rust protection of said particles having physical fracture facets and/or cracks and as a result discovered that if the Zn alloy particles having physical fracture facets and/or cracks contain, by mass%, one or both of Al: 0.01 to 30% and Si: 0.01 to 3%, a more superior rust protection is exhibited and, further, that by arranging one or more of MgZn₂, Mg₂Zn₁₁, Mg₂Zn₃, MgZn, and Mg₇Zn₃ at the fracture facets and/or cracks, a more superior corrosion resistance is exhibited.

The inventors also simultaneously studied the shapes of particles after fracture and as a result discovered that when the number of facets of an aspherical polyhedron after fracture is two facets or more, the self dissolution can be further reduced without impairing the rust protection performance, that is, the sacrificial corrosion protection effect.

Further, the inventors studied the size of cracks and as a result discovered that if the length is 0.01 µm or more or the depth is 0.01 µm or more, the corrosion protection is remarkably improved.

The mechanism of improvement of the corrosion resistance when the particles have surface cracks is not clear.

The fact that if there are cracks in the particle surfaces, the surface areas of the Zn alloy particles become larger and an Mg solid solution phase and intermetallic compounds easily form at the crack surfaces and, further, that the activity of the Zn alloy particles themselves is improved are believed to be part of the reasons for the improvement of the corrosion resistance, but effects beyond what is expected to be caused by these are exhibited. In the final analysis, the details are unclear.

Further, the inventors studied means for obtaining particles having fracture facets and/or cracks.

As a result, the inventors discovered that rather than obtaining fractured pieces by a ball mill, beads mill, or other means used as general fracture methods in the past, making the primary particles impact each other or making particles impact with a solid so as to obtain particles having physical fracture facets and/or cracks with more superior corrosion resistance and rust prevention and, furthermore, making the primary particles disperse in a solvent to obtain a slurry and make them impact and fracture, particles having physical fracture facets and/or cracks can be obtained with a good work efficiency without impairing the superior corrosion resistance and rust protection.

The Zn alloy particles having fracture facets and/or cracks give a superior corrosion resistance and rust protection even if used as is as a pigment for a paint, but the inventors engaged in further studies and as a result discovered that if using these mixed together with the Zn particle pigment generally used as a pigment in the past, a remarkably superior corrosion resistance and rust protection are given compared with a pigment using Zn particles alone.

Furthermore, the inventors discovered that when using Zn alloy particles having fracture facets and/or cracks to make a paint, if mixing the particles of the present invention as a pigment in an organic paint, an unprecedented superior corrosion resistance and rust protection are imparted even under a harsh composite environment of UV rays, moisture, oxygen, etc.

The present invention is based on the above discovery and has as its gist the following:
(1) Zn alloy particles for high corrosion resistance rust prevention paint containing, by mass%, Mg: 0.01 to 30% and having a balance of Zn and unavoidable impurities, having physical fracture facets and/or cracks of a length of 0.01 µm or more or cracks of a depth of 0.01 µm or more, having an average particle size of 0.05 to 200 µm, and having an aspect ratio of maximum size and minimum size (maximum size/minimum size) of an average value of 1 to 1.5.
(2) Zn alloy particles for high corrosion resistance rust prevention paint as set forth in (1), characterized in that said Zn alloy particles further contain, by mass%, one or both of Al: 0.01 to 30% and Si: 0.01 to 3%
(3) Zn alloy particles for high corrosion resistance rust prevention paint as set forth in (1) or (2), characterized by having an Mg solid solution phase and Zn-Mg intermetallic compounds on the surface of said Zn alloy particles.
(4) Zn alloy particles for high corrosion resistance rust prevention paint as set forth in (3), characterized in that said Zn-Mg intermetallic compounds include at least one type of compound of MgZn₂, Mg₂Zn₁₁, Mg₂Zn₃, MgZn, and Mg₇Zn₃.
(5) Zn alloy particles for high corrosion resistance rust prevention paint as set forth in any one of (1) to (4), characterized in that said Zn alloy particles are shaped as aspherical polyhedrons with two or more facets.
(6) A method of production of Zn alloy particles for high corrosion resistance rust prevention paint as set forth in any one of (1) to (5), said method of production of Zn alloy particles for high corrosion resistance rust prevention paint characterized by making primary particles comprised of the composition of ingredients as described in (1) or (2) and having an average particle size of 0.05 to 1000 µm impact each other or making said primary particles impact a solid to fracture said primary particles to produce Zn alloy particles having physical fracture facets and/or cracks.
(7) A method of production of Zn alloy particles for high corrosion resistance rust prevention paint as set forth in (6) characterized by making said primary particles disperse in an organic solvent to make a slurry, then making the slurry impact itself or making said slurry impact a solid to fracture the primary particles.
(8) A high corrosion resistance rust prevention paint characterized by containing Zn alloy particles for high corrosion resistance rust prevention paint as set forth in any of (1) to (5) in 30 mass% or more converted to dry coat.
(9) A high corrosion resistance rust prevention paint as set forth in (8) characterized by comprising a high corrosion resistance rust prevention paint containing, in addition to said Zn alloy particles, Zn metal particles having an average particle size of 0.05 to 50 µm comprised of Zn and unavoidable impurities and by having an x of 300.0 or less when defining, by mass%, (mass% of said Zn alloy particles):(mass% of said Zn metal particles) as 1/x.
(10) A high corrosion resistance rust prevention paint as set forth in (8) or (9) characterized by having, by mass%, a content of Mg of 0.01 to less than 30% when the total of said Zn alloy particles and said Zn metal particles is defined as 100%.
(11) A high corrosion resistance rust prevention paint as set forth in any one of (8) to (10) characterized in that a binder of said high corrosion resistance rust prevention paint is an inorganic binder or organic binder.
(12) A ferrous metal material coated with a high corrosion resistance rust prevention paint as set forth in any one of (8) to (10) on its surface, said high corrosion resistance ferrous metal material characterized in that a coating thickness is 2 to 700 µm and in that Zn alloy particles, or Zn alloy particles and Zn metal particles, are dispersed in the coat.
(13) A steel structure characterized by being provided with a high corrosion resistance ferrous metal material as set forth in (12) as part or all of the same.

If coating a high corrosion resistance rust prevention paint containing Zn alloy particles having physical fracture facets and/or cracks of the present invention, it is possible to give ferrous metal material etc. unprecedented long-lasting superior corrosion resistance and rust prevention without impairing the coatability and economy. Further, as a result, it is possible to provide a high corrosion resistance ferrous metal material and steel structure able to greatly extend the maintenance cycles.

### BEST MODE FOR CARRYING OUT THE INVENTION

The high corrosion resistance Zn alloy particles of the present invention contain Mg: 0.01 to 30% and have a balance of Zn and unavoidable impurities, have physical fracture facets and/or cracks, have an average particle size of 0.05 to 200 µm, and have an aspect ratio of the maximum size and minimum size (maximum size/minimum size) of 1 to 1.5.

In the Zn alloy particles of the present invention, Mg has to be 0.01 to 30%.

When having physical fracture facets and having an average particle size of 0.05 to 200 µm, even if Mg is less than 0.01%, a significant improvement is recognized in the corrosion resistance and corrosion protection compared with Zn alloy particles not having physical fracture facets and containing the same amount of Mg, but the remarkable effect of improvement of the corrosion resistance and corrosion protection expected due to the combination with the physical fracture facets and/or cracks is not obtained.

That is, the remarkable effect of improvement of the corrosion resistance and rust prevention due to the Zn alloy particles having physical fracture facets and/or cracks and containing Mg in 0.01% or more, that is, the remarkable effect of improvement of the corrosion resistance and rust prevention due to the synergistic effect of the physical fracture facets and/or cracks and the 0.01% or more Mg, is the basic technical idea of the present invention.

If Mg is contained over 30%, not only is the effect of improvement saturated, but also the economy and production efficiency are impaired, so the Mg was made 0.01% to 30%.

Here, the optimum value of the amount of Mg changes depending on the average particle size. In general, in the case of an average particle size of 0.2 to 30 µm considered optimum in spray coating, making the lower limit 0.1% and the upper limit 20% is preferable from the viewpoint of the effect of improvement of the corrosion resistance and corrosion protection and economy.

Furthermore, if considering the production stability, economy, and corrosion resistance, the amount of Mg is preferably 0.2 to 15%.

The "physical fracture facets" referred to in the present invention mean facets of shapes formed by parts of the spherical particles being removed. By the Zn alloy particles having physical fracture facets, as explained later, the effect of improvement of the corrosion resistance and corrosion protection is remarkably obtained.

Further, the "cracks" referred to in the present invention means cracks present on the spherical particle surface having a length of 0.01 µm or more or a depth from the surface of 0.01 µm or more. When the cracks have a length or depth of less than 0.01 µm, a sufficient corrosion resistance improvement effect is not obtained. A length or depth of 0.01 µm or more is required.

The average particle size of the Zn alloy particles is made 0.05 µm or more to secure the adhesiveness required at the time of spray coating and is made 200 µm or less to secure the work stability at the time of brush coating. If considering the coating stability, 0.2 to 50 µm is preferable. Further, if considering the coat adhesion, 0.2 to 30 µm is preferable.

The aspect ratio (maximum size/minimum size) of the particles was made an average value of 1 to 1.5 to secure coatability.

When predicated on spray coating, if the aspect ratio of the particles is over 2, the particle spraying and flight stability falls and the coat thickness and particle distribution stability in the coat falls.

If there are physical fracture facets and/or cracks on the particles, their stability falls somewhat, so considering this, the aspect ratio of the particles was made an average value of 1 to 1.5.

Therefore, even if particles with an aspect ratio exceeding 1.5 are partially present, they do not pose a problem.

Furthermore, the above range of the aspect ratio defines the Zn alloy particles in the material state and does not define the shape of Zn alloy particles in the case of absorbing the moisture etc. in the air and coagulating and coalescing before actually being used mixed in the paint or Zn alloy particles in the case of coalescence of particles cured on the steel material as a coat.

Further, at the time of production or storage, small relief shapes form at the Zn alloy powder surface, but the changes in shape due to these are not out of the range of spherical or oval shapes with an average value of the aspect ratio of 1 to 1.5.

Furthermore, the particles of the above constitution of the present invention may contain one or both of Al: 0.01 to 30% and Si: 0.01 to 3%.

If adding Al to the particles having physical fracture facets and/or cracks in an amount of 0.01% or more, the rust protection is further improved.

If making the amount of Al 0.01% or more, in addition to the rust protection, the corrosion resistance against self corrosion of the particles is remarkably improved, but even if added over 30%, not only does the effect become saturated, but also it becomes difficult to form physical fracture facets and/or cracks in the metal particles, so the amount of Al was made 0.01 to 30%.

Furthermore, from the viewpoint of production stability and corrosion resistance, the amount of Al is preferably 0.5 to 20%. Furthermore, if considering economy, 1.0 to 10% is preferable.

Si similarly improves the rust prevention if added in an amount of 0.01% or more to the particles having physical fracture facets and/or cracks. However, if adding Si over 3%, the rust prevention conversely deteriorates, so the amount of Si was made 0.01 to 3%.

From the viewpoint of production stability and corrosion resistance, the amount of Si is preferably 0.5 to 3%. Furthermore, if considering economy, 1.0 to 1.5% is preferable.

In the Zn alloy particles having physical fracture facets and/or cracks of the present invention, by giving the surfaces of the particles including the fractured parts and/or cracks an Mg solid solution phase and Zn-Mg intermetallic compounds, the corrosion resistance and the rust prevention are further improved.

The reason why the exposure of the Mg solid solution phase and Zn-Mg intermetallic compounds at the particle surfaces causes an improvement in the corrosion resistance and rust prevention is not clear, but the inventors confirm experimentally that if one or both of these phases coexist at the fracture facets and/or cracks, the chemical properties of these phases change to ones more preferable for improvement of the corrosion resistance and rust prevention and the corrosion resistance and rust prevention are stably improved.

The Mg solid solution phase and Zn-Mg intermetallic compounds can be identified by analyzing the ratio of composition of Mg and Zn of the surfaces of the physical fracture facets or cracks by observation by the X-ray diffraction method or a scanning electron microscopy equipped with an energy dispersion type X-ray analyzer.

In the present invention, by including, as said intermetallic compound phase, at least one type of compound of MgZn₂, Mg₂Zn₁₁, Mg₂Zn₃, MgZn, and Mg₇Zn₃, the corrosion resistance and the rust prevention are improved more.

MgZn₂, Mg₂Zn₁₁, Mg₂Zn₃, MgZn, and Mg₇Zn₃ can be identified by analyzing the ratio of composition of Mg and Zn of the surfaces of the physical fracture facets or cracks by observation by the X-ray diffraction method or a scanning electron microscopy equipped with an energy dispersion type X-ray analyzer.

In the above way, the Zn alloy particles having physical fracture facets and/or cracks of the present invention can improve the corrosion resistance and rust prevention to an unprecedented extent by imparting at least one physical fracture facet and/or cracks and simultaneously controlling the chemical composition of the metal particles.

Further, the Zn alloy particles having physical fracture facets and/or cracks of the present invention can simultaneously give a more superior corrosion resistance, rust prevention, and coatability by making the shape of the particles having fracture facets a polyhedron close to a nonflat shape (cracks not included at the surface) having two or more facets.

From the viewpoint of the improvement of the corrosion resistance and rust prevention, the greater the number of physical fracture-facets, the better, but with just one or no fracture facet, while the reason is not clear at the present point of time, the effect of improvement of the effect greatly varies.

Further, when the average aspect ratio is more than 2 and the shape is extremely flat, the work efficiency at the time of coating falls, so this is not preferred. Therefore, the shapes of the particles are defined as being polyhedrons close to non-flat spheres (average value of aspect ratio of 1 to 1.5) having two or more facets.

This range of shapes defines the Zn alloy particles in the material state and does not define the shape of Zn alloy particles in the case of Zn alloy particles absorbing the moisture etc. in the air and coagulating and coalescing before actually being used mixed in paints or in the case of curing and coalescing on the steel material as a coat.

At the time of production or storage, small relief shapes form at the Zn alloy powder surface, but the changes in shape due to these are not out of the range of spherical or oval shapes with an average value of the aspect ratio of 1 to 1.5.

Next, the method of production of the Zn alloy particles of the present invention will be explained.

When producing the Zn alloy particles having physical fracture facets and/or cracks of the present invention, if using the ball mill or beads mill generally used in the past to try to impact physical fracture facets and/or cracks to the particles, the Zn alloy particles greatly deform.

That is, even among the fracture facets and/or cracks, a rolling force and shearing force greatly act. It is extremely difficult to satisfy the value of the aspect ratio of the present invention and obtain Zn alloy particles having physical fracture facets and/or cracks.

When producing the Zn alloy particles having physical fracture facets and/or cracks of the present invention, first primary particles comprised of the chemical composition defined in claim 1 or 2 are produced, then the primary particles are made to impact each other or impact a solid to fracture the primary particles and form physical fracture facets and/or cracks on the primary particles of the Zn alloy particles.

When using impact to obtain physical fracture facets and/or cracks, a large individual mass enables the kinetic energy contributing to physical surface fractures and/or cracks at the time of impact to be secured, but experimentally, if the average particle size of the primary particles is over 1000 µm, the work time for obtaining the maximum average particle size of 200 µm aimed at by the present invention remarkably increases.

On the other hand, Zn alloy particles having physical fracture facets and/or cracks and having a minimum average particle size of 0.05 µm can be obtained by using primary particles having an average particle size of 0.05 µm or more and increasing the number of times of impact.

Due to the above reasons, in the present invention, the average particle size of the primary particles is made 0.05 to 1000 µm.

The average particle size of the primary particles, to improve the corrosion resistance and rust protection, is preferably 0.05 to 100 µm. Furthermore, to reliably improve the corrosion resistance and rust protection, it is preferably 0.05 to 30 µm.

Here, the "primary particles" mean Zn alloy particles before said impact or fractures. When obtaining the primary particles, the mist method, atomization method, ingot method, or any other method can be used.

Further, as the solid used for impacting said primary particles, in addition to a solid having a flat surface and/or curved surface, it is possible to use solid particles formed with a curved surface or solid particles formed with only flat surfaces.

Here, the material of the solid and solid particles has to be higher in hardness compared with the primary particles. Further, it preferably does not have reactivity when in contact under a water environment. As solids satisfying this requirement, a metal, sintered body, etc. may be mentioned.

In the production of Zn alloy particles by making primary particles impact each other or a solid and forming physical fracture facets and/or cracks on Zn alloy particles, it is possible to use a solvent as the medium for conveying the primary particles and more efficiently produce the Zn alloy particles having physical fracture facets and/or cracks targeted with a good efficiency.

The solvent is not limited in type so long as having a larger specific gravity compared with various gases including air. However, primary particles and Zn alloy particles given fracture facets and/or cracks are high in reaction activity, so the solvent has to be one with a low reaction activity with a metal having the chemical composition of the present invention.

When the solvent is particularly high in reaction activity and contains water as an impurity, the water has to be limited to 0.3 wt% or less.

In the present invention, the solvent is not limited, but toluene, xylene, or another organic solvent is suitable.

When utilizing the Zn alloy particles having fracture facets and/or cracks of the present invention, it is necessary to include 30% or more in the coat. If less than 30 mass%, the effect of the corrosion resistance etc. is not obtained.

The upper limit of the content is not particularly limited, but if over 85%, the resin ingredient becomes smaller and defects easily occur in the coat, so the upper limit is preferably 85% or less.

Note that the resin ingredient in the coat is preferably at least 15% so as to secure coating formability.

Furthermore, if the content of said Zn alloy particles is 30% or more, it is also possible to add other powder particles. For example, for the purpose of aesthetic design, it is also possible to add Al, stainless steel, or another metal powder, titanium oxide, zinc oxide, or another oxide powder, talc, stone powder, or another body pigment.

Furthermore, when utilizing Zn alloy particles having fracture facets and/or cracks of the present invention, it is possible to mix Zn metal particles having an average particle size of 0.05 to 50 µm into the Zn alloy particles in a range of x: 300.0 or less when the ratio, by mass%, of the amount of Zn alloy particles and the amount of Zn metal particles is 1/x.

The Zn metal particles referred to here mean particles comprised of Zn and unavoidable impurities.

Further, by mixing said Zn metal particles and Zn alloy particles having fracture facets and/or cracks for use for a paint pigment, it is possible to obtain remarkably superior corrosion resistance and rust prevention compared with a pigment using Zn metal particles alone like in the past.

However, when the ratio of mass% of the amount of Zn alloy particles and amount of Zn metal particles is 1/x, if x is over 300.0, the effect of the Zn alloy particles on the improvement of the corrosion resistance and rust protection is not sufficiently exhibited. Therefore, x was made 300.0 or less. If considering corrosion resistance and economy, x is preferably 1 to 120. Furthermore, if considering the mixing stability, x is preferably 1 to 30.

In the present invention, the average particle size of the Zn metal particles used for the mixing is made 0.05 to 50 µm. The effect of improvement of the corrosion resistance in the present invention is recognized in a range of average particle size of the Zn metal particles mixed of 0.05 to 300 µm, but considering industrial stability and the inexpensively available average particle sizes, the average particle size of the Zn metal particles was made 0.05 to 50 µm.

On the other hand, the effect of mixing the Zn alloy particles having physical fracture facets and/or cracks of the present invention and Zn metal particles can be analyzed by the content of Mg contained in the total rust prevention pigment.

When the total, by mass%, of the mixed particles of the Zn alloy particles having physical fracture facets and/or cracks of the present invention and Zn metal particles is 100%, the content of Mg used may be made 0.01 to less than 30%.

The content of Mg may be suitably applied in accordance with the object, but 0.1 to 20%, where the effect of mixing Zn alloy particles having fracture facets and/or cracks and Zn metal particles becomes the most remarkable, is preferable from the viewpoint of the stability of the effect of improvement of the corrosion resistance. Further, if considering economy, 0.5 to 15% is more preferable.

Note that in the present invention, the type of the resin ingredient of the paint, that is, the base resin, is not particularly limited. Either an inorganic-based or organic-based binder may be utilized.

The present invention is not particularly limited, but when inorganically based, alkali silicate, alkyl silicate, etc. may be suitably used, while when organically based, an epoxy-based resin, modified epoxy resin, acryl-based resin, urethane-based resin, polyester resin, etc. may be suitably used.

Further, regarding the type of formulation of the curing agent as well, the single-liquid curing type, the two-liquid curing type, or other types using the effects of several liquids may be suitably used in accordance with the object.

Regarding the curing method as well, ordinary temperature curing, heated curing, UV curing, electron beam curing, water curing, etc. may be suitably used in accordance with the object.

The steel material and steel structure coated with the high corrosion resistance rust prevention paint of the present invention are not particularly limited, but to coat the paint of the present invention on the surface of a steel material or steel structure to obtain corrosion resistance or corrosion protection, the coat thickness has to be 2 µm or more.

Further, the ferrous metal materials and steel structures covered by the present invention are materials and structures coated with the high corrosion resistance rust prevention paint of the present invention to a thickness of 2 µm to 700 µm and are not limited by chemical composition of the steel material, shape, or structure. Further, they include ones with surfaces on which other corrosion protection means are jointly used.

Note that if considering economy and painting work efficiency, the thickness of the high corrosion resistance rust prevention paint of the present invention is preferably 2 to 300 µm.

While not limiting the present invention to this, as the painted objects, cast iron, carbon steel, specialty steel, stainless steel, corrosion resistant steel, welded joints, etc. may be mentioned. As shapes, thick-gauge steel plate, thin-gauge steel plate, steel pipe, steel rods, etc. and shapes obtained by working these may be mentioned.

Further, as structures, structures used under (1) car, ship, and other internal engine exhaust systems, boiler exhaust systems, low temperature heat exchangers, incinerator beds, and other high temperature moist corrosive environments, (2) bridges, support columns, interior and exterior building materials, roofing materials, doors and windows, kitchen members, various types of hand rails, guard rails, various types of hooks, roof drains, railroad cars, and other atmospheric corrosive environments, (3) various types of water storage tanks, support columns, piles, sheet piles, and other soil corrosive environments, (4) can containers, various types of containers, low temperature heat exchangers, bathroom members, automobile structural members, and other condensation corrosive environments (including composite refrigerated, moist, and dry corrosive environments), (5) water storage tanks, cold water pipes, hot water pipes, can containers, various types of containers, eating utensils, cooking utensils, bathtubs, pools, sinks, and other tap water corrosive environments, (6) various types of containers, eating utensils, cooking utensils, and other drinking water corrosive environments, (7) various types of steel reinforced structures, support columns, and other concrete corrosive environments, (8) ships, bridges, piles, sheet piles, marine structures, and other seawater corrosive environments, etc. may be mentioned.

Note that in the present invention, as other corrosion protection means able to be jointly used with, there are plating, painting, galvanic corrosion prevention, etc.

### EXAMPLES

### Example 1

Below, examples will be used to explain the present invention.

Under the conditions shown in Tables 1 to 14, painting test pieces were prepared. Primary particles of Zn alloy particles were prepared using the gas atomization method.

Furthermore, Zn alloy particles were made to impact each other or Zn alloy particles were made to impact a solid to prepare secondary particles or Zn alloy particles were added to toluene or xylene with a moisture content of 0.3% or less to make a slurry and the method of making the particles impact each other or impact a solid was used to prepare secondary particles so as to produce Zn alloy particles having physical fracture facets and/or cracks.

Zn alloy particles without physical fracture facets and/or cracks were produced by a beads mill or ball mill. The average particle size was measured by the laser diffraction scattering method. Therefore, the particle size was evaluated as the sphere equivalent diameter.

Further, the average value of the aspect ratio was measured by observation of 50 to 100 randomly extracted particles by a scan type electron microscope.

Paints were prepared by the general method. For the base resin, that is, the binder, a commercially available alkali silicate or alkyl silicate resin inorganic binder or four types of commercially available organic binders were used.

The prepared paints were applied to steel plates by brushing or spraying. As an evaluation test, a salt water spray test shown in JIS K5600 (5% NaCl sprayed at 35 degrees Celsius) was performed.

As painting test pieces, 150×70×3.2 mm test pieces were used. At the bottom of the test pieces, cross-cuts were made by a cutter.

The corrosion resistance was evaluated by the time for formation of red rust from the test piece surface. Formation at 900 hours or less was evaluated as "poor", formation at 900 to 2000 hours as "good", and formation at 2000 hours or more as "very good".

From Tables 1 to 14, it is learned that the painting test pieces using the Zn alloy particles of the present invention exhibit superior corrosion resistance both with inorganic-based binders and organic-based binders.

**Table 1**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example1 | 12.3 | F | 0.02 | 1.05 | 30 | alkali silicate | 2 | Brushing | good |
| Inv. Example2 | 0.8 | F | 27.89 | 1.12 | 34 | alkyl silicate | 70 | Brushing | very good |
| Inv. Example3 | 1 | F | 0.32 | 1.23 | 42 | alkali silicate | 2 | Spraying | good |
| Inv. Example4 | 2.3 | F | 11.44 | 1.36 | 51 | alkyl silicate | 20 | Spraying | very good |
| Inv. Example5 | 15.6 | F | 1.05 | 1.11 | 33 | alkali silicate | 3 | Brushing | good |
| Inv. Example6 | 6.7 | F | 36.47 | 1.07 | 64 | alkyl silicate | 80 | Brushing | very good |
| Inv. Example7 | 7.5 | F | 5.07 | 1.42 | 74 | alkali silicate | 24 | Brushing | very good |
| Inv. Example8 | 8.4 | F | 7.72 | 1.38 | 82 | alkyl silicate | 25 | Spraying | very good |
| Inv. Example9 | 9.3 | F | 8.32 | 1.22 | 37 | alkali silicate | 14 | Spraying | very good |
| Inv. Example10 | 10.4 | F | 10.05 | 1.14 | 42 | alkyl silicate | 17 | Spraying | very good |
| Inv. Example11 | 11.2 | F | 6.08 | 1.13 | 66 | alkali silicate | 15 | Spraying | very good |
| Inv. Example12 | 11.7 | F | 17.89 | 1.02 | 48 | alkyl silicate | 40 | Brushing | very good |
| Inv. Example13 | 21.5 | F | 19.54 | 1.06 | 33 | alkali silicate | 30 | Brushing | very good |
| Inv. Example14 | 13.4 | F | 21.08 | 1.05 | 75 | alkyl silicate | 35 | Brushing | very good |
| Inv. Example15 | 14.6 | F | 23.04 | 1.24 | 77 | alkali silicate | 42 | Brushing | very good |
| Inv. Example16 | 25.8 | F | 9.21 | 1.33 | 68 | alkyl silicate | 17 | Spraying | very good |
| Inv. Example17 | 16.7 | F | 0.12 | 1.27 | 61 | alkali silicate | 2 | Spraying | good |
| Inv. Example18 | 17.3 | F | 29.24 | 1.37 | 59 | alkyl silicate | 57 | Brushing | very good |
| Inv. Example19 | 18.5 | F | 128.74 | 1.10 | 39 | alkali silicate | 150 | Brushing | very good |
| Inv. Example20 | 19.3 | F | 33.57 | 1.04 | 42 | alkyl silicate | 67 | Brushing | very good |
| Inv. Example21 | 3.5 | F | 3.04 | 1.02 | 48 | alkali silicate | 15 | Spraying | very good |
| Inv. Example22 | 22.5 | F | 7.54 | 1.01 | 44 | alkyl silicate | 20 | Spraying | very good |
| Inv. Example23 | 23.7 | F | 6.81 | 1.08 | 47 | alkali silicate | 15 | Spraying | very good |
| Inv. Example24 | 24.2 | F | 5.25 | 1.14 | 52 | alkyl silicate | 13 | Spraying | very good |
| Inv. Example25 | 0.2 | F | 194.23 | 1.23 | 55 | alkali silicate | 200 | Brushing | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

**Table 2**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example26 | 27.1 | F | 28.74 | 1.33 | 69 | alkyl silicate | 37 | Brushing | very good |
| Inv. Example27 | 29.3 | F | 13.57 | 1.37 | 78 | alkali silicate | 27 | Brushing | very good |
| Inv. Example28 | 0.5 | F | 0.65 | 1.44 | 42 | alkyl silicate | 2 | Brushing | good |
| Inv. Example29 | 2.7 | F | 4.12 | 1.21 | 32 | alkali silicate | 15 | Spraying | very good |
| Inv. Example30 | 28.4 | F | 0.72 | 1.22 | 66 | alkyl silicate | 2 | Spraying | good |
| Inv. Example31 | 8.7 | F | 117.54 | 1.23 | 67 | alkali silicate | 130 | Brushing | very good |
| Inv. Example32 | 9.2 | F | 7.81 | 1.47 | 45 | alkyl silicate | 15 | Brushing | very good |
| Inv. Example33 | 17.8 | F | 80.25 | 1.01 | 48 | alkali silicate | 100 | Brushing | very good |
| Inv. Example34 | 20.2 | F | 8.47 | 1.04 | 68 | alkyl silicate | 17 | Spraying | very good |
| Inv. Example35 | 0.4 | F | 0.87 | 1.05 | 35 | alkali silicate | 2 | Spraying | good |
| Inv. Example36 | 13.7 | F | 25.78 | 1.12 | 37 | alkyl silicate | 36 | Spraying | very good |
| Inv. Example37 | 14.7 | F | 93.45 | 1.05 | 38 | alkali silicate | 100 | Brushing | very good |
| Inv. Example38 | 2.4 | F | 0.97 | 1.08 | 41 | alkyl silicate | 2 | Brushing | good |
| Inv. Example39 | 4.5 | F | 54.89 | 1.47 | 54 | alkali silicate | 60 | Brushing | very good |
| Inv. Example40 | 0.1 | F | 10.81 | 1.50 | 57 | alkyl silicate | 18 | Brushing | very good |
| Inv. Example41 | 30.0 | F | 18.24 | 1.13 | 59 | epoxy-based resin | 25 | Brushing | very good |
| Inv. Example42 | 24.5 | F | 114.78 | 1.04 | 64 | acryl-based resin | 120 | Brushing | very good |
| Inv. Example43 | 27.6 | F | 3.87 | 1.02 | 66 | urethane-based resin | 7 | Spraying | good |
| Inv. Example44 | 4.1 | F | 11.94 | 1.08 | 67 | polyester resin | 19 | Spraying | very good |
| Inv. Example45 | 3.2 | F | 142.58 | 1.15 | 75 | epoxy-based resin | 150 | Brushing | very good |
| Inv. Example46 | 2.7 | F | 12.5 | 1.34 | 74 | acryl-based resin | 19 | Brushing | very good |
| Inv. Example47 | 0.12 | F | 31.24 | 1.25 | 77 | urethane-based resin | 40 | Brushing | very good |
| Inv. Example48 | 0.22 | F | 152.46 | 1.19 | 41 | polyester resin | 160 | Brushing | very good |
| Inv. Example49 | 0.37 | F | 13.4 | 1.18 | 35 | epoxy-based resin | 22 | Spraying | very good |
| Inv. Example50 | 1.4 | F | 160.57 | 1.24 | 58 | acryl-based resin | 170 | Brushing | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

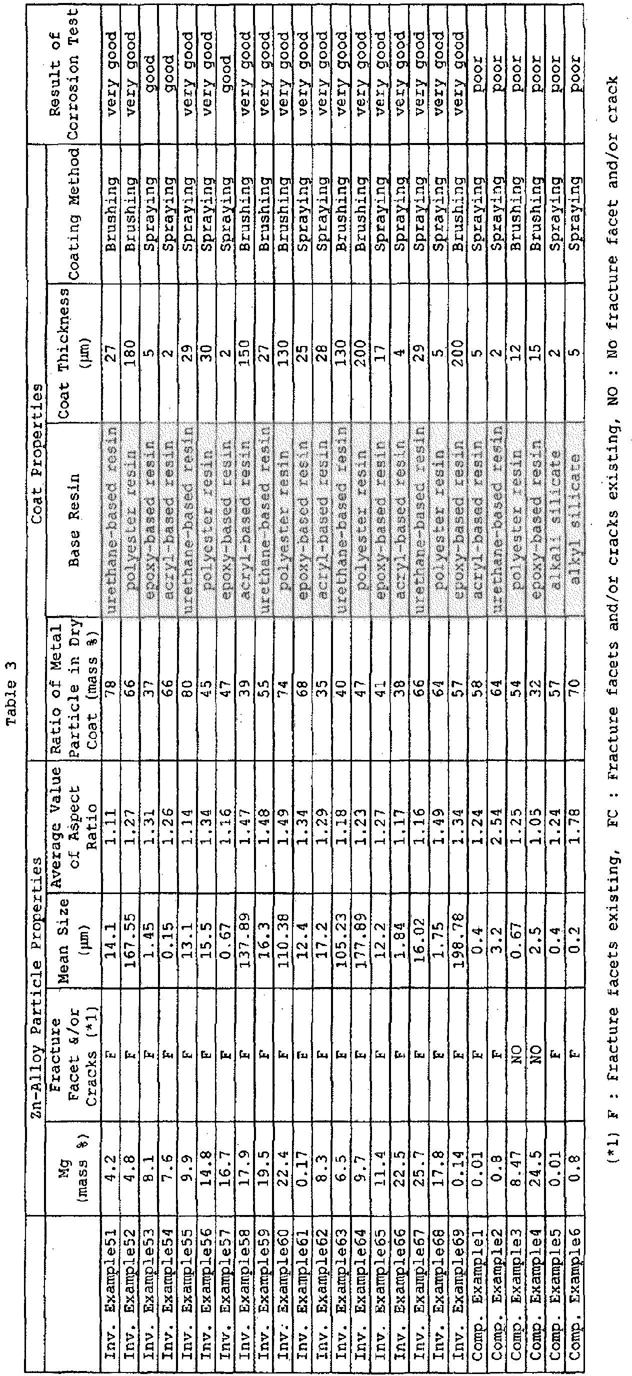

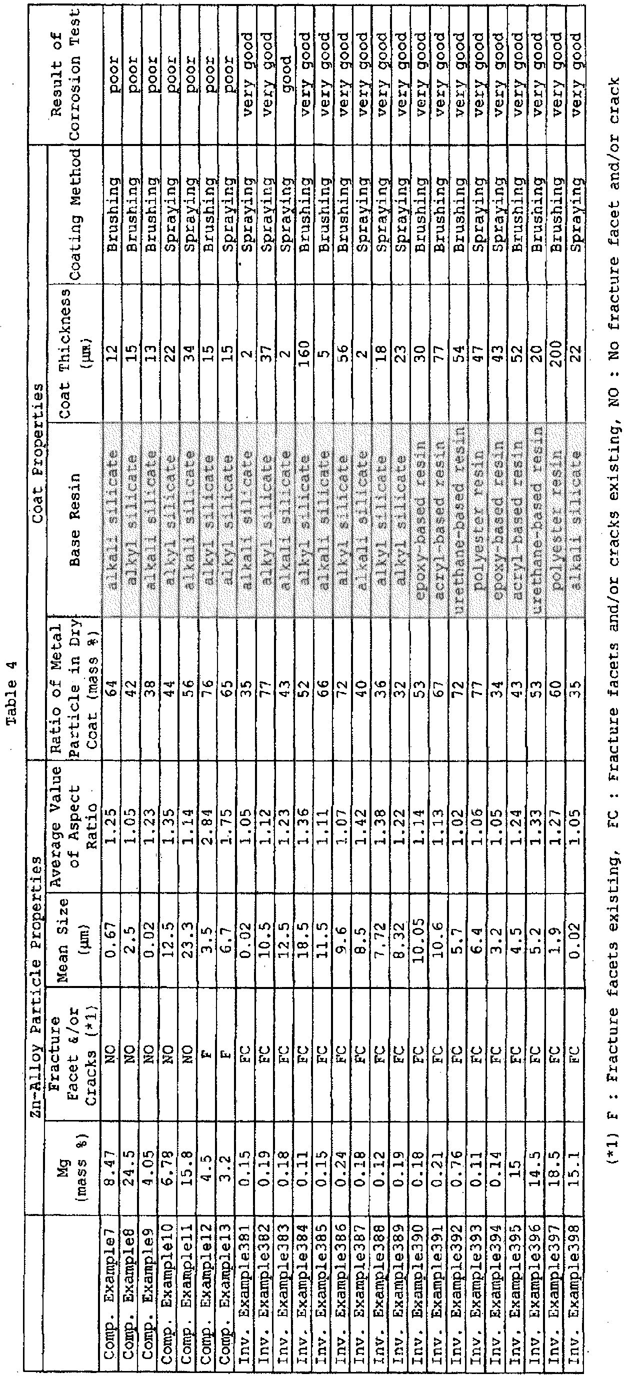

**Table 5**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example399 | 15.6 | FC | 10.5 | 1.12 | 77 | alkyl silicate | 25 | Spraying | very good |
| Inv. Example400 | 12.5 | FC | 12.5 | 1.23 | 43 | alkali silicate | 14 | Spraying | very good |
| Inv. Example401 | 18.7 | FC | 18.5 | 1.36 | 52 | urethane-based resin | 112 | Spraying | very good |
| Inv. Example402 | 14.5 | FC | 11.5 | 1.11 | 66 | alkali silicate | 24 | Spraying | very good |
| Inv. Example403 | 7.5 | FC | 9.6 | 1.07 | 72 | urethane-based resin | 150 | Spraying | very good |
| Inv. Example404 | 4.5 | FC | 8.5 | 1.42 | 40 | alkali silicate | 18 | Spraying | very qood |
| Inv. Example405 | 1.5 | FC | 7.72 | 1.38 | 36 | alkyl silicate | 19 | Brushing | very good |
| Inv. Example406 | 4.8 | FC | 8.32 | 1.22 | 32 | alkyl silicate | 24 | Spraying | very good |
| Inv. Example407 | 9.6 | FC | 10.05 | 1.14 | 53 | urethane-based resin | 99 | Spraying | very good |
| Inv. Example408 | 11.5 | FC | 10.6 | 1.13 | 67 | alkyl silicate | 7 | Spraying | very good |
| Inv. Example409 | 9.8 | FC | 5.7 | 1.02 | 72 | epoxy-based resin | 100 | Spraying | very good |
| Inv. Example410 | 7.6 | FC | 6.4 | 1.06 | 77 | alkyl silicate | 27 | Brushing | very good |
| Inv. Example411 | 3.2 | FC | 3.2 | 1.05 | 34 | alkali silicate | 15 | Spraying | very good |
| Inv. Example412 | 1.9 | FC | 4.5 | 1.24 | 43 | alkyl silicate | 14 | Spraying | very good |
| Inv. Example413 | 11.5 | FC | 5.2 | 1.33 | 53 | urethane-based resin | 55 | Spraying | very good |
| Inv. Example414 | 8.7 | FC | 1.9 | 1.27 | 35 | alkyl silicate | 8 | Spraying | verv good |
| Inv. Example415 | 9.6 | FC | 0.02 | 1.05 | 77 | urethane-based resin | 122 | Brushing | very good |
| Inv. Example416 | 9.4 | FC | 10.5 | 1.12 | 43 | alkyl silicate | 54 | Spraying | very good |
| Inv. Example417 | 10.5 | FC | 12.5 | 1.23 | 52 | alkali silicate | 19 | Spraying | very good |
| Inv. Example418 | 12.6 | FC | 18.5 | 1.36 | 66 | alkyl silicate | 25 | Brushing | very good |
| Inv. Example419 | 29.5 | FC | 11.5 | 1.11 | 72 | alkyl silicate | 58 | Spraying | very good |
| Inv. Example420 | 29.4 | FC | 9.6 | 1.07 | 40 | alkyl silicate | 21 | Spraying | very good |
| Inv. Example2421 | 27.5 | FC | 8.5 | 1.42 | 36 | alkali silicate | 19 | Brushing | very good |
| Inv. Example422 | 0.8 | FC | 7.72 | 1.38 | 32 | urethane-based resin | 56 | Spraying | very good |
| Inv. Example423 | 1.6 | FC | 8.32 | 1.22 | 53 | alkyl silicate | 77 | Spraying | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

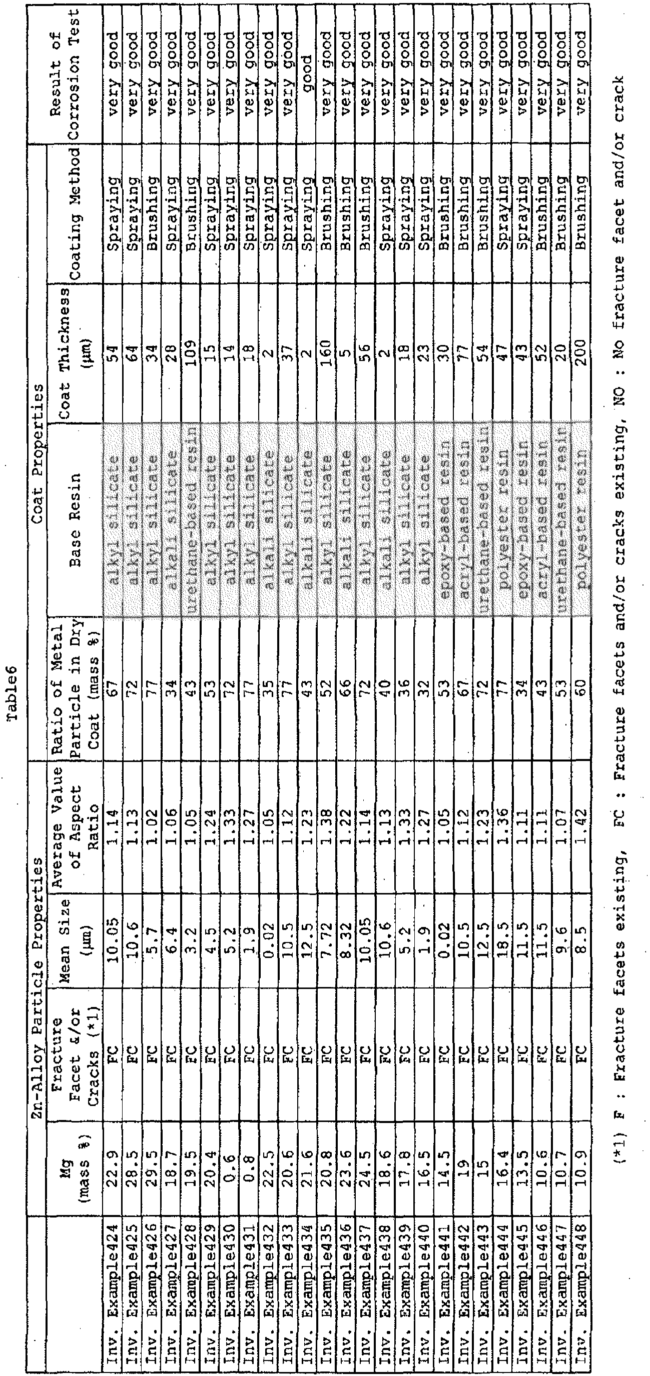

**Table7**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example449 | 11.6 | FC | 7.72 | 1.38 | 35 | alkali silicate | 22 | Spraying | very good |
| Inv. Example450 | 14.7 | FC | 8.32 | 1.22 | 77 | alkyl silicate | 25 | Spraying | very good |
| Inv. Example451 | 19.5 | FC | 10.05 | 1.14 | 43 | alkali silicate | 14 | Spraying | very good |
| Inv. Example452 | 10.2 | FC | 10.6 | 1.13 | 52 | urethane-based resin | 112 | Spraying | very good |
| Inv. Example453 | 4 | FC | 5.7 | 1.02 | 66 | alkali silicate | 24 | Spraying | very good |
| Inv. Example454 | 7.2 | FC | 6.4 | 1.06 | 72 | urethane-based resin | 150 | Spraying | very good |
| Inv. Example455 | 3.6 | FC | 3.2 | 1.05 | 40 | alkali silicate | 18 | Spraying | very good |
| Inv. Example456 | 26.9 | FC | 4.5 | 1.24 | 36 | alkyl silicate | 19 | Brushing | very good |
| Inv. Example457 | 27.9 | FC | 5.2 | 1.33 | 32 | alkyl silicate | 24 | Spraying | very good |
| Inv. Example458 | 28.9 | FC | 1.9 | 1.27 | 53 | urethane-based resin | 99 | Spraying | very good |
| Inv. Example459 | 23.8 | FC | 0.02 | 1.05 | 67 | alkyl silicate | 7 | Spraying | very good |
| Inv. Example460 | 26.8 | FC | 10.5 | 1.12 | 72 | epoxy-based resin | 100 | Spraying | very good |
| Inv. Example461 | 25.6 | FC | 12.5 | 1.23 | 77 | alkyl silicate | 27 | Brushing | very good |
| Inv. Example462 | 29.8 | FC | 18.5 | 1.36 | 34 | alkali silicate | 15 | Spraying | very good |
| Inv. Example463 | 18.9 | FC | 11.5 | 1.11 | 43 | alkyl silicate | 14 | Spraying | very good |
| Inv. Example464 | 5.6 | FC | 9.6 | 1.07 | 53 | urethane-based resin | 55 | Spraying | very good |
| Inv. Example465 | 4.7 | FC | 8.5 | 1.42 | 35 | alkyl silicate | 8 | Spraying | very good |
| Inv. Example466 | 6.8 | FC | 7.72 | 1.38 | 77 | urethane-based resin | 122 | Brushing | very good |
| Inv. Example467 | 9 | FC | 8.32 | 1.22 | 43 | alkyl silicate | 54 | Spraying | very good |
| Inv. Example468 | 2.1 | FC | 10.05 | 1.14 | 52 | alkali silicate | 19 | Spraying | very good |
| Inv. Example469 | 4.8 | FC | 10.6 | 1.13 | 66 | alkyl silicate | 25 | Brushing | very good |
| Inv. Example470 | 4.2 | FC | 5.7 | 1.02 | 72 | alkyl silicate | 58 | Spraying | very good |
| Inv. Example471 | 4.3 | FC | 6.4 | 1.06 | 40 | alkyl silicate | 21 | Spraying | very good |
| Inv. Example472 | 4 | FC | 3.2 | 1.05 | 36 | alkali silicate | 19 | Brushing | very good |
| Inv. Example473 | 3.7 | FC | 4.5 | 1.24 | 32 | urethane-based resin | 56 | Spraying | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

**Table 8**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example474 | 6.4 | FC | 5.2 | 1.33 | 53 | alkyl silicate | 77 | Spraying | very good |
| Inv. Example475 | 6.9 | FC | 1.9 | 1.27 | 67 | alkyl silicate | 54 | Spraying | very good |
| Inv. Example476 | 16.9 | FC | 0.02 | 1.05 | 72 | alkyl silicate | 64 | Spraying | very good |
| Inv. Example477 | 18.7 | FC | 10.5 | 1.12 | 77 | alkyl silicate | 34 | Brushing | very good |
| Inv. Example478 | 24.4 | FC | 12.5 | 1.23 | 34 | alkali silicate | 28 | Spraying | very good |
| Inv. Example479 | 10.6 | FC | 18.5 | 1.36 | 43 | urethane-based resin | 109 | Brushing | very good |
| Inv. Example480 | 15.8 | FC | 11.5 | 1.11 | 53 | alkyl silicate | 15 | Spraying | very good |
| Inv. Example481 | 19.5 | FC | 9.6 | 1.07 | 72 | alkyl silicate | 14 | Spraying | very good |
| Inv. Example482 | 7.8 | FC | 8.5 | 1.42 | 77 | alkyl silicate | 18 | Spraying | very good |
| Inv. Example483 | 4.9 | FC | 7.72 | 1.38 | 77 | urethane-based resin | 122 | Brushing | very good |
| Inv. Example484 | 10.8 | FC | 8.32 | 1.22 | 43 | alkyl silicate | 54 | Spraying | very good |
| Inv. Example485 | 3.8 | FC | 10.05 | 1.14 | 52 | alkali silicate | 19 | Spraying | very good |
| Inv. Example486 | 22.6 | FC | 10.6 | 1.13 | 66 | alkyl silicate | 25 | Brushing | very good |
| Inv. Example487 | 27.9 | FC | 5.7 | 1.02 | 72 | alkyl silicate | 58 | Spraying | very good |
| Inv. Example488 | 24.8 | FC | 6.4 | 1.06 | 40 | alkyl silicate | 21 | Spraying | very good |
| Inv. Example489 | 26.8 | FC | 3.2 | 1.05 | 36 | alkali silicate | 19 | Brushing | very good |
| Inv. Example490 | 25.9 | FC | 4.5 | 1.24 | 32 | urethane-based resin | 56 | Spraying | very good |
| Inv. Example491 | 9.8 | FC | 5.2 | 1.33 | 53 | alkyl silicate | 77 | Spraving | very good |
| Inv. Example492 | 5.6 | FC | 1.9 | 1.27 | 67 | alkyl silicate | 54 | Spraving | very good |
| Inv. Example493 | 12.3 | FC | 0.02 | 1.05 | 52 | alkali silicate | 2 | Spraying | very good |
| Inv. Example494 | 0.8 | FC | 27.89 | 1.12 | 55 | alkali silicate | 20 | Spraying | very good |
| Inv. Example495 | 1 | FC | 0.32 | 1.23 | 69 | alkali silicate | 5 | Spraying | very good |
| Inv. Example496 | 2.3 | FC | 11.44 | 1.36 | 78 | alkyl silicate | 20 | Spraying | very good |
| Inv. Example497 | 15.6 | FC | 1.05 | 1.11 | 42 | alkali silicate | 15 | Brushing | very good |
| Inv. Example498 | 6.7 | FC | 36.47 | 1.07 | 32 | alkyl silicate | 57 | Brushing | very good |
| Inv. Example499 | 7.5 | FC | 5.07 | 1.42 | 66 | alkali silicate | 13 | Brushing | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

**Table9**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example500 | 8.4 | FC | 7.72 | 1.38 | 67 | alkyl silicate | 22 | Brushing | very good |
| Inv. Example501 | 9.3 | FC | 8.32 | 1.22 | 64 | alkali silicate | 20 | Spraying | very good |
| Inv. Example502 | 10.4 | FC | 10.05 | 1.14 | 74 | alkyl silicate | 27 | Spraying | very good |
| Inv. Example503 | 11.2 | FC | 6.08 | 1.13 | 82 | alkali silicate | 15 | Spraying | very good |
| Inv. Example504 | 11.7 | FC | 17.89 | 1.02 | 37 | alkyl silicate | 35 | Spraying | very good |
| Inv. Example505 | 21.5 | FC | 19.54 | 1.06 | 42 | alkali silicate | 34 | Brushing | very good |
| Inv. Example506 | 13.4 | FC | 21.08 | 1.05 | 66 | alkyl silicate | 45 | Brushing | very good |
| Inv. Example507 | 14.6 | FC | 23.04 | 1.24 | 48 | alkali silicate | 52 | Brushing | very good |
| Inv. Example508 | 25.8 | FC | 9.21 | 1.33 | 33 | alkyl silicate | 23 | Brushing | very good |
| Inv. Example509 | 16.7 | FC | 0.12 | 1.27 | 75 | alkali silicate | 5 | Spraying | very good |
| Inv. Example510 | 17.3 | FC | 29.24 | 1.37 | 77 | alkyl silicate | 52 | Brushing | very good |
| Inv. Example511 | 18.5 | FC | 128.74 | 1.10 | 66 | alkali silicate | 150 | Brushing | very good |
| Inv. Example512 | 19.3 | FC | 33.57 | 1.04 | 67 | alkyl silicate | 60 | Brushing | very good |
| Inv. Example513 | 3.5 | FC | 3.04 | 1.02 | 45 | alkali silicate | 15 | Spraying | very good |
| Inv. Example514 | 22.5 | FC | 7.54 | 1.01 | 48 | alkyl silicate | 24 | Spraying | very good |
| Inv. Example515 | 23.7 | FC | 6.81 | 1.08 | 68 | alkali silicate | 34 | Spraying | very good |
| Inv. Example516 | 24.2 | FC | 5.25 | 1.14 | 35 | alkyl silicate | 20 | Brushing | very good |
| Inv. Example517 | 0.2 | FC | 194.23 | 1.23 | 37 | alkali silicate | 200 | Brushing | very good |
| Inv. Example518 | 27.1 | FC | 28.74 | 1.33 | 38 | alkyl silicate | 56 | Brushing | very good |
| Inv. Example519 | 29.3 | FC | 13.57 | 1.37 | 41 | alkali silicate | 34 | Spraying | very good |
| Inv. Example520 | 0.5 | FC | 0.65 | 1.44 | 54 | alkyl silicate | 2 | Spraying | very good |
| Inv. Example521 | 2.7 | FC | 4.12 | 1.21 | 57 | alkali silicate | 15 | Spraying | very good |
| Inv. Example522 | 28.4 | FC | 0.72 | 1.22 | 59 | alkali silicate | 10 | Spraying | very good |
| Inv. Example523 | 8.7 | FC | 117.54 | 1.23 | 64 | alkyl silicate | 125 | Brushing | very good |
| Inv. Example524 | 9.2 | FC | 7.81 | 1.47 | 66 | alkali silicate | 24 | Brushing | very good |
| Inv. Example525 | 17.8 | FC | 80.25 | 1.01 | 67 | alkyl silicate | 110 | Brushing | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

**Table10**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example526 | 20.2 | FC | 8.47 | 1.04 | 34 | alkali silicate | 24 | Brushing | very good |
| Inv. Example527 | 0.4 | FC | 0.87 | 1.05 | 54 | alkyl silicate | 2 | Spraying | very good |
| Inv. Example528 | 13.7 | FC | 25.78 | 1.12 | 62 | alkali silicate | 37 | Spraying | very good |
| Inv. Example529 | 14.7 | FC | 93.45 | 1.11 | 66 | alkyl silicate | 113 | Brushing | very good |
| Inv. Example530 | 2.4 | FC | 0.97 | 1.08 | 67 | alkali silicate | 2 | Spraying | very good |
| Inv. Example531 | 4.5 | FC | 54.89 | 1.47 | 68 | alkyl silicate | 75 | Brushing | very good |
| Inv. Example532 | 0.1 | FC | 10.81 | 1.50 | 33 | alkali silicate | 30 | Brushing | very good |
| Inv. Example533 | 30.0 | FC | 18.24 | 1.13 | 35 | alkyl silicate | 34 | Brushing | very good |
| Inv. Example534 | 24.5 | FC | 114.78 | 1.04 | 43 | epoxy-based resin | 124 | Brushing | very good |
| Inv. Example535 | 27.6 | FC | 3.87 | 1.02 | 44 | acryl-based resin | 15 | Spraying | very good |
| Inv. Example536 | 4.1 | FC | 11.94 | 1.08 | 43 | urethane-based resin | 23 | Spraying | very good |
| Inv. Example537 | 3.2 | FC | 142.58 | 1.15 | 44 | polyester resin | 157 | Brushing | very good |
| Inv. Example538 | 2.7 | FC | 12.5 | 1.34 | 54 | epoxy-based resin | 26 | Spraving | very good |
| Inv. Example539 | 0.12 | FC | 31.24 | 1.25 | 79 | acryl-based resin | 38 | Spraying | very good |
| Inv. Example540 | 0.22 | FC | 152.46 | 1.19 | 73 | urethane-based resin | 160 | Brushing | very good |
| Inv. Example541 | 0.37 | FC | 13.4 | 1.18 | 69 | polyester resin | 27 | Brushing | very good |
| Inv. Example542 | 1.4 | FC | 160.57 | 1.24 | 63 | epoxy-based resin | 180 | Brushing | very good |
| Inv. Example543 | 4.2 | FC | 14.1 | 1.11 | 35 | acryl-based resin | 26 | Spraying | very good |
| Inv. Example544 | 4.8 | FC | 167.55 | 1.27 | 35 | urethane-based resin | 180 | Brushing | very good |
| Inv. Example545 | 8.1 | FC | 1.45 | 1.31 | 66 | polyester resin | 15 | Spraying | very good |
| Inv. Example546 | 7.6 | FC | 0.15 | 1.26 | 67 | epoxy-based resin | 2 | Spraying | very good |
| Inv. Example547 | 9.9 | FC | 13.1 | 1.14 | 68 | acryl-based resin | 28 | Spraying | very good |
| Inv. Example548 | 14.8 | FC | 15.5 | 1.34 | 33 | urethane-based resin | 30 | Spraying | very good |
| Inv. Example549 | 16.7 | FC | 0.67 | 1.16 | 35 | polyester resin | 2 | Spraying | very good |
| Inv. Example550 | 17.9 | FC | 137.89 | 1.41 | 43 | epoxy-based resin | 157 | Brushing | very good |
| Inv. Example551 | 19.5 | FC | 16.3 | 1.48 | 44 | acryl-based resin | 28 | Brushing | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

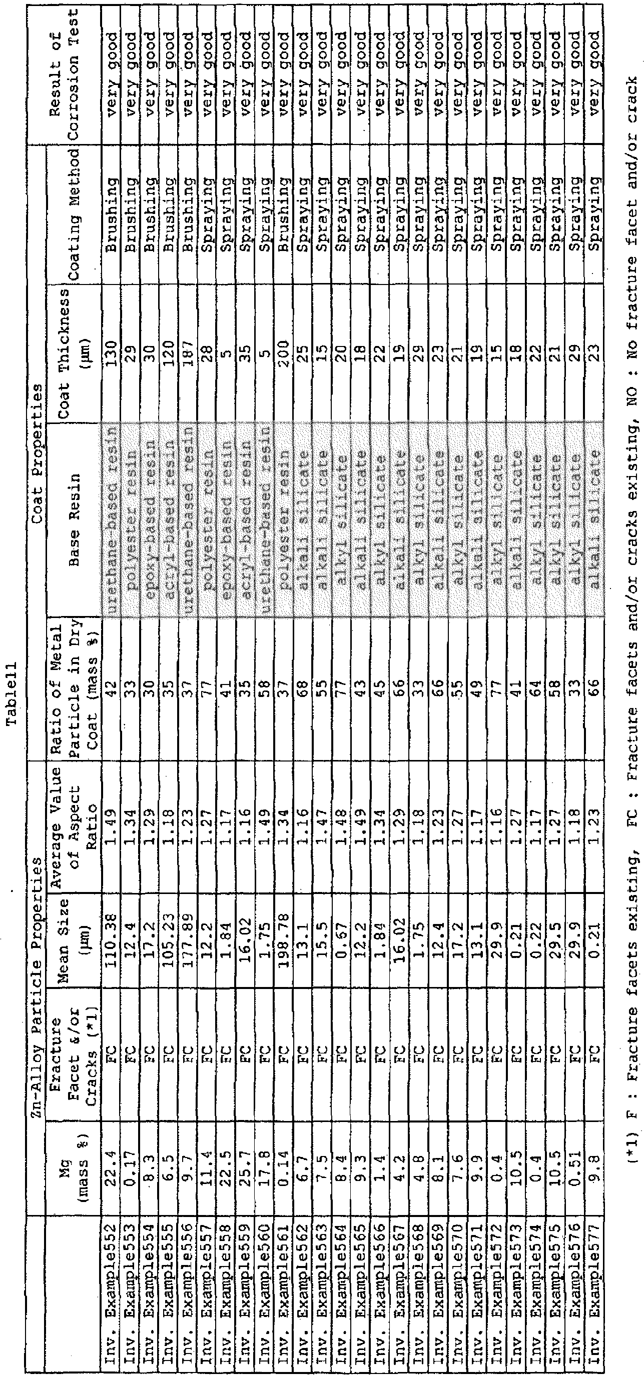

**Table 12**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example578 | 0.52 | FC | 0.22 | 1.27 | 55 | alkyl silicate | 21 | Spraying | very good |
| Inv. Example579 | 9.9 | FC | 29.5 | 1.17 | 49 | alkali silicate | 19 | Spraying | very good |
| Inv. Example580 | 14.8 | FC | 16.02 | 1.48 | 77 | alkyl silicate | 21 | Spraying | very good |
| Inv. Example581 | 16.7 | FC | 1.75 | 1.49 | 43 | alkali silicate | 19 | Spraying | very good |
| Inv. Example582 | 17.9 | FC | 12.4 | 1.34 | 45 | alkyl silicate | 15 | Spraying | very good |
| Inv. Example583 | 19.5 | FC | 17.2 | 1.29 | 66 | alkali silicate | 18 | Spraying | verv good |
| Comp. Example14 | 2.3 | FC | 205.6 | 1.23 | 75 | alkyl silicate | 25 | Spraying | poor |
| Comp. Example15 | 2.3 | FC | 0.005 | 1.23 | 75 | alkyl silicate | 25 | Spraying | poor |
| Comp. Example16 | 2.3 | FC | 205.6 | 1.23 | 75 | alkyl silicate | 105 | Brushing | poor |
| Comp. Example17 | 2.3 | FC | 0.005 | 1.23 | 75 | alkyl silicate | 165 | Spraying | poor |
| Inv. Example2005 | 0.05 | FC | 2.5 | 1.05 | 38 | alkali silicate | 19 | Spraying | very good |
| Inv. Example2006 | 0.07 | FC | 0.09 | 1.12 | 49 | alkyl silicate | 11 | Spraying | very good |
| Inv. Example2007 | 2.64 | FC | 5.5 | 1.22 | 43 | alkyl silicate | 16 | Spraying | very good |
| Inv. Example2008 | 0.08 | FC | 5.6 | 1.36 | 66 | alkyl silicate | 16 | Brushing | very good |
| Inv. Example2009 | 0.09 | FC | 11.5 | 1.11 | 67 | alkali silicate | 33 | Brushing | very good |
| Inv. Example2010 | 0.05 | FC | 19.5 | 1.07 | 54 | alkyl silicate | 8 | Brushing | good |
| Inv. Example2011 | 1.59 | FC | 6.7 | 1.14 | 76 | alkyl silicate | 5 | Spraying | very good |
| Inv. Example2012 | 2.58 | FC | 8.9 | 1.13 | 49 | alkyl silicate | 22 | Spraying | very good |
| Inv. Example2013 | 0.06 | FC | 8.32 | 1.22 | 32 | alkyl silicate | 23 | Spraying | very good |
| Inv. Example2014 | 0.18 | FC | 10.05 | 1.14 | 53 | epoxy-based resin | 30 | Spraying | very good |
| Inv. Example2015 | 7.55 | FC | 2.15 | 1.14 | 75 | alkyl silicate | 18 | Spraying | very good |
| Inv. Example2016 | 0.01 | FC | 0.06 | 1.23 | 75 | alkali silicate | 5 | Spraying | good |
| Inv. Example2017 | 8.01 | FC | 2.54 | 1.13 | 73 | alkyl silicate | 16 | Spraying | very good |
| Inv. Example22018 | 1.06 | FC | 3.4 | 1.38 | 49 | alkyl silicate | 8 | Spraying | very good |
| Inv. Example2019 | 0.04 | FC | 8.5 | 1.42 | 40 | alkali silicate | 2 | Spraying | very good |
| Inv. Example2020 | 0.06 | FC | 7.72 | 1.38 | 36 | alkyl silicate | 18 | Spraying | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

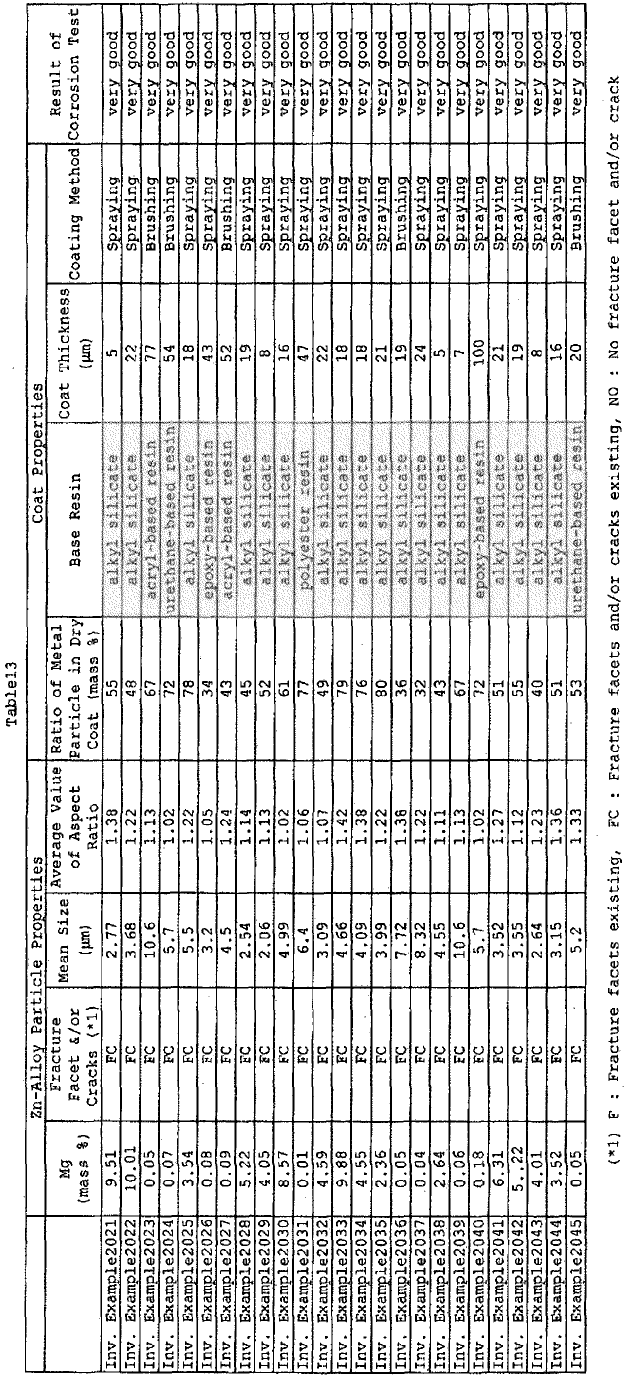

**Table14**

| | Zn-Alloy Particle Properties | | | | Coat Properties | | | | Result of Corrosion Test |
|---|---|---|---|---|---|---|---|---|---|
| | Mg (mass %) | Fracture Facet &/or Cracks (*1) | Mean Size (µm) | Average Value of Aspect Ratio | Ratio of Metal Particle in Dry Coat (mass %) | Base Resin | Coat Thickness (µm) | Coating Method | |
| Inv. Example2046 | 0.04 | FC | 1.9 | 1.27 | 60 | polyester resin | 200 | Brushing | very good |
| Inv. Example2047 | 0.06 | FC | 10.5 | 1.12 | 77 | alkyl silicate | 25 | Spraying | very good |
| Inv. Example2048 | 0.05 | FC | 12.5 | 1.23 | 43 | alkali silicate | 14 | Spraying | very good |
| Inv. Example2049 | 0.07 | FC | 18.5 | 1.36 | 52 | urethane-based resin | 112 | Spraying | very good |
| Inv. Example2050 | 0.01 | FC | 11.5 | 1.11 | 66 | alkali silicate | 24 | Spraying | very good |
| Inv. Example2051 | 0.08 | FC | 9.6 | 1.07 | 72 | urethane-based resin | 150 | Spraying | very good |
| Inv. Example2052 | 0.09 | FC | 8.5 | 1.42 | 40 | alkali silicate | 18 | Spraying | very good |
| Inv. Example2053 | 4.25 | FC | 2.36 | 1.33 | 44 | alkyl silicate | 18 | Spraying | very good |
| Inv. Example2054 | 0.04 | FC | 23.5 | 1.42 | 44 | alkali silicate | 38 | Spraying | very good |
| Inv. Example2055 | 0.06 | FC | 101.5 | 1.38 | 36 | alkyl silicate | 18 | Spraying | very good |
| Inv. Example2056 | 0.06 | FC | 55.4 | 1.38 | 76 | alkyl silicate | 10 | Spraying | very good |
| Inv. Example2057 | 0.07 | FC | 10.5 | 1.12 | 77 | alkyl silicate | 37 | Spraying | very good |
| Inv. Example2058 | 0.01 | FC | 12.5 | 1.23 | 43 | alkali silicate | 2 | Spraying | good |
| Inv. Example2059 | 0.08 | FC | 18.5 | 1.36 | 52 | alkyl silicate | 160 | Brushing | very good |
| Inv. Example2060 | 0.09 | FC | 11.5 | 1.11 | 66 | alkali silicate | 5 | Brushing | very good |
| Inv. Example2061 | 0.05 | FC | 9.6 | 1.07 | 72 | alkyl silicate | 56 | Brushing | very qood |
| Inv. Example2062 | 0.06 | FC | 10.05 | 1.14 | 53 | urethane-based resin | 99 | Spraying | very good |
| Inv. Example2063 | 29.9 | FC | 10.5 | 1.36 | 55 | urethane-based resin | 700 | Spraying | very good |
| Inv. Example2064 | 16.5 | FC | 7.5 | 1.11 | 47 | alkyl silicate | 554 | Spraying | very good |
| Inv. Example2065 | 12.5 | FC | 2.6 | 1.07 | 79 | urethane-based resin | 688 | Brushing | very good |
| Inv. Example2066 | 9.8 | FC | 3.5 | 1.42 | 42 | urethane-based resin | 421 | Spraying | very good |
| Inv. Example2067 | 9.6 | FC | 4.5 | 1.33 | 36 | urethane-based resin | 651 | Spraying | very good |
| Inv. Example2068 | 7.5 | FC | 1.6 | 1.42 | 53 | urethane-based resin | 402 | Brushing | very good |
| Inv. Example2069 | 4.6 | FC | 2.5 | 1.12 | 55 | alkali silicate | 354 | Spraying | very good |
| Inv. Example2070 | 3.8 | FC | 23.5 | 1.23 | 42 | urethane-base resin | 504 | Brushing | very good |
| Inv. Example2071 | 0.05 | FC | 9.8 | 1.27 | 76 | urethane-based resin | 666 | Spraying | very good |

| | | | | | | | | | |
|---|---|---|---|---|---|---|---|---|---|
| (*1) F : Fracture facets existing, FC : Fracture facets and/or cracks existing, NO : No fracture facet and/or crack | | | | | | | | | |

### Example 2)

Zn alloy particles further containing one or both of Al and Si were produced as shown by the chemical ingredients in Tables 15 to 26. The rest is the same as Example 1.

From Tables 15 to 26, it is learned that the painting test pieces using the Zn alloy particles of the present invention exhibit superior corrosion resistance both with inorganic-based binders and organic-based binders.

**Table15**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example70 | 12.3 | F | 0.02 | 1.05 | 0.1 | 0.07 | 35 | alkali silicate | 2 | Spraying | very qood |
| Inv. Example71 | 0.8 | F | 27.89 | 1.12 | 0.04 | 0.1 | 77 | alkyl silicate | 37 | Spraying | very good |
| Inv. Example72 | 1.0 | F | 0.32 | 1.23 | 30.0 | 0.01 | 43 | alkali silicate | 2 | Spraying | good |
| Inv. Example73 | 2.3 | F | 158.96 | 1.36 | 0.02 | 3 | 52 | alkyl silicate | 160 | Brushing | very good |
| Inv. Example74 | 15.6 | F | 1.05 | 1.11 | 8.02 | 2.04 | 66 | alkali silicate | 5 | Brushing | very good |
| Inv. Example75 | 6.7 | F | 36.47 | 1.07 | 15.6 | 1.27 | 72 | alkyl silicate | 56 | Brushing | very good |
| Inv. Example76 | 7.5 | F | 0.51 | 1.42 | 10.4 | 0.57 | 40 | alkali silicate | 2 | Spraying | very good |
| Inv. Example77 | 8.4 | F | 7.72 | 1.38 | 4.65 | 2.67 | 36 | alkyl silicate | 18 | Spraying | very good |
| Inv. Example78 | 9.3 | F | 8.32 | 1.22 | 24.8 | 2.4 | 32 | alkyl silicate | 23 | Spraying | very good |
| Inv. Example79 | 10.4 | F | 10.05 | 1.14 | 4.52 | 0.57 | 53 | epoxy-based resin | 30 | Brushing | very good |
| Inv. Example80 | 11.2 | F | 60.08 | 1.13 | 17.5 | 2.45 | 67 | acryl-based resin | 77 | Brushing | very good |
| Inv. Example81 | 11.7 | F | 17.89 | 1.02 | 745 | 1.75 | 72 | urethane-based resin | 54 | Brushing | very good |
| Inv. Example82 | 21.5 | F | 19.54 | 1.06 | 11.05 | 0.23 | 77 | polyester resin | 47 | Spraying | very good |
| Inv. Example83 | 13.4 | F | 21.08 | 1.05 | 2.65 | 0.74 | 34 | epoxy-based resin | 43 | Spraying | very good |
| Inv. Example84 | 14.6 | F | 23.04 | 1.24 | 6.45 | 2.14 | 43 | acryl-based resin | 52 | Brushing | very good |
| Inv. Example85 | 25.8 | F | 9.02 | 1.33 | 27.6 | 2.4 | 53 | urethane-based resin | 20 | Brushing | very good |
| Inv. Example86 | 16.7 | F | 194.23 | 1.27 | 4.32 | 1.07 | 60 | polyester resin | 200 | Brushing | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table16**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example584 | 0.15 | FC | 0.02 | 1.05 | 0.1 | 0.07 | 35 | alkali silicate | 2 | Spaying | very good |
| Inv. Example585 | 0.19 | FC | 10.5 | 1.12 | 0.04 | 0.1 | 77 | alkyl silicate | 37 | Spraying | very good |
| Inv. Example586 | 0.18 | FC | 12.5 | 1.23 | 30.0 | 0.01 | 43 | alkali silicate | 2 | Spraying | good |
| Inv. Example587 | 0.11 | FC | 18.5 | 1.36 | 0.02 | 3 | 52 | alkyl silicate | 160 | Brushing | very good |
| Inv. Example588 | 0.15 | FC | 11.5 | 1.11 | 0 | 0 | 66 | alkali silicate | 5 | Brushing | very qood |
| Inv. Example589 | 0.24 | FC | 9.6 | 1.07 | 0 | 0 | 72 | alkyl silicate | 56 | Brushing | very good |
| Inv. Example590 | 0.18 | FC | 8.5 | 1.42 | 10.4 | 0.57 | 40 | alkali silicate | 2 | Spraying | very good |
| Inv. Example591 | 0.12 | FC | 7.72 | 1.38 | 4.65 | 2.67 | 36 | alkyl silicate | 18 | Spraying | very good |
| Inv. Example592 | 0.19 | FC | 8.32 | 1.22 | 24.8 | 2.4 | 32 | alkyl silicate | 23 | Spraying | very good |
| Inv. Example593 | 0.18 | FC | 10.05 | 1.14 | 4.52 | 0.57 | 53 | epoxy-based resin | 30 | Brushing | very good |
| Inv. Example594 | 0.21 | FC | 10.6 | 1.13 | 17.5 | 2.45 | 67 | acryl-based resin | 77 | Brushing | very good |
| Inv. Example595 | 0.76 | FC | 5.7 | 1.02 | 0 | 0 | 72 | urethane-based resin | 54 | Brushing | very good |
| Inv. Example596 | 0.11 | FC | 6.4 | 1.06 | 11.05 | 0.23 | 77 | polyester resin | 47 | Spraying | very good |
| Inv. Example597 | 0.14 | FC | 3.2 | 1.05 | 2.65 | 0.74 | 34 | epoxy-based resin | 43 | Spraying | very good |
| Inv. Example598 | 15 | FC | 4.5 | 1.24 | 6.45 | 2.14 | 43 | acryl-based resin | 52 | Brushing | very good |
| Inv. Example599 | 14.5 | FC | 5.2 | 1.33 | 0 | 0 | 53 | urethane-based resin | 20 | Brushing | very good |
| Inv. Example600 | 18.5 | FC | 1.9 | 1.27 | 0 | 0 | 60 | polyester resin | 200 | Brushing | very good |
| Inv. Example601 | 15.1 | FC | 0.02 | 1.05 | 0.05 | 0.03 | 35 | alkali silicate | 22 | Spraying | very good |
| Inv. Example602 | 15.6 | FC | 10.5 | 1.12 | 0 | 0.08 | 77 | alkyl silicate | 25 | Spraying | very good |
| Inv. Example603 | 12.5 | FC | 12.5 | 1.23 | 0.05 | 0 | 43 | alkali silicate | 14 | Spraying | very good |
| Inv. Example604 | 18.7 | FC | 18.5 | 1.36 | 0.44 | 0.07 | 52 | urethane-based resin | 112 | Spraying | very good |
| Inv. Example605 | 14.5 | FC | 11.5 | 1.11 | 0.08 | 0.07 | 66 | alkali silicate | 24 | Spraying | very good |
| Inv. Example606 | 7.5 | FC | 9.6 | 1.07 | 0.1 | 0.2 | 72 | urethane-based resin | 150 | Spraying | very good |
| Inv. Example607 | 4.5 | FC | 8.5 | 1.42 | 0 | 0 | 40 | alkali silicate | 18 | Spraying | very good |
| Inv. Example608 | 1.5 | FC | 7.72 | 1.38 | 0 | 0 | 36 | alkyl silicate | 19 | Brushing | very good |
| Inv. Example609 | 4.8 | FC | 8.32 | 1.22 | 0 | 0.07 | 32 | alkyl silicate | 24 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table17**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example610 | 9.6 | FC | 10.05 | 1.14 | 0 | 0.02 | 53 | urethane-based resin | 99 | Spraying | very good |
| Inv. Example611 | 11.5 | FC | 10.6 | 1.13 | 25.8 | 0.05 | 67 | alkyl silicate | 7 | Spraying | very good |
| Inv. Example612 | 9.8 | FC | 5.7 | 1.02 | 22.1 | 0 | 72 | epoxy-based resin | 100 | Spraying | very qood |
| Inv. Example613 | 7.6 | FC | 6.4 | 1.06 | 21.5 | 0.05 | 77 | alkyl silicate | 27 | Brushing | very good |
| Inv. Example614 | 3.2 | FC | 3.2 | 1.05 | 0.05 | 2.29 | 34 | alkali silicate | 15 | Spraying | very good |
| Inv. Example615 | 1.9 | FC | 4.5 | 1.24 | 0.05 | 0.03 | 43 | alkyl silicate | 14 | Spraying | very good |
| Inv. Example616 | 11.5 | FC | 5.2 | 1.33 | 0 | 0.08 | 53 | urethane-based resin | 55 | Spraying | very good |
| Inv. Example617 | 8.7 | FC | 1.9 | 1.27 | 0 | 0 | 35 | alkyl silicate | 8 | Spraying | very qood |
| Inv. Example618 | 9.6 | FC | 0.02 | 1.05 | 0 | 0 | 77 | urethane-based resin | 122 | Brushing | very good |
| Inv. Example619 | 9.4 | FC | 10.5 | 1.12 | 0.08 | 0.07 | 43 | alkyl silicate | 54 | Spraying | very good |
| Inv. Example620 | 10.5 | FC | 12.5 | 1.23 | 0.1 | 0.2 | 52 | alkali silicate | 19 | Spraying | very good |
| Inv. Example621 | 12.6 | FC | 18.5 | 1.36 | 0.05 | 0.2 | 66 | alkyl silicate | 25 | Brushing | very good |
| Inv. Example2622 | 29.5 | FC | 11.5 | 1.11 | 0.07 | 0 | 72 | alkyl silicate | 58 | Spraying | very good |
| Inv. Example623 | 29.4 | FC | 9.6 | 1.07 | 0 | 0.07 | 40 | alkyl silicate | 21 | Spraying | very good |
| Inv. Example624 | 27.5 | FC | 8.5 | 1.42 | 0 | 0.02 | 36 | alkali silicate | 19 | Brushing | very good |
| Inv. Example625 | 0.8 | FC | 7.72 | 1.38 | 25.8 | 0.05 | 32 | urethane-based resin | 56 | Spraying | very good |
| Inv. Example626 | 1.6 | FC | 8.32 | 1.22 | 22.1 | 0 | 53 | alkyl silicate | 77 | Spraying | very good |
| Inv. Example627 | 22.9 | FC | 10.05 | 1.14 | 21.5 | 0.05 | 67 | alkyl silicate | 54 | Spraying | very good |
| Inv. Example628 | 28.5 | FC | 10.6 | 1.13 | 0.05 | 2.29 | 72 | alkyl silicate | 64 | Spraying | very good |
| Inv. Example629 | 29.5 | FC | 5.7 | 1.02 | 0.1 | 0.2 | 77 | alkyl silicate | 34 | Brushing | very good |
| Inv. Example630 | 18.7 | FC | 6.4 | 1.06 | 0.05 | 0.2 | 34 | alkali silicate | 28 | Spraying | very good |
| Inv. Example631 | 19.5 | FC | 3.2 | 1.05 | 0.07 | 0 | 43 | urethane-based resin | 109 | Brushing | very good |
| Inv. Example632 | 20.4 | FC | 4.5 | 1.24 | 0 | 0.07 | 53 | alkyl silicate | 15 | Spraying | very good |
| Inv. Example633 | 0.6 | FC | 5.2 | 1.33 | 0 | 0.02 | 72 | alkyl silicate | 14 | Spraying | very good |
| Inv. Example634 | 0.8 | FC | 1.9 | 1.27 | 22.1 | 0 | 77 | alkyl silicate | 18 | Spraying | very good |
| Inv. Example635 | 22.5 | FC | 0.02 | 1.05 | 0.1 | 0.07 | 35 | alkali silicate | 2 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

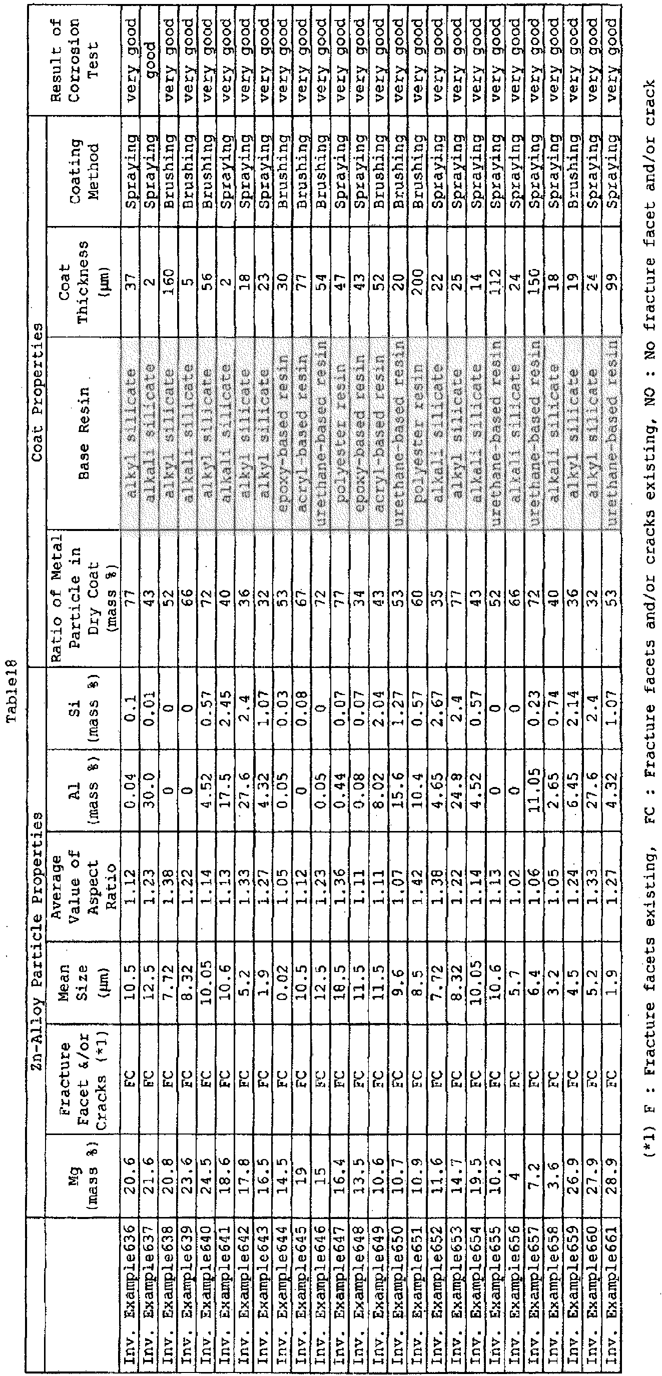

**Table19**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example662 | 23.8 | FC | 0.02 | 1.05 | 0.05 | 0.03 | 67 | alkyl silicate | 7 | Spraying | very good |
| Inv. Example663 | 26.8 | FC | 10.5 | 1.12 | 0 | 0.08 | 72 | epoxy-based resin | 100 | Spraying | very good |
| Inv. Example664 | 25.6 | FC | 12.5 | 1.23 | 0.05 | 0 | 77 | alkyl silicate | 27 | Brushing | very good |
| Inv. Example665 | 29.8 | FC | 18.5 | 1.36 | 0.44 | 0.07 | 34 | alkali silicate | 15 | Spraying | very good |
| Inv. Example666 | 18.9 | FC | 11.5 | 1.11 | 0.08 | 0.07 | 43 | alkyl silicate | 14 | Spraying | very good |
| Inv. Example667 | 5.6 | FC | 9.6 | 1.07 | 0.1 | 0.2 | 53 | urethane-based resin | 55 | Spraying | very good |
| Inv. Example668 | 4.7 | FC | 8.5 | 1.42 | 0.05 | 0.2 | 35 | alkyl silicate | 8 | Spaying | very good |
| Inv. Example669 | 6.8 | FC | 7.72 | 1.38 | 0.07 | 0 | 77 | urethane-based resin | 122 | Brushing | very good |
| Inv. Example670 | 9 | FC | 8.32 | 1.22 | 0 | 0.07 | 43 | alkyl silicate | 54 | Spraying | very good |
| Inv. Example671 | 2.1 | FC | 10.05 | 1.14 | 0 | 0.02 | 52 | alkali silicate | 19 | Spraying | very good |
| Inv. Example672 | 4.8 | FC | 10.6 | 1.13 | 0 | 0 | 66 | alkyl silicate | 25 | Brushing | very good |
| Inv. Example673 | 4.2 | FC | 5.7 | 1.02 | 0 | 0 | 72 | alkyl silicate | 58 | Spraying | very good |
| Inv. Example674 | 4.3 | FC | 6.4 | 1.06 | 21.5 | 0.05 | 40 | alkyl silicate | 21 | Spraying | very good |
| Inv. Example675 | 4 | FC | 3.2 | 1.05 | 0.05 | 2.29 | 36 | alkali silicate | 19 | Brushing | very good |
| Inv. Example676 | 3.7 | FC | 4.5 | 1.24 | 0.05 | 0.03 | 32 | urethane-based resin | 56 | Spraying | very good |
| Inv. Example677 | 6.4 | FC | 5.2 | 1.33 | 0 | 0.08 | 53 | alkyl silicate | 77 | Spraying | very good |
| Inv. Example678 | 6.9 | FC | 1.9 | 1.27 | 0.05 | 0 | 67 | alkyl silicate | 54 | Spraying | very good |
| Inv. Example679 | 16.9 | FC | 0.02 | 1.05 | 0.44 | 0.07 | 72 | alkyl silicate | 64 | Spraying | very good |
| Inv. Example680 | 18.7 | FC | 10.5 | 1.12 | 0.08 | 0.07 | 77 | alkyl silicate | 34 | Brushing | very good |
| Inv. Example681 | 24.4 | FC | 12.5 | 1.23 | 0.1 | 0.2 | 34 | alkali silicate | 28 | Spraying | very good |
| Inv. Example682 | 10.6 | FC | 18.5 | 1.36 | 0 | 0 | 43 | urethane-based resin | 109 | Brushing | very good |
| Inv. Example683 | 15.8 | FC | 11.5 | 1.11 | 0 | 0 | 53 | alkyl silicate | 15 | Spraying | very good |
| Inv. Example684 | 19.5 | FC | 9.6 | 1.07 | 0 | 0.07 | 72 | alkyl siiicate | 14 | Spraying | very good |
| Inv. Example685 | 7.8 | FC | 8.5 | 1.42 | 0 | 0.02 | 77 | alkyl silicate | 18 | Spraying | very good |
| Inv. Example686 | 4.9 | FC | 7.72 | 1.38 | 25.8 | 0.05 | 77 | urethane-based resin | 122 | Brushing | very good |
| Inv. Example687 | 10.8 | FC | 8.32 | 1.22 | 22.1 | 0 | 43 | alkyl silicate | 54 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table20**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example688 | 3.8 | FC | 10.05 | 1.14 | 21.5 | 0.05 | 52 | alkali silicate | 19 | Spraying | very good |
| Inv. Example689 | 22.6 | FC | 10.6 | 1.13 | 0.05 | 2.29 | 66 | alkyl silicate | 25 | Brushing | very good |
| Inv. Example690 | 27.9 | FC | 5.7 | 1.02 | 0 | 0 | 72 | alkyl silicate | 58 | Spraying | very good |
| Inv. Example691 | 24.8 | FC | 6.4 | 1.06 | 0 | 0 | 40 | alkyl silicate | 21 | Spraying | very good |
| Inv. Example692 | 26.8 | FC | 3.2 | 1.05 | 0.07 | 0 | 36 | alkali silicate | 19 | Brushing | very good |
| Inv. Example693 | 25.9 | FC | 4.5 | 1.24 | 0 | 0.07 | 32 | urethane-based resin | 56 | Spraying | very good |
| Inv. Example694 | 9.8 | FC | 5.2 | 1.33 | 0 | 0.02 | 53 | alkyl silicate | 77 | Spraying | very good |
| Inv. Example695 | 5.6 | FC | 1.9 | 1.27 | 22.1 | 0 | 67 | alkyl silicate | 54 | Spraying | very good |
| Inv. Example696 | 12.3 | FC | 0.02 | 1.05 | 1.24 | 1.8 | 52 | alkali silicate | 2 | Spraying | very good |
| Inv. Example697 | 0.8 | FC | 27.89 | 1.12 | 1.24 | 0.9 | 55 | alkali silicate | 20 | Spraying | very good |
| Inv. Example698 | 1 | FC | 0.32 | 1.23 | 0.8 | 0.7 | 69 | alkali silicate | 5 | Spraying | very good |
| Inv. Example699 | 2.3 | FC | 11.44 | 1.36 | 0 | 1.8 | 78 | alkyl silicate | 20 | Spraying | very good |
| Inv. Example700 | 15.6 | FC | 1.05 | 1.11 | 1.1 | 2.41 | 42 | alkali silicate | 15 | Brushing | very good |
| Inv. Example701 | 6.7 | FC | 36.47 | 1.07 | 1.8 | 0.08 | 32 | alkyl silicate | 57 | Brushing | very good |
| Inv. Example702 | 7.5 | FC | 5.07 | 1.42 | 3.8 | 2.23 | 66 | alkali silicate | 13 | Brushing | very good |
| Inv. Example703 | 8.4 | FC | 7.72 | 1.38 | 2.9 | 0.06 | 67 | alkyl silicate | 22 | Brushing | very good |
| Inv. Example704 | 9.3 | FC | 8.32 | 1.22 | 10.5 | 0.02 | 64 | alkali silicate | 20 | Spraying | very good |
| Inv. Example705 | 10.4 | FC | 10.05 | 1.14 | 2.9 | 0.02 | 74 | alkyl silicate | 27 | Spraying | very good |
| Inv. Example706 | 11.2 | FC | 6.08 | 1.13 | 16.8 | 1.37 | 82 | alkali silicate | 15 | Spraying | very good |
| Inv. Example707 | 11.7 | FC | 17.89 | 1.02 | 0 | 2.43 | 37 | alkyl silicate | 35 | Spraying | very good |
| Inv. Example708 | 21.5 | FC | 19.54 | 1.06 | 3.6 | 0.02 | 42 | alkali silicate | 34 | Brushing | very good |
| Inv. Example709 | 13.4 | FC | 21.08 | 1.05 | 2.1 | 1.5 | 66 | alkyl silicate | 45 | Brushing | very good |
| Inv. Example710 | 14.6 | FC | 23.04 | 1.24 | 0.06 | 1.3 | 48 | alkali silicate | 52 | Brushing | very good |
| Inv. Example711 | 25.8 | FC | 9.21 | 1.33 | 0.02 | 1.8 | 33 | alkyl silicate | 23 | Brushing | very good |
| Inv. Example712 | 16.7 | FC | 0.12 | 1.27 | 1.6 | 0.9 | 75 | alkali silicate | 5 | Spraying | very good |
| Inv. Example713 | 17.3 | FC | 29.24 | 1.37 | 3.5 | 0 | 77 | alkyl silicate | 52 | Brushing | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table21**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Ratio of Metal Particle in Dry Coat (mass %) | Base Resin | Coat Thickness (µm) | Coating Method | |
| Inv. Example714 | 18.5 | FC | 128.74 | 1.10 | 9.8 | 1.8 | 66 | alkali silicate | 150 | Brushing | very good |
| Inv. Example715 | 19.3 | FC | 33.57 | 1.04 | 11.5 | 0.7 | 67 | alkyl silicate | 60 | Brushing | very good |
| Inv. Example716 | 3.5 | FC | 3.04 | 1.02 | 0.4 | 1.5 | 45 | alkali silicate | 15 | Spraying | very good |
| Inv. Example717 | 22.5 | FC | 7.54 | 1.01 | 0.6 | 1.3 | 48 | alkyl silicate | 24 | Spraying | very good |
| Inv. Example718 | 23.7 | FC | 6.81 | 1.08 | 10.6 | 1.8 | 68 | alkali silicate | 34 | Spraying | very good |
| Inv. Example719 | 24.2 | FC | 5.25 | 1.14 | 9.5 | 0 | 35 | alkyl silicate | 20 | Brushing | very good |
| Inv. Example720 | 0.2 | FC | 194.23 | 1.23 | 11.04 | 0.7 | 37 | alkali silicate | 200 | Brushing | very good |
| Inv. Example721 | 27.1 | FC | 28.74 | 1.33 | 0.01 | 1.8 | 38 | alkyl silicate | 56 | Brushing | very good |
| Inv. Example722 | 29.3 | FC | 13.57 | 1.37 | 0.07 | 0.7 | 41 | alkali silicate | 34 | Spraying | very good |
| Inv. Example723 | 0.5 | FC | 0.65 | 1.44 | 1.8 | 1.5 | 54 | alkyl silicate | 2 | Spraying | very good |
| Inv. Example724 | 2.7 | FC | 4.12 | 1.21 | 0 | 1.3 | 57 | alkali silicate | 15 | Spraying | very good |
| Inv. Example725 | 28.4 | FC | 0.72 | 1.22 | 2.9 | 1.8 | 59 | alkali silicate | 10 | Spraying | very good |
| Inv. Example726 | 8.7 | FC | 117.54 | 1.23 | 10.5 | 0.9 | 64 | alkyl silicate | 125 | Brushing | very good |
| Inv. Example727 | 9.2 | FC | 7.81 | 1.47 | 2.9 | 0.7 | 66 | alkali silicate | 24 | Brushing | very good |
| Inv. Example728 | 17.8 | FC | 80.25 | 1.01 | 16.8 | 1.8 | 67 | alkyl silicate | 110 | Brushing | very good |
| Inv. Example729 | 20.2 | FC | 8.47 | 1.04 | 2.7 | 0.7 | 34 | alkali silicate | 24 | Brushing | very good |
| Inv. Example730 | 0.4 | FC | 0.87 | 1.05 | 0.04 | 0.7 | 54 | alkyl silicate | 2 | Spaying | very good |
| Inv. Example731 | 13.7 | FC | 25.78 | 1.12 | 0 | 0.04 | 62 | alkali silicate | 37 | Spraying | very good |
| Ins. Example732 | 14.7 | FC | 93.45 | 1.11 | 1.24 | 0.05 | 66 | alkyl silicate | 113 | Brushing | very good |
| Inv. Example733 | 2.4 | FC | 0.97 | 1.08 | 0.05 | 1.24 | 67 | alkali silicate | 2 | Spraying | very good |
| Inv. Example734 | 4.5 | FC | 54.89 | 1.47 | 1.24 | 0.06 | 68 | alkyl silicate | 75 | Brushing | very good |
| Inv. Example735 | 0.1 | FC | 10.81 | 1.50 | 1.24 | 0.07 | 33 | alkali silicate | 30 | Brushing | very good |
| Inv. Example736 | 30.0 | FC | 18.24 | 1.13 | 0 | 0.75 | 35 | alkyl silicate | 34 | Brushing | very good |
| Inv. Example737 | 24.5 | FC | 114.78 | 1.04 | 0.9 | 1.5 | 43 | epoxy-based resin | 124 | Brushing | very good |
| Inv. Example738 | 27.6 | FC | 3.87 | 1.02 | 0.03 | 1.3 | 44 | acryl-based resin | 15 | Spraying | very good |
| Inv. Example739 | 4.1 | FC | 11.94 | 1.08 | 10.5 | 1.8 | 43 | urethane-based resin | 23 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table22**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example740 | 3.2 | FC | 142.58 | 1.15 | 2.9 | 0.9 | 44 | polyester resin | 157 | Brushing | very good |
| Inv. Example741 | 2.7 | FC | 12.5 | 1.34 | 16.8 | 0.7 | 54 | epoxy-based resin | 26 | Spraying | very good |
| Inv. Example792 | 0.12 | FC | 31.24 | 1.25 | 2.7 | 1.8 | 79 | acryl-based resin | 38 | Spraying | very good |
| Inv. Example743 | 0.22 | FC | 152.46 | 1.19 | 0.02 | 0.7 | 73 | urethane-based resin | 160 | Brushing | very good |
| Inv. Examnle744 | 0.37 | FC | 13.4 | 1.18 | 0 | 1.5 | 69 | polyester resin | 27 | Brushing | very good |
| Inv. Example745 | 1.4 | FC | 160.57 | 1.24 | 7.42 | 1.3 | 63 | epoxy-based resin | 180 | Brushing | very good |
| Inv. Example746 | 4.2 | FC | 14.1 | 1.11 | 0.02 | 1.8 | 35 | acryl-based resin | 26 | Spraying | very good |
| Inv. Example747 | 4.8 | FC | 167.55 | 1.27 | 0.04 | 0.9 | 35 | urethane-based resin | 180 | Brushing | very good |
| Inv. Example748 | 8.1 | FC | 1.45 | 1.31 | 17.5 | 0 | 66 | polyester resin | 15 | Spraying | very good |
| Inv. Example749 | 7.6 | FC | 0.15 | 1.26 | 0.01 | 1.8 | 67 | epoxy-based resin | 2 | Spraying | very good |
| Inv. Example750 | 9.9 | FC | 13.1 | 1.14 | 0.02 | 0.7 | 66 | acryl-based resin | 28 | Spraying | very good |
| Inv. Example751 | 14.8 | FC | 15.5 | 1.34 | 3.8 | 0 | 33 | urethane-based resin | 30 | Spraying | very good |
| Inv. Example752 | 16.7 | FC | 0.67 | 1.16 | 2.9 | 0 | 35 | polyester resin | 2 | Spraying | very good |
| Inv. Example753 | 17.9 | FC | 137.89 | 1.47 | 10.5 | 1.8 | 43 | epoxy-based resin | 157 | Brushing | very good |
| Inv. Example754 | 19.5 | FC | 16.3 | 1.48 | 2.9 | 0.9 | 44 | acryl-based resin | 28 | Brushing | very good |
| Inv. Example755 | 22.4 | FC | 110.38 | 1.49 | 16.8 | 0.7 | 42 | urethane-based resin | 130 | Brushing | very good |
| Inv. Example756 | 0.17 | FC | 12.4 | 1.34 | 2.7 | 1.8 | 33 | polyester resin | 29 | Brushing | very good |
| Inv. Example757 | 8.3 | FC | 17.2 | 1.29 | 0.02 | 0.7 | 30 | epoxy-based resin | 30 | Brushing | very good |
| Inv. Example758 | 6.5 | FC | 105.23 | 1.18 | 0.02 | 0.7 | 35 | acryl-based resin | 120 | Brushing | very good |
| Inv. Example759 | 9.7 | FC | 177.89 | 1.23 | 0.04 | 0.02 | 37 | urethane-based resin | 187 | Brushing | very good |
| Inv. Example760 | 11.4 | FC | 12.2 | 1.27 | 0.05 | 0.02 | 77 | polyester resin | 28 | Spraying | very good |
| Inv. Example761 | 22.5 | FC | 1.84 | 1.17 | 1.24 | 1.37 | 41 | epoxy-based resin | 5 | Spraying | very good |
| Inv. Example762 | 25.7 | FC | 16.02 | 1.16 | 0.05 | 0.02 | 35 | acryl-based resin | 35 | Spraying | very good |
| Inv. Example763 | 17.8 | FC | 1.75 | 1.49 | 1.24 | 1.37 | 58 | urethane-based resin | 5 | Spraying | very good |
| Inv. Example764 | 0.14 | FC | 198.78 | 1.34 | 1.24 | 1.37 | 37 | polyester resin | 200 | Brushing | very good |
| Inv. Exanple765 | 6.7 | FC | 13.1 | 1.16 | 0.8 | 1.5 | 68 | alkali silicate | 25 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table23**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example766 | 7.5 | FC | 15.5 | 1.47 | 0.9 | 1.3 | 55 | alkali silicate | 15 | Spraying | very good |
| Inv. Example767 | 8.4 | FC | 0.67 | 1.48 | 1.1 | 1.8 | 77 | alkyl silicate | 20 | Spraying | very good |
| Inv. Example766 | 9.3 | FC | 12.2 | 1.49 | 1.8 | 0.9 | 43 | alkali silicate | 18 | Spraying | very good |
| Inv. Example769 | 1.4 | FC | 1.84 | 1.34 | 3.8 | 0.7 | 45 | alkyl silicate | 22 | Spraying | very good |
| Inv. Example770 | 4.2 | FC | 16.02 | 1.29 | 2.9 | 1.8 | 66 | alkali silicate | 19 | Spraying | very good |
| Inv. Example771 | 4.8 | FC | 1.75 | 1.18 | 10.5 | 0.7 | 33 | alkyl silicate | 29 | Spraying | very good |
| Inv. Example772 | 8.1 | FC | 12.4 | 1.23 | 2.9 | 1.5 | 66 | alkali silicate | 23 | Spraying | very good |
| Inv. Example773 | 7.6 | FC | 17.2 | 1.27 | 16.8 | 1.3 | 55 | alkyl silicate | 21 | Spraying | very good |
| Inv. Example774 | 9.9 | FC | 13.1 | 1.17 | 2.7 | 1.8 | 49 | alkali silicate | 19 | Spraying | very good |
| Inv. Example775 | 0.4 | FC | 29.9 | 1.16 | 3.6 | 0.9 | 77 | alkyl silicate | 15 | Spraying | very good |
| Inv. Example776 | 10.5 | FC | 0.21 | 1.27 | 0 | 0.7 | 41 | alkali silicate | 18 | Spraying | very good |
| Inv. Example777 | 0.4 | FC | 0.22 | 1.17 | 0.06 | 1.8 | 64 | alkyl silicate | 22 | Spraying | very good |
| Inv. Example778 | 10.5 | FC | 29.5 | 1.27 | 0.02 | 0.7 | 58 | alkyl silicate | 21 | Spraying | very good |
| Inv. Example779 | 0.51 | FC | 29.9 | 1.18 | 1.6 | 1.5 | 33 | alkyl silicate | 29 | Spraying | very good |
| Inv. Example780 | 9.8 | FC | 0.21 | 1.23 | 3.5 | 0 | 66 | alkali silicate | 23 | Spraying | very good |
| Inv. Example781 | 0.52 | FC | 0.22 | 1.27 | 9.8 | 1.8 | 55 | alkyl silicate | 21 | Spraying | very good |
| Inv. Example782 | 9.9 | FC | 29.5 | 1.17 | 11.5 | 0.9 | 49 | alkali silicate | 19 | Spraying | very good |
| Inv. Example783 | 14.8 | FC | 16.02 | 1.48 | 0.4 | 0.7 | 77 | alkyl silicate | 21 | Spraying | very good |
| Inv. Example784 | 16.7 | FC | 1.75 | 1.49 | 0.6 | 1.8 | 43 | alkali silicate | 19 | Spraying | very good |
| Inv. Example785 | 17.9 | FC | 12.4 | 1.34 | 10.6 | 0.7 | 45 | alkyl silicate | 15 | Spraying | very good |
| Inv. Example786 | 19.5 | FC | 17.2 | 1.29 | 9.5 | 0.7 | 66 | alkali silicate | 18 | Spraying | very good |
| Comp. Example18 | 2.3 | FC | 205.6 | 1.23 | 0.07 | 0 | 75 | alkyl silicate | 25 | Spraying | poor |
| Comp. Example19 | 2.3 | FC | 0.005 | 1.23 | 0 | 0.07 | 75 | alkyl silicate | 25 | Spraying | poor |
| Comp. Example20 | 2.3 | FC | 205.6 | 1.23 | 0 | 0.02 | 75 | alkyl silicate | 105 | Brushing | poor |
| Comp. Example21 | 2.3 | FC | 0.005 | 1.23 | 22.1 | 0 | 75 | alkyl silicate | 165 | Spraying | poor |
| Comp. Example22 | 0.01 | FC | 0.4 | 1.24 | 1.2 | 0.5 | 58 | acryl-based resin | 5 | Spraying | poor |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table24**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Comp. Example23 | 0.8 | FC | 3.2 | 2.54 | 0.6 | 0.8 | 64 | urethane-based resin | 2 | Spraying | poor |
| Comp. Example24 | 8.47 | NO | 0.67 | 1.25 | 2 | 1.9 | 54 | polyester resin | 12 | Brushing | poor |
| Comp. Example25 | 24.5 | NO | 2.5 | 1.05 | 0.8 | 0.9 | 32 | epoxy-based resin | 15 | Brushing | poor |
| Comp. Example26 | 0.01 | FC | 0.4 | 1.24 | 0 | 0.02 | 57 | alkali silicate | 2 | Spraying | poor |
| Comp. Example27 | 0.8 | FC | 0.2 | 1.78 | 25.8 | 0.05 | 70 | alkyl silicate | 5 | Spraying | poor |
| Comp. Example28 | 8.47 | NO | 0.67 | 1.25 | 22.1 | 0 | 64 | alkali silicate | 12 | Brushing | poor |
| Comp. Example29 | 24.5 | NO | 2.5 | 1.05 | 21.5 | 0.05 | 42 | alkyl silicate | 15 | Brushing | poor |
| Comp. Example30 | 4.05 | NO | 0.02 | 1.23 | 0.05 | 2.29 | 38 | alkali silicate | 13 | Brushing | poor |
| Comp. Example31 | 6.78 | NO | 12.5 | 1.35 | 0 | 0 | 44 | alkyl silicate | 22 | Spraying | poor |
| Comp. Example32 | 15.8 | NO | 23.3 | 1.14 | 0 | 0 | 56 | alkali silicate | 34 | Spraying | poor |
| Comp. Example33 | 4.5 | FC | 3.5 | 2.94 | 22.1 | 0 | 76 | alkyl silicate | 15 | Brushing | poor |
| Comp. Example34 | 3.2 | FC | 6.7 | 1.75 | 0.05 | 2.29 | 65 | alkyl silicate | 15 | Spraying | poor |
| Inv. Example2072 | 0.05 | FC | 2.5 | 1.05 | 0 | 1.2 | 38 | alkali silicate | 19 | Spraying | very good |
| Inv. Example2073 | 0.07 | FC | 0.09 | 1.12 | 0 | 0.6 | 49 | alkyl silicate | 11 | Spraying | very good |
| Inv. Example2074 | 2.64 | FC | 5.5 | 1.22 | 0 | 0.01 | 43 | alkyl silicate | 16 | spraying | very good |
| Inv. Example2075 | 0.08 | FC | 5.6 | 1.36 | 1.5 | 0 | 66 | alkyl silicate | 16 | Brushing | very good |
| Inv. Example2076 | 0.09 | FC | 11.5 | 1.11 | 5.5 | 1.6 | 67 | alkali silicate | 33 | Brushing | very good |
| Inv. Example2077 | 0.05 | FC | 19.5 | 1.07 | 4.5 | 0 | 54 | alkyl silicate | 8 | Brushing | good |
| Inv. Example2078 | 1.59 | FC | 6.7 | 1.14 | 0 | 0.1 | 76 | alkyl silicate | 5 | Spraying | very good |
| Inv. Example2079 | 2.58 | FC | 8.9 | 1.13 | 0.01 | 0 | 49 | alkyl silicate | 22 | Spraying | very good |
| Inv. Example2080 | 0.06 | FC | 8.32 | 1.22 | 3.2 | 0.9 | 32 | alkyl silicate | 23 | Spraying | very good |
| Inv. Example2081 | 0.18 | FC | 10.05 | 1.14 | 0 | 0.5 | 53 | epoxy-based resin | 30 | Spraying | very good |
| Inv. Example2082 | 7.55 | FC | 2.15 | 1.14 | 0.2 | 0.1 | 75 | alkyl silicate | 18 | Spraying | very good |
| Inv. Example2083 | 0.01 | FC | 0.06 | 1.23 | 1.2 | 0.6 | 75 | alkali silicate | 5 | Spraying | good |
| Inv. Example2084 | 8.01 | FC | 2.54 | 1.13 | 0.5 | 0 | 73 | alkyl silicate | 16 | Spraying | very good |
| Inv. Example22085 | 1.06 | FC | 3.4 | 1.38 | 1.5 | 0.9 | 49 | alkyl silicate | 8 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table25**

| | Zn-Alloy Particles Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Ratio of Metal Particle in Dry Coat (mass %) | Base Resin | Coat Thickness (µm) | Coating Method | |
| Inv. Example2086 | 0.04 | FC | 8.5 | 1.42 | 0 | 1.2 | 40 | alkali silicate | 2 | Spraying | very good |
| Inv. Example2087 | 0.06 | FC | 7.72 | 1.38 | 0 | 0.6 | 36 | alkyl silicate | 18 | Spraying | very good |
| Inv. Example2088 | 9.51 | FC | 2.77 | 1.38 | 0 | 0.01 | 55 | alkyl silicate | 5 | Spraying | very good |
| Inv. Bxample2089 | 10.01 | FC | 3.68 | 1.22 | 1.5 | 0 | 48 | alkyl silicate | 22 | Spraying | very good |
| Inv. Example2090 | 0.05 | FC | 10.6 | 1.13 | 5.5 | 1.6 | 67 | acryl-based resin | 77 | Brushing | very good |
| Inv. Example2091 | 0.07 | FC | 5.7 | 1.02 | 4.5 | 0 | 72 | urethane-based resin | 54 | Brushing | very good |
| Inv. Example2092 | 3.54 | FC | 5.5 | 1.22 | 0 | 0.1 | 78 | alkyl silicate | 18 | Spraying | very good |
| Inv. Example2093 | 0.08 | FC | 3.2 | 1.05 | 0.01 | 0 | 34 | epoxy-based resin | 43 | Spraying | very good |
| Inv. Example2094 | 0.09 | FC | 4.5 | 1.24 | 3.2 | 0.9 | 43 | acryl-based resin | 52 | Brushing | very good |
| Inv. Example2095 | 5.22 | FC | 2.54 | 1.14 | 0 | 0.5 | 45 | alkyl silicate | 19 | Spraying | very good |
| Inv. Example2096 | 4.05 | FC | 2.06 | 1.13 | 0.2 | 0.1 | 52 | alkyl silicate | 8 | Spraying | very good |
| Inv. Example2097 | 8.57 | FC | 4.99 | 1.02 | 1.2 | 0.6 | 61 | alkyl silicate | 16 | Spraying | very good |
| Inv. Example2098 | 0.01 | FC | 6.4 | 1.06 | 0.5 | 0 | 77 | polyester resin | 47 | Spraying | very good |
| Inv. Example2099 | 4.59 | FC | 3.09 | 1.07 | 1.5 | 0.9 | 49 | alkyl silicate | 22 | Spraying | very good |
| Inv. Example2100 | 9.88 | FC | 4.66 | 1.42 | 0 | 1.2 | 79 | alkyl silicate | 18 | Spraying | very good |
| Inv. Example2101 | 4.55 | FC | 4.09 | 1.38 | 0 | 0.6 | 76 | alkyl silicate | 18 | Spraying | very good |
| Inv. Example2102 | 2.36 | FC | 3.99 | 1.22 | 0 | 0.01 | 80 | alkyl silicate | 21 | Spraying | very good |
| Inv. Example2103 | 0.05 | FC | 7.72 | 1.38 | 1.5 | 0 | 36 | alkyl silicate | 19 | Brushing | very good |
| Inv. Example2104 | 0.04 | FC | 8.32 | 1.22 | 5.5 | 1.6 | 32 | alkyl silicate | 24 | Spraying | very good |
| Inv. Example2105 | 2.64 | FC | 4.55 | 1.11 | 4.5 | 0 | 43 | alkyl silicate | 5 | Spraying | very good |
| Inv. Example2106 | 0.06 | FC | 10.6 | 1.13 | 0 | 0.1 | 67 | alkyl silicate | 7 | Spraying | very good |
| Inv. Example2107 | 0.18 | FC | 5.7 | 1.02 | 0.01 | 0 | 72 | epoxy-based resin | 100 | Spraying | very good |
| Inv. Example2108 | 6.31 | FC | 3.52 | 1.27 | 3.2 | 0.9 | 51 | alkyl silicate | 21 | Spraying | very good |
| Inv. Example2109 | 5..22 | FC | 3.55 | 1.12 | 0 | 0.5 | 55 | alkyl silicate | 19 | Spaying | very good |
| Inv. Example2110 | 4.01 | FC | 2.64 | 1.23 | 0.2 | 0.1 | 40 | alkyl silicate | 8 | Spraying | very good |
| Inv. Example2111 | 3.52 | FC | 3.15 | 1.36 | 1.2 | 0.6 | 51 | alkyl silicate | 16 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

**Table26**

| | Zn-Alloy Particle Properties | | | | | | Coat Properties | | | | Result of Corrosion Test |
|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Ratio of Metal Particle in Dry Coat (mass %) | Base Resin | Coat Thickness (µm) | Coating Method | |
| Inv. Example2112 | 0.05 | FC | 5.2 | 1.33 | 0.5 | 0 | 53 | urethane-based resin | 20 | Brushing | very good |
| Inv. Example2113 | 0.04 | FC | 1.9 | 1.27 | 1.5 | 0.9 | 60 | polyester resin | 200 | Brushing | very good |
| Inv. Example2114 | 0.06 | FC | 10.5 | 1.12 | 0 | 1.2 | 77 | alkyl silicate | 25 | Spraying | very good |
| Inv. Example2115 | 0.05 | FC | 12.5 | 1.23 | 0 | 0.6 | 43 | alkali silicate | 14 | Spraying | very good |
| Inv. Example2126 | 0.07 | FC | 18.5 | 1.36 | 0 | 0.01 | 52 | urethane-based resin | 112 | Spraying | very good |
| Inv. Example2117 | 0.01 | FC | 11.5 | 1.11 | 1.5 | 0 | 66 | alkali silicate | 24 | Spraying | very good |
| Inv. Example2118 | 0.08 | FC | 9.6 | 1.07 | 5.5 | 1.6 | 72 | urethane-based resin | 150 | Spraying | very good |
| Inv. Example2119 | 0.09 | FC | 8.5 | 1.42 | 4.5 | 0 | 40 | alkali silicate | 18 | Spraying | very good |
| Inv. Example2120 | 4.25 | FC | 2.36 | 1.33 | 0 | 0.1 | 44 | alkyl silicate | 18 | Spraying | very good |
| Inv. Example2121 | 0.04 | FC | 23.5 | 1.42 | 0.01 | 0 | 44 | alkali silicate | 38 | Spraying | very good |
| Inv. Example2122 | 0.06 | FC | 101.5 | 1.38 | 3.2 | 0.9 | 36 | alkyl silicate | 18 | Spraying | very good |
| Inv. Example2123 | 0.06 | FC | 55.4 | 1.38 | 0 | 0.5 | 76 | alkyl silicate | 10 | Spraying | very good |
| Inv. Example2124 | 0.07 | FC | 10.5 | 1.12 | 0.2 | 0.1 | 77 | alkyl silicate | 37 | Spraying | very good |
| Inv. Example2125 | 0.01 | FC | 12.5 | 1.23 | 1.2 | 0.6 | 43 | alkali silicate | 2 | Spraying | good |
| Inv. Example2126 | 0.08 | FC | 18.5 | 1.36 | 0.5 | 0 | 52 | alkyl silicate | 160 | Brushing | very good |
| Inv. Example2127 | 0.09 | FC | 11.5 | 1.11 | 1.5 | 0.9 | 66 | alkali silicate | 5 | Brushing | very good |
| Inv. Example2128 | 0.05 | FC | 9.6 | 1.07 | 0.5 | 0 | 72 | alkyl silicate | 56 | Brushing | very good |
| Inv. Example2129 | 0.06 | FC | 10.05 | 1.14 | 1.5 | 0.9 | 53 | urethane-based resin | 99 | Spraying | very good |
| Inv. Example2130 | 29.9 | FC | 10.5 | 1.36 | 0 | 0 | 55 | urethane-based resin | 700 | Spraying | very good |
| Inv. Example2131 | 16.5 | FC | 7.5 | 1.11 | 0.01 | 0 | 47 | alkyl silicate | 554 | Spraying | very good |
| Inv. Example2132 | 12.5 | FC | 2.6 | 1.07 | 3.2 | 0.9 | 79 | urethane-based resin | 688 | Brushing | very good |
| Inv. Example2133 | 9.8 | FC | 3.5 | 1.42 | 0 | 0.5 | 42 | urethane-based resin | 421 | Spraying | very good |
| Inv. Example2134 | 9.6 | FC | 4.5 | 1.33 | 0.2 | 0.1 | 36 | urethane-based resin | 651 | Spraying | very good |
| Inv. Example2135 | 7.5 | FC | 1.6 | 1.42 | 0 | 0.5 | 53 | urethane-based resin | 402 | Brushing | very good |
| Inv. Example2136 | 4.6 | FC | 2.5 | 1.12 | 5.8 | 0.1 | 55 | alkali silicate | 354 | Spraying | very good |
| Inv. Example2137 | 3.8 | FC | 23.5 | 1.23 | 1.2 | 0.6 | 42 | urethane-based resin | 504 | Brushing | very good |
| Inv. Example2138 | 0.05 | FC | 9.8 | 1.27 | 15.5 | 0 | 76 | urethane-based resin | 666 | Spraying | very good |

| | | | | | | | | | | | |
|---|---|---|---|---|---|---|---|---|---|---|---|
| (*1) F : Fracture facets existing, FC : Fracture facets and/or cracks existing, NO : No fracture facet and/or crack | | | | | | | | | | | |

### Example 3

Zn alloy particles with the chemical ingredients shown in Tables 27 to 42 were produced in the same way as in Example 1. The rest is the same as Example 1.

The Mg solid solution phase was identified by the X-ray diffraction method. Further, the Zn-Mg intermetallic compounds were identified by analysis of the ratio of composition of the Mg and Zn at the physical fracture facets or crack surfaces by the X-ray diffraction method or by observation by a scanning electron microscopy with an energy dispersion type X-ray analyzer.

When the content of Mg was less than 16 mass%, at the detected X-ray diffraction peaks, the Mg₂Zn₁₁ or MgZn₂ peaks were the main peaks. When the content of Mg was 16 mass% or more, the ratio of composition of the Mg and Zn at the physical fracture facets or crack surfaces was analyzed by the X-ray diffraction method or by observation by a scanning electron microscopy with an energy dispersion type X-ray analyzer whereupon the presence of Mg₂Zn₃, MgZn, or Mg₇Zn₃ was confirmed.

From Tables 27 to 42, it is learned that due to the presence of the Mg solid solution phase and Zn-Mg intermetallic compounds at the surfaces of the particles including fractured parts, the painting test pieces using the Zn alloy particles of the present invention are improved in corrosion resistance and rust protection regardless of the type of base resin, that is, both for inorganic-based and organic-based binders.

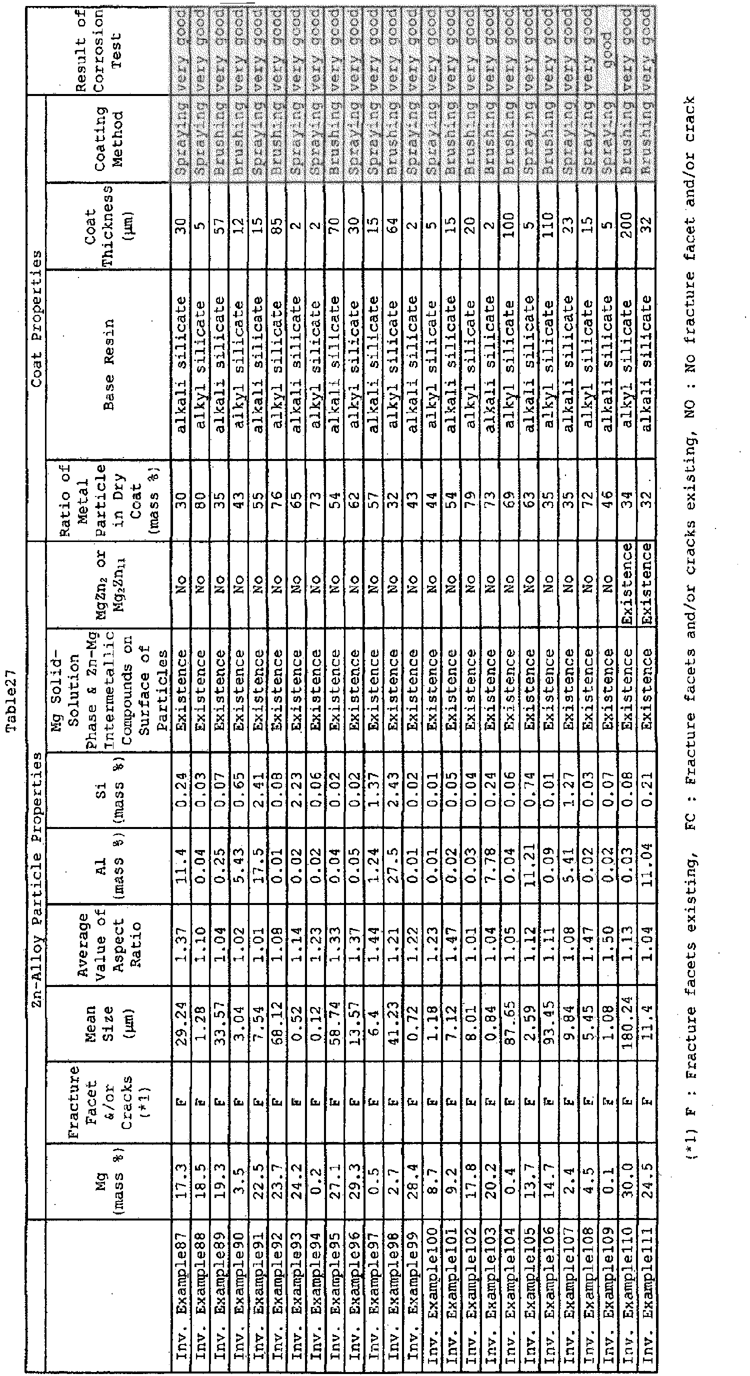

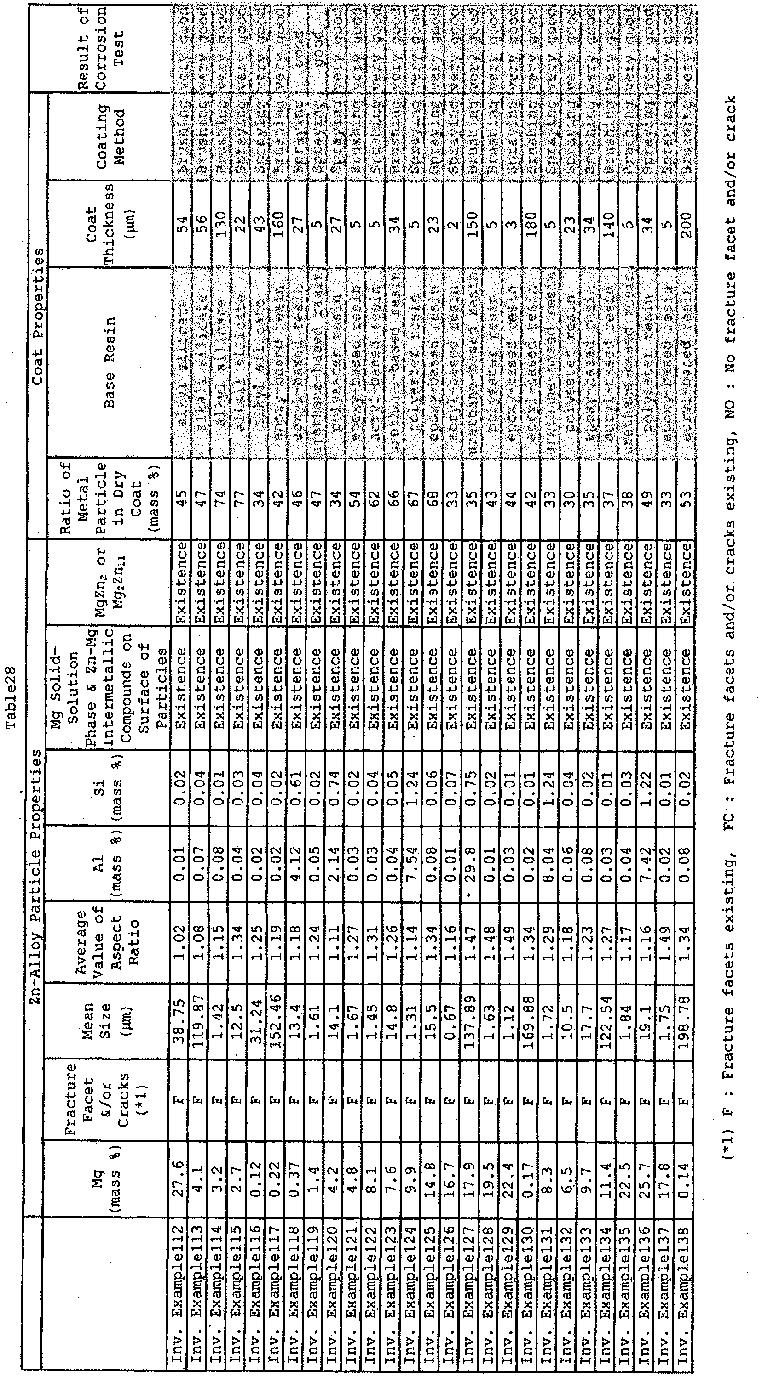

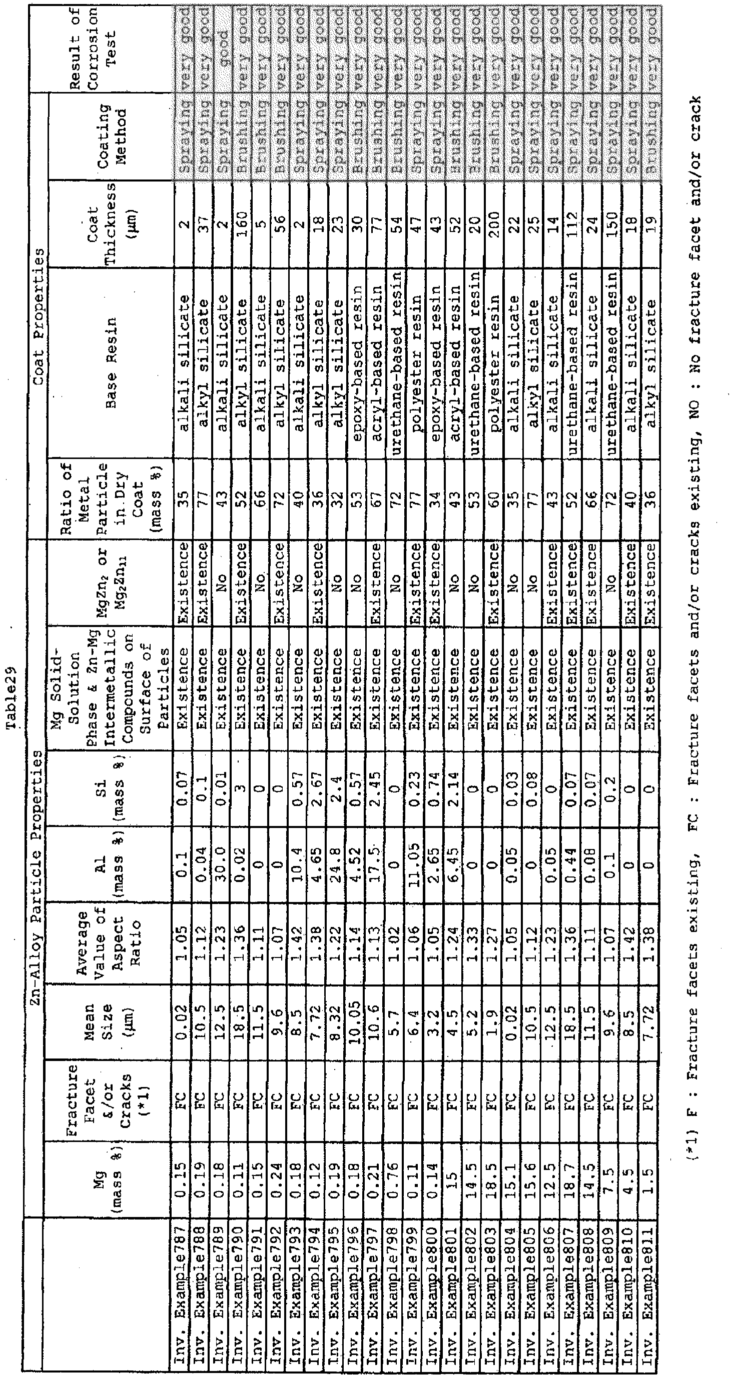

**Table30**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg intermetallic Compounds on Surface of Particles | MgZn₂ or Mg₂Zn₁₁ | Ratio of Metal Particle in Dry Coat (mass %) | Base Resin | coat Thickness (µm) | Coating Method | |
| Inv. Example812 | 4.8 | FC | 8.32 | 1.22 | 0 | 0.07 | Existence | Existence | 32 | alkyl silicate | 24 | Spraying | very good |
| Inv. Example813 | 9.6 | FC | 10.05 | 1.14 | 0 | 0.02 | Existence | No | 53 | urethane-based resin | 99 | Spraying | very good |
| Inv. Example814 | 11.5 | FC | 10.6 | 1.13 | 25.8 | 0.05 | Existence | Existence | 67 | alkyl silicate | 7 | Spraying | very good |
| Inv. Example815 | 9.8 | FC | 5.7 | 1.02 | 22.1 | 0 | Existence | Existence | 72 | epoxy-based resin | 100 | Spraying | very good |
| Inv. Example816 | 7.6 | FC | 6.4 | 1.06 | 21.5 | 0.05 | Existence | Existence | 77 | alkyl silicate | 27 | Brushing | very good |
| Inv. Example817 | 3.2 | FC | 3.2 | 1.05 | 0.05 | 2.29 | Existence | No | 34 | alkali silicate | 15 | Spraying | very good |
| Inv. Example818 | 1.9 | FC | 4.5 | 1.24 | 0.05 | 0.03 | Existence | Existence | 43 | alkyl silicate | 14 | Spraying | very good |
| Inv. Example819 | 11.5 | FC | 5.2 | 1.33 | 0 | 0.08 | Existence | Existence | 53 | urethane-based resin | 55 | Spraying | very good |
| Inv. Example820 | 8.7 | FC | 1.9 | 1.27 | 0 | 0 | Existence | No | 35 | alkyl silicate | 8 | Spraying | very good |
| Inv. Example821 | 9.6 | FC | 0.02 | 1.05 | 0 | 0 | Existence | Existence | 77 | urethane-based resin | 122 | Brushing | very good |
| Inv. Example822 | 9.4 | FC | 10.5 | 1.12 | 0.08 | 0.07 | Existence | No | 43 | alkyl silicate | 54 | Spraying | very good |
| Inv. Example823 | 10.5 | FC | 12.5 | 1.23 | 0.1 | 0.2 | Existence | Existence | 52 | alkali silicate | 19 | Spraying | very good |
| Inv. Example824 | 12.6 | FC | 18.5 | 1.36 | 0.05 | 0.2 | Existence | No | 66 | alkyl silicate | 25 | Brushing | very good |
| Inv. Example825 | 29.5 | FC | 11.5 | 1.11 | 0.07 | 0 | Existence | Existence | 72 | alkyl silicate | 58 | Spraying | very good |
| Inv. Example826 | 29.4 | FC | 9.6 | 1.07 | 0 | 0.07 | Existence | Existence | 40 | alkyl silicate | 21 | Spraying | very good |
| Inv. Example827 | 27.5 | FC | 8.5 | 1.42 | 0 | 0.02 | Existence | Existence | 36 | alkali silicate | 19 | Brushing | very good |
| Inv. Example828 | 0.8 | FC | 7.72 | 1.38 | 25.8 | 0.05 | Existence | Existence | 32 | urethane-based resin | 56 | Spraying | very good |
| Inv. Example829 | 1.6 | FC | 8.32 | 1.22 | 22.1 | 0 | Existence | No | 53 | alkyl silicate | 77 | Spraying | very good |
| Inv. Example830 | 22.9 | FC | 10.05 | 1.14 | 21.5 | 0.05 | Existence | No | 67 | alkyl silicate | 54 | Spraying | very good |
| Inv. Example831 | 28.5 | FC | 10.6 | 1.13 | 0.05 | 2.29 | Existence | No | 72 | alkyl silicate | 64 | Spraying | very good |
| Inv. Example832 | 29.5 | FC | 5.7 | 1.02 | 0.1 | 0.2 | Existence | Existence | 77 | alkyl silicate | 34 | Brushing | very good |
| Inv. Example833 | 18.7 | FC | 6.4 | 1.06 | 0.05 | 0.2 | Existence | No | 34 | alkali silicate | 28 | Spraying | very good |
| Inv. Example834 | 19.5 | FC | 3.2 | 1.05 | 0.07 | 0 | Existence | Existence | 43 | urethane-based resin | 109 | Brushing | very good |
| Inv. Example835 | 20.4 | FC | 4.5 | 1.24 | 0 | 0.07 | Existence | Existence | 53 | alkyl silicate | 15 | Spraying | very good |
| Inv. Example836 | 0.6 | FC | 5.2 | 1.33 | 0 | 0.02 | Existence | Existence | 72 | alkyl silicate | 14 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

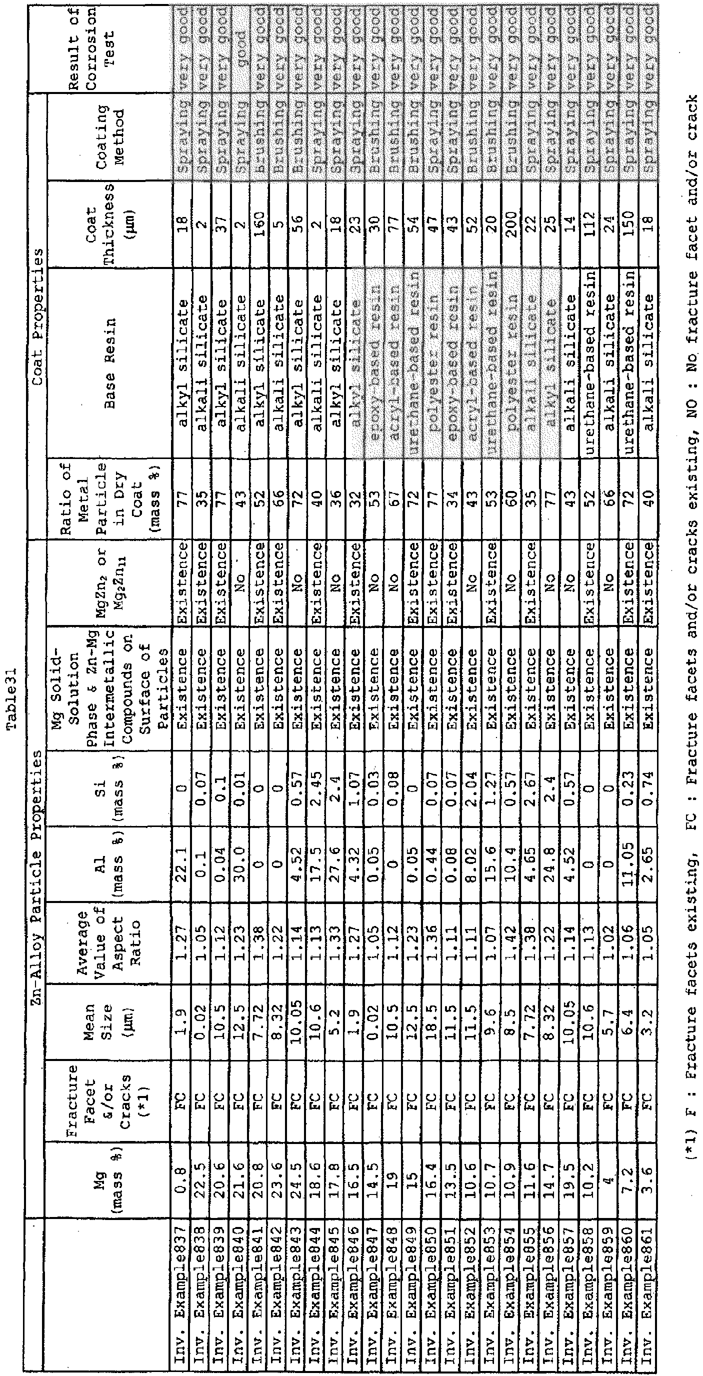

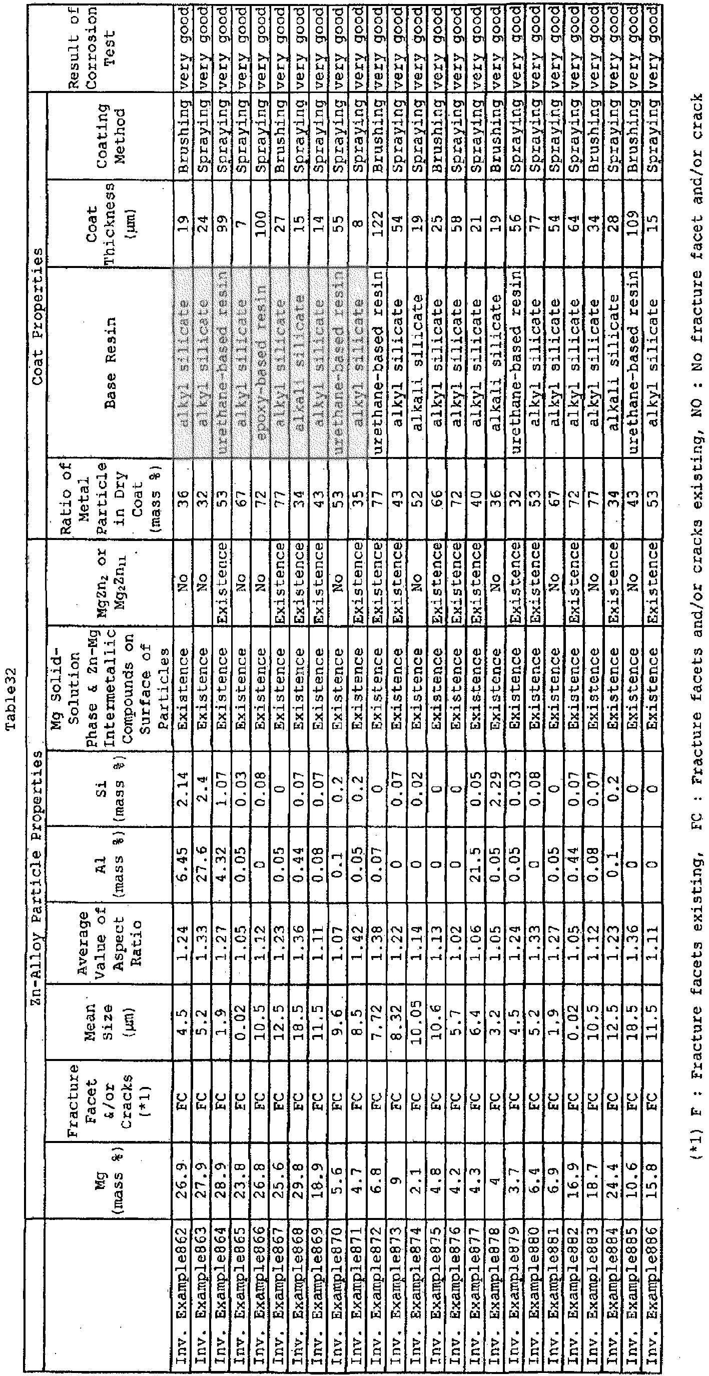

**Table33**

| | Zn-Alloy Particle Properties | | | | | | | | | Coat Properties | | | Result of Corrosion Test |
|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass | Mg Solid-Solution Phase & Zn-Mg Intermetallic Compounds on Surface of Particles | MgZn₂ or Mg₂Zn₁₁ | Ratio of Metal Particle in Dry Coat (mass %) | Base Resin | Coat Thickness (µm) | Coating Method | |
| Inv. Example887 | 19.5 | FC | 9.6 | 1.07 | 0 | 0.07 | Existence | Existence | 72 | alkyl silicate | 14 | Spraying | very good |
| Inv. Example888 | 7.8 | FC | 8.5 | 1.42 | 0 | 0.02 | Existence | Existence | 77 | alkyl silicate | 18 | Spraying | very good |
| Inv. Example889 | 4.9 | FC | 7.72 | 1.38 | 25.8 | 0.05 | Existence | Existence | 77 | urethane-based resin | 122 | Brushing | very good |
| Inv. Example890 | 10.8 | FC | 8.32 | 1.22 | 22.1 | 0 | Existence | No | 43 | alkyl silicate | 54 | Spraying | very good |
| Inv. Example891 | 3.8 | FC | 10.05 | 1.14 | 21.5 | 0.05 | Existence | No | 52 | alkali silicate | 19 | Spraying | very good |
| Inv. Example892 | 22.6 | FC | 10.6 | 1.13 | 0.05 | 2.29 | Existence | No | 66 | alkyl silicate | 25 | Brushing | very good |
| Inv. Example893 | 27.9 | FC | 5.7 | 1.02 | 0 | 0 | Existence | Existence | 72 | alkyl silicate | 58 | Spraying | very good |
| Inv. Example894 | 24.8 | FC | 6.4 | 1.06 | 0 | 0 | Existence | No | 40 | alkyl silicate | 21 | Spraying | very good |
| Inv. Example895 | 26.8 | FC | 3.2 | 1.05 | 0.07 | 0 | Existence | Existence | 36 | alkali silicate | 19 | Brushing | very good |
| Inv. Example896 | 25.9 | FC | 4.5 | 1.24 | 0 | 0.07 | Existence | Existence | 32 | urethane-based resin | 56 | Spraying | very good |
| Inv. Example897 | 9.8 | FC | 5.2 | 1.33 | 0 | 0.02 | Existence | Existence | 53 | alkyl silicate | 77 | Spraying | very good |
| Inv. Example898 | 5.6 | FC | 1.9 | 1.27 | 22.1 | 0 | Existence | Existence | 67 | alkyl silicate | 54 | Spraying | very good |
| Inv. Example899 | 12.3 | FC | 0.02 | 1.05 | 1.24 | 1.8 | Existence | Existence | 52 | alkali silicate | 2 | Spraying | very good |
| Inv. Example900 | 0.8 | FC | 27.89 | 1.12 | 1.24 | 0.9 | Existence | Existence | 55 | alkali silicate | 20 | Spraying | very qood |
| Inv. Example901 | 1 | FC | 0.32 | 1.23 | 0.8 | 0.7 | Existence | No | 69 | alkali silicate | 5 | Spraying | very good |
| Inv. Example902 | 2.3 | FC | 11.44 | 1.36 | 0 | 1.8 | Existence | Existence | 78 | alkyl silicate | 20 | Spraying | very good |
| Inv. Example903 | 15.6 | FC | 1.05 | 1.11 | 1.1 | 2.41 | Existence | Existence | 42 | alkali silicate | 15 | Brushing | very good |
| Inv. Example904 | 6.7 | FC | 36.47 | 1.07 | 1.8 | 0.08 | Existence | Existence | 32 | alkyl silicate | 57 | Brushing | very good |
| Inv. Example905 | 7.5 | FC | 5.07 | 1.42 | 3.8 | 2.23 | Existence | No | 66 | alkali silicate | 13 | Brushing | very good |
| Inv. Example906 | 8.4 | FC | 7.72 | 1.38 | 2.9 | 0.06 . | Existence | Existence | 67 | alkyl silicate | 22 | Brushing | very good |
| Inv. Example907 | 9.3 | FC | 8.32 | 1.22 | 10.5 | 0.02 | Existence | Existence | 64 | alkali silicate | 20 | Spraying | very good |
| Inv. Example908 | 10.4 | FC | 10.05 | 1.14 | 2.9 | 0.02 | Existence | Existence | 74 | alkyl silicate | 27 | Spraying | very good |
| Inv. Example909 | 11.2 | FC | 6.08 | 1.13 | 16.8 | 1.37 | Existence | No | 82 | alkali silicate | 15 | Spraying | very good |
| Inv. Example910 | 11.7 | FC | 17.89 | 1.02 | 0 | 2.43 | Existence | Existence | 37 | alkyl silicate | 35 | Spraying | very good |
| Inv. Example911 | 21.5 | FC | 19.54 | 1.06 | 3.6 | 0.02 | Existence | Existence | 42 | alkali silicate | 34 | Brushing | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table34**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | Ratio of Metal Particle in Dry Coat (mass %) | Base Resin | Coat Thickness (µm) | Coating Method | |
| Inv. Example912 | 13.4 | FC | 21.08 | 1.05 | 2.1 | 1.5 | Existence | No | 66 | alkyl silicate | 45 | Brushing | very good |
| Inv. Example913 | 14.6 | FC | 23.04 | 1.24 | 0.06 | 1.3 | Existence | Existence | 48 | alkali silicate | 52 | Brushing | very good |
| Inv. Example914 | 25.8 | FC | 9.21 | 1.33 | 0.02 | 1.8 | Existence | Existence | 33 | alkyl silicate | 23 | Brushing | very good |
| Inv. Example915 | 16.7 | FC | 0.12 | 1.27 | 1.6 | 0.9 | Existence | Existence | 75 | alkali silicate | 5 | Spraying | very good |
| Inv. Example916 | 17.3 | FC | 29.24 | 1.37 | 3.5 | 0 | Existence | Existence | 77 | alkyl silicate | 52 | Brushing | very good |
| Inv. Example917 | 18.5 | FC | 128.74 | 1.10 | 9.8 | 1.8 | Existence | No | 66 | alkali silicate | 150 | Brushing | very good |
| Inv. Example918 | 19.3 | FC | 33.57 | 1.04 | 11.5 | 0.7 | Existence | Existence | 67 | alkyl silicate | 60 | Brushing | very good |
| Inv. Example919 | 3.5 | FC | 3.04 | 1.02 | 0.4 | 1.5 | Existence | Existence | 45 | alkali silicate | 15 | Spraying | very good |
| Inv. Example920 | 22.5 | FC | 7.54 | 1.01 | 0.6 | 1.3 | Existence | Existence | 48 | alkyl silicate | 24 | Spraying | very good |
| Inv. Example921 | 23.7 | FC | 6.81 | 1.08 | 10.6 | 1.8 | Existence | No | 68 | alkali silicate | 34 | Spraying | very good |
| Inv. Example922 | 24.2 | FC | 5.25 | 1.14 | 9.5 | 0 | Existence | Existence | 35 | alkyl silicate | 20 | Brushing | very good |
| Inv. Example923 | 0.2 | FC | 194.23 | 1.23 | 11.04 | 0.7 | Existence | Existence | 37 | alkali silicate | 200 | Brushing | very good |
| Inv. Example924 | 27.1 | FC | 28.74 | 1.33 | 0.01 | 1.8 | Existence | Existence | 38 | alkyl silicate | 56 | Brushing | very good |
| Inv. Example925 | 29.3 | FC | 13.57 | 1.37 | 0.07 | 0.7 | Existence | Existence | 41 | alkali silicate | 34 | Spraying | very good |
| Inv. Example926 | 0.5 | FC | 0.65 | 1.44 | 1.8 | 1.5 | Existence | Existence | 54 | alkyl silicate | 2 | Spraying | very good |
| Inv. Example927 | 2.7 | FC | 4.12 | 1.21 | 0 | 1.3 | Existence | Existence | 57 | alkali silicate | 15 | Spraying | very good |
| Inv. Example928 | 28.4 | FC | 0.72 | 1.22 | 2.9 | 1.8 | Existence | Existence | 59 | alkali silicate | 10 | Spraying | very good |
| Inv. Example929 | 8.7 | FC | 117.54 | 1.23 | 10.5 | 0.9 | Existence | Existence | 64 | alkyl silicate | 125 | Brushing | very good |
| Inv. Example930 | 9.2 | FC | 7.81 | 1.47 | 2.9 | 0.7 | Existence | Existence | 66 | alkali silicate | 24 | Brushing | very good |
| Inv. Example931 | 17.8 | FC | 80.25 | 1.01 | 16.8 | 1.8 | Existence | No | 67 | alkyl silicate | 110 | Brushing | very good |
| Inv. Example932 | 20.2 | FC | 8.47 | 1.04 | 2.7 | 0.7 | Existence | Existence | 34 | alkali silicate | 24 | Brushing | very good |
| Inv. Example933 | 0.4 | FC | 0.87 | 1.05 | 0.04 | 0.7 | Existence | Existence | 54 | alkyl silicate | 2 | Spraying | very good |
| Inv. Example934 | 13.7 | FC | 25.78 | 1.12 | 0 | 0.04 | Existence | Existence | 62 | alkali silicate | 37 | Spraying | very good |
| Inv. Example935 | 14.7 | FC | 93.45 | 1.11 | 1.24 | 0.05 | Existence | Existence | 66 | alkyl silicate | 113 | Brushing | very good |
| Inv. Example936 | 2.4 | FC | 0.97 | 1.08 | 0.05 | 1.24 | Existence | Existence | 67 | alkali silicate | 2 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table35**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | Ratio of Metal Particle in Dry Coat (mass %) | Base Resin | coat Thickness (µm) | Coating Method | |
| Inv. Example937 | 4.5 | FC | 54.89 | 1.47 | 1.24 | 0.06 | Existence | Existence | 68 | alkyl silicate | 75 | Brushing | very good |
| Inv. Example938 | 0.1 | FC | 10.81 | 1.50 | 1.24 | 0.07 | Existence | Existence | 33 | alkali silicate | 30 | Brushing | very good |
| Inv. Example939 | 30.0 | FC | 18.24 | 1.13 | 0 | 0.75 | Existence | Existence | 35 | alkyl silicate | 34 | Brushing | very good |
| Inv. Example940 | 24.5 | FC | 114.78 | 1.04 | 0.9 | 1.5 | Existence | Existence | 43 | epoxy-based resin | 124 | Brushing | very good |
| Inv. Example941 | 27.6 | FC | 3.87 | 1.02 | 0.03 | 1.3 | Existence | Existence | 44 | acryl-based resin | 15 | Spraying | very good |
| Inv. Example942 | 4.1 | FC | 11.94 | 1.08 | 10.5 | 1.8 | Existence | No | 43 | urethane-based resin | 23 | Spraying | very good |
| Inv. Example943 | 3.2 | FC | 142.58 | 1.15 | 2.9 | 0.9 | Existence | Existence | 44 | polyester resin | 157 | Brushing | very good |
| Inv. Example944 | 2.7 | FC | 12.5 | 1.34 | 16.8 | 0.7 | Existence | Existence | 54 | epoxy-based resin | 26 | Spraying | very good |
| Inv. Example945 | 0.12 | FC | 31.24 | 1.25 | 2.7 | 1.8 | Existence | Existence | 79 | acryl-based resin | 38 | Spraying | very good |
| Inv. Example946 | 0.22 | FC | 152.46 | 1.19 | 0.02 | 0.7 | Existence | Existence | 73 | urethane-based resin | 160' | Brushing | very good |
| Inv. Example947 | 0.37 | FC | 13.4 | 1.18 | 0 | 1.5 | Existence | Existence | 69 | polyester resin | 27 | Brushing | very good |
| Inv. Example948 | 1.4 | FC | 160.57 | 1.24 | 7.42 | 1.3 | Existence | Existence | 63 | epoxy-based resin | 180 | Brushing | very good |
| Inv. Example949 | 4.2 | FC | 14.1 | 1.11 | 0.02 | 1.8 | Existence | Existence | 35 | acryl-based resin | 26 | Spraying | very good |
| Inv. Example950 | 4.8 | FC | 167.55 | 1.27 | 0.04 | 0.9 | Existence | Existence | 35 | urethane-based resin | 180 | Bushing | very good |
| Inv. Example951 | 8.1 | FC | 1.45 | 1.31 | 17.5 | 0 | Existence | Existence | 66 | polyester resin | 15 | Spraying | very good |
| Inv. Example952 | 7.6 | FC | 0.15 | 1.26 | 0.01 | 1.8 | Existence | Existence | 67 | epoxy-based resin | 2 | Spraying | very good |
| Inv. Example953 | 9.9 | FC | 13.1 | 1.14 | 0.02 | 0.7 | Exisitence | Existence | 68 | acryl-based resin | 28 | Spraying | very good |
| Inv. Example954 | 14.8 | FC | 15.5 | 1.34 | 3.8 | 0 | Existence | Existence | 33 | urethane-based resin | 30 | Spraying | very good |
| Inv. Example955 | 16.7 | FC | 0.67 | 1.16 | 2.9 | 0 | Existence | Existence | 35 | polyester resin | 2 | Spraying | very good |
| Inv. Example956 | 17.9 | FC | 137.89 | 1.47 | 10.5 | 1.8 | Existence | Existence | 43 | epoxy-based resin | 157 | Brushing | very good |
| Inv. Example957 | 19.5 | FC | 16.3 | 1.48 | 2.9 | 0.9 | Existence | Existence | 44 | acryl-based resin | 28 | Brushing | very good |
| Inv. Example958 | 22.4 | FC | 110.38 | 1.49 | 16.8 | 0.7 | Existence | Existence | 42 | urethane-based resin | 130 | Brushing | very good |
| Inv. Example959 | 0.17 | FC | 12.4 | 1.34 | 2.7 | 1.8 | Existence | Existence | 33 | polyester resin | 29 | Brushing | very good |
| Inv. Example960 | 8.3 | FC | 17.2 | 1.29 | 0.02 | 0.7 | Existence | No | 30 | epoxy-based resin | 30 | Brushing | very good |
| Inv. Example961 | 6.5 | FC | 105.23 | 1.18 | 0.02 | 0.7 | Existence | Existence | 35 | acryl-based resin | 120 | Brushing | wery good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table36**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Mg Solid-Solution Phase & Zn-Mg Intermetallic Compounds on Surface of Particles | MgZn₂ or mg₂Zn₁₁ | Ratio of Metal Particle in Dry Coat (mass %) | Base Resin | Coat Thickness (µm) | Coating Method | |
| Inv. Example962 | 9.7 | FC | 177.89 | 1.23 | 0.04 | 0.02 | Existence | Existence | 37 | urethane-based resin | 187 | Brushing | very good |
| Inv. Example963 | 11.4 | FC | 12.2 | 1.27 | 0.05 | 0.02 | Existence | Existence | 77 | polyester resin | 28 | Spraying | very good |
| Inv. Example964 | 22.5 | FC | 1.84 | 1.17 | 1.24 | 1.37 | Existence | Existence | 41 | epoxy-based resin | 5 | Spraying | very good |
| Inv. Example965 | 25.7 | FC | 16.02 | 1.16 | 0.05 | 0.02 | Existence | Existence | 35 | acryl-based resin | 35 | Spraying | very good |
| Inv. Example966 | 17.8 | FC | 1.75 | 1.49 | 1.24 | 1.37 | Existence | Existence | 58 | urethane-based resin | 5 | Spraying | very good |
| Inv. Example967 | 0.14 | FC | 198.78 | 1.34 | 1.24 | 1.37 | Existence | Existence | 37 | polyester resin | 200 | Brushing | very good |
| Inv. Example968 | 6.7 | FC | 13.1 | 1.16 | 0.8 | 1.5 | Existence | Existence | 68 | alkali silicate | 25 | Spraying | very good |
| Inv. Example969 | 7.5 | FC | 15.5 | 1.47 | 0.9 | 1.3 | Existence | Existence | 55 | alkali silicate | 15 | Spraying | very qood |
| Inv. Example970 | 8.4 | FC | 0.67 | 1.48 | 1.1 | 1.8 | Existence | No | 77 | alkyl silicate | 20 | Spraying | very good |
| Inv. Example971 | 9.3 | FC | 12.2 | 1.49 | 1.8 | 0.9 | Existence | Existence | 43 | alkali silicate | 18 | Spraying | very good |
| Inv. Example972 | 1.4 | FC | 1.84 | 1.34 | 3.8 | 0.7 | Existence | Existence | 45 | alkyl silicate | 22 | Spraying | very good |
| Inv. Example973 | 4.2 | FC | 16.02 | 1.29 | 2.9 | 1.8 | Existence | Existence | 66 | alkali silicate | 19 | Spraying | very good |
| Inv. Example974 | 4.8 | FC | 1.75 | 1.18 | 10.5 | 0.7 | Existence | Existence | 33 | alkyl silicate | 29 | Spraying | very good |
| Inv. Example975 | 8.1 | FC | 12.4 | 1.23 | 2.9 | 1.5 | Existence | Existence | 66 | alkali silicate | 23 | Spraying | verv qood |
| Inv. Example976 | 7.6 | FC | 17.2 | 1.27 | 16.8 | 1.3 | Existence | Existence | 55 | alkyl silicate | 21 | Spraying | very good |
| Inv. Example977 | 9.9 | FC | 13.1 | 1.17 | 2.7 | 1.8 | Existence | Existence | 49 | alkali silicate | 19 | Spraying | verv good |
| Inv. Example978 | 0.4 | FC | 29.9 | 1.16 | 3.6 | 0.9 | Existence | Existence | 77 | alkyl silicate | 15 | Spraying | very good |
| Inv. Example979 | 10.5 | FC | 0.21 | 1.27 | 0 | 0.7 | Existence | Existence | 41 | alkali silicate | 18 | Spraying | very good |
| Inv. Example980 | 0.4 | FC | 0.22 | 1.17 | 0.06 | 1.8 | Existence | Existence | 64 | alkyl silicate | 22 | Spraying | very good |
| Inv. Example981 | 10.5 | FC | 29.5 | 1.27 | 0.02 | 0.7 | Existence | Existence | 58 | alkyl silicate | 21 | Spraying | very good |
| Inv. Example982 | 0.51 | FC | 29.9 | 1.18 | 1.6 | 1.5 | Existence | Existence | 33 | alkyl silicate | 29 | Spraying | very good |
| Inv. Example983 | 9.8 | FC | 0.21 | 1.23 | 3.5 | 0 | Existence | Existence | 66 | alkali silicate | 23 | Spraying | very good |
| Inv. Example984 | 0.52 | FC | 0.22 | 1.27 | 9.8 | 1.8 | Existence | Existence | 55 | alkyl silicate | 21 | Spraying | very good |
| Inv. Example985 | 9.9 | FC | 29.5 | 1.17 | 11.5 | 0.9 | Existence | No | 49 | alkali silicate | 19 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table37**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | Ratio of Metal Particle in Dry Coat (mass %) | Base Resin | Coat Thickness (µm) | Coating Method | |
| Inv. Example986 | 14.8 | FC | 16.02 | 1.48 | 0.4 | 0.7 | Existence | Existence | 77 | alkyl silicate | 21 | Spaying | very good |
| Inv. Example987 | 16.7 | FC | 1.75 | 1.49 | 0.6 | 1.8 | Existence | Existence | 43 | alkali silicate | 19 | Spraying | very good |
| Inv. Example988 | 17.9 | FC | 12.4 | 1.34 | 10.6 | 0.7 | Existence | Existence | 45 | alkyl silicate | 15 | Spraying | very good |
| Inv. Example989 | 19.5 | FC | 17.2 | 1.29 | 9.5 | 0.7 | Existence | Existence | 66 | alkali silicate | 18 | Spraying | very good |
| Comp. Example35 | 2.3 | FC | 205.6 | 1.23 | 0.07 | 0 | Existence | Existence | 75 | alkyl silicate | 25 | Spraying | poor |
| Comp. Example36 | 2.3 | FC | 0.005 | 1.23 | 0 | 0.07 | Existence | Existence | 75 | alkyl silicate | 25 | Spraying | poor |
| Comp. Example37 | 2.3 | FC | 205.6 | 1.23 | 0 | 0.02 | Existence | Existence | 75 | alkyl silicate | 105 | Brushing | poor |
| Comp. Example38 | 2.3 | FC | 0.005 | 1.23 | 22.1 | 0 | Existence | Existence | 75 | alkyl silicate | 165 | Spraying | poor |
| Comp. Example39 | 0.01 | FC | 0.4 | 1.24 | 1.2 | 0.5 | Existence | Existence | 58 | acryl-based resin | 5 | Spraying | poor |
| Comp. Example40 | 0.8 | FC | 3.2 | 2.54 | 0.6 | 0.8 | Existence | Existence | 64 | urethane-based resin | 2 | Spraying | poor |
| Comp. Example41 | 8.47 | NO | 0.67 | 1.25 | 2 | 1.9 | Existence | Existence | 54 | polyester resin | 12 | Brushing | poor |
| Comp. Example42 | 24.5 | NO | 2.5 | 1.05 | 0.8 | 0.9 | Existence | Existence | 32 | epoxy-based resin | 15 | Brushing | poor |
| Comp. Example43 | 0.01 | FC | 0.4 | 1.24 | 0 | 0.02 | Existence | Existence | 57 | alkali silicate | 2 | Spraying | poor |
| Comp. Example44 | 0.8 | FC | 0.2 | 1.78 | 25.8 | 0.05 | Existence | Existence | 70 | alkyl silicate | 5 | Spraying | poor |
| Comp. Example45 | 8.47 | NO | 0.67 | 1.25 | 22.1 | 0 | Existence | Existence | 64 | alkali silicate | 12 | Brushing | poor |
| Comp. Example46 | 24.5 | NO | 2.5 | 1.05 | 21.5 | 0.05 | Existence | Existence | 42 | alkyl silicate | 15 | Brushing | poor |
| Comp. Example47 | 4.05 | NO | 0.02 | 1.23 | 0.05 | 2.29 | Existence | Existence | 38 | alkali silicate | 13 | Brushing | poor |
| Comp. Example48 | 6.78 | NO | 12.5 | 1.35 | 0 | 0 | Existence | Existence | 44 | alkyl silicate | 22 | Spraying | poor |
| Comp. Example49 | 15.8 | NO | 23.3 | 1.14 | 0 | 0 | Existence | Existence | 56 | alkali silicate | 34 | Spraying | poor |
| Comp. Example50 | 4.5 | FC | 3.5 | 2.84 | 22.1 | 0 | Existence | Existence | 76 | alkyl silicate | 15 | Brushing | poor |
| Comp. Example51 | 3.2 | FC | 6.7 | 1.75 | 0.05 | 2.29 | Existence | Existence | 65 | alkyl silicate | 15 | Spraying | poor |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table38**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, mg₂Zn₃, MgZn, or Mg₇Zn₃ | Ratio of Metal Particle in Dry Coat (mass %) | Base Resin | Coat Thickness (µm) | Coating Method | |
| Inv. Example2139 | 7.5 | FC | 5.07 | 1.42 | 0 | 0 | Existence | Existence | 74 | alkali silicate | 24 | Brushing | very good |
| Inv. Example2140 | 8.06 | FC | 7.72 | 1.38 | 0 | 0 | Existence | Existence | 82 | alkyl silicate | 25 | Spraying | very good |
| Inv. Example2141 | 9.3 | FC | 8.32 | 1.22 | 0 | 0 | Existence | No | 37 | alkali silicate | 14 | Spraying | very good |
| Inv. Example2142 | 3.5 | FC | 3.04 | 1.02 | 0 | 0 | Existence | Existence | 48 | alkali silicate | 15 | Spraying | very good |
| Inv. Example2143 | 2.7 | FC | 4.12 | 1.21 | 0 | 0 | Existence | No | 32 | alkali silicate | 15 | Spraying | very good |
| Inv. Example2144 | 9.2 | FC | 7.81 | 1.47 | 0 | 0 | Existence | Existence | 45 | alkyl silicate | 15 | Brushing | very good |
| Tnv. Example2145 | 8.1 | FC | 1.45 | 1.31 | 0 | 0 | Existence | No | 37 | epoxy-based resin | 5 | Spraying | good |
| Inv. Example2146 | 7.5 | FC | 9.6 | 1.07 | 0 | 0 | Existence | Existence | 72 | urethane-based resin | 150 | Spraying | very good |
| Inv. Example2147 | 4.5 | FC | 8.5 | 1.42 | 0 | 0 | Existence | No | 40 | alkali silicate | 18 | Spraying | very good |
| Inv. Example2148 | 3.6 | FC | 3.2 | 1.05 | 0 | 0 | Existence | No | 40 | alkali silicate | 18 | Spraying | very good |
| Inv. Example2149 | 4.2 | FC | 5.7 | 1.02 | 1.5 | 0 | Existence | Existence | 72 | alkyl silicate | 58 | Spraying | very good |
| Inv. Example2150 | 4.3 | FC | 6.4 | 1.06 | 5.5 | 1.6 | Existence | No | 40 | alkyl silicate | 21 | Spraying | very good |
| Inv. Example2151 | 4 | FC | 3.2 | 1.05 | 0 | 0 | Existence | Existence | 36 | alkali silicate | 19 | Brushing | very good |
| Inv. Example2152 | 6.4 | FC | 5.2 | 1.33 | 0 | 0 | Existence | Existence | 53 | alkyl silicate | 77 | Spraying | very good |
| Inv. Example2153 | 9.8 | FC | 5.2 | 1.33 | 0 | 0 | Existence | No | 53 | alkyl silicate | 77 | Spraying | very good |
| Inv. Example2154 | 7.5 | FC | 5.07 | 1.42 | 0 | 0 | Existence | No | 66 | alkali silicate | 13 | Brushing | very good |
| Inv. Example2155 | 8.4 | FC | 7.72 | 1.38 | 0.5 | 0 | Existence | Existence | 67 | alkyl silicate | 22 | Brushing | very good |
| Inv. Example2156 | 2.7 | FC | 4.12 | 1.21 | 0 | 0 | Existence | No | 57 | alkali silicate | 15 | Spraying | very good |
| Inv. Example2157 | 2.64 | FC | 5.5 | 1.22 | 0 | 0 | Existence | No | 43 | alkyl silicate | 16 | Spraying | very |
| Inv. Example2158 | 1.59 | FC | 6.7 | 1.14 | 0 | 0 | Existence | Existence | 76 | alkyl silicate | 5 | Spraying | very good |
| Inv. Example22159 | 2.58 | FC | 8.9 | 1.13 | 0 | 0 | Existence | Existence | 49 | alkyl silicate | 22 | Spraying | very good |
| Inv. Example2160 | 7.55 | FC | 2.15 | 1.14 | 0 | 0 | Existence | Existence | 75 | alkyl silicate | 18 | Spraying | very good |
| Inv, Example2161 | 8.01 | FC | 2.54 | 1.13 | 0 | 0 | Existence | No | 13 | alkyl silicate | 16 | Spraying | very good |
| Inv. Example2162 | 1.06 | FC | 3.4 | 1.38 | 0 | 0 | Existence | Existence | 49 | alkyl silicate | 8 | Spraying | very good |
| Tnv. Example2163 | 2.64 | FC | 5.5 | 1.22 | 0 | 0 | Existence | Existence | 43 | alkyl silicate | 16 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

**Table39**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₇Zn₃ | Ratio of Metal Particle in Dry Coat (mass %) | Base Resin | Coat Thickness (µm) | Coating Method | |
| Inv. Example2164 | 1.59 | FC | 6.7 | 1.14 | 0 | 0 | Existence | Exisitence | 76 | alkyl silicate | 5 | Spraying | very good |
| Inv. Example2165 | 20.5 | FC | 2.15 | 1.14 | 1.5 | 0 | Existence | No | 75 | alkyl silicate | 18 | Spraying | very good |
| Inv. Example2166 | 18.5 | FC | 2.54 | 1.13 | 5.5 | 1.6 | Existence | Existence | 73 | alkyl silicate | 16 | Spraying | very good |
| Inv. Example2167 | 9.51 | FC | 2.77 | 1.38 | 4.5 | 0 | Existence | Existence | 55 | alkyl silicate | 5 | Spraying | very good |
| Inv. Example2168 | 10.01 | FC | 3.68 | 1.22 | 0 | 1.6 | Existence | Existence | 48 | alkyl silicate | 22 | Spraying | very good |
| Inv. Example2169 | 3.54 | FC | 5.5 | 1.22 | 0 | 0 | Existence | No | 78 | alkyl silicate | 18 | Spraying | very good |
| Inv. Example2170 | 4.05 | FC | 2.06 | 1.13 | 0 | 0 | Existence | Existence | 52 | alkyl silicate | 8 | Spraying | very good |
| Inv. Example2171 | 8.57 | FC | 4.99 | 1.02 | 0 | 0 | Existence | Existence | 61 | alkyl silicate | 16 | Spraying | very good |
| Inv. Example2172 | 0.01 | FC | 6.4 | 1.06 | 0 | 0 | Existence | No | 77 | polyester resin | 47 | Spraying | very good |
| Inv. Example2173 | 25.5 | FC | 3.09 | 1.07 | 0 | 0 | Existence | Existence | 49 | alkyl silicate | 22 | Spraying | very good |
| Inv. Example2174 | 2.36 | FC | 3.99 | 1.22 | 0 | 0 | Existence | No | 80 | alkyl silicate | 21 | Spraying | very good |
| Inv. Example2175 | 0.05 | FC | 7.72 | 1.38 | 0 | 0 | Existence | Existence | 36 | alkyl silicate | 19 | Brushing | very good |
| Inv. Example2176 | 0.04 | FC | 8.32 | 1.22 | 0 | 0 | Existence | No | 32 | alkyl silicate | 24 | Spraying | very good |
| Inv. Example2177 | 5.22 | FC | 3.55 | 1.12 | 0 | 0 | Existence | Existence | 55 | alkyl silicate | 19 | Spraying | very good |
| Inv. Example2178 | 4.01 | FC | 2.64 | 1.23 | 0 | 0 | Existence | Existence | 40 | alkyl silicate | 8 | Spraying | very good |
| Inv. Example2179 | 0.05 | FC | 5.2 | 1.33 | 0 | 0 | Existence | Existence | 53 | urethane-based resin | 20 | Brushing | very good |
| Inv. Example2180 | 0.04 | FC | 1.9 | 1.27 | 0 | 0 | Existence | Existence | 60 | polyester resin | 200 | Brushing | very good |
| Inv. Example2181 | 0.05 | FC | 2.5 | 1.05 | 0 | 1.2 | Existence | No | 38 | alkali silicate | 19 | Spraying | very good |
| Inv. Example2182 | 0.07 | FC | 0.09 | 1.12 | 0 | 0.6 | Existence | No | 49 | alkyl silicate | 11 | Spraying | verv good |
| Inv. Example2183 | 2.64 | FC | 5.5 | 1.22 | 0 | 0.01 | Existence | No | 43 | alkyl silicate | 16 | Spraying | very good |
| Inv. Example2184 | 0.08 | FC | 5.6 | 1.36 | 1.5 | 0 | Existence | Existence | 66 | alkyl silicate | 16 | Brushing | very good |
| Inv. Example2185 | 0.09 | FC | 11.5 | 1.11 | 5.5 | 1.6 | Existence | No | 67 | alkali silicate | 33 | Brushing | very good |
| Inv. Example2186 | 0.05 | FC | 19.5 | 1.07 | 4.5 | 0 | Existence | Existence | 54 | alkyl silicate | 8 | Brushing | good |
| Inv. Example2187 | 1.59 | FC | 6.7 | 1.14 | 0 | 0.1 | Existence | Existence | 76 | alkyl silicate | 5 | Spraying | very good |
| Inv. Example2188 | 2.58 | FC | 8.9 | 1.13 | 0.01 | 0 | Existence | Existence | 49 | alkyl silicate | 22 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

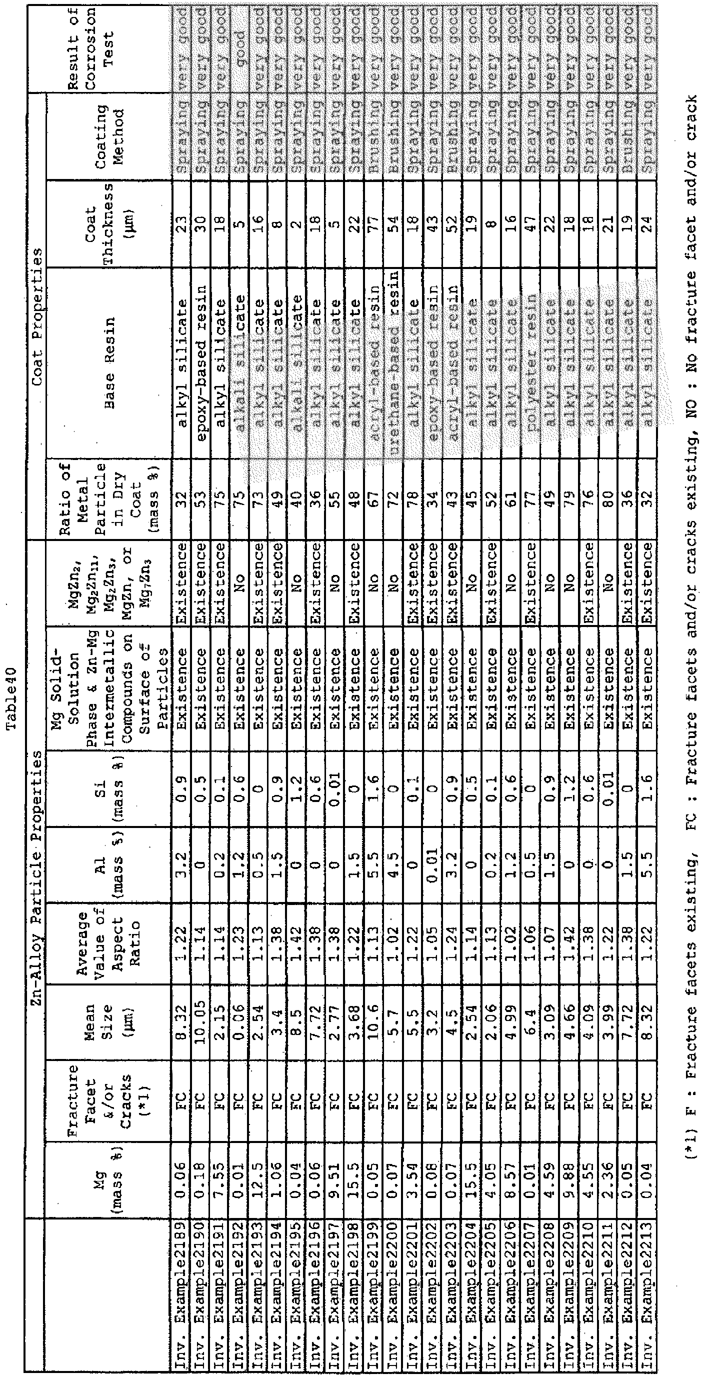

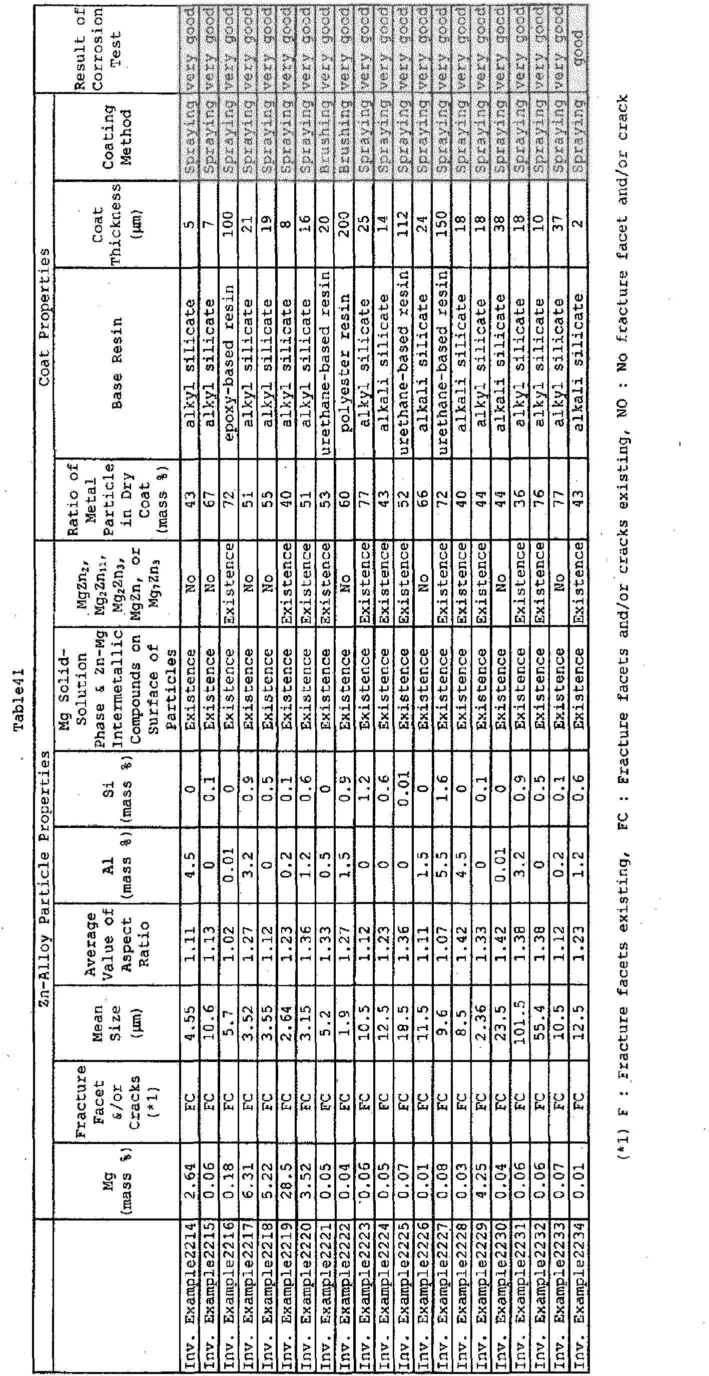

**Table42**

| | Zn-Alloy Particle Properties | | | | | | | | Coat Properties | | | | Result of Corrosion Test |
|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Z₁₁, Mg₂Zn₃, MgZn, or Mg₂Zn₃ | Ratio of Metal Particle in Dry Coat (mass %) | Base Resin | Coat Thickness (µm) | Coating Method | |
| Inv. Example2235 | 0.08 | FC | 18.5 | 1.36 | 0.5 | 0 | Existence | No | 52 | alkyl silicate | 160 | Brushing | very good |
| Inv. Example2236 | 0.09 | FC | 11.5 | 1.11 | 1.5 | 0.9 | Existence | Existence | 66 | alkali silicate | 5 | Brushing | very good |
| Inv. Example2237 | 0.05 | FC | 9.6 | 1.07 | 0.5 | 0 | Existence | No | 72 | alkyl silicate | 56 | Brushing | very good |
| Inv. Example2238 | 0.06 | FC | 10.05 | 1.14 | 1.5 | 0.9 | Existence | Existence | 53 | urethane-based resin | 99 | Spraying | very good |
| Inv. Example2239 | 29.9 | FC | 10.5 | 1.36 | 0 | 0 | Existence | Existence | 55 | urethane-based resin | 700 | Spraying | very good |
| Inv. Example2240 | 16.5 | FC | 7.5 | 1.11 | 0.01 | 0 | Existence | Existence | 47 | alkyl silicate | 554 | Spraying | very good |
| Inv. Example2241 | 12.5 | FC | 2.6 | 1.07 | 3.2 | 0.9 | Existence | No | 79 | urethane-based resin | 688 | Brushing | very good |
| Inv. Example2242 | 9.8 | FC | 3.5 | 1.42 | 0 | 0.5 | Existence | Existence | 42 | urethane-based resin | 421 | Spraying | very good |
| Inv. Example2243 | 9.6 | FC | 4.5 | 1.33 | 0.2 | 0.1 | Existence | No | 36 | urethane-based resin | 651 | Spraying | very good |
| Inv. Example2244 | 7.5 | FC | 1.6 | 1.42 | 0 | 0.5 | Existence | Existence | 53 | urethane-based resin | 402 | Brushing | very good |
| Inv. Example2245 | 4.6 | FC | 2.5 | 1.12 | 5.8 | 0.1 | Existence | Existence | 55 | alkali silicate | 354 | Spraying | very good |
| Inv. Example2246 | 3.8 | FC | 23.5 | 1.23 | 1.2 | 0.6 | Existence | Existence | 42 | urethane-based resin | 504 | Brushing | very good |
| Inv. Example2247 | 0.05 | FC | 9.8 | 1.27 | 15.5 | 0 | Existence | Existence | 76 | urethane-based resin | 666 | Spraying | very good |

| | | | | | | | | | | | | | |
|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | |

### Example 4

Zn alloy particles with the chemical ingredients shown in Tables 43 to 57 were prepared in the same way as in Example 1. The rest is the same as Example 3.

MgZn₂, Mg₂Zn₁₁, Mg₂Zn₃, MgZn, or, Mg₇Zn₃ were identified by analysis of the ratio of composition of the Mg and Zn at the physical fracture facets or crack surfaces by the X-ray diffraction method or by observation by a scanning electron microscopy with an energy dispersion type X-ray analyzer.

Further, the number of facets of the Zn alloy particles was measured by observing 50 to 100 randomly extracted particles by a scan type electron microscope.

From Tables 43 to 57, it is learned that due to the surfaces of the particles including fractured parts having, as intermetallic compounds, at least one type of compound of MgZn₂, Mg₂Zn₁₁, Mg₂Zn₃, MgZn, and Mg₇Zn₃ or due to the number of facets being two facets or more, the painting test pieces using the Zn alloy particles of the present invention are improved in corrosion resistance and rust protection regardless of the type of base resin, that is, both for inorganic-based and organic-based binders.

**Table43**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass%) | Si (mass %) | Mg Solid-Solution Phase & Zn-Mg Intermetallic Compounds on Surface of Particles | MgZn₂ or Mg₂Zn₁₁ | # of facets | Ratio of Metal Particle in Dry Coat (mass %) | Base Resin | Coat Thickness (µm) | Coating Method | |
| Inv. Example139 | 17.3 | F | 29.24 | 1.37 | 11.4 | 0.24 | Existence | No | 6 | 30 | alkali silicate | 35 | Spraying | very good |
| Inv. Example140 | 18.5 | F | 1.28 | 1.10 | 0.04 | 0.03 | Existence | No | 6 | 34 | alkyl silicate | 5 | Spraying | very good |
| Inv. Example141 | 19.3 | F | 33.57 | 1.04 | 0.25 | 0.07 | Existence | No | 7 | 42 | alkali silicate | 43 | Spraying | very good |
| Inv. Example142 | 3.5 | F | 3.04 | 1.02 | 5.43 | 0.65 | Existence | No | 7 | 51 | alkyl silicate | 15 | Spraying | very good |
| Inv. Example143 | 22.5 | F | 7.54 | 1.01 | 17.5 | 2.41 | Existence | No | 6 | 33 | alkali silicate | 20 | Spraying | very good |
| Inv. Example114 | 23.7 | F | 68.12 | 1.08 | 0.01 | 0.08 | Existence | No | 6 | 64 | alkyl silicate | 70 | Brushing | very good |
| Inv. Example145 | 24.2 | F | 0.52 | 1.14 | 0.02 | 2.23 | Existence | No | 6 | 74 | alkali silicate | 2 | Brushing | very good |
| Inv. Example146 | 0.2 | F | 0.12 | 1.23 | 0.02 | 0.06 | Existence | No | 7 | 82 | alkyl silicate | 3 | Brushing | very good |
| Inv. Example147 | 27.1 | F | 58.74 | 1.33 | 0.04 | 0.02 | Existence | No | 6 | 37 | alkali silicate | 65 | Brushing | very good |
| Inv. Example148 | 29.3 | F | 13.57 | 1.37 | 0.05 | 0.02 | Existence | No | 6 | 42 | alkyl silicate | 23 | Spraying | very good |
| Inv. Example149 | 0.5 | F | 6.4 | 1.44 | 1.24 | 1.37 | Existence | No | 6 | 66 | alkali silicate | 15 | Spraying | very good |
| Inv. Example150 | 2.7 | F | 41.23 | 1.21 | 27.5 | 2.43 | Existence | No | 7 | 48 | alkyl silicate | 55 | Brushing | very good |
| Inv. Example151 | 28.4 | F | 0.72 | 1.22 | 0.01 | 0.02 | Existence | No | 6 | 33 | alkali silicate | 2 | Brushing | very good |
| Inv. Example152 | 8.7 | F | 1.18 | 1.23 | 0.01 | 0.01 | Existence | No | 7 | 75 | alkyl silicate | 15 | Brushing | very good |
| Inv. Example153 | 9.2 | F | 7.12 | 1.97 | 0.02 | 0.05 | Existence | No | 6 | 77 | alkali silicate | 20 | Spraying | very good |
| Inv. Example154 | 17.8 | F | 8.01 | 1.01 | 0.03 | 0.04 | Existence | No | 6 | 68 | alkyl silicate | 22 | Spraying | very good |
| Inv. Example155 | 20.2 | F | 0.84 | 1.04 | 7.78 | 0.24 | Existence | No | 6 | 61 | alkali silicate | 56 | Brushing | very good |
| Inv. Example156 | 0.4 | F | 87.65 | 1.05 | 0.04 | 0.06 | Existence | No | 7 | 59 | alkyl silicate | 95 | Brushing | very good |
| Inv. Example157 | 13.7 | F | 2.59 | 1.12 | 11.21 | 0.74 | Existence | No | 6 | 39 | alkali silicate | 13 | Spraying | very good |
| Inv. Example158 | 14.7 | F | 93.45 | 1.11 | 0.09 | 0.01 | Existence | No | 6 | 42 | alkyl silicate | 100 | Brushing | very good |
| Inv. Example159 | 2.4 | F | 9.84 | 1.08 | 5.41 | 1.27 | Existence | No | 7 | 48 | alkali silicate | 18 | Spraying | very good |
| Inv. Example160 | 4.5 | F | 5.45 | 1.47 | 0.02 | 0.03 | Existence | No | 6 | 44 | alkyl silicate | 15 | Spraying | very good |
| Inv. Example161 | 0.1 | F | 1.08 | 1.50 | 0.02 | 0.07 | Existence | No | 7 | 47 | alkali silicate | 12 | Spraying | very good |
| Inv. Example162 | 30.0 | F | 180.24 | 1.13 | 0.03 | 0.08 | Existence | Existence | 6 | 52 | alkyl silicate | 5 | Spraying | very good |
| Inv. Example163 | 29.5 | F | 11.4 | 1.04 | 11.04 | 0.21 | Existence | Existence | 6 | 55 | alkali silicate | 130 | Brushing | very good |
| Inv. Example164 | 27.6 | F | 38.75 | 1.02 | 0.01 | 0.02 | Existence | Existence | 6 | 69 | alkyl silicate | 70 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table44**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | A1 (mass %) | Si (mass %) | Mg Solid-Solution Phase & Zn-Mg Intermetallic Compounds on Surface of Particles | MgZn₂ or Mg₂Zn₁₁ | # of facets | Ratio of Metal Particle in Dry Coat (mass %) | Base Resin | Coat Thickness (µm) | Coating Method | |
| Inv. Example165 | 4.1 | F | 119.87 | 1.08 | 0.07 | 0.04 | Existence | Existence | 6 | 78 | alkali silicate | 123 | Brushing | very good |
| Inv. Example166 | 3.2 | F | 1.42 | 1.15 | 0.08 | 0.01 | Existence | Existence | 7 | 42 | alkyl silicate | 15 | Spraying | very good |
| Inv. Example167 | 2.7 | F | 12.5 | 1.34 | 0.04 | 0.03 | Existence | Existence | 6 | 32 | alkali silicate | 25 | Spraying | very good |
| Inv. Example168 | 0.12 | F | 31.24 | 1.25 | 0.02 | 0.04 | Existence | Existence | 6 | 66 | alkyl silicate | 66 | Brushing | very good |
| Inv. Example169 | 0.22 | F | 152.46 | 1.19 | 0.02 | 0.02 | Existence | Existence | 6 | 67 | alkali silicate | 170 | Brushing | very good |
| Inv. Example170 | 0.37 | F | 13.4 | 1.18 | 4.12 | 0.61 | Existence | Existence | 7 | 45 | alkyl silicate | 24 | Brushing | very good |
| Inv. Example171 | 1.4 | F | 1.61 | 1.24 | 0.05 | 0.02 | Existence | Existence | 6 | 48 | alkali silicate | 15 | Brushing | very good |
| Inv. Example172 | 4.2 | F | 14.1 | 1.11 | 2.14 | 0.74 | Existence | Existence | 6 | 68 | alkyl silicate | 20 | Spraying | very good |
| Inv. Example173 | 4.8 | F | 1.67 | 1.27 | 0.03 | 0.02 | Existence | Existence | 7 | 35 | alkali silicate | 15 | Spraying | very good |
| Inv. Example174 | 8.1 | F | 1.45 | 1.31 | 0.03 | 0.04 | Existence | Existence | 6 | 37 | alkyl silicate | 12 | Spraying | very good |
| Inv. Example175 | 7.6 | F | 14.8 | 1.26 | 0.04 | 0.05 | Existence | Existence | 6 | 38 | alkali silicate | 12 | Spraying | very good |
| Inv. Example176 | 9.9 | F | 1.31 | 1.14 | 7.54 | 1.24 | Existence | Existence | 6 | 41 | alkyl silicate | 15 | Brushing | very good |
| Inv. Example177 | 14.8 | F | 15.5 | 1.34 | 0.08 | 0.06 | Existence | Existence | 7 | 54 | alkali silicate | 160 | Brushing | very good |
| Inv. Example178 | 16.7 | F | 0.67 | 1.16 | 0.01 | 0.07 | Existence | Existence | 7 | 57 | alkyl silicate | 2 | Brushing | very good |
| Inv. Example179 | 17.9 | F | 137.89 | 1.47 | 29.8 | 0.75 | Existence | Existence | 6 | 59 | epoxy-based resin | 140 | Brushing | very good |
| Inv. Example180 | 19.5 | F | 1.63 | 1.48 | 0.01 | 0.02 | Existence | Existence | 6 | 64 | acryl-based resin | 15 | Spraying | very good |
| Inv. Example181 | 22.4 | F | 1.12 | 1.49 | 0.03 | 0.01 | Existence | Existence | 7 | 66 | urethane-based resin | 170 | Brushing | very good |
| Inv. Example182 | 0.17 | F | 169.88 | 1.34 | 0.02 | 0.01 | Existence | Existence | 6 | 67 | polyester resin | 20 | Brushing | very good |
| Inv. Example183 | 8.3 | F | 1.72 | 1.29 | 8.04 | 1.24 | Existence | Existence | 6 | 75 | epoxy-based resin | 2 | Spraying | very good |
| Inv. Example184 | 6.5 | F | 10.5 | 1.18 | 0.06 | 0.04 | Existence | Existence | 6 | 74 | acryl-based resin | 15 | Spraying | very good |
| Inv. Example 185 | 9.7 | F | 17.7 | 1.23 | 0.08 | 0.02 | Existence | Existence | 7 | 77 | urethane-based resin | 27 | Spraying | very good |
| Inv. Example186 | 11.4 | F | 122.54 | 1.27 | 0.03 | 0.01 | Existence | Existence | 6 | 41 | polyester resin | 145 | Brushing | very good |
| Inv. Example187 | 22.5 | F | 1.84 | 1.17 | 0.04 | 0.03 | Existence | Existence | 6 | 35 | epoxy-based resin | 5 | Spraying | very good |
| Inv. Example188 | 25.7 | F | 19.1 | 1.16 | 7.42 | 1.22 | Existence | Existence | 6 | 58 | acryl-based resin | 15 | Spraying | very good |
| Inv. Example189 | 17.8 | F | 1.75 | 1.49 | 0.02 | 0.01 | Existence | Existence | 7 | 78 | urethane-based resin | 20 | Brushing | very good |
| Inv. Example190 | 0.14 | F | 198.78 | 1.34 | 0.08 | 0.02 | Existence | Existence | 6 | 66 | polyester resin | 200 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

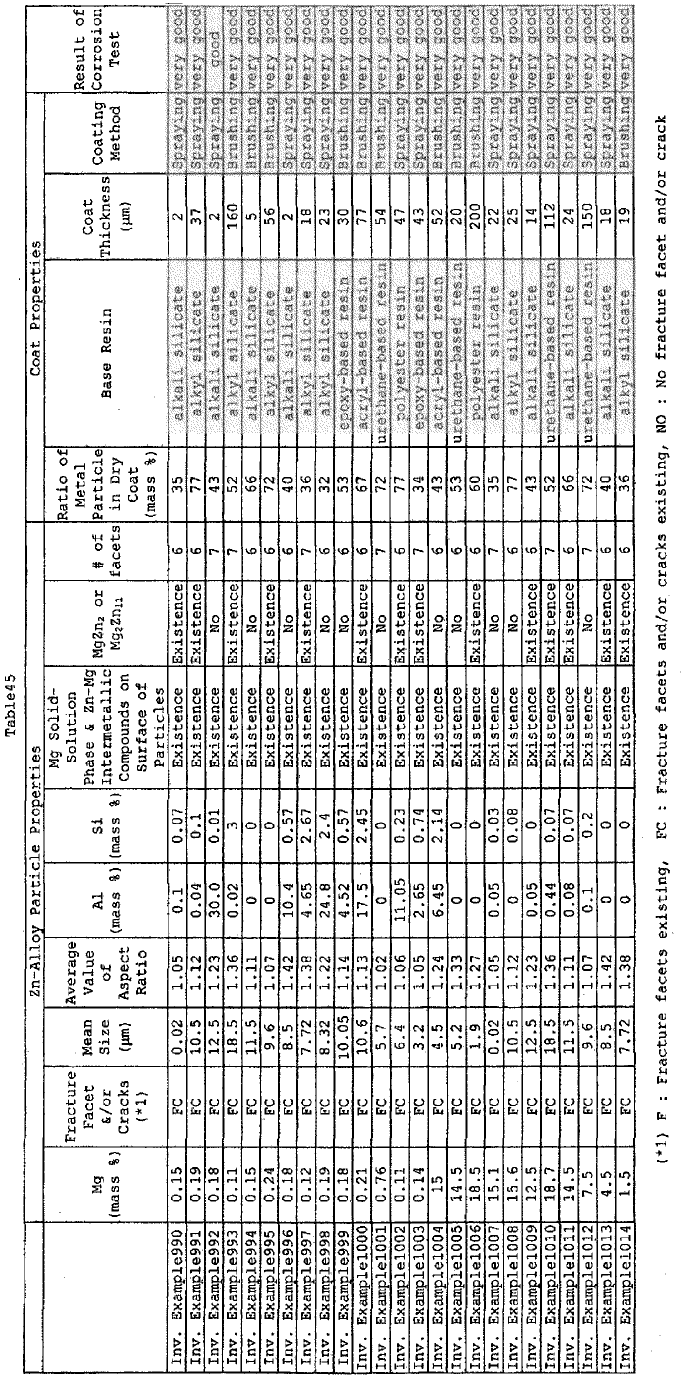

**Table46**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | # of facets | Ratio of Metal Particle in Dry Coat (mass %) | Base Resin | Coat Thickness (µm) | Coating Method | |
| Inv. Example1015 | 4.8 | FC | 8.32 | 1.22 | 0 | 0.07 | Existence | Existence | 6 | 32 | alkyl silicate | 24 | Spraying | very good |
| Inv. Example1016 | 9.6 | FC | 10.05 | 1.14 | 0 | 0.02 | Existence | No | 6 | 53 | urethane-based resin | 99 | Spraying | very good |
| Inv. Example1017 | 11.5 | FC | 10.6 | 1.13 | 25.8 | 0.05 | Existence | Existence | 7 | 67 | alkyl silicate | 7 | Spraying | very good |
| Inv. Example1018 | 9.8 | FC | 5.7 | 1.02 | 22.1 | 0 | Existence | Existence | 6 | 72 | epoxy-based resin | 100 | Spraying | very good |
| Inv. Example1019 | 7.6 | FC | 6.4 | 1.06 | 21.5 | 0.05 | Existence | Existence | 6 | 77 | alkyl silicate | 27 | Brushing | very good |
| Inv. Example1020 | 3.2 | FC | 3.2 | 1.05 | 0.05 | 2.29 | Existence | No | 6 | 34 | alkali silicate | 15 | Spraying | very good |
| Inv. Example1021 | 1.9 | FC | 4.5 | 1.24 | 0.05 | 0.03 | Existence | Existence | 7 | 43 | alkyl silicate | 14 | Sprayinq | very good |
| Inv. Example1022 | 11.5 | FC | 5.2 | 1.33 | 0 | 0.08 | Existence | Existence | 6 | 53 | urethane-based resin | 55 | Spraying | very good |
| Inv. Example1023 | 8.7 | FC | 1.9 | 1.27 | 0 | 0 | Existence | No | 6 | 35 | alkyl silicate | 8 | Spraying | very qood |
| Inv. Example1024 | 9.6 | FC | 0.02 | 1.05 | 0 | 0 | Existence | Existence | 7 | 77 | urethane-based resin | 122 | Brushing | very good |
| Inv. Example1025 | 9.4 | FC | 10.5 | 1.12 | 0.08 | 0.07 | Existence | No | 6 | 43 | alkyl silicate | 54 | Spraying | very good |
| Inv. Example1026 | 10.5 | FC | 12.5 | 1.23 | 0.1 | 0.2 | Existence | Existence | 6 | 52 | alkali silicate | 19 | Spraying | very good |
| Inv. Example1027 | 12.6 | FC | 18.5 | 1.36 | 0.05 | 0.2 | Existence | No | 6 | 66 | alkyl silicate | 25 | Brushing | very good |
| Inv. Example1026 | 29.5 | FC | 11.5 | 1.11 | 0.07 | 0 | Existence | Existence | 7 | 72 | alkyl silicate | 58 | Spraying | very good |
| Inv. Example1029 | 29.4 | FC | 9.6 | 1.07 | 0 | 0.07 | Existence | Existence | 7 | 40 | alkyl silicate | 21 | Spraying | very good |
| Inv. Example1030 | 27.5 | FC | 8.5 | 1.42 | 0 | 0.02 | Existence | Existence | 6 | 36 | alkali silicate | 19 | Brushing | very good |
| Inv. Example1031 | 0.8 | FC | 7.72 | 1.38 | 25.8 | 0.05 | Existence | Existence | 6 | 32 | urethane-based resin | 56 | Spraying | very good |
| Inv. Example1032 | 1.6 | FC | 8.32 | 1.22 | 22.1 | 0 | Existence | No | 7 | 53 | alkyl silicate | 77 | Spraying | very good |
| Inv. Example1033 | 22.9 | FC | 10.05 | 1.14 | 21.5 | 0.05 | Existence | No | 6 | 67 | alkyl silicate | 54 | Spraying | very good |
| Inv. Example1034 | 28.5 | FC | 10.6 | 1.13 | 0.05 | 2.29 | Existence | No | 6 | 72 | alkyl silicate | 64 | Spraying | very good |
| Inv. Example1035 | 29.5 | FC | 5.7 | 1.02 | 0.1 | 0.2 | Existence | Existence | 6 | 77 | alkyl silicate | 34 | Brushing | very good |
| Inv. Example1036 | 18.7 | FC | 6.4 | 1.06 | 0.05 | 0.2 | Existence | No | 7 | 34 | alkali silicate | 28 | Spraying | very good |
| Inv. Example1037 | 19.5 | FC | 3.2 | 1.05 | 0.07 | 0 | Existence | Existence | 6 | 43 | urethane-based resin | 109 | Brushing | very qood |
| Inv. Example1038 | 20.4 | FC | 4.5 | 1.24 | 0 | 0.07 | Existence | Existence | 6 | 53 | alkyl silicate | 15 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

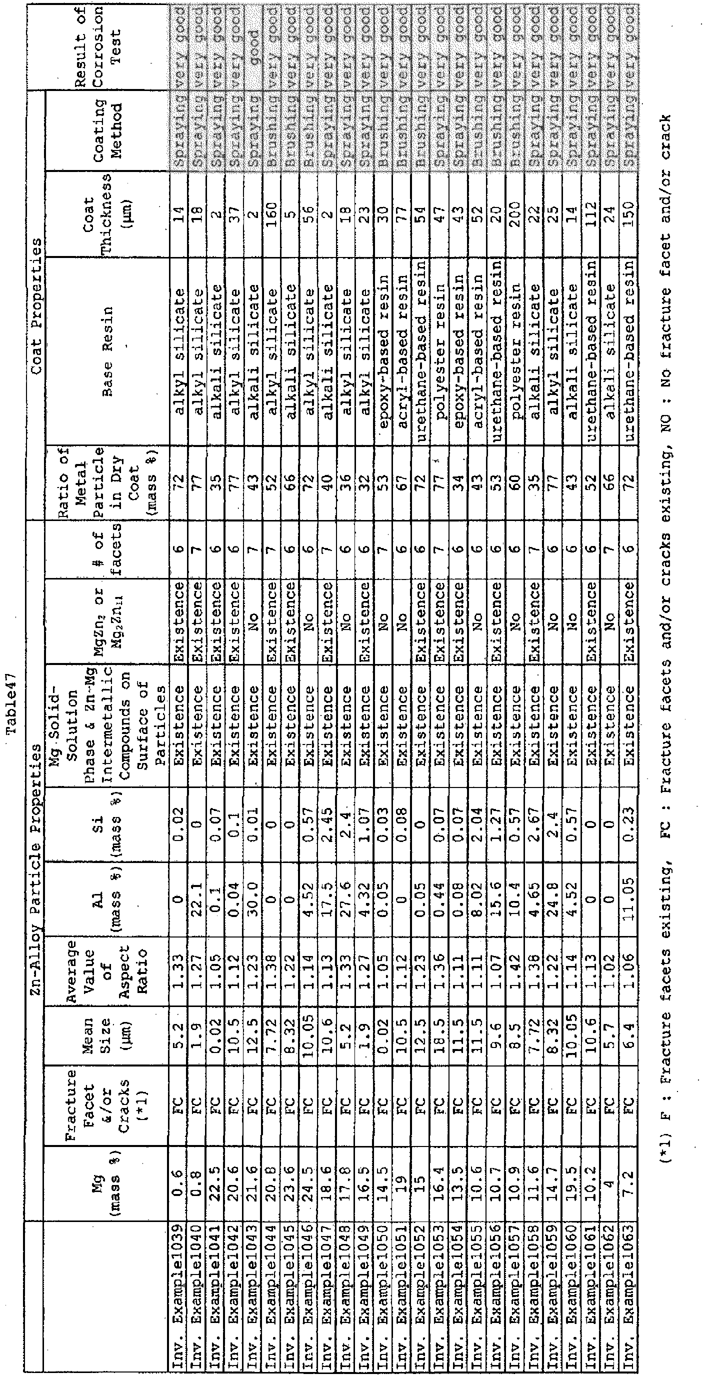

**Table48**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Zn₁₁, Mg₂Zn3, MgZn, or Mg7Zn3 | # of facets | Ratio of Metal Particle in Dry Coat (mass %) | Base Resin | Coat Thickness (µm) | Coating Method | |
| Inv. Example1064 | 3.6 | FC | 3.2 | 1.05 | 2.65 | 0.74 | Existence | Existence | 7 | 40 | alkali silicate | 18 | Spraying | very good |
| Inv. Example1065 | 26.9 | FC | 4.5 | 1.24 | 6.45 | 2.14 | Existence | No | 6 | 36 | alkyl silicate | 19 | Brushing | very good |
| Inv. Example1066 | 27.9 | FC | 5.2 | 1.33 | 27.6 | 2.4 | Existence | No | 6 | 32 | alkyl silicate | 24 | Spraying | very good |
| Inv. Example1067 | 28.9 | FC | 1.9 | 1.27 | 4.32 | 1.07 | Existence | Existence | 6 | 53 | urethane-based resin | 99 | Spraying | very good |
| Inv. Example1068 | 23.8 | FC | 0.02 | 1.05 | 0.05 | 0.03 | Existence | No | 7 | 67 | alkyl silicate | 7 | Spraying | very good |
| Inv. Example1069 | 26.8 | FC | 10.5 | 1.12 | 0 | 0.08 | Existence | No | 6 | 72 | epoxy-based resin | 100 | Spraying | very qood |
| Inv. Example1070 | 25.6 | FC | 12.5 | 1.23 | 0.05 | 0 | Existence | Existence | 6 | 77 | alkyl silicate | 27 | Brushing | very good |
| Inv. Example1071 | 29.8 | FC | 18.5 | 1.36 | 0.44 | 0.07 | Existence | Existence | 7 | 34 | alkali silicate | 15 | Spraying | very good |
| Inv. Example1072 | 18.9 | FC | 11.5 | 1.11 | 0.08 | 0.07 | Existence | Existence | 6 | 43 | alkyl silicate | 14 | Spraying | very good |
| Inv. Example1073 | 5.6 | FC | 9.6 | 1.07 | 0.1 | 0.2 | Existence | No | 7 | 53 | urethane-based resin | 55 | Spraying | very good |
| Inv. Example1079 | 4.7 | FC | 8.5 | 1.42 | 0.05 | 0.2 | Existence | Existence | 6 | 35 | alkyl silicate | 8 | Spraying | very good |
| Inv. Example1075 | 6.8 | FC | 7.72 | 1.38 | 0.07 | 0 | Existence | Existence | 6 | 77 | urethane-based resin | 122 | Brushing | very good |
| Inv. Example1076 | 9 | FC | 8.32 | 1.22 | 0 | 0.07 | Existence | Existence | 6 | 43 | alkyl silicate | 54 | Spraying | very good |
| Inv. Example1077 | 2.1 | FC | 10.05 | 1.14 | 0 | 0.02 | Existence | No | 6 | 52 | alkali silicate | 19 | Spraying | very good |
| Inv. Example1078 | 4.8 | FC | 10.6 | 1.13 | 0 | 0 | Existence | Existence | 7 | 66 | alkyl silicate | 25 | Brushing | very good |
| Inv. Example1079 | 4.2 | FC | 5.7 | 1.02 | 0 | 0 | Existence | Existence | 6 | 72 | alkyl silicate | 58 | Spraying | very good |
| Inv. Example1080 | 4.3 | FC | 6.4 | 1.06 | 21.5 | 0.05 | Existence | Existence | 6 | 40 | alkyl silicate | 21 | Spraving | very good |
| Inv. Example1081 | 4 | FC | 3.2 | 1.05 | 0.05 | 2.29 | Existence | No | 6 | 36 | alkali silicate | 19 | Brushing | very good |
| Inv. Example1082 | 3.7 | FC | 4.5 | 1.24 | 0.05 | 0.03 | Existence | Existence | 7 | 32 | urethane-based resin | 56 | Spraying | very good |
| Inv. Example1083 | 6.4 | FC | 5.2 | 1.33 | 0 | 0.08 | Existence | Existence | 6 | 53 | alkyl silicate | 77 | Spraying | very good |
| Inv. Example1084 | 6.9 | FC | 1.9 | 1.27 | 0.05 | 0 | Existence | No | 6 | 67 | alkyl silicate | 54 | Spraying | very good |
| Inv. Example1085 | 16.9 | FC | 0.02 | 1.05 | 0.44 | 0.07 | Existence | Existence | 7 | 72 | alkyl silicate | 64 | Spraying | very good |
| Inv. Example1086 | 18.7 | FC | 10.5 | 1.12 | 0.08 | 0.07 | Existence | No | 6 | 77 | alkyl silicate | 34 | Brushing | very good |
| Inv. Example1087 | 24.4 | FC | 12.5 | 1.23 | 0.1 | 0.2 | Existence | Existence | 6 | 34 | alkali silicate | 28 | Spraying | very good |
| Inv. Example1088 | 10.6 | FC | 18.5 | 1.36 | 0 | 0 | Existence | No | 6 | 43 | urethane-based resin | 109 | Brushing | very good |
| Inv. Example1089 | 15.8 | FC | 11.5 | 1.11 | 0 | 0 | Existence | Existence | 7 | 53 | alkyl silicate | 15 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table49**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn3, MgZn, or Mg7Zn3 | # of facets | Ratio of Metal Particle in Dry Coat (mass %) | Base Resin | Coat Thickness (µm) | Coating Method | |
| Inv. Example1090 | 19.5 | FC | 9.6 | 1.07 | 0 | 0.07 | Existence | Existence | 7 | 72 | alkyl silicate | 14 | Spaying | very good |
| Inv. Example1091 | 7.8 | FC | 8.5 | 1.42 | 0 | 0.02 | Existence | Existence | 6 | 77 | alkyl silicate | 18 | Spraying | very good |
| Inv. Example1092 | 4.9 | FC | 7.72 | 1.38 | 25.8 | 0.05 | Existence | Existence | 6 | 77 | urethane-based resin | 122 | Brushing | very good |
| Inv. Example1093 | 10.8 | FC | 8.32 | 1.22 | 22.1 | 0 | Existence | No | 7 | 43 | alkyl silicate | 54 | Spraying | very good |
| Inv. Example1094 | 3.8 | FC | 10.05 | 1.14 | 21.5 | 0.05 | Existence | No | 6 | 52 | alkali silicate | 19 | Spraying | very good |
| Inv. Example1095 | 22.6 | FC | 10.6 | 1.13 | 0.05 | 2.29 | Existence | No | 6 | 66 | alkyl silicate | 25 | Brushing | very good |
| Inv. Example1096 | 27.9 | FC | 5.7 | 1.02 | 0 | 0 | Existence | Existence | 6 | 72 | alkyl silicate | 58 | Spraying | very good |
| Inv. Example1097 | 24.8 | FC | 6.4 | 1.06 | 0 | 0 | Existence | No | 7 | 40 | alkyl silicate | 21 | Spraying | very good |
| Inv. Example1698 | 26.8 | FC | 3.2 | 1.05 | 0.07 | 0 | Existence | Existence | 6 | 36 | alkali silicate | 19 | Brushing | very good |
| Inv. Example1099 | 25.9 | FC | 4.5 | 1.24 | 0 | 0.07 | Existence | Existence | 6 | 32 | urethane-based resin | 56 | Spraying | very good |
| Inv. Example1100 | 9.8 | FC | 5.2 | 1.33 | 0 | 0.02 | Existence | Existence | 6 | 53 | alkyl silicate | 77 | Spraying | very good |
| Inv. Examale1101 | 5.6 | FC | 1.9 | 1.27 | 22.1 | 0 | Existence | Existence | 7 | 67 | alkyl silicate | 54 | Spraying | very good |
| Inv. Example1102 | 12.3 | FC | 0.02 | 1.05 | 1.24 | 1.8 | Existence | Existence | 7 | 52 | alkali silicate | 2 | Spraying | very good |
| Inv. Example1103 | 0.8 | FC | 27.89 | 1.12 | 1.24 | 0.9 | Existence | Existence | 6 | 55 | alkali silicate | 20 | Spraying | very good |
| Inv. Example1104 | 1 | FC | 0.32 | 1.23 | 0.8 | 0.7 | Existence | No | 7 | 69 | alkali silicate | 5 | Spraying | very good |
| Inv. Example1105 | 2.3 | FC | 11.44 | 1.36 | 0 | 1.8 | Existence | Existence | 6 | 78 | alkyl silicate | 20 | Spraying | very good |
| Inv. Example1306 | 15.6 | FC | 1.05 | 1.11 | 1.1 | 2.41 | Existence | Existence | 6 | 42 | alkali silicate | 15 | Brushing | very good |
| Inv. Example1107 | 6.7 | FC | 36.47 | 1.07 | 1.8 | 0.08 | Existence | Existence | 6 | 32 | alkyl silicate | 57 | Brushing | very good |
| Inv. Example1108 | 7.5 | FC | 5.07 | 1.42 | 3.8 | 2.23 | Existence | No | 6 | 66 | alkali silicate | 13 | Brushing | very good |
| Inv. Example1109 | 8.4 | FC | 7.72 | 1.38 | 2.9 | 0.06 | Existence | Existence | 7 | 67 | alkyl silicate | 22 | Brushing | very good |
| Inv. Example1110 | 9.3 | FC | 8.32 | 1.22 | 10.5 | 0.02 | Existence | Existence | 6 | 64 | alkali silicate | 20 | Spraying | very good |
| Inv. Example1111 | 10.4 | FC | 10.05 | 1.14 | 2.9 | 0.02 | Existence | Existence | 6 | 74 | alkyl silicate | 27 | Spraying | very good |
| Inv. Example1112 | 11.2 | FC | 6.08 | 1.13 | 16.8 | 1.37 | Existence | No | 7 | 82 | alkali silicate | 15 | Spraying | very good |
| Inv. Example1113 | 11.7 | FC | 17.69 | 1.02 | 0 | 2.43 | Existence | Existence | 6 | 37 | alkyl silicate | 35 | Spraying | very good |
| Tnv. Example1114 | 21.5 | FC | 19.54 | 1.06 | 3.6 | 0.02 | Existence | Existence | 6 | 42 | alkali silicate | 34 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table50**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet 6/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn3, MgZn, or Mg7Zn3 | # of facets | Ratio of Metal Particle in Dry Coat (mass %) | Base Resin | Coat Thickness (µm) | Coating Method | |
| Inv. Example1115 | 13.4 | FC | 21.08 | 1.05 | 2.1 | 1.5 | Existence | No | 6 | 66 | alkyl silicate | 45 | Brushing | very good |
| Inv. Example1116 | 14.6 | FC | 23.04 | 1.24 | 0.06 | 1.3 | Existence | Existence | 6 | 48 | alkali silicate | 52 | Brushing | very good |
| Inv. Example1117 | 25.8 | FC | 9.21 | 1.33 | 0.02 | 1.8 | Existence | Existence | 7 | 33 | alkyl silicate | 23 | Brushing | very good |
| Inv. Example1118 | 16.7 | FC | 0.12 | 1.27 | 1.6 | 0.9 | Existence | Existence | 6 | 75 | alkali silicate | 5 | Spraying | very good |
| Inv. Example1119 | 17.3 | FC | 29.24 | 1.37 | 3.5 | 0 | Existence | Existence | 6 | 77 | alkyl silicate | 52 | Brushinq | very good |
| Inv. Example1120 | 18.5 | FC | 128.74 | 1.10 | 9.8 | 1.8 | Existence | No | 7 | 66 | alkali silicate | 150 | Brushing | very good |
| Inv. Example1121 | 19.3 | FC | 33.57 | 1.04 | 11.5 | 0.7 | Existence | Existence | 6 | 67 | alkyl silicate | 60 | Brushing | very good |
| Inv. Example1122 | 3.5 | FC | 3.04 | 1.02 | 0.4 | 1.5 | Existence | Existence | 6 | 45 | alkali silicate | 15 | Spraying | very good |
| Inv. Example1123 | 22.5 | FC | 7.54 | 1.01 | 0.6 | 1.3 | Existence | Existence | 6 | 48 | alkyl silicate | 24 | Spraying | very good |
| Inv. Example1124 | 23.7 | FC | 6.81 | 1.08 | 10.6 | 1.8 | Existence | No | 6 | 68 | alkali silicate | 34 | Spraying | very good |
| Inv. Example1125 | 24.2 | FC | 5.25 | 1.14 | 9.5 | 0 | Existence | Existence | 7 | 35 | alkyl silicate | 20 | Brushing | very good |
| Inv. Example1126 | 0.2 | FC | 194.23 | 1.23 | 11.04 | 0.7 | Existence | Existence | 6 | 37 | alkali silicate | 200 | Brushing | very good |
| Inv. Example1127 | 27.1 | FC | 28.74 | 1.33 | 0.01 | 1.8 | Existence | Existence | 6 | 38 | alkyl silicate | 56 | Brushing | very good |
| Inv. Example1128 | 29.3 | FC | 13.57 | 1.37 | 0.07 | 0.7 | Existence | Existence | 7 | 41 | alkali silicate | 34 | Spraying | very good |
| Inv. Example1129 | 0.5 | FC | 0.65 | 1.44 | 1.8 | 1.5 | Existence | Existence | 6 | 54 | alkyl silicate | 2 | Spraying | very good |
| Inv. Example1130 | 2.7 | FC | 4.12 | 1.21 | 0 | 1.3 | Existence | Existence | 6 | 57 | alkali silicate | 15 | spraying | very good |
| Inv. Example1131 | 28.4 | FC | 0.72 | 1.22 | 2.9 | 1.8 | Existence | Existence | 6 | 59 | alkali silicate | 10 | Spraying | very good |
| Inv. Example1132 | 8.7 | FC | 117.54 | 1.23 | 10.5 | 0.9 | Existence | Existence | 6 | 64 | alkyl silicate | 125 | Brushing | very good |
| Inv. Example1133 | 9.2 | FC | 7.81 | 1.47 | 2.9 | 0.7 | Existence | Existence | 7 | 66 | alkali silicate | 24 | Brushing | very good |
| Inv. Example1134 | 17.8 | FC | 80.25 | 1.01 | 16.8 | 1.8 | Existence | No | 6 | 67 | alkyl silicate | 110 | Brushing | very good |
| Inv. Example1135 | 20.2 | FC | 8.47 | 1.04 | 2.7 | 0.7 | Existence | Existence | 6 | 34 | alkali silicate | 24 | Brushing | very good |
| Inv. Example1136 | 0.4 | FC | 0.87 | 1.05 | 0.04 | 0.7 | Existence | Existence | 7 | 54 | alkyl silicate | 2 | Spraying | very good |
| Inv. Example1137 | 13.7 | FC | 25.78 | 1.12 | 0 | 0.04 | Existence | Existence | 6 | 62 | alkali silicate | 37 | Spraying | very good |
| Inv. Example1138 | 14.7 | FC | 93.45 | 1.11 | 1.24 | 0.05 | Existence | Existence | 6 | 66 | alkyl silicate | 113 | Brushing | very good |
| Inv. Example1139 | 2.4 | FC | 0.97 | 1.08 | 0.05 | 1.24 | Existence | Existence | 6 | 67 | alkali silicate | 2 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

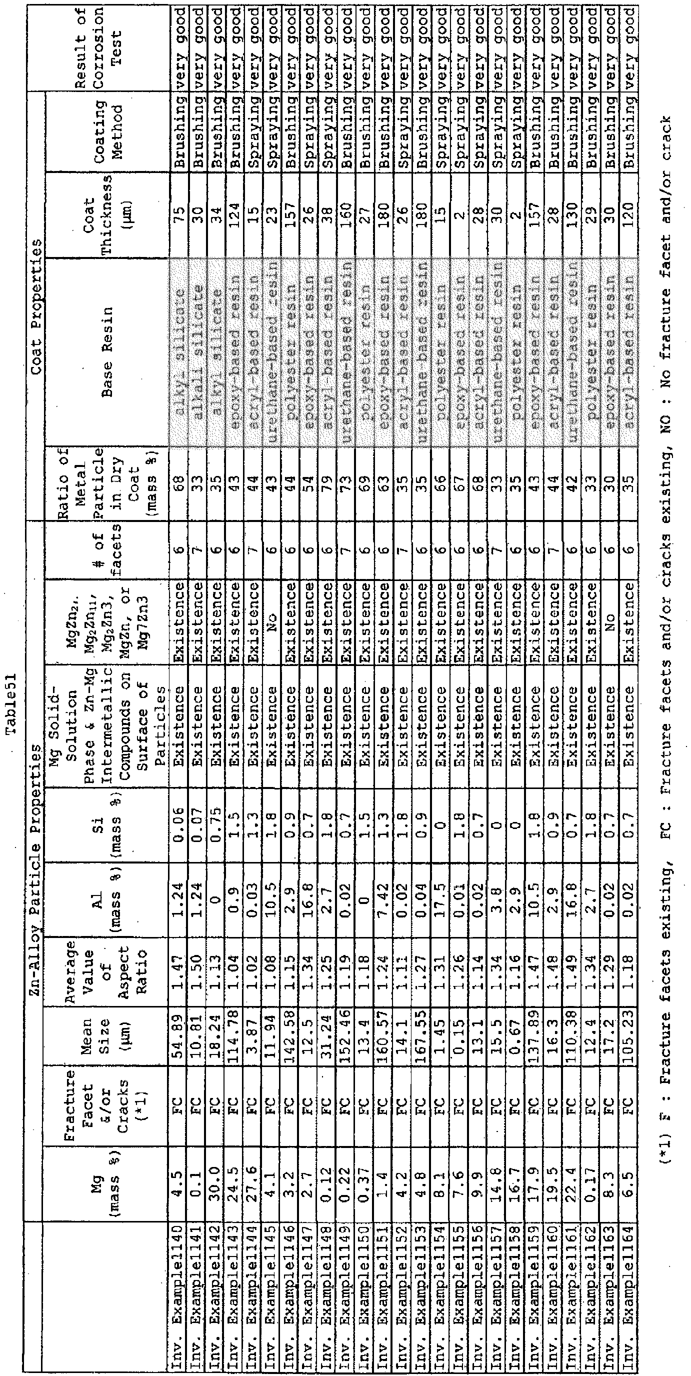

**Table 52**

| | Zn-Alloy Particle Properties | | | | | | | | | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn3, MgZn, or Mg7Zn3 | # of facets | Ratio of Metal Particle in Dry Coat (mass %) | Base Resin | Coat Thickness (µm) | Coating Method | |
| Inv. Example1165 | 9.7 | FC | 177.89 | 1.23 | 0.04 | 0.02 | Existence | Existence | 7 | 37 | urethane-based resin | 187 | Brushing | very good |
| Inv. Example1166 | 11.4 | FC | 12.2 | 1.27 | 0.05 | 0.02 | Existence | Existence | 6 | 77 | polyester resin | 28 | Spraying | very good |
| Inv. Example1167 | 22.5 | FC | 1.84 | 1.17 | 1.24 | 1.37 | Existence | Existence | 6 | 41 | epoxy-based resin | 5 | Spraying | very good |
| Inv. Example1168 | 25.7 | FC | 16.02 | 1.16 | 0.05 | 0.02 | Existence | Existence | 7 | 35 | acryl-based resin | 35 | Spraying | very good |
| Inv. Example1169 | 17.8 | FC | 1.75 | 1.49 | 1.24 | 1.37 | Existence | Existence | 6 | 58 | urethane-based resin | 5 | Spraying | very good |
| Inv. Example1170 | 0.14 | FC | 198.78 | 1.34 | 1.24 | 1.37 | Existence | Existence | 6 | 37 | polyester resin | 200 | Brushing | very good |
| Inv. Example1171 | 6.7 | FC | 13.1 | 1.16 | 0.8 | 1.5 | Existence | Existence | 6 | 68 | alkali silicate | 25 | Spraying | very good |
| Inv. Example1172 | 7.5 | FC | 15.5 | 1.47 | 0.9 | 1.3 | Existence | Existence | 6 | 55 | alkali silicate | 15 | Spraying | very good |
| Inv. Example1173 | 8.4 | FC | 0.67 | 1.48 | 1.1 | 1.8 | Existence | No | 7 | 77 | alkyl silicate | 20 | Spraying | very good |
| Inv. Example1174 | 9.3 | FC | 12.2 | 1.49 | 1.8 | 0.9 | Existence | Existence | 6 | 43 | alkali silicate | 18 | Spraying | very good |
| Inv. Example1175 | 1.4 | FC | 1.84 | 1.34 | 3.8 | 0.7 | Existence | Existence | 6 | 45 | alkyl silicate | 22 | Spraying | very good |
| Inv. Example1176 | 4.2 | FC | 16.02 | 1.29 | 2.9 | 1.8 | Existence | Existence | 7 | 66 | alkali silicate | 19 | Spraying | very good |
| Inv. Example1177 | 4.8 | FC | 1.75 | 1.18 | 10.5 | 0.7 | Existence | Existence | 6 | 33 | alkyl silicate | 29 | Spraying | very good |
| Inv. Example1178 | 8.1 | FC | 12.4 | 1.23 | 2.9 | 1.5 | Existence | Existence | 6 | 66 | alkali silicate | 23 | Spraying | very good |
| Inv. Example1179 | 7.6 | FC | 17.2 | 1.27 | 16.8 | 1.3 | Existence | Existence | 6 | 55 | alkyl silicate | 21 | Spraying | very good |
| Inv. Example1180 | 9.9 | FC | 13.1 | 1.17 | 2.7 | 1.8 | Existence | Existence | 6 | 49 | alkali silicate | 19 | Spraying | very good |
| Inv. Example1181 | 0.4 | FC | 29.9 | 1.16 | 3.6 | 0.9 | Existence | Existence | 7 | 77 | alkyl silicate | 15 | Spraying | very good |
| Inv. Example1182 | 10.5 | FC | 0.21 | 1.27 | 0 | 0.7 | Existence | Existence | 6 | 41 | alkali silicate | 18 | Spraying | very good |
| Inv. Example1183 | 0.4 | FC | 0.22 | 1.17 | 0.06 | 1.8 | Existence | Existence | 7 | 64 | alkyl silicate | 22 | Spraying | very good |
| Inv. Example1184 | 10.5 | FC | 29.5 | 1.27 | 0.02 | 0.7 | Existence | Existence | 6 | 58 | alkyl silicate | 21 | Spraying | verv good |
| Inv. Example1185 | 0.51 | FC | 29.9 | 1.18 | 1.6 | 1.5 | Existence | Existence | 6 | 33 | alkyl silicate | 29 | Spraying | very good |
| Inv. Example1186 | 9.8 | FC | 0.21 | 1.23 | 3.5 | 0 | Existence | Existence | 6 | 66 | alkali silicate | 23 | Spraying | very good |
| Inv. Example1187 | 0.52 | FC | 0.22 | 1.27 | 9.8 | 1.8 | Existence | Existence | 6 | 55 | alkyl silicate | 21 | Spraying | very good |
| Inv. Example1188 | 9.9 | FC | 29.5 | 1.17 | 11.5 | 0.9 | Existence | No | 7 | 49 | alkali silicate | 19 | Spraying | very good |
| Inv. Example1189 | 14.8 | FC | 16.02 | 1.48 | 0.4 | 0.7 | Existence | Existence | 6 | 77 | alkyl silicate | 21 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

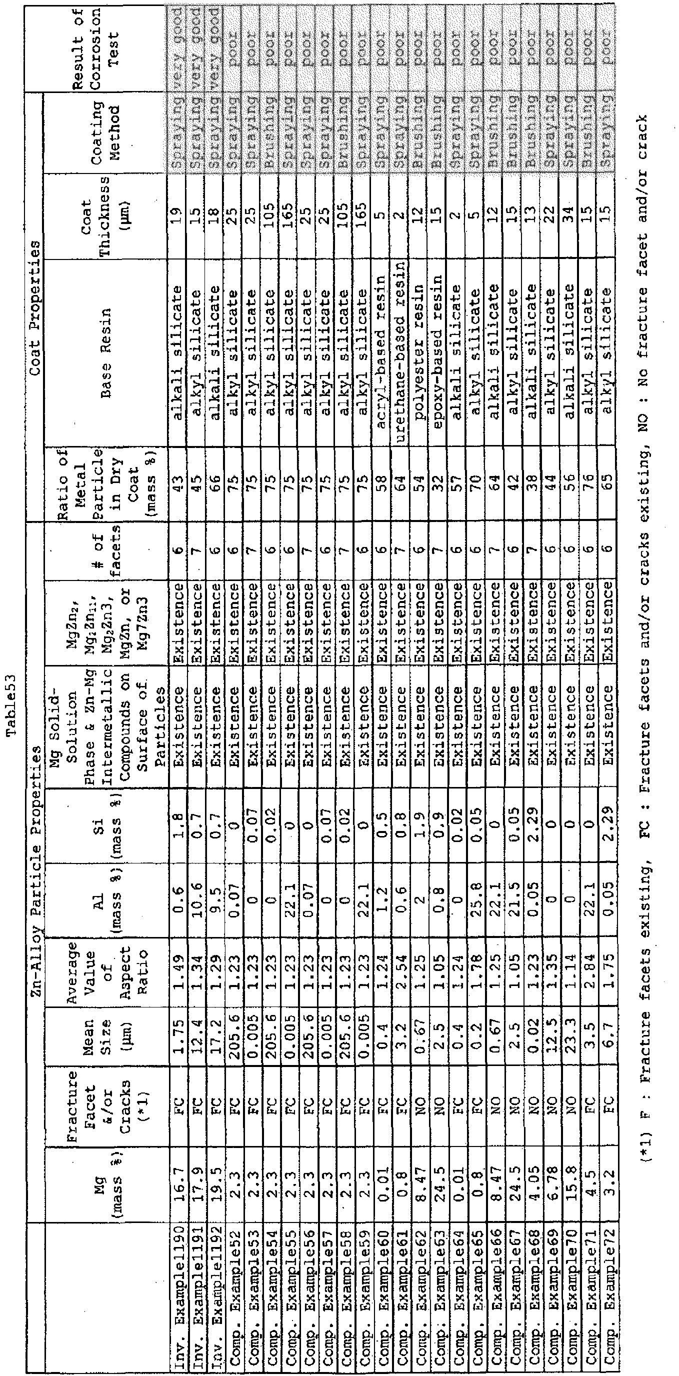

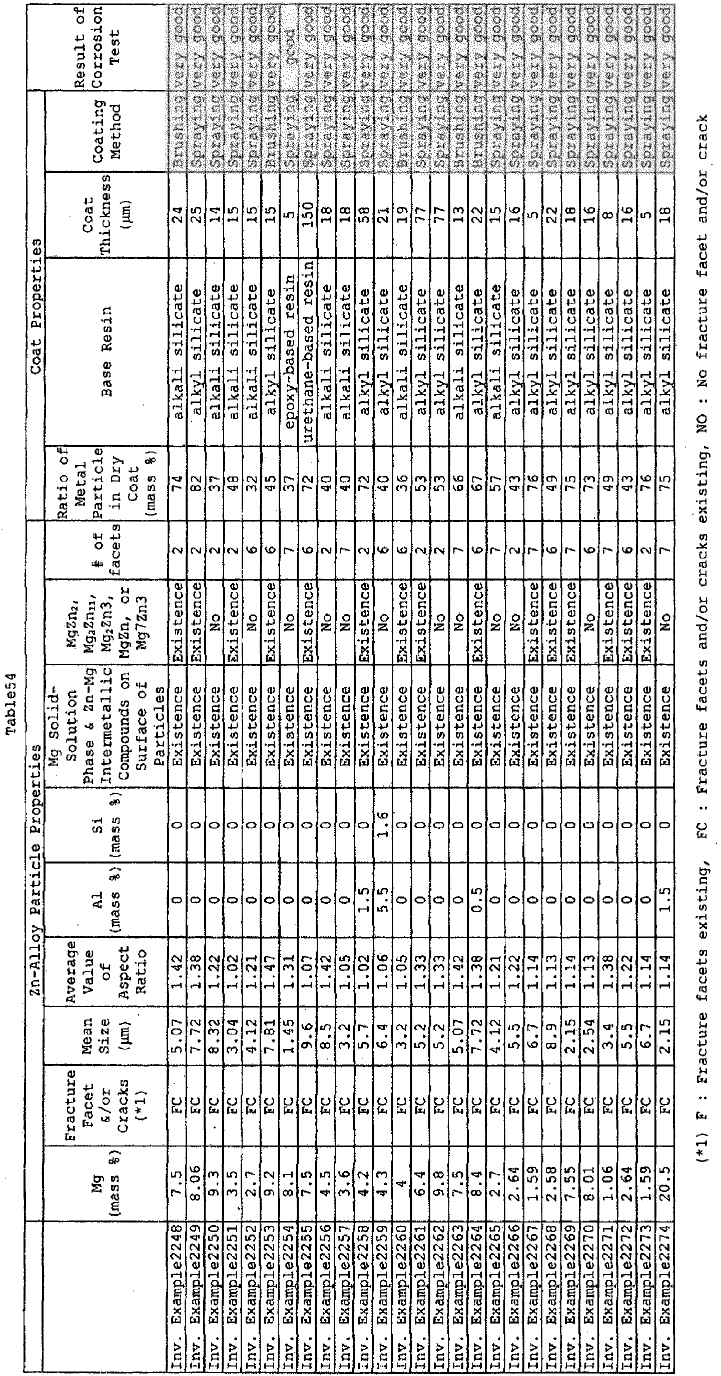

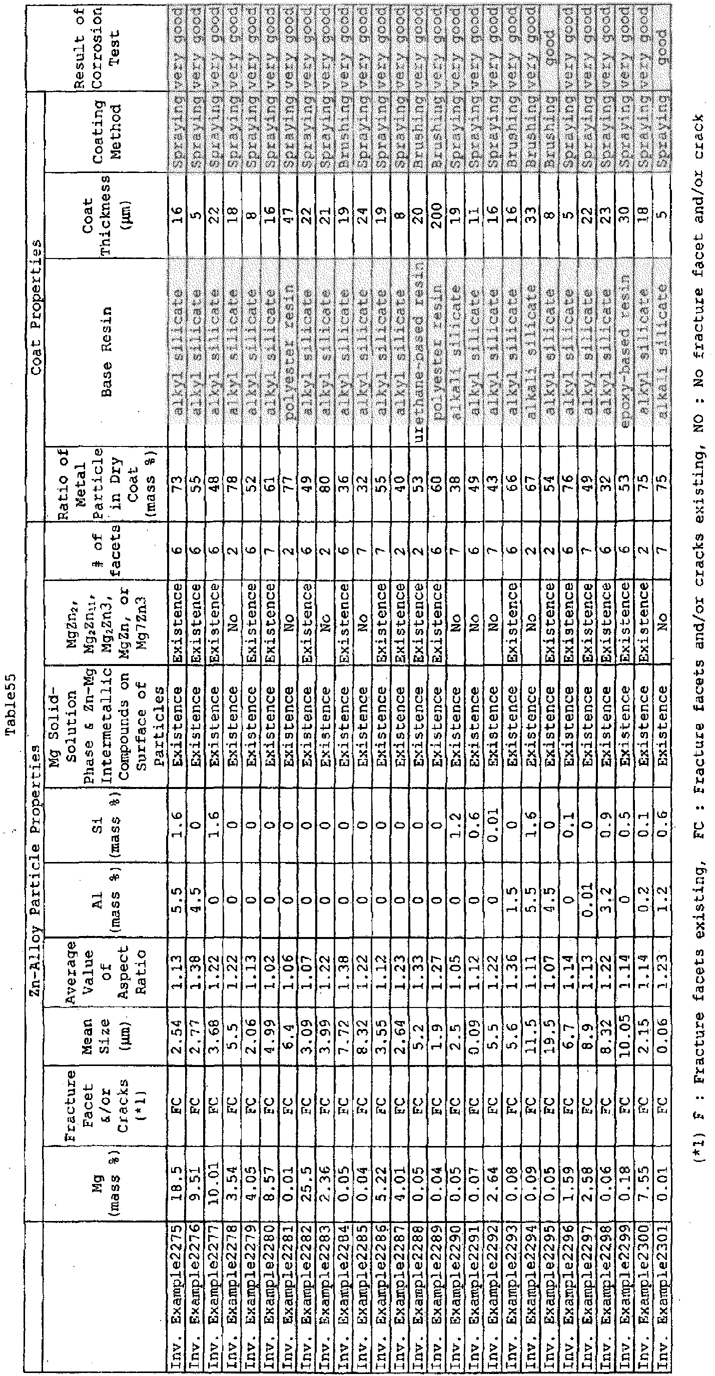

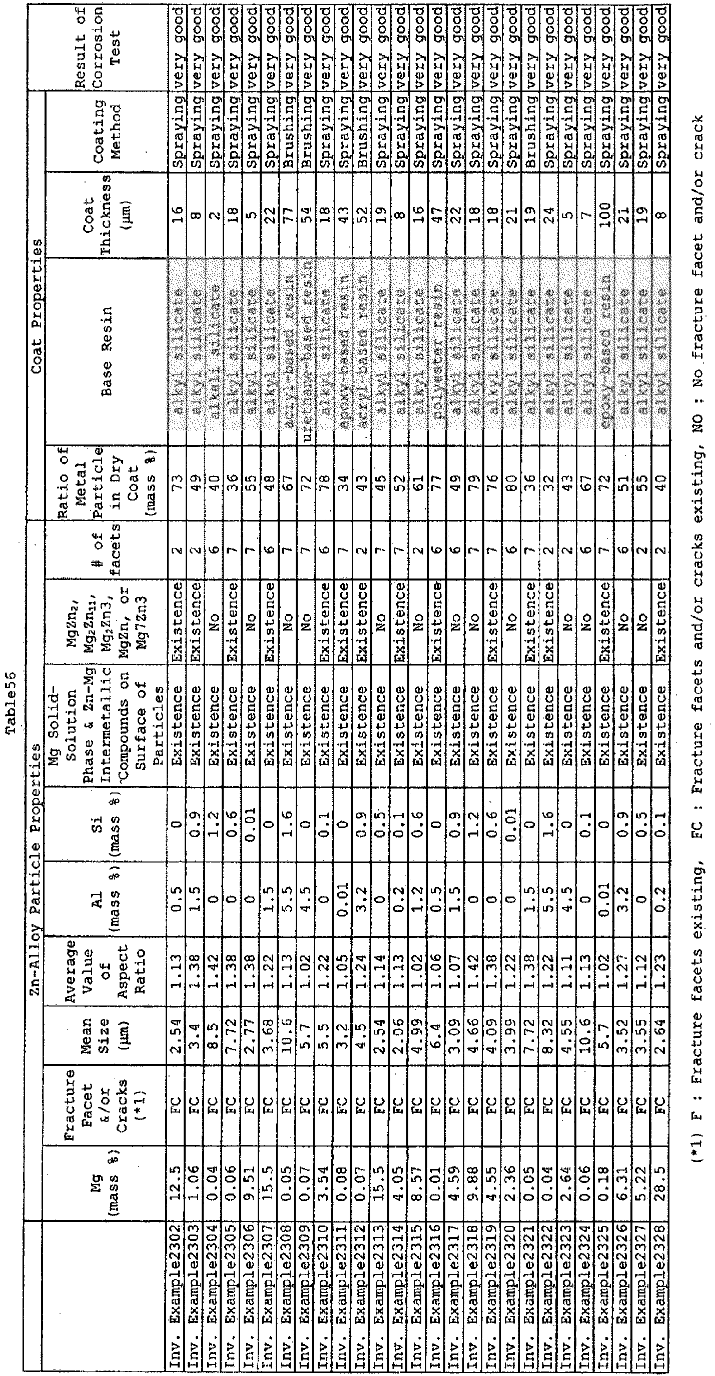

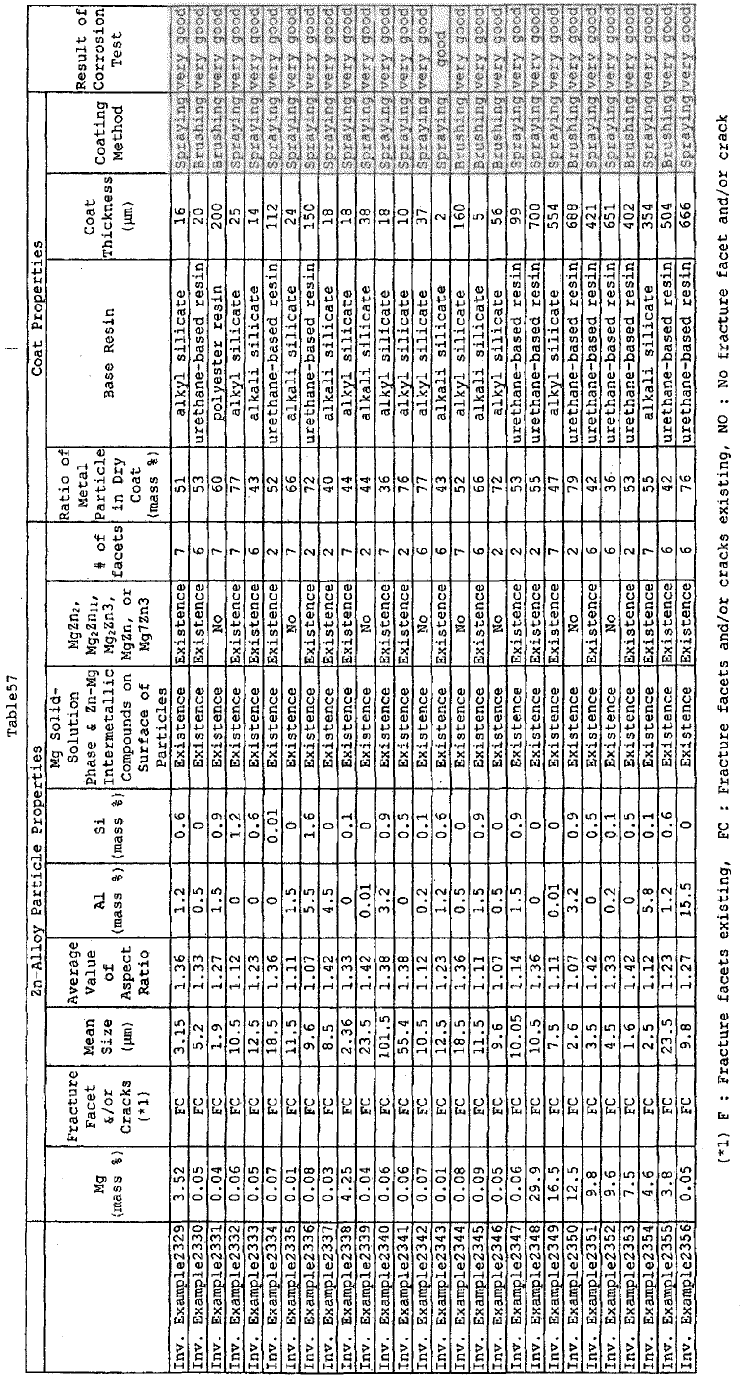

### Example 5

Zn alloy particles with the chemical ingredients shown Tables 58 to 75 were produced in the same way as in Example 1. Zn metal particles of an average particle size 0.05 to 50 µm were mixed in the paints. The rest is the same as Example 1.

From Tables 58 to 75, it is learned that the painting test pieces using the Zn alloy particles and Zn metal particles of the present invention are improved in corrosion resistance and rust prevention regardless of the type of base resin, that is, both for inorganic-based and organic-based binders.

**Table 58**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example191 | 12.3 | F | 0.02 | 1.05 | 2.04 | 300:1 | 12.26 | 52 | alkali silicate | 2 | Spraying | very good |
| Inv. Example192 | 0.8 | F | 27.89 | 1.12 | 50.00 | 1:99 | 0.01 | 55 | alkyl silicate | 33 | Spraying | very qood |
| Inv. Example193 | 1 | F | 0.32 | 1.23 | 2.45 | 100:1 | 0.99 | 69 | alkali silicate | 5 | Spraying | very good |
| Inv. Example194 | 2.3 | F | 11.44 | 1.36 | 5.33 | 200:1 | 2.29 | 78 | alkyl silicate | 20 | Spraying | very good |
| Inv. Example195 | 15.6 | F | 1.05 | 1.11 | 2.41 | 100:1 | 15.45 | 42 | alkali silicate | 15 | Brushing | very good |
| Inv. Example196 | 6.7 | F | 36.47 | 1.07 | 23.43 | 150:1 | 6.66 | 32 | alkyl silicate | 57 | Brushing | very good |
| Inv. Example197 | 7.5 | F | 5.07 | 1.42 | 6.03 | 3:1 | 5.63 | 66 | alkali silicate | 13 | Brushing | very good |
| Inv. Example198 | 8.4 | F | 7.72 | 1.38 | 24.5 | 80:1 | 8.30 | 67 | alkyl silicate | 22 | Brushing | very good |
| Inv. Example199 | 9.3 | F | 8.32 | 1.22 | 5.32 | 1:15 | 0.58 | 64 | alkali silicate | 20 | Spraying | very good |
| Inv. Example200 | 10.4 | F | 10.05 | 1.14 | 14.34 | 1:30 | 0.34 | 74 | alkyl silicate | 27 | Spraying | very good |
| Inv. Example201 | 11.2 | F | 6.08 | 1.13 | 5.04 | 1:45 | 0.24 | 82 | alkali silicate | 15 | Spraying | very good |
| Inv. Example202 | 11.7 | F | 17.89 | 1.02 | 2.32 | 1:55 | 0.21 | 37 | alkyl silicate | 35 | Spraying | very good |
| Inv. Example203 | 21.5 | F | 19.54 | 1.06 | 20.34 | 1:65 | 0.33 | 42 | alkali silicate | 34 | Brushing | very good |
| Inv. Example204 | 13.4 | F | 21.08 | 1.05 | 12.33 | 1:75 | 0.18 | 66 | alkyl silicate | 45 | Brushing | very good |
| Inv. Example205 | 14.6 | F | 23.04 | 1.24 | 17.84 | 110:1 | 14.47 | 48 | alkali silicate | 52 | Brushing | very good |
| Inv. Example206 | 25.8 | F | 9.21 | 1.33 | 6.66 | 115:1 | 25.58 | 33 | alkyl silicate | 23 | Brushing | very good |
| Inv. Example207 | 16.7 | F | 0.12 | 1.27 | 3.65 | 70:1 | 16.46 | 75 | alkali silicate | 5 | Spraying | very good |
| Inv. Example208 | 17.3 | F | 29.24 | 1.37 | 22.62 | 80:1 | 17.09 | 77 | alkyl silicate | 52 | Brushing | very good |
| Inv. Example209 | 18.5 | F | 128.74 | 1.10 | 45.33 | 65:1 | 18.22 | 66 | alkali silicate | 150 | Brushing | very good |
| Inv. Example210 | 19.3 | F | 33.57 | 1.04 | 43.22 | 70:1 | 19.03 | 67 | alkyl silicate | 60 | Brushing | very good |
| Inv. Example211 | 3.5 | F | 3.04 | 1.02 | 12.33 | 300:1 | 3.49 | 45 | alkali silicate | 15 | Spraying | very good |
| Inv. Example212 | 22.5 | F | 7.54 | 1.01 | 13.42 | 300:1 | 22.43 | 48 | alkyl silicate | 24 | Spraying | very good |
| Inv. Example213 | 23.7 | F | 6.81 | 1.08 | 22.32 | 70:1 | 23.37 | 68 | alkali silicate | 34 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table 59**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example214 | 24.2 | F | 5.25 | 1.14 | 7.34 | 300:1 | 24.12 | 35 | alkyl silicate | 20 | Brushing | very good |
| Inv. Example215 | 0.2 | F | 194.23 | 1.23 | 44.54 | 100:1 | 0.20 | 37 | alkali silicate | 200 | Brushing | very good |
| Inv. Example216 | 27.1 | F | 28.74 | 1.33 | 32.87 | 250:1 | 26.99 | 38 | alkyl silicate | 56 | Brushing | very good |
| Inv. Example217 | 29.3 | F | 13.57 | 1.37 | 20.32 | 150:1 | 29.11 | 41 | alkali silicate | 34 | Spaying | very good |
| Inv. Example218 | 0.5 | F | 0.65 | 1.44 | 2.03 | 170:1 | 0.50 | 54 | alkyl silicate | 2 | Spraying | very good |
| Inv. Example219 | 2.7 | F | 4.12 | 1.21 | 5.33 | 300:1 | 2.69 | 57 | alkali silicate | 15 | Spraying | very good |
| Inv. Example220 | 28.4 | F | 0.72 | 1.22 | 2.33 | 200:1 | 28.26 | 59 | alkali silicate | 10 | Spraying | very cood |
| Inv. Example221 | 8.7 | F | 117.54 | 1.23 | 27.44 | 65:1 | 8.57 | 84 | alkyl silicate | 125 | Brushing | very good |
| Inv. Example222 | 9.2 | F | 7.81 | 1.47 | 12.33 | 300:1 | 9.17 | 66 | alkali silicate | 24 | Brushing | very good |
| Inv. Example223 | 17.8 | F | 80.25 | 1.01 | 36.43 | 120:1 | 17.65 | 67 | alkyl silicate | 110 | Brushing | very good |
| Inv. Example224 | 20.2 | F | 8.47 | 1.04 | 12.33 | 300:1 | 20.13 | 34 | alkali silicate | 24 | Brushing | very good |
| Inv. Example225 | 0.4 | F | 0.87 | 1.05 | 3.21 | 300:1 | 0.40 | 54 | alkyl silicate | 2 | Spraying | very good |
| Inv. Example226 | 13.7 | F | 25.78 | 1.12 | 26.33 | 300:1 | 13.65 | 62 | alkali silicate | 37 | Spaying | very good |
| Inv. Example227 | 14.7 | F | 93.45 | 1.11 | 44.21 | 70:1 | 14.49 | 66 | alkyl silicate | 113 | Brushing | very good |
| Inv. Example228 | 2.4 | F | 0.97 | 1.08 | 3.43 | 80:1 | 2.37 | 67 | alkali silicate | 2 | Spraying | very good |
| Inv. Example229 | 4.5 | F | 54.89 | 1.47 | 47.32 | 300:1 | 4.49 | 68 | alkyl silicate | 75 | Brushing | very good |
| Inv. Example230 | 0.1 | F | 10.81 | 1.50 | 12.33 | 70:1 | 0.10 | 33 | alkali silicate | 30 | Bushing | very good |
| Inv. Example231 | 30.0 | F | 18.24 | 1.13 | 17.44 | 65:1 | 29.55 | 35 | alkyl silicate | 34 | Brushing | very qood |
| Inv. Example232 | 24.5 | F | 114.78 | 1.04 | 42.21 | 300:1 | 24.42 | 43 | epoxy-based resin | 124 | Brushing | very good |
| Inv. Example233 | 27.6 | F | 3.87 | 1.02 | 12.34 | 300:1 | 27.51 | 44 | acryl-based resin | 15 | Spraying | very good |
| Inv. Example234 | 4.1 | F | 11.94 | 1.08 | 20.32 | 300:1 | 4.09 | 43 | urethane-based resin | 23 | Spraying | very good |
| Inv. Example235 | 3.2 | F | 142.58 | 1.15 | 23.44 | 65:1 | 3.15 | 44 | polyester resin | 157 | Brushing | very good |
| Inv. Example236 | 2.7 | F | 12.5 | 1.34 | 23.45 | 300:1 | 2.69 | 54 | epoxy-based resin | 26 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table60**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example237 | 0.12 | F | 31.24 | 1.25 | 23.21 | 150:1 | 0.12 | 79 | acryl-based resin | 38 | Spraying | very good |
| Inv. Example238 | 0.22 | F | 152.46 | 1.19 | 39.44 | 300:1 | 0.22 | 73 | urethane-based resin | 160 | Brushing | very good |
| Inv. Example239 | 0.37 | F | 13.4 | 1.18 | 12.34 | 65:1 | 0.36 | 69 | polyester resin | 27 | Brushing | very good |
| Inv. Example240 | 1.4 | F | 160.57 | 1.24 | 29.99 | 300:1 | 1.40 | 63 | epoxy-based resin | 180 | Brushing | very good |
| Inv. Example241 | 4.2 | F | 14.1 | 1.11 | 15.21 | 300:1 | 4.19 | 35 | acryl-based resin | 26 | Spraying | very good |
| Inv. Example242 | 4.8 | F | 167.55 | 1.27 | 23.34 | 65:1 | 4.73 | 35 | urethane-based resin | 180 | Brushing | very good |
| Inv. Example243 | 8.1 | F | 1.45 | 1.31 | 2.32 | 300:1 | 8.07 | 66 | polyester resin | 15 | Spraying | very good |
| Inv. Example244 | 7.6 | F | 0.15 | 1.26 | 4.21 | 65:1 | 7.48 | 67 | epoxy-based resin | 2 | Spraying | very good |
| Inv. Example245 | 9.9 | F | 13.1 | 1.14 | 12.22 | 300:1 | 9.87 | 68 | acryl-based resin | 28 | Spraying | very good |
| Inv. Example246 | 14.8 | F | 15.5 | 1.34 | 13.45 | 150:1 | 14.70 | 33 | urethane-based resin | 30 | Spraying | very good |
| Inv. Example247 | 16.7 | F | 0.67 | 1.16 | 2.34 | 300:1 | 16.64 | 35 | polyester resin | 2 | Spraying | very good |
| Inv. Example248 | 17.9 | F | 137.89 | 1.47 | 28.34 | 65:1 | 17.63 | 43 | epoxy-based resin | 157 | Brushing | very good |
| Inv. Example249 | 19.5 | F | 16.3 | 1.48 | 19.87 | 300:1 | 19.44 | 44 | acryl-based resin | 28 | Brushing | very good |
| Inv. Example250 | 22.4 | F | 110.38 | 1.49 | 39.74 | 150:1 | 22.25 | 42 | urethane-based resin | 130 | Brushing | very good |
| Inv. Example251 | 0.17 | F | 12.4 | 1.34 | 24.32 | 300:1 | 0.17 | 33 | polyester resin | 29 | Brushing | very good |
| Inv. Example252 | 8.3 | F | 17.2 | 1.29 | 22.33 | 65:1 | 8.17 | 30 | epoxy-based resin | 30 | Brushing | very good |
| Inv. Example253 | 6.5 | F | 105.23 | 1.18 | 48.54 | 300:1 | 6.48 | 35 | acryl-based resin | 120 | Brushing | very good |
| Inv. Example254 | 9.7 | F | 177.89 | 1.23 | 23.75 | 300:1 | 9.67 | 37 | urethane-based resin | 187 | Brushing | very good |
| Inv. Example255 | 11.4 | F | 12.2 | 1.27 | 15.62 | 65:1 | 11.23 | 77 | polyester resin | 28 | Spraying | very good |
| Inv. Example256 | 22.5 | F | 1.84 | 1.17 | 2.34 | 300:1 | 22.43 | 41 | epoxy-based resin | 5 | Spraying | very good |
| Inv. Example257 | 25.7 | F | 16.02 | 1.16 | 23.04 | 300:1 | 25.61 | 35 | acryl-based resin | 35 | Spraying | very good |
| Inv. Example258 | 17.8 | F | 1.75 | 1.49 | 3.05 | 150:1 | 17.68 | 58 | urethane-based resin | 5 | Spraying | very good |
| Inv. Example259 | 0.14 | F | 198.78 | 1.34 | 43.23 | 300:1 | 0.14 | 37 | polyester resin | 200 | Brushing | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

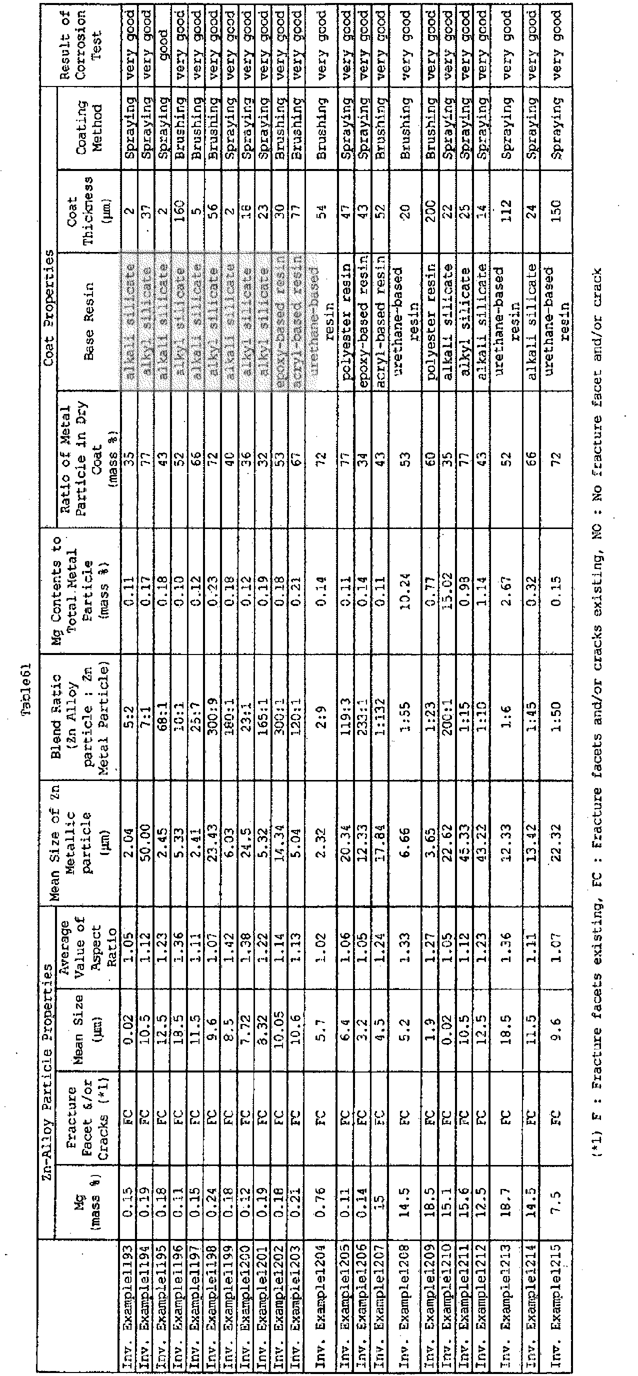

**Table62**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average value of Aspect Ratio | | | | Ratio of Metal Particle in Dry Coat (mass %) | Base Resin | Coat Thickness (µm) | Coating Method | |
| Inv. Example1216 | 4.5 | FC | 8.5 | 1.42 | 7.34 | 1:9 | 0.45 | 40 | alkali silicate | 18 | Spraying | very good |
| Inv. Example1217 | 1.5 | FC | 7.72 | 1.38 | 44.54 | 1:7 | 0.19 | 36 | alkyl silicate | 19 | Brushing | very good |
| Inv. Example1218 | 4.8 | FC | 8.32 | 1.22 | 32.87 | 1:4 | 0.96 | 32 | alkyl silicate | 24 | Spraying | very good |
| Inv. Example1219 | 9.6 | FC | 10.05 | 1.14 | 20.32 | 1:14 | 0.64 | 53 | urethane-based resin | 99 | Spraying | very good |
| Inv. Example1220 | 11.5 | FC | 10.6 | 1.13 | 2.03 | 1:11 | 0.96 | 67 | alkyl silicate | 7 | Spraying | very good |
| Inv. Example1221 | 9.8 | FC | 5.7 | 1.02 | 5.33 | 1:28 | 0.34 | 72 | epoxy-based resin | 100 | Spraying | very good |
| Inv. Example1222 | 7.6 | FC | 6.4 | 1.06 | 2.33 | 1:4 | 1.52 | 77 | alkyl silicate | 27 | Brushing | very good |
| Inv. Example1223 | 3.2 | FC | 3.2 | 1.05 | 27.44 | 250:1 | 3.19 | 34 | alkali silicate | 15 | Spraying | very good |
| Inv. Example1224 | 1.9 | FC | 4.5 | 1.24 | 12.33 | 1:1 | 0.95 | 43 | alkyl silicate | 14 | Spraying | very good |
| Inv. Example1225 | 11.5 | FC | 5.2 | 1.33 | 36.43 | 1:4 | 2.30 | 53 | urethane-based resin | 55 | Spraying | very good |
| Inv. Example1226 | 8.7 | FC | 1.9 | 1.27 | 12.33 | 1:12 | 0.67 | 35 | alkyl silicate | 8 | Spraying | very good |
| Inv. Example1227 | 9.6 | FC | 0.02 | 1.05 | 3.21 | 70:1 | 9.46 | 77 | urethane-based resin | 122 | Brushing | very good |
| Inv. Example1228 | 9.4 | FC | 10.5 | 1.12 | 26.33 | 1:3 | 2.35 | 43 | alkyl silicate | 54 | Spraying | very good |
| Inv. Example1229 | 10.5 | FC | 12.5 | 1.23 | 44.21 | 1:24 | 0.42 | 52 | alkali silicate | 19 | Spraying | very good |
| Inv. Example1230 | 12.6 | FC | 18.5 | 1.36 | 3.43 | 1:10 | 1.15 | 66 | alkyl silicate | 25 | Brushing | very good |
| Inv. Example1231 | 29.5 | FC | 11.5 | 1.11 | 47.32 | 300:1 | 29.40 | 72 | alkyl silicate | 58 | Spraying | very good |
| Inv. Example1232 | 29.4 | FC | 9.6 | 1.07 | 12.33 | 1:66 | 0.44 | 40 | alkyl silicate | 21 | Spraying | very good |
| Inv. Example1233 | 27.5 | FC | 8.5 | 1.42 | 17.44 | 120:1 | 27.27 | 36 | alkali silicate | 19 | Brushing | very good |
| Inv. Example1234 | 0.8 | FC | 7.72 | 1.38 | 42.21 | 6:5 | 0.44 | 32 | urethane-based resin | 56 | Spraying | very good |
| Inv. Example1235 | 1.6 | FC | 8.32 | 1.22 | 12.34 | 1:1 | 0.80 | 53 | alkyl silicate | 77 | Spraying | very good |
| Inv. Example1236 | 22.9 | FC | 10.05 | 1.14 | 20.32 | 1:1 | 11.45 | 67 | alkyl silicate | 54 | Spraying | very good |
| Inv. Example1237 | 28.5 | FC | 10.6 | 1.13 | 23.44 | 1:76 | 0.37 | 72 | alkyl silicate | 64 | Spraying | very good |
| Inv. Example1238 | 29.5 | FC | 5.7 | 1.02 | 23.45 | 1:6 | 4.21 | 77 | alkyl silicate | 34 | Brushing | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

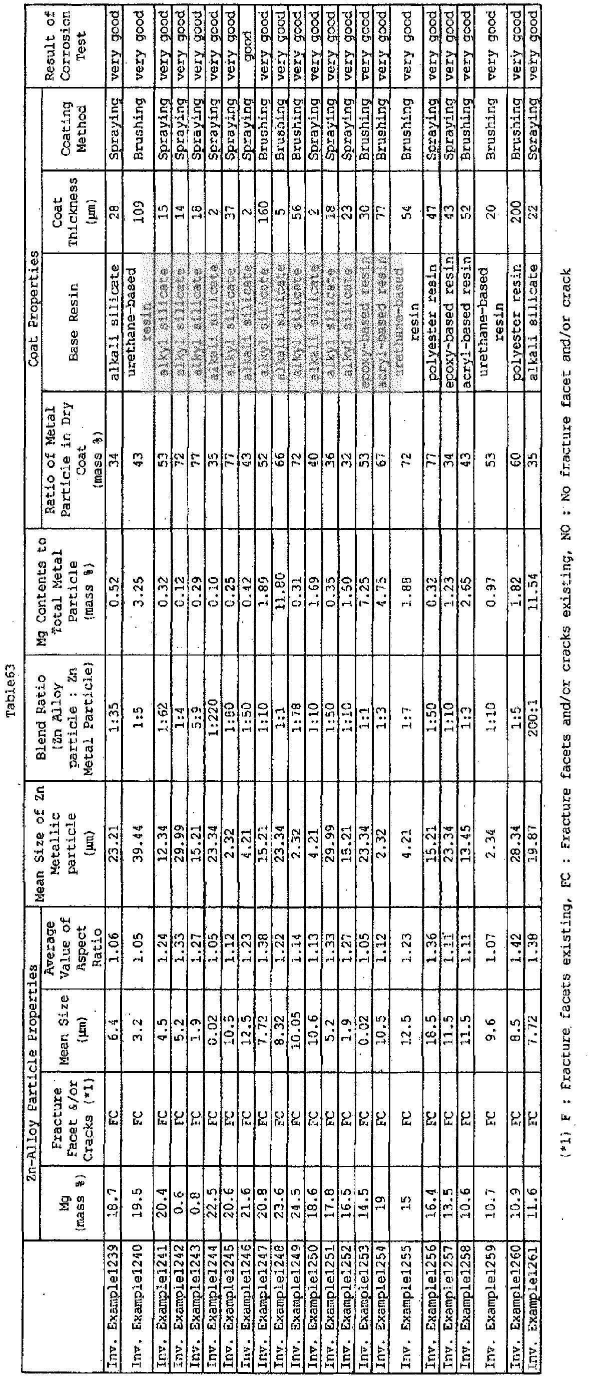

**Table64**

| | Zn-Alloy Particle Properties | | | | Mean Size of Zn Metallic particle (µm) | Blend Ratio (Zn Alloy particle Zn Metal Particle) | Mg Contents to Total Metal Particle (mass%) | Coat Properties | | | | Result Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1262 | 14.7 | FC | 8.32 | 1.22 | 39.74 | 1:8 | 1.63 | 77 | alkyl silicate | 25 | Spraying | very good |
| Inv. Example1263 | 19.5 | FC | 10.05 | 1.14 | 24.32 | 1:1 | 9.75 | 43 | alkali silicate | 14 | Spraying | very good |
| Inv. Example1264 | 10.2 | FC | 10.6 | 1.13 | 22.33 | 1:7 | 1.28 | 52 | urethane-based resin | 112 | Spraying | very good |
| Inv. Example1265 | 4 | FC | 5.7 | 1.02 | 48.54 | 1:3 | 1.00 | 66 | alkali silicate | 24 | Spraying | very good |
| Inv. Example1265 | 7.2 | FC | 6.4 | 1.06 | 23.75 | 1:7 | 0.90 | 72 | urethane-based resin | 150 | Spraying | very good |
| Inv. Example1267 | 3.6 | FC | 3.2 | 1.05 | 15.62 | 1:2 | 1.20 | 40 | alkali silicate | 18 | Spraying | very good |
| Inv. Example1268 | 26.9 | FC | 4.5 | 1.24 | 2.34 | 117:1 | 26.67 | 36 | alkyl silicate | 19 | Brushing | very good |
| Inv. Example1269 | 27.9 | FC | 5.2 | 1.33 | 23.04 | 1:270 | 0.10 | 32 | alkyl silicate | 24 | Spraying | very good |
| Inv. Example1270 | 28.9 | FC | 1.9 | 1.27 | 3.05 | 1:117 | 0.24 | 53 | urethane-based resin | 99 | Spraying | very good |
| Inv. Example1271 | 23.8 | FC | 0.02 | 1.05 | 43.23 | 1:66 | 0.36 | 67 | alkyl silicate | 7 | Spraying | very good |
| Inv. Example1272 | 26.8 | FC | 10.5 | 1.12 | 2.04 | 1:109 | 0.24 | 72 | epoxy-based resin | 100 | Spraying | very good |
| Inv. Example1273 | 25.6 | FC | 12.5 | 1.23 | 50.00 | 250:1 | 25.50 | 77 | alkyl silicate | 27 | Brushing | very good |
| Inv. Example1274 | 29.8 | FC | 18.5 | 1.36 | 2.45 | 70:1 | 29.38 | 34 | alkali silicate | 15 | Spraying | very good |
| Inv. Example1215 | 18.9 | FC | 11.5 | 1.11 | 5.33 | 1:15 | 1.18 | 43 | alkyl silicate | 14 | Spraying | very good |
| Inv. Example1276 | 5.6 | FC | 9.6 | 1.07 | 2.41 | 1:5 | 0.93 | 53 | urethane-based resin | 55 | Spraying | very good |
| Inv. Example1277 | 4.7 | FC | 8.5 | 1.42 | 23.43 | 2:3 | 1.88 | 35 | alkyl silicate | 8 | Spraying | very good |
| Inv. Example1279 | 6.8 | FC | 7.72 | 1.38 | 6.03 | 1:9 | 0.68 | 77 | urethane-based resin | 122 | Brushing | very good |
| Inv. Example1279 | 9 | FC | 8.32 | 1.22 | 24.5 | 1:10 | 0.82 | 43 | alkyl silicate | 54 | Spraying | very good |
| Inv. Example1280 | 2.1 | FC | 10.05 | 1.14 | 5.32 | 1:14 | 0.14 | 52 | alkali silicate | 19 | Spraying | very good |
| Inv. Example1281 | 4.8 | FC | 10.6 | 1.13 | 14.34 | 1:7 | 0.60 | 66 | alkyl silicate | 25 | Brushing | very good |
| Inv. Example1282 | 4.2 | FC | 5.7 | 1.02 | 5.04 | 1:12 | 0.32 | 72 | alkyl silicate | 58 | Spraying | very good |
| Inv. Example1283 | 4.3 | FC | 6.4 | 1.06 | 2.32 | 1:3 | 1.08 | 40 | alkyl silicate | 21 | Spraying | very good |
| Inv. Example1284 | 4 | FC | 3.2 | 1.05 | 20.34 | 1:7 | 0.50 | 36 | alkali silicate | 19 | Brushing | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table65**

| | Zn-Alloy Particle Properties | | | | Mean Size of Zn, Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1285 | 3.7 | FC | 4.5 | 1.24 | 12.33 | 1:10 | 0.34 | 32 | urethane-based resin | 56 | Spraying | very good |
| Inv. Example1286 | 6.4 | FC | 5.2 | 1.33 | 11.84 | 1:1 | 3.20 | 53 | alkyl silicate | 77 | Spraying | very good |
| Inv. Example1287 | 6.9 | FC | 1.9 | 1.27 | 6.66 | 1:3 | 1.73 | 67 | alkyl silicate | 54 | Spraying | very good |
| Inv. Example1298 | 16.9 | FC | 0.02 | 1.05 | 3.65 | 2:3 | 6.76 | 72 | alkyl silicate | 64 | Spraying | very good |
| Inv. Example1289 | 18.7 | FC | 10.5 | 1.12 | 22.62 | 1:2 | 6.23 | 77 | alkyl silicate | 34 | Brushing | very good |
| Inv. Example1290 | 24.4 | FC | 12.5 | 1.23 | 45.33 | 1:4 | 4.88 | 34 | alkali silicate | 28 | Spraying | very good |
| Inv. Example1291 | 10.6 | FC | 18.5 | 1.36 | 43.22 | 1:6 | 1.51 | 43 | urethane-based resin | 109 | Brushing | very good |
| Inv. Example1292 | 15.8 | FC | 11.5 | 1.11 | 12.33 | 1:115 | 0.14 | 53 | alkyl silicate | 15 | Spraying | very good |
| Inv. Example1293 | 19.5 | FC | 9.6 | 1.07 | 13.42 | 1:23 | 0.81 | 72 | alkyl silicate | 14 | Spraying | very good |
| Inv. Example1294 | 7.8 | FC | 9.5 | 1.42 | 22.32 | 1:12 | 0.60 | 77 | alkyl silicate | 18 | Sprayinq | very good |
| Inv. Example1295 | 4.9 | FC | 7.72 | 1.38 | 7.34 | 1:10 | 0.45 | 77 | urethane-based resin | 122 | Brushing | very good |
| Inv. Example1296 | 10.8 | FC | 8.32 | 1.22 | 44.54 | 1:3 | 2.70 | 43 | alkyl silicate | 54 | Spraying | very good |
| Inv. Example1297 | 3.8 | FC | 10.05 | 1.14 | 32.87 | 1:5 | 0.63 | 52 | alkali silicate | 19 | Spraying | very good |
| Inv. Example 1298 | 22.6 | FC | 10.6 | 1.13 | 20.32 | 1:25 | 0.87 | 66 | alkyl silicate | 25 | Brushing | very good |
| Inv. Example1299 | 27.9 | FC | 5.7 | 1.02 | 2.03 | 4:5 | 12.40 | 72 | alkyl silicate | 58 | Spraying | very good |
| Inv. Example1300 | 24.8 | FC | 6.4 | 1.06 | 5.33 | 3:8 | 6.76 | 40 | alkyl silicate | 21 | Spraying | very good |
| Inv. Example1301 | 26.8 | FC | 3.2 | 1.05 | 2.33 | 9:34 | 5.61 | 36 | alkali silicate | 19 | Brushing | very good |
| Inv. Example1302 | 25.9 | FC | 4.5 | 1.24 | 27.44 | 7:6 | 12.09 | 32 | urethane-based resin | 56 | Spaying | very good |
| Inv. Example1303 | 9.8 | FC | 5.2 | 1.33 | 12.33 | 9:17 | 3.39 | 53 | alkyl silicate | 77 | Spaying | very good |
| Inv. Example1304 | 5.6 | FC | 1.9 | 1.27 | 36.43 | 1:1 | 2.50 | 67 | alkyl silicate | 54 | Spraying | very good |
| Inv. Example1305 | 12.3 | FC | 0.02 | 1.05 | 11.9 | 1:31 | 0.38 | 52 | alkali silicate | 2 | Spraying | very good |
| Inv. Example1306 | 0.8 | FC | 27.89 | 1.12 | 10.5 | 1:4 | 0.16 | 55 | alkali silicate | 20 | Spraying | very good |
| Inv. Example1307 | 1 | FC | 0.32 | 1.23 | 9.8 | 1:1 | 0.50 | 69 | alkali silicate | 5 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table66**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1308 | 2.3 | FC | 11.44 | 1.36 | 7.9 | 1:7 | 0.29 | 78 | alkyl silicate | 20 | Spraying | very good |
| Inv. Example1309 | 15.6 | FC | 1.05 | 1.11 | 11.6 | 1:11 | 1.30 | 42 | alkali silicate | 15 | Brushing | very good |
| Inv. Examplel310 | 6.7 | FC | 36.47 | 1.07 | 16.9 | 1:2 | 2.23 | 32 | alkyl silicate | 57 | Brushing | very good |
| Inv. Example1311 | 7.5 | FC | 5.07 | 1.42 | 20.34 | 1:7 | 0.94 | 66 | alkali silicate | 13 | Brushing | very good |
| Inv. Example1312 | 3.4 | FC | 7.72 | 1.38 | 8.9 | 1:4 | 1.68 | 67 | alkyl silicate | 22 | Brushing | very good |
| Inv. Example1313 | 9.3 | FC | 8.32 | 1.22 | 7.5 | 1:5 | 1.55 | 64 | alkali silicate | 20 | Spraying | very good |
| Inv. Example1314 | 10.4 | FC | 10.05 | 1.14 | 10.9 | 1:10 | 0.95 | 74 | alkyl silicate | 27 | Spraying | very good |
| Inv. Example1315 | 11.2 | FC | 6.08 | 1.13 | 20.34 | 1:9 | 1.12 | 82 | alkali silicate | 15 | Spraying | very good |
| Inv. Example1316 | 11.7 | FC | 17.89 | 1.02 | 6.7 | 240:1 | 11.65 | 37 | alkyl silicate | 35 | Spraying | very good |
| Inv. Example1317 | 21.5 | FC | 19.54 | 1.06 | 7.9 | 1:120 | 0.18 | 42 | alkali silicate | 34 | Brushing | very good |
| Inv. Examplel318 | 13.4 | FC | 21.08 | 1.05 | 5.6 | 99:1 | 13.27 | 66 | alkyl silicate | 45 | Brushing | very good |
| Inv. Example1319 | 14.6 | FC | 23.04 | 1.24 | 11.5 | 1:99 | 0.15 | 48 | alkali silicate | 52 | Brushing | very good |
| Inv. Example1320 | 25.8 | FC | 9.21 | 1.33 | 20.34 | 1:242 | 0.11 | 33 | alkyl silicate | 23 | Brushing | very good |
| Inv. Example1321 | 16.7 | FC | 0.12 | 1.27 | 10.5 | 1:6 | 2.39 | 75 | alkali silicate | 5 | Spraying | very good |
| Inv. Example1322 | 17.3 | FC | 29.24 | 1.37 | 7.6 | 1:1 | 8.65 | 77 | alkyl silicate | 52 | Brushing | very good |
| Inv. Example1323 | 18.5 | FC | 128.74 | 1.10 | 8.2 | 1:7 | 2.31 | 66 | alkali silicate | 150 | Brushing | very good |
| Inv. Example1324 | 19.3 | FC | 33.57 | 1.04 | 9.1 | 1:5 | 3.22 | 67 | alkyl silicate | 60 | Brushing | very good |
| Inv. Example1325 | 3.5 | FC | 3.04 | 1.02 | 10.6 | 1:2 | 1.17 | 45 | alkali silicate | 15 | Spraying | very good |
| Inv. Example1326 | 22.5 | FC | 7.54 | 1.01 | 8.4 | 1:221 | 0.10 | 48 | alkyl silicate | 24 | Spraying | very good |
| Inv. Example1327 | 23.7 | FC | 6.81 | 1.08 | 5.3 | 1:31 | 0.74 | 68 | alkali silicate | 34 | Spraying | very good |
| Inv. Example1328 | 24.2 | FC | 5.25 | 1.14 | 20.34 | 1:4 | 4.84 | 35 | alkyl silicate | 20 | Brushing | very good |
| Inv. Example1329 | 0.2 | FC | 194.23 | 1.23 | 7.8 | 1:1 | 0.10 | 37 | alkali silicate | 200 | Brushing | very good |
| Inv. Example1330 | 27.1 | FC | 28.74 | 1.33 | 10.5 | 1:7 | 3.39 | 38 | alkyl silicate | 56 | Brushing | very good |

| | | | | | | | | | | | | |
|---|---|---|---|---|---|---|---|---|---|---|---|---|
| (*1) F : Fracture facets existing, FC : Fracture facets and/or cracks existing, NO : No fractured facet and/or crack | | | | | | | | | | | | |

**Table67**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1331 | 29.3 | FC | 13.57 | 1.37 | 20.34 | 400:1 | 29.23 | 41 | alkali silicate | 34 | Spraying | very good |
| Inv. Example1332 | 0.5 | FC | 0.65 | 1.44 | 7.9 | 1:2 | 0.17 | 54 | alkyl silicate | 2 | Spraying | very good |
| Inv. Example1333 | 2.7 | FC | 4.12 | 1.21 | 11.6 | 1:300 | 0.01 | 57 | alkali silicate | 15 | Spraying | very good |
| Inv. Example1334 | 28.4 | FC | 0.72 | 1.22 | 16.9 | 1:4 | 5.68 | 59 | alkali silicate | 10 | Spraying | very good |
| Inv. Example1335 | 8.7 | FC | 117.54 | 1.23 | 10.5 | 1:5 | 1.45 | 64 | alkyl silicate | 125 | Brushing | very good |
| Inv. Example1336 | 9.2 | FC | 7.81 | 1.47 | 8.9 | 1:10 | 0.84 | 66 | alkali silicate | 24 | Brushing | very good |
| Inv. Example1337 | 17.8 | FC | 80.25 | 1.01 | 7.5 | 1:9 | 1.73 | 67 | alkyl silicate | 110 | Brushing | very good |
| Inv. Example1338 | 20.2 | FC | 8.47 | 1.04 | 10.9 | 1:1 | 10.10 | 34 | alkali silicate | 24 | Brushing | very good |
| Inv. Example1339 | 0.4 | FC | 0.87 | 1.05 | 20.34 | 130:1 | 0.40 | 54 | alkyl silicate | 2 | Spraying | very good |
| Inv. Example1340 | 13.7 | FC | 25.78 | 1.12 | 6.7 | 130:1 | 13.60 | 62 | alkali silicate | 37 | Spraying | very good |
| Inv. Example1341 | 14.7 | FC | 93.45 | 1.11 | 7.9 | 1:31 | 0.46 | 66 | alkyl silicate | 113 | Brushing | very good |
| Inv. Example1342 | 2.4 | FC | 0.97 | 1.08 | 5.6 | 1:1 | 1.20 | 67 | alkali silicate | 2 | Spraying | very good |
| Inv. Example1343 | 4.5 | FC | 54.89 | 1.47 | 20.34 | 2:1 | 3.00 | 68 | alkyl silicate | 75 | Brushing | very good |
| Inv. Example1344 | 0.1 | FC | 10.81 | 1.50 | 9.9 | 300:1 | 0.10 | 33 | alkali silicate | 30 | Brushing | very good |
| Inv. Example1345 | 30.0 | FC | 18.24 | 1.13 | 10.5 | 1:270 | 0.11 | 35 | alkyl silicate | 34 | Brushing | very good |
| Inv. Example1346 | 24.5 | FC | 114.78 | 04 | 7.6 | 1:115 | 0.21 | 43 | epoxy-based resin | 124 | Brushing | very good |
| Inv. Example1347 | 27.6 | FC | 3.87 | 1.02 | 45.33 | 1:29 | 0.92 | 44 | acryl-based resin | 15 | Spraying | very good |
| Inv. Example1348 | 4.1 | FC | 11.94 | 1.08 | 43.22 | 1:3 | 1.03 | 43 | urethane-based | 23 | Spraying | very good |
| Inv. Example1349 | 3.2 | FC | 142.58 | 1.15 | 10.6 | 1:9 | 0.32 | 44 | polyester resin | 157 | Brushing | very good |
| Inv. Example1350 | 2.7 | FC | 12.5 | 1.34 | 20.34 | 1:5 | 0.45 | 54 | epoxy-based resin | 26 | Spraying | very good |
| Inv. Example1351 | 0.12 | FC | 31.24 | 1.25 | 5.3 | 100:1 | 0.12 | 79 | acryl-based resin | 38 | Spraying | very good |
| Inv. Example1352 | 0.22 | FC | 152.46 | 1.19 | 10.9 | 1:1 | 0.11 | 73 | urethane-based resin | 160 | Brushing | very good |
| Inv. Example1353 | 0.37 | FC | 13.4 | 1.18 | 7.8 | 99:1 | 0.37 | 69 | polyester resin | 27 | Brushing | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table68**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1354 | 1.4 | FC | 160.57 | 1.24 | 10.5 | 1:6 | 0.20 | 63 | epoxy-based resin | 180 | Brushing | very good |
| Inv. Example1355 | 4.2 | FC | 14.1 | 1.11 | 20.34 | 1:12 | 0.32 | 35 | acryl-based resin | 26 | Spraying | very good |
| Inv. Example1356 | 4.8 | FC | 167.55 | 1.27 | 7.9 | 1:5 | 0.80 | 35 | urethane-based resin | 180 | Brushing | very good |
| Inv. Example1357 | 8.1 | FC | 1.45 | 1.31 | 11.6 | 1:33 | 0.24 | 66 | polyester resin | 15 | Spraying | very good |
| Inv. Example1353 | 7.6 | FC | 0.15 | 1.26 | 16.9 | 1:9 | 0.76 | 67 | epoxy-based resin | 2 | Spraying | very good |
| Inv. Example1359 | 9.9 | FC | 13.1 | 1.14 | 10.5 | 1:18 | 0.52 | 68 | acryl-based resin | 28 | Spraying | very good |
| Inv. Example1360 | 14.8 | FC | 15.5 | 1.34 | 8.9 | 1:38 | 0.38 | 33 | urethane-based resin | 30 | Spraying | very good |
| Inv. Example1361 | 16.7 | FC | 0.67 | 1.16 | 7.5 | 1:117 | 0.14 | 35 | polyester resin | 2 | Spraying | very good |
| Inv. Example1362 | 17.9 | FC | 137.89 | 1.47 | 20.34 | 1:42 | 0.42 | 43 | epoxy-based resin | 157 | Brushing | very good |
| Inv. Example1363 | 19.5 | FC | 16.3 | 1.48 | 9.8 | 1:1 | 9.75 | 44 | acryl-based resin | 28 | Brushing | very good |
| Inv. Example1364 | 22.4 | FC | 110.38 | 1.49 | 6.7 | 1:121 | 0.18 | 42 | urethane-based resin | 130 | Brushing | very good |
| Inv. Example1365 | 0.17 | FC | 12.4 | 1.34 | 45.33 | 120:1 | 0.17 | 33 | polyester resin | 29 | Brushing | very good |
| Inv. Example1366 | 8.3 | FC | 17.2 | 1.29 | 43.22 | 1:145 | 0.06 | 30 | epoxy-based resin | 30 | Brushing | very good |
| Inv. Example1367 | 6.5 | FC | 105.23 | 1.18 | 11.5 | 1:31 | 0.20 | 35 | acryl-based resin | 120 | Brushing | very good |
| Inv. Example1360 | 9.7 | FC | 177.89 | 1.23 | 9.9 | 1:95 | 0.10 | 37 | urethane-based resin | 187 | Brushing | very good |
| Inv. Example1369 | 11.4 | FC | 12.2 | 1.27 | 10.5 | 1:33 | 0.34 | 77 | polyester resin | 28 | Spraying | very good |
| Inv. Example1370 | 22.5 | FC | 1.84 | 1.17 | 7.6 | 120:1 | 22.31 | 41 | epoxy-based resin | 5 | Spraying | very good |
| Inv. Example1371 | 25.7 | FC | 16.02 | 1.16 | 8.2 | 1:28 | 0.89 | 35 | acryl-based resin | 35 | Spraying | very good |
| Inv. Example1372 | 17.8 | FC | 1.75 | 1.49 | 9.1 | 1:33 | 0.52 | 58 | urethane-based resin | 5 | Spraying | very good |
| Inv. Example1373 | 0.14 | FC | 198.78 | 1.34 | 10.6 | 200:1 | 0.14 | 37 | polyester resin | 200 | Brushing | very good |
| Inv.3 Example1374 | 6.7 | FC | 13.1 | 1.16 | 8.4 | 1:4 | 1.34 | 68 | alkali silicate | 25 | Spraying | very good |
| Inv. Example1375 | 7.5 | FC | 15.5 | 1.47 | 5.3 | 1:18 | 0.39 | 55 | alkali silicate | 15 | Spraying | very good |
| Inv. Example1376 | 8.4 | FC | 0.67 | 1.48 | 10.9 | 1:7 | 1.05 | 77 | alkyl silicate | 20 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table69**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result or Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example1377 | 9.3 | FC | 12.2 | 1.49 | 7.8 | 1:11 | 0.78 | 43 | alkali silicate | 18 | Spraying | very good |
| Inv. Example1378 | 1.4 | FC | 1.84 | 1.34 | 8.9 | 1:2 | 0.47 | 45 | alkyl silicate | 22 | Sprayinq | very good |
| Inv. Example1379 | 4.2 | FC | 16.02 | 1.29 | 7.5 | 1:7 | 0.53 | 66 | alkali silicate | 19 | Spraying | very good |
| Inv. Example1380 | 4.8 | FC | 1.75 | 1.18 | 10.9 | 1:2 | 2.40 | 33 | alkyl silicate | 29 | Spraying | very good |
| Inv. Example1381 | 8.1 | FC | 12.4 | 1.23 | 9.8 | 1:5 | 1.35 | 66 | alkali silicate | 23 | Spraying | very good |
| Inv. Example1382 | 7.6 | FC | 17.2 | 1.27 | 45.33 | 1:10 | 0.69 | 55 | alkyl silicate | 21 | Spraying | very.good |
| Inv. Example1383 | 9.9 | FC | 13.1 | 1.17 | 43.22 | 1:9 | 0.99 | 49 | alkali silicate | 19 | Spraying | very good |
| Inv. Example1384 | 0.4 | FC | 29.9 | 1.16 | 5.6 | 240:1 | 0.40 | 77 | alkyl silicate | 15 | Spraying | very good |
| Inv. Example1385 | 10.5 | FC | 0.21 | 1.27 | 11.5 | 120:1 | 10.41 | 41 | alkali silicate | 18 | Spraying | very good |
| Inv. Example1386 | 0.4 | FC | 0.22 | 1.17 | 9.9 | 99:1 | 0.40 | 64 | alkyl silicate | 22 | Spraying | very good |
| Inv. Example1387 | 10.5 | FC | 29.5 | 1.27 | 10.5 | 1:99 | 0.11 | 58 | alkyl silicate | 21 | Spraying | very good |
| Inv. Example1388 | 0.51 | FC | 29.9 | 1.18 | 7.6 | 1:3 | 0.13 | 33 | alkyl silicate | 29 | Spraying | very good |
| Inv. Example1389 | 9.8 | FC | 0.21 | 1.23 | 8.2 | 1:6 | 1.40 | 66 | alkali silicate | 23 | Spraying | very good |
| Inv. Example1390 | 0.52 | FC | 0.22 | 1.27 | 9.1 | 1:1 | 0.26 | 55 | alkyl silicate | 21 | Spraying | very good |
| Inv. Example1391 | 9.9 | FC | 29.5 | 1.17 | 10.6 | 1:7 | 1.24 | 49 | alkali silicate | 19 | Spraying | very good |
| Inv. Examplel392 | 14.8 | FC | 16.02 | 1.48 | 8.4 | 1:5 | 2.47 | 77 | alkyl silicate | 21 | Spraying | very good |
| Inv. Example1393 | 19.9 | FC | 1.75 | 1.49 | 5.3 | 1:150 | 0.13 | 43 | alkali silicate | 19 | Spraying | very good |
| Inv. Example1394 | 17.9 | FC | 12.4 | 1.34 | 10.9 | 1:55 | 0.32 | 45 | alkyl silicate | 15 | Spraying | very good |
| Inv. Example1395 | 19.5 | FC | 17.2 | 1.29 | 7.6 | 1:121 | 0.16 | 66 | alkali silicate | 18 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table70**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Comp. Example73 | 2.3 | FC | 205.6 | 1.23 | 10.5 | 1:5 | 0.38 | 77 | alkyl silicate | 25 | 3Spraying | poor |
| Comp. Example74 | 12.5 | FC | 0.005 | 1.36 | 12.6 | 1:3 | 3.23 | 77 | urethane-bassd resin | 25 | Spraying | poor |
| Comp. Example75 | 18.9 | FC | 205.6 | 1.11 | 7.8 | 1:19 | 0.93 | 43 | alkyl silicate | 105 | Brushing | poor |
| Comp. Example76 | 29.5 | FC | 0.005 | 1.07 | 16.8 | 1:100 | 0.29 | 52 | alkali silicate | 165 | Spraying | poor |
| Comp. Example77 | 14.5 | FC | 205.6 | 1.42 | 10.5 | 1:260 | 0.06 | 66 | alkyl silicate | 25 | Spraying | poor |
| Comp. Example78 | 12.5 | FC | 0.005 | 1.36 | 12.6 | 1:3 | 3.13 | 72 | alkyl silicate | 25 | Spraying | poor |
| Comp. Example79 | 18.9 | FC | 205.6 | 1.22 | 1.6 | 1:19 | 0.95 | 40 | alkyl silicate | 105 | Brushing | poor |
| Comp. Example80 | 29.5 | FC | 0.005 | 1.14 | 16.8 | 1:100 | 0.29 | 36 | alkali silicate | 165 | Spraying | poor |
| Comp. Example81 | 2.3 | FC | 10.6 | 1.13 | 10.5 | 1:256 | 0.01 | 32 | alkyl silicate | 25 | Spraying | poor |
| Comp. Example82 | 12.5 | FC | 5.7 | 1.02 | 12.6 | 1:200 | 0.06 | 53 | alkyl silicate | 25 | Spraying | poor |
| Comp. Example83 | 0.5 | FC | 6.4 | 1.06 | 7.9 | 1:167 | 0.00 | 67 | alkyl silicate | 105 | Brushing | noor |
| Comp. Example84 | 29.5 | FC | 3.2 | 1.23 | 16.8 | 1:300 | 0.10 | 53 | urethane-based resin | 165 | Spraying | poor |
| Comp. Examp1e85 | 14.5 | FC | 4.5 | 1.36 | 10.5 | 1:260 | 0.06 | 67 | alkyl silicate | 25 | Spraying | poor |
| Comp. Example86 | 9.8 | FC | 5.2 | 1.11 | 12.6 | 1:100 | 0.10 | 72 | alkyl silicate | 25 | Spraying | poor |
| Comp. Example87 | 4.6 | FC | 1.9 | 1.07 | 7.8 | 1:47 | 0.10 | 77 | alkyl silicate | 105 | Brushing | poor |
| Comp. Example88 | 3.2 | FC | 18.5 | 1.42 | 16.8 | 1:32 | 0.10 | 34 | urethane-based resin | 55 | Spraying | poor |
| Comp. Example89 | 29.9 | FC | 12.5 | 1.38 | 12.6 | 1:345 | 0.09 | 43 | alkyl silicate | 28 | Spraying | poor |
| Comp. Example90 | 7.6 | FC | 9.8 | 1.22 | 7.8 | 1:390 | 0.02 | 52 | alkyl silicate | 15 | Spraying | poor |
| Comp. Example91 | 29.9 | FC | 7.6 | 1.14 | 16.8 | 1:301 | 0.10 | 66 | alkyl silicate | 14 | Spraying | poor |
| Comp. Example92 | 0.6 | FC | 6.9 | 1.13 | 10.5 | 1:333 | 0.00 | 72 | urethane-based resin | 118 | Brushing | poor |
| Comp. Example93 | 4.5 | FC | 10.5 | 1.02 | 12.6 | 1:325 | 0.01 | 40 | alkyl silicate | 22 | Spraying | poor |
| Comp. Example94 | 3.7 | FC | 12.6 | 1.06 | 7.8 | 1:456 | 0.01 | 36 | alkyl silicate | 54 | Spraying | poor |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table71**

| | Zn-Alloy Particles Properties | | | | Mean Size of Zn Metallic particle (µm) | Blend Ratio (Zn Alloy particles : Zn Metal Particle) | Mg Contents to Total Metal Particle (mass %) | Coat Propertie | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example2357 | 7.5 | FC | 5.07 | 1.42 | 23.43 | 0.65 | 10.5 | 74 | alkali silicate | 24 | Brushing | very good |
| Inv. Example2358 | 8.06 | FC | 7.72 | 1.38 | 5.96 | 0.60 | 12.5 | 82 | alkyl silicate | 25 | Spraying | very good |
| Inv. Example2359 | 9.3 | FC | 8.32 | 1.22 | 10.64 | 3.72 | 1.5 | 37 | alkali silicate | 14 | Spraying | very good |
| Inv. Example2360 | 3.5 | FC | 3.04 | 1.02 | 16.5 | 1.84 | 0.9 | 48 | alkali silicate | 15 | Spraying | very good |
| Inv. Example2361 | 2.7 | FC | 4.12 | 1.21 | 7.95 | 0.23 | 10.5 | 32 | . alkali silicate | 15 | Spraying | very good |
| Inv. Example2362 | 9.2 | FC | 7.81 | 1.47 | 7.95 | 0.03 | 299.5 | 45 | alkyl silicate | 15 | Brushing | very good |
| Inv. Example2363 | 8.1 | FC | 1.45 | 1.31 | 9.64 | 5.40 | 0.5 | 37 | epoxy-based resin | 5 | Spraying | good |
| Inv. Example2364 | 7.5 | FC | 9.6 | 1.07 | 0.96 | 5.95 | 0.26 | 72 | urethane-based resin | 150 | Spraying | very good |
| Inv. Example2365 | 4.5 | FC | 8.5 | 1.42 | 5.26 | 3.46 | 0.3 | 40 | alkali silicate | 18 | Spraying | very good |
| Inv. Examole2366 | 3.6 | FC | 3.2 | 1.05 | 13.5 | 0.90 | 3 | 40 | alkali silicate | 18 | Spraying | very good |
| Inv. Example2367 | 4.2 | FC | 5.7 | 1.02 | 13.5 | 0.20 | 20.5 | 72 | alkyl silicate | 58 21 | Spraying | very good |
| Inv. Example2368 | 4.3 | FC | 6.4 | 1.06 | 9.64 | 0.83 | 4.2 | 40 | alkyl silicate | 21 | Spraying | very good |
| Inv. Example2369 | 4 | FC | 3.2 | 1.05 | 16.5 | 1.60 | 1.5 | 36 | alkali silicate | 19 | Brushing | very good |
| Inv. Example2370 | 6.4 | FC | 5.2 | 1.33 | 20.59 | 1.07 | 5 | 53 | alkyl silicate | 77 | Spraying | very good |
| Inv. Example2371 | 9.8 | FC | 5.2 | 1.33 | 0.96 | 0.59 | 15.6 | 53 | alkyl silicate | 77 | Spraying | very good |
| Inv. Example2372 | 7.5 | FC | 5.07 | 1.42 | 6.54 | 5.00 | 0.5 | 66 | alkali silicate | 13 | Brushing | very good |
| Inv. Example2373 | 8.4 | FC | 7.72 | 1.38 | 5.26 | 2.90 | 1.9 | 67 | alkyl silicate | 22 | Brushing | very good |
| Inv. Example2374 | 2.7 | FC | 4.12 | 1.21 | 10.64 | 1.04 | 1.6 | 57 | alkali silicate | 15 | Spraying | very good |
| Inv. Example2375 | 2.64 | FC | 5.5 | 1.22 | 9.64 | 0.75 | 2.5 | 43 | alkyl silicate | 16 | Spraying | very good |
| Inv. Example2376 | 1.59 | FC | 6.7 | 1.14 | 6.9 | 1.06 | 0.5 | 76 | alkyl silicate | 5 | Spraying | very good |
| Inv. Example2377 | 2.58 | FC | 8.9 | 1.13 | 10.5 | 0.43 | 5 | 49 | alkyl silicate | 22 | Spraying | very good |
| Inv. Example2378 | 7.55 | FC | 2.15 | 1.14 | 13.5 | 3.43 | 1.2 | 75 | alkyl silicate | 18 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

**Table72**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Metal Particle in Dry Coat (mass %) | Base Resin | Coat Thickness (µm) | Coating Method | |
| Inv. Example2379 | 8.01 | FC | 2.54 | 1.13 | 20.59 | 0.84 | 8.5 | 73 | alkyl silicate | 16 | Spraying | very good |
| Inv. Example2380 | 1.06 | FC | 3.4 | 1.38 | 7.82 | 0.34 | 2.1 | 49 | alkyl silicate | 8 | Spraying | very good |
| Inv. Example2301 | 2.64 | FC | 5.5 | 1.22 | 5.26 | 2.11 | 0.25 | 43 | alkyl silicate | 16 | Spraying | very good |
| Inv. Example2382 | 1.59 | FC | 6.7 | 1.14 | 7.06 | 0.80 | 1 | 76 | alkyl silicate | 5 | Spraying | very good |
| Inv. Example2383 | 20.5 | FC | 2.15 | 1.14 | 0.64 | 5.66 | 2.5 | 75 | alkyl silicate | 18 | Spraying | very good |
| Inv. Example2384 | 18.5 | FC | 2.54 | 1.13 | 46.8 | 3.08 | 5 | 73 | alkyl silicate | 16 | Spraying | very good |
| Inv. Example2385 | 9.51 | FC | 2.77 | 1.38 | 16.5 | 1.46 | 5.5 | 55 | alkyl silicate | 5 | Spraying | very good |
| Inv. Example2386 | 10.01 | FC | 3.68 | 1.22 | 13.5 | 1.33 | 6.5 | 48 | alkyl silicate | 22 | Spraying | very good |
| Inv. Example2387 | 3.54 | FC | 5.5 | 1.22 | 0.96 | 1.42 | 1.5 | 78 | alkyl silicate | 18 | Spraying | very good |
| Inv. Example2388 | 4.05 | FC | 2.06 | 1.13 | 0.96 | 0.68 | 5 | 52 | alkyl silicate | 8 | Spraying | very good |
| Inv. Example2389 | 8.57 | FC | 4.99 | 1.02 | 8.45 | 1.30 | 5.6 | 61 | alkyl silicate | 16 | Spraying | very good |
| Inv. Example2390 | 0.02 | FC | 6.4 | 1.06 | 2.9 | 0.02 | 0.05 | 77 | polyester resin | 47 | Spraying | very good |
| Inv. Example2391 | 25.5 | FC | 3.09 | 1.07 | 5.4 | 2.22 | 10.5 | 49 | alkyl silicate | 22 | Spraying | very good |
| Inv. Exanp!e2392 | 2.36 | FC | 3.99 | 1.22 | 10.6 | 1.57 | 0.5 | 83 | alkyl silicate | 21 | Spraying | very good |
| Inv. Example2393 | 0.05 | FC | 7.72 | 1.38 | 2.32 | 0.03 | 0.75 | 36 | alkyl silicate | 19 | Brushing | very woad |
| Inv. Example2394 | 0.04 | FC | 8.32 | 1.22 | 7.8 | 0.03 | 0.2 | 32 | alkyl silicate | 24 | Spraying | very good |
| Inv. Example 395 | 5.22 | FC | 3.55 | 1.12 | 7.95 | 0.45 | 10.5 | 55 | alkyl silicate | 19 | Spraying | very good |
| Inv. Example2396 | 4.01 | FC | 2.64 | 1.23 | 20.59 | 2.86 | 0.4 | 40 | alkyl silicate | 8 | Spraying | very good |
| Inv. Example2397 | 0.05 | FC | 5.2 | 1.33 | 22.5 | 0.03 | 0.9 | 53 | urethane-based resin | 20 | Brushing | very good |
| Inv. Example2398 | 10.5 | FC | 1.9 | 1.27 | 4.6 | 2.33 | 3.5 | 60 | polyester resin | 200 | Brushing | very good |
| Inv. Example2399 | 0.05 | FC | 2.5 | 1.05 | 4.9 | 0.05 | 0.01 | 38 | alkali silicate | 19 | Spraying | very good |
| Inv. Example2400 | 10.5 | FC | 0.09 | 1.12 | 10.5 | 2.33 | 3.5 | 49 | alkyl silicate | 11 | Spraying | very good |
| Inv. Example2401 | 2.64 | FC | 5.5 | 1.22 | 8.45 | 0.88 | 2 | 43 | alkyl silicate | 16 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

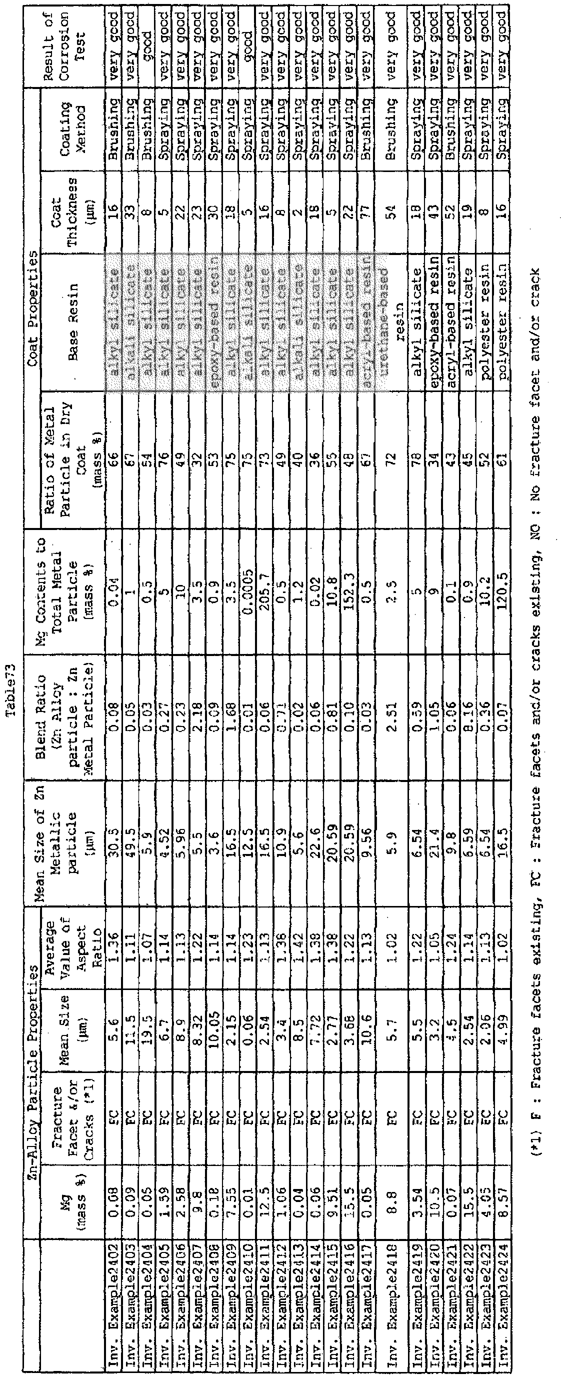

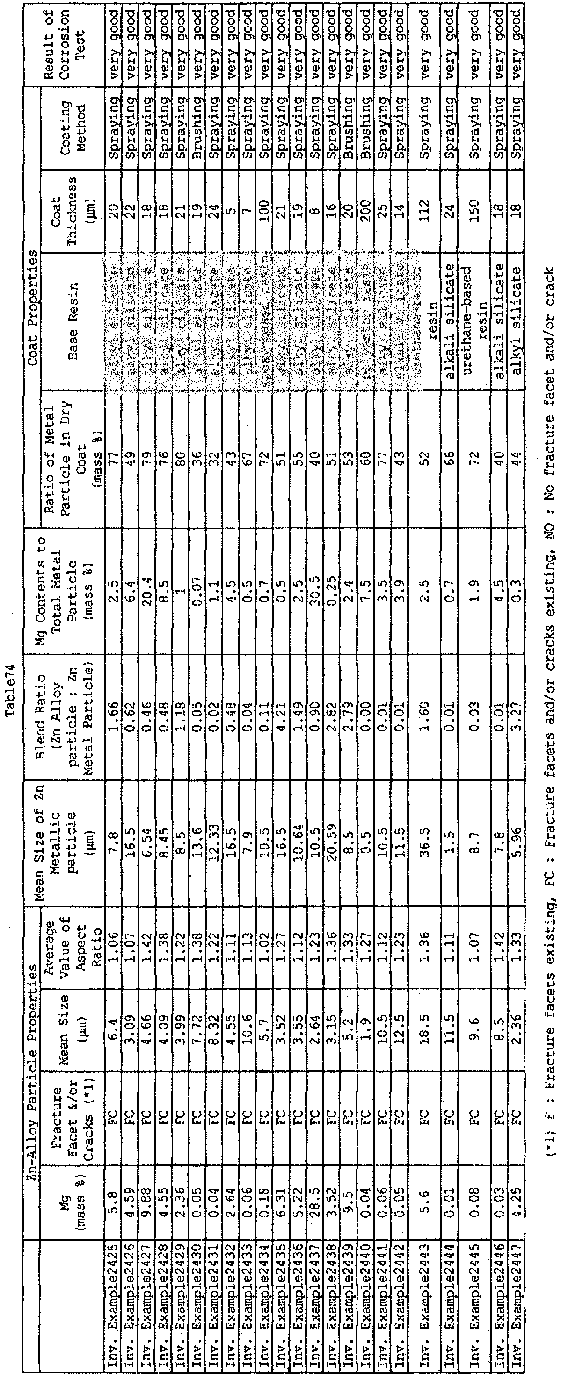

**Table75**

| | Zn-Alloy Particle Properties | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|
| | Mg (mass %) | Fracture Facet &/or Cracks (*1) | Mean Size (µm) | Average Value of Aspect Ratio | | | | Ratio of Mental Particle in Dry Coat (mass %) | Base Resin | Coat Thickness (µm) | Coating Method | |
| Inv. Example2448 | 0.04 | FC | 23.5 | 1.42 | 0.06 | 0.04 | 0.08 | 44 | alkali silicate | 38 | Spraying | very good |
| Inv. Exanple2449 | 0.06 | FC | 101.5 | 1.38 | 0.9 | 0.06 | 0.05 | 36 | alkyl silicate | 18 | Spraying | very good |
| Inv. Example2450 | 0.06 | FC | 55.4 | 1.38 | 3.6 | 0.06 | 0.005 | 76 | alkyl silicate | 10 | Spraying | verv good |
| Inv. Example2451 | 0.07 | FC | 10.5 | 1.12 | 10.5 | 0.02 | 2.8 | 77 | alkyl silicate | 37 | Spraying | very good |
| Inv. Example2452 | 0.01 | FC | 12.5 | 1.23 | 0.05 | 0.01 | 0.6 | 43 | alkali silicate | 2 | Spraying | good |
| Inv. Example2953 | 0.08 | FC | 18.5 | 1.36 | 2.32 | 0.04 | 1 | 52 | alkyl silicate | 160 | Brushing | very good |
| Inv. Example2454 | 0.09 | FC | 11.5 | 1.11 | 20.4 | 0.08 | 0.09 | 66 | alkali silicate | 5 | Brushing | very good |
| Inv. Example2455 | 0.05 | FC | 9.6 | 1.07 | 7.34 | 0.01 | 3.4 | 72 | alkyl silicate | 56 | Brushing | very good |
| Inv. Example2456 | 0.06 | FC | 10.05 | 1.14 | 9.4 | 0.02 | 1.5 | 53 | urethane-based resin | 99 | Spraying | very good |
| Inv. Example2457 | 29.9 | FC | 10.5 | 1.36 | 16.5 | 0.15 | 200 | 55 | urethane-based resin | 700 | Spraying | very good |
| Inv. Example2458 | 16.5 | FC | 7.5 | 1.11 | 7.9 | 1.03 | 15 | 47 | alkyl silicate | 554 | Spraying | very good |
| Inv. Example2459 | 12.5 | FC | 2.6 | 1.07 | 10.5 | 2.08 | 5 | 79 | urethane-based resin | 688 | Brushing | very good |
| Inv. Example2460 | 9.8 | FC | 3.5 | 1.42 | 16.5 | 3.92 | 1.5 | 42 | urethane-based resin | 421 | Spraying | very good |
| Inv. Example2461 | 9.6 | FC | 4.5 | 1.33 | 8.5 | 0.12 | 78 | 36 | urethane-based resin | 651 | Spraying | very good |
| Inv Example2462 | 7.5 | FC | 1.6 | 1.42 | 10.5 | 1.25 | 5 | 53 | urethane-based resin | 402 | Brushing | very good |
| Inv. Example2463 | 4.6 | FC | 2.5 | 1.12 | 5.8 | 0.40 | 10.5 | 55 | alkali silicate | 354 | Spraying | very good |
| Inv. Example2464 | 3.8 | FC | 23.5 | 1.23 | 1.2 | 1.09 | 2.5 | 42 | urethane-based resin | 504 | Brushing | very good |
| Inv. Example2465 | 0.05 | FC | 9.8 | 1.27 | 15.5 | 0.03 | 1 | 76 | urethane-based resin | 666 | Spraying | very good |

| | | | | | | | | | | | | |
|---|---|---|---|---|---|---|---|---|---|---|---|---|
| (*1) F : Fracture facets existing, FC : Fracture facets and/or cracks existing, NO : No fracture facet and/or crack | | | | | | | | | | | | |

### Example 6

Zn alloy particles further containing one or both of Al and Si as shown by the chemical ingredients in Tables 76 to 91 were produced. The rest is the same as Example 5.

From Tables 76 to 91, it is learned that the painting test pieces using the Zn alloy particles of the present invention exhibit superior corrosion resistance regardless of the type of base resin, that is, both for inorganic-based and organic-based binders.

**Table76**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness µm) | Coating Method | |
| Inv. Exaople260 | 12.3 | F | 0.02 | 1.05 | 0.1 | 0.07 | 2.02 | 300:1 | 12.26 | 40 | alkali silicate | 2 | Spraying | very gold |
| Inv. Example261 | 0.8 | F | 27.89 | 1.12 | 0.04 | 0.1 | 48.05 | 100:1 | 0.79 | 36 | alkyl silicate | 35 | Spraying | very good |
| Inv. Example262 | 1.0 | F | 0.32 | 1.23 | 30.0 | 0.01 | 5.41 | 250:1 | 1.00 | 32 | alkali silicate | 15 | Spraying | very good |
| Inv. Example263 | 2.3 | F | 158.96 | 1.36 | 0.02 | 3 | 49.87 | 150:1 | 2.28 | 53 | alkyl silicate | 160 | Brushing | very good |
| Inv. Example264 | 15.6 | F | 1.05 | 1.11 | 8.02 | 2.04 | 5.04 | 170:1 | 15.51 | 67 | alkali silicate | 12 | Brushing | very good |
| Inv. Exammle265 | 6.7 | F | 36.47 | 1.07 | 15.6 | 1.27 | 34.14 | 80:1 | 6.62 | 35 | alkyl silicate | 54 | Brushing | very good |
| Inv. Example266 | 7.5 | F | 0.51 | 1.42 | 10.4 | 0.57 | 2.25 | 1:15 | 0.47 | 77 | alkali silicate | 4 | Spraying | very good |
| Inv. Example267 | 6.4 | F | 7.72 | 1.38 | 4.65 | 2.67 | 10.54 | 200:1 | 6.36 | 43 | alkyl silicate | 16 | Spraying | very good |
| Inv. Example268 | 9.3 | F | 8.32 | 1.22 | 24.8 | 2.4 | 11.25 | 65:1 | 9.16 | 52 | alkyl silicate | 24 | Spraying | very good |
| Inv. Example269 | 10.4 | F | 10.05 | 1.14 | 4.52 | 0.57 | 13.25 | 300:1 | 10.37 | 34 | epoxy-based resin | 15 | Brushing | very good |
| Inv. Example270 | 11.2 | F | 60.08 | 1.13 | 17.5 | 2.45 | 39.87 | 70:1 | 11.04 | 43 | acryl-based resin | 76 | Brushing | verv good |
| Inv. Example271 | 11.7 | F | 17.89 | 1.02 | 745 | 1.75 | 24.25 | 65:1 | 11.52 | 53 | urethane-based resin | 22 | Brushing | very good |
| Inv. Example272 | 21.5 | F | 19.54 | 1.06 | 11.05 | 0.23 | 10.22 | 65:1 | 21.17 | 60 | polyester resin | 28 | Spraying | very good |
| Inv. Example273 | 13.4 | F | 21.08 | 1.05 | 2.65 | 0.74 | 5.87 | 300:1 | 13.36 | 37 | epoxy-based resin | 32 | Spraying | very good |
| Inv. Example274 | 14.6 | F | 23.04 | 1.24 | 6.45 | 2.14 | 19.54 | 150:1 | 14.50 | 42 | acryl-based resin | 42 | Spraying | very good |
| Inv. Example275 | 25.8 | F | 9.02 | 1.33 | 27.6 | 2.4 | 15.87 | 300:1 | 25.71 | 58 | urethane-based resin | 15 | Brushing | very good |
| Inv. Example276 | 16.7 | F | 194.23 . | 1.27 | 4.32 | 1.07 | 48.67 | 65:1 | 16.45 | 32 | polyester resin | 200 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table77**

| | Zn-Alloy Particle Properties | | | | | | Mean Size of Zn Metallic particles (µm) | BlendRatio (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example1396 | 0.15 | FC | 0.02 | 1.05 | 0.1 | 0.07 | 2.04 | 5:2 | 0.11 | 35 | alkali silicate | 2 | Spraying | very good |
| Inv.Example1397 | 0.19 | FC | 10.5 | 1.12 | 0.04 | 0.1 | 50.00 | 7:1 | 0.17 | 77 | alkyl silicate | 37 | Spraying | very good |
| Inv. Example1398 | 0.18 | FC | 12.5 | 1.23 | 30.0 | 0.01 | 2.45 | 68:1 | 0.19 | 43 | alkali silicate | 2 | Spraying | good |
| Inv. Example1399 | 0.11 | FC | 19.5 | 1.36 | 0.02 | 3 | 5.33 | 10:1 | 0.10 | 52 | alkyl silicate | 160 | Brushing | very good |
| Inv. Example1400 | 0.15 | FC | 11.5 | 1.11 | 0 | 0 | 2.41 | 25:7 | 0.12 | 66 | alkali silicate | 5 | Brushing | very good |
| Inv. Example1401 | 0.24 | FC | 9.6 | 1.07 | 0 | 0 | 23.43 | 300:9 | 0.23 | 72 | alkyl silicate | 56 | Brushing | very good |
| Inv. Example1402 | 0.18 | FC | 8.5 | 1.42 | 10.4 | 0.57 | 6.03 | 180:1 | 0.18 | 40 | alkali silicate | 2 | Spraying | very good |
| Inv. Example1403 | 0.12 | FC | 1.72 | 1.38 | 4.65 | 2.67 | 24.5 | 23:1 | 0.12 | 36 | alkyl silicate | 18 | Spraying | very sood |
| Inv. Example1404 | 0.19 | FC | 0.32 | 1.22 | 24.8 | 2.4 | 5.32 | 165:1 | 0.19 | 32 | alkyl silicate | 23 | Spraying | very good |
| Inv. Example1405 | 0.18 | FC | 10.05 | 1.14 | 4.52 | 0.57 | 14.34 | 300:1 | 0.16 | 53 | epoxy-based resin | 30 | Brushing | very good |
| Inv. Example1406 | 0.21 | FC | 10.6 | 1.13 | 17.5 | 2.45 | 5.04 | 120:1 | 0.21 | 67 | acryl-based resin | 77 | Brushing | very good |
| Inv. Example1407 | 0.76 | FC | 5.7 | 1.02 | 0 | 0 | 2.32 | 2:9 | 0.14 | 72 | urethane-based resin | 54 | Brushing | very good |
| Inv. Example1408 | 0.11 | FC | 6.4 | 1.06 | 11.05 | 0.23 | 20.34 | 119:3 | 0.11 | 77 | polyester resin | 47 | Spraying | very good |
| Inv. Example1409 | 0.14 | FC | 3.2 | 1.05 | 2.65 | 0.74 | 12.33 | 233:1 | 0.14 | 34 | epoxy-based resin | 43 | Spraying | very good |
| Inv. Example1410 | 15 | FC | 4.5 | 1.24 | 6.45 | 2.14 | 17.84 | 1:132 | 0.11 | 43 | acryl-based resin | 52 | Brushing | very good |
| Inv. Example1411 | 14.5 | FC | 5.2 | 1.33 | 0 | 0 | 6.66 | 1:55 | 10.24 | 53 | urethane-based resin | 20 | Brushing | very good |
| Inv. Example1412 | 18.5 | FC | 1.9 | 1.27 | 0 | 0 | 3.65 | 1:23 | 0.77 | 60 | polyester resin | 200 | Brushing | very good |
| Inv. Example1413 | 15.1 | FC | 0.02 | 1.05 | 0.05 | 0.03 | 22.62 | 200:1 | 15.02 | 35 | alkali silicate | 22 | Spraying | very good |
| Inv. Example1414 | 15.6 | FC | 10.5 | 1.12 | 0 | 0.08 | 45.33 | 1:15 | 0.98 | 77 | alkyl silicate | 25 | Spraying | very good |
| Inv. Example1415 | 12.5 | FC | 12.5 | 1.23 | 0.05 | 0 | 43.22 | 1:10 | 1.14 | 43 | alkali silicate | 14 | Spraying | very good |
| Inv. Example1416 | 18.7 | FC | 18.5 | 1.36 | 0.44 | 0.07 | 12.33 | 1:6 | 2.67 | 52 | urethane-based resin | 112 | Spraying | very good |
| Inv. Example1417 | 14.5 | FC | 11.5 | 1.11 | 0.08 | 0.07 | 13.42 | 1:45 | 0.32 | 66 | alkali silicate | 24 | Spraying | very good |
| Inv. Example1418 | 7.5 | FC | 9.6 | 1.07 | 0.1 | 0.2 | 22.32 | 1:50 | 0.15 | 72 | urethane-based resin | 150 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table78**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Overage Value of Aspect Ratio | Al (mass %; | Si (mass %) | | | | Ratio of Metal Particle in Dry Coat (mass %) | Base Resin | Coat Thickness (µm) | Coat ing Method | |
| Inv. Example1419 | 4.5 | FC | 8.5 | 1.42 | 0 | 0 | 7.34 | 1:9 | 0.45 | 40 | alkali silicate | 18 | Spraying | very acod |
| Inv. Example1420 | 1.5 | FC | 7.72 | 1.38 | 0 | 0 | 44.54 | 1:7 | 0.19 | 36 | alkyl silicate | 19 | Brushing | very good |
| Inv. Example1421 | 4.8 | FC | 8.32 | 1.22 | 0 | 0.07 | 32.87 | 1:4 | 0.96 | 32 | alkyl silicate, | 24 | Spraying | very good |
| Inv. Example1422 | 9.6 | FC | 10.05 | 1.14 | 0 | 0.02 | 20.32 | 1:14 | 0.64 | 53 | urethane-basad resin | 99 | Spraying | very good |
| Inv. Example1423 | 11.5 | FC | 10.6 | 1.13 | 25.6 | 0.05 | 2.03 | 1:11 | 0.96 | 67 | alkyl silicate | 7 | Spraying | very good |
| Inv. Example1424 | 9.8 | FC | 5.7 | 1.02 | 22.1 | 0 | 5.33 | 1:26 | 0.34 | 72 | epoxy-based resin | 100 | Spraying | very good |
| Inv. Example1425 | 7.6 | FC | 6.4 | 1.06 | 21.5 | 0.05 | 2.33 | 1:4 | 1.52 | 77 | alkyl silicate | 27 | Brushing | very good |
| Inv. Example1426 | 3.2 | FC | 3.2 | 1.05 | 0.05 | 2.29 | 27.44 | 250:1 | 3.19 | 34 | alkali silicate | 15 | Spraying | very good |
| Inv. Example1427 | 1.9 | FC | 4.5 | 1.24 | 0.05 | 0.03 | 12.33 | 1:1 | 0.95 | 43 | alkyl silicate | 14 | Spraying | very good |
| Inv. Example1428 | 11.5 | FC | 5.2 | 1.33 | 0 | 0.03 | 36.43 | 1:4 | 2.30 | 53 | urethane-based resin | 55 | Spraying | very good |
| Inv. Example1429 | 8.7 | FC | 1.9 | 1.27 | 0 | 0 | 12.33 | 1:12 | 0.67 | 35 | alkyl silicate | 8 | Spraying | very good |
| Inv. Example1430 | 9.6 | FC | 0.02 | 1.05 | 0 | 0 | 3.21 | 70:1 | 9.46 | 77 | urethane-based resin | 122 | Brushing | very good |
| Inv. Example1431 | 9.4 | FC | 10.5 | 1.12 | 0.08 | 0.07 | 26.33 | 1:3 | 2.35 | 43 | alkyl silicate | 54 | Spraying | very good |
| Inv. Example1432 | 10.5 | FC | 12.5 | 1.23 | 0.1 | 0.2 | 44.21 | 1:24 | 0.42 | 52 | alkali silicate | 19 | Spraying | very good |
| Inv. Example1433 | 12.6 | FC | 16.5 | 1.36 | 0.05 | 0.2 | 3.43 | 1:10 | 1.15 | 66 | alkyl silicate | 25 | Brushing | very good |
| Inv. Example1434 | 29.5 | FC | 11.5 | 1.11 | 0.07 | 0 | 47.32 | 300:1 | 29.40 | 72 | alkyl silicate | 58 | Spraying | very good |
| Inv. Example1435 | 29.4 | FC | 9.6 | 1.07 | 0 | 0.07 | 12.33 | 1:66 | 0.44 | 40 | alkyl silicate | 21 | Spraying | very good |
| Inv. Example1436 | 27.5 | FC | 8.5 | 1.42 | 0 | 0.02 | 17.44 | 120:1 | 27.27 | 36 | alkali silicate | 19 | Brushing | very good |
| Inv. Example1437 | 0.8 | FC | 7.72 | 1.38 | 25.8 | 0.05 | 42.21 | 6:5 | 0.44 | 32 | urethane-based resin | 56 | Spraying | very good |
| Inv. Example1438 | 1.6 | FC | 8.32 | 1.22 | 22.1 | 0 | 12.34 | 1:1 | 0.90 | 53 | alkyl silicate | 77 | Sprayinq | very good |
| Inv. Example1439 | 22.9 | FC | 10.05 | 1.14 | 21.5 | 0.05 | 20.32 | 1:1 | 11.45 | 67 | alkyl silicate | 54 | Spraying | very good |
| Inv. Example1440 | 28.5 | FC | 10.6 | 1.13 | 0.05 | 2.29 | 23.44 | 1:76 | 0.37 | 72 | alkyl silicate | 64 | Spraying | very good |
| Inv. Example1441 | 29.5 | FC | 5.7 | 1.02 | 0.1 | 0.2 | 23.45 | 1:6 | 4.21 | 77 | alkyl silicate | 34 | Brushing | very good |

| | | | | | | | | | | | | | | |
|---|---|---|---|---|---|---|---|---|---|---|---|---|---|---|
| (*1) F : Fracture facets existing, FC: Fracture facets and/or cracks existing, NO : No fracture facet and/or crack | | | | | | | | | | | | | | |

**Table 79**

| | Zn-Alloy Particle Properties | | | | | | Mean Size of Zn Metallic particle (µm) | Blend Ratio (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µmm) | Average value of Aspect Ratio | Al (mass %) | Si (mass %) | | | | Ratio of Metal Particles in Dry Coat (mass %) | Base Resin | Coat Thickness (µm) | Coating Method | |
| Inv. Example1442 | 18.7 | FC | 6.4 | 1.05 | 0.05 | 0.2 | 23.21 | 1:35 | 0.52 | 34 | alkali silicate | 28 | Spraying | very good |
| Inv. Example1443 | 19.5 | FC | 3.2 | 1.05 | 0.07 | 0 | 39.44 | 1:5 | 3.25 | 43 | urethane-based resin | 109 | Brushing | very good |
| Inv. Example1444 | 20.4 | FC | 4.5 | 1.24 | 0 | 0.07 | 12.34 | 1:62 | 0.32 | 53 | alkyl silicate | 15 | Spraying | very good |
| Inv. Examle1445 | 0.6 | FC | 5.2 | 1.33 | 0 | 0.02 | 29.99 | 1:4 | 0.12 | 72 | alkyl silicate | 14 | Spraying | very good |
| Inv. Example1446 | 0.8 | FC | 1.9 | 1.27 | 22.1 | 0 | 15.21 | 5:3 | 0.29 | 77 | alkyl silicate | 18 | Spraying | very good |
| Inv. Example1447 | 22.5 | FC | 0.02 | 1.05 | 0.1 | 0.07 | 23.34 | 1:220 | 0.10 | 35 | alkali siilate | 2 | Spraying | very good |
| Inv. Example1448 | 20.6 | FC | 10.5 | 1.12 | 0.04 | 0.1 | 2.32 | 1:80 | 0.25 | 77 | alkyl silicate | 37 | Spraying | very good |
| Inv.Example1449 | 21.6 | FC | 12.5 | 1.23 | 30.0 | 0.01 | 4.21 | 1:50 | 0.42 | 43 | alkali silicate | 2 | Spraying | good |
| Inv. Example1450 | 20.8 | FC | 7.72 | 1.38 | 0 | 0 | 15.21 | 1:10 | - 1.99 | 52 | alkyl silicate | 160 | Brushing | very good |
| Inv. Example1451 | 23.6 | FC | 8.32 | 1.22 | 0 | 0 | 23.34 | 1:1 | 11.80 | 66 | alkali silicate | 5 | Brushing | very good |
| Inv. Example1452 | 24.5 | FC | 10.05 | 1.14 | 4.52 | 0.57 | 2.32 | 1:78 | 0.31 | 72 | alkyl silicate | 56 | Brushing | very good |
| Inv. Example1453 | 18.6 | FC | 10.6 | 1.13 | 17.5 | 2.45 | 4.21 | 1:10 | 1.69 | 40 | alkali silicate | 2 | Spraying | very good |
| Inv. Example1454 | 17.8 | FC | 5.2 | 1.33 | 27.6 | 2.4 | 29.99 | 1:50 | 0.35 | 36 | alkyl silicate | 18 | Spraying | very good |
| Inv. Example1455 | 16.5 | FC | 1.9 | 1.27 | 4.32 | 1.07 | 15.21 | 1:10 | 1.50 | 32 | alkyl silicate | 23 | Spraying | very good |
| Inv. Example1456 | 14.5 | FC | 0.02 | 1.05 | 0.05 | 0.03 | 23.34 | 1:1 | 7.25 | 53 | epoxy-based resin | 30 | Brushing | very good |
| Inv. Example1457 | 19 | FC | 10.5 | 1.12 | 0 | 0.08 | 2.32 | 1:3 | 4.75 | 67 | acryl-based resin | 77 | Brushing | very good |
| Inv. Example1458 | 15 | FC | 12.5 | 1.23 | 0.05 | 0 | 4.21 | 1:7 | 1.88 | 72 | urethane-based resin | 54 | Brushing | very good |
| Inv. Example1459 | 16.4 | FC | 18.5 | 1.36 | 0.44 | 0.07 | 15.21 | 1:50 | 0.32 | 77 | polyester resin | 47 | Spraying | very good |
| Inv. Example1460 | 13.5 | FC | 11.5 | 1.11 | 0.08 | 0.07 | 23.34 | 1:10 | 1.23 | 34 | epoxy-based resin | 43 | Spraying | very good |
| Inv. Example1461 | 10.6 | FC | 11.5 | 1.11 | 8.02 | 2.04 | 13.45 | 1:3 | 2.65 | 43 | acryl-based resin | 52 | Brushing | very good |
| Inv. Example1462 | 10.7 | FC | 9.6 | 1.07 | 15.6 | 1.27 | 2.34 | 1:10 | 0.97 | 53 | urethane-based resin | 20 | Brushing | very good |
| Inv. Example1463 | 10.9 | FC | 8.5 | 1.42 | 10.4 | 0.57 | 28.34 | 1:5 | 1.82 | 60 | polyester resin | 200 | Brushing | very good |
| Inv. Example1464 | 11.6 | FC | 7.72 | 1.39 | 4.65 | 2.67 | 19.87 | 200:1 | 11.54 | 35 | alkali silicate | 22 | Spraying | very good |

| | | | | | | | | | | | | | | |
|---|---|---|---|---|---|---|---|---|---|---|---|---|---|---|
| (*1) F : Fracture facets existing, FC: Fracture facets and/or cracks existing, NO : No fracture facet and/or crack | | | | | | | | | | | | | | |

**Table90**

| | Zn Alloy Particle Properties | | | | | | Mean Size of Zn Metallic particle (µm) | Blend Ratio (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example1465 | 14.7 | FC | 8.32 | 1.22 | 24.8 | 2.4 | 39.74 | 1:8 | 1.63 | 77 | alkyl silicate | 25 | Spraying | very good |
| Inv. Example1466 | 19.5 | FC | 10.05 | 1.14 | 4.52 | 0.57 | 24.32 | 1:1 | 9.75 | 43 | alkali silicate | 14 | Spraying | very good |
| Inv. Exaanple1467 | 10.2 | FC | 10.6 | 1.13 | 0 | 0 | 22.33 | 1:7 | 1.28 | 52 | urethane-based resin | 112 | Spraying | very good |
| Inv. Example1468 | 4 | FC | 5.7 | 1.02 | 0 | 0 | 48.54 | 1:3 | 1.00 | 66 | alkali silicate | 24 | Spraying | very good |
| Inv. Example1469 | 7.2 | FC | 6.4 | 1.06 | 11.05 | 0.23 | 23.75 | 1:7 | 0.90 | 72 | urethane-based resin | 150 | Spraying | very good |
| Inv. Exampl e1470 | 3.6 | FC | 3.2 | 1.05 | 2.65 | 0.74 | 15.62 | 1:2 | 1.20 | 40 | alkali silicate | 18 | Spraying | very good |
| Inv.Example1471 | 26.9 | FC | 4.5 | 1.24 | 6.45 | 2.14 | 2.34 | 117:1 | 26.67 | 36 | alkyl silicate | 19 | Brushing | very good |
| Inv. Example1472 | 27.9 | FC | 5.2 | 1.33 | 27.6 | 2.4 | 23.04 | 1:270 | 0.10 | 32 | alkyl silicate | 24 | Spraying | very good |
| Inv. Example1473 | 28.9 | FC | 1.9 | 1.27 | 4.32 | 1.07 | 3.05 | 1:117 | 0.24 | 53 | urethane-based resin | 99 | Spraying | very good |
| Inv.Example1474 | 23.9 | FC | 0.02 | 1.05 | 0.05 | 0.03 | 43.23 | 1:66 | 0.36 | 67 | alkyl silicate | 7 | Spraying | very good |
| Inv.Example1475 | 26.8 | FC | 10.5 | 1.12 | 0 | 0.08 | 2.04 | 1:109 | 0.24 | 72 | epoxy-based resin | 100 | Spraying | very good |
| Inv. Example1476 | 25.6 | FC | 12.5 | 1.23 | 0.05 | 0 | 50.00 | 250:1 | 25.50 | 77 | alkyl silicate | 27 | Brushing | very good |
| Inv. Example1477 | 29.8 | FC | 18.5 | 1.36 | 0.44 | 0.07 | 2.45 | 70:1 | 29.38 | 34 | alkali silicate | 15 | Spraying | very good |
| Inv. Example1478 | 13.9 | FC | 11.5 | 1.11 | 0.08 | 0.07 | 5.33 | 1:15 | 1.18 | 43 | alkyl silicate | 14 | Spraying | very good |
| Inv. Example1479 | 5.6 | FC | 9.6 | 1.07 | 0.1 | 0.2 | 2.41 | 1:5 | 0.93 | 53 | urethane-based resin | 55 | Spraying | very good |
| Inv. Example1480 | 4.7 | FC | 8.5 | 1.42 | 0.05 | 0.2 | 23.43 | 2:3 | 1.88 | 35 | alkyl silicate | 8 | Spraying | very good |
| Inv. Example1481 | 6.8 | FC | 7.72 | 1.38 | 0.07 | 0 | 6.03 | 1:9 | 0.68 | 77 | urethane-based | 122 | Brushing | very good |
| Inv. Example1482 | 9 | FC | 8.32 | 1.22 | 0 | 0.07 | 24.5 | 1:10 | 0.92 | 43 | alkyl silicate | 54 | Spraying | very good |
| Inv. Example1483 | 2.1 | FC | 10.05 | 1.14 | 0 | 0.02 | 5.32 | 1:14 | 0.14 | 52 | alkali silicate | 19 | Spraying | very good |
| Inv. Example1484 | 4.8 | FC | 10.6 | 1.13 | 0 | 0 | 14.34 | 1:7 | 0.60 | 66 | alkyl silicate | 25 | Brushing | very good |
| Inv. Example1485 | 4.2 | FC | 5.7 | 1.02 | 0 | 0 | 5.04 | 1:12 | 0.32 | 72 | alkyl silicate | 58 | Spraying | very good |
| Inv. Example1486 | 4.3 | FC | 6.4 | 1.06 | 21.5 | 0.05 1 | 2.32 | 1:3 | 1.08 | 40 | alkyl silicate | 21 | Spraying | very good |
| Inv. Example1487 | 4 | FC | 3.2 | 1.05 | 0.05 | 2.29 | 20.34 | 1:7 | 0.50 | 36 | alkali silicate | 19 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table91**

| | Zn-Alloy Particle Properties | | | | | | Mean Size of Zn Metallic particle (µm) | Blend Ratio (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1 | Mean Size (µm) | Average Value of Aspect Ratio | Al (mass %) | Si (mass %) | | | | Ratio of Metal Particle in Cry Coat (mass %) | Base Resin | Coat Thickness (µm) | Coating Method | |
| Inv. Example1488 | 3.7 | FC | 4.5 | 1.24 | 0.05 | 0.03 | 12.33 | 1:10 | 0.34 | 32 | urethane-based resin | 56 | Spraying | very good |
| Inv. Example1489 | 6.4 | FC | 5.2 | 1.33 | 0 | 0.08 | 17.84 | 1:1 | 3.20 | 53 | alkyl silicate | 77 | Spraying | very good |
| Inv. Example1490 | 6.9 | FC | 1.9 | 1.27 | 0.05 | 0 | 6.66 | 1:3 | 1.73 | 67 | alkyl silicate | 54 | Spraying | very good |
| Inv. Example1491 | 16.9 | FC | 0.02 | 1.05 | 0.44 | 0.07 | 3.65 | 2:3 | 6.76 | 72 | alkyl silicate | 64 | Spraying | very good |
| Inv. Example1492 | 18.7 | FC | 10.5 | 1.12 | 0.08 | 0.07 | 22.62 | 1:2 | 6.23 | 77 | alkyl silicate | 34 | Brushing | very good |
| Inv. Example1493 | 24.4 | FC | 12.5 | 1.23 | 0.1 | 0.2 | 45.33 | 1:4 | 4.88 | 34 | alkali silicate | 28 | Spraying | very good |
| Inv. Example1494 | 10.6 | FC | 18.5 | 1.36 | 0 | 0 | 43.22 | 1:6 | 1.51 | 43 | urethane-based resin | 109 | Brushing | very good |
| Inv. Example1495 | 15.8 | FC | 11.5 | 1.11 | 0 | 0 | 12.33 | 1:115 | 0.14 | 53 | alkyl silicate | 15 | Spraying | very good |
| Inv. Example1496 | 19.5 | FC | 9.5 | 1.07 | 0 | 0.07 | 13.42 | 1:23 | 0.81 | 72 | alkyl silicate | 14 | Spraying | very good |
| Inv. Example1497 | 7.8 | FC | 8.5 | 1.42 | 0 | 0.02 | 22.32 | 1:12 | 0.60 | 77 | alkyl silicate | 18 | Spraying | very good |
| Inv. Example1498 | 4.9 | FC | 7.72 | 1.38 | 25.8 | 0.05 | 7.34 | 1:10 | 0.45 | 77 | urethane-based resin | 122 | Brushing | very good |
| Inv. Example1499 | 10.8 | FC | 8.32 | 1.22 | 22.1 | 0 | 44.54 | 1:3 | 2.70 | 43 | alkyl silicate | 54 | Spraying | very good |
| Inv. Example1500 | 3.8 | FC | 10.05 | 1.14 | 21.5 | 0.05 | 32.87 | 1:5 | 0.63 | 52 | alkali silicate | 19 | Spraying | very good |
| Inv. Example1501 | 22.6 | FC | 10.6 | 1.13 | 0.05 | 2.29 | 20.32 | 1:25 | 0.87 | 66 | alkyl silicate | 25 | Brushing | very good |
| Inv. Example1502 | 27.9 | FC | 5.7 | 1**.**02 | 0 | 0 | 2.03 | 4:5 | 12.40 | 72 | alkyl silicate | 58 | Sprayinq | very good |
| Inv. Example1503 | 24.8 | FC | 6.4 | 1.06 | 0 | 0 | 5.33 | 3:8 | 6.76 | 40 | alkyl silicate | 21 | Spraying | very good |
| Inv. Example1504 | 26.8 | FC | 3.2 | 1.05 | 0.07 | 0 | 2.33 | 9:34 | 5.61 | 36 | alkali silicate | 19 | Brushing | very good |
| Inv. Example1505 | 25.9 | FC | 4.5 | 1.24 | 0 | 0.07 | 27.44 | 7:8 | 12.09 | 32 | urethane-based resin | 56 | Spraying | very good |
| Inv. Example1506 | 9.8 | FC | 5.2 | 1.33 | 0 | 0.02 | 12.33 | 9:17 | 3.39 | 53 | alkyl silicate | 77 | Spraying | very good |
| Inv. Example1507 | 5.6 | FC | 1.9 | 1.27 | 22.1 | 0 | 36.43 | 1:1 | 2.80 | 67 | alkyl silicate | 54 | Spraying | very good |
| Inv. Example1508 | 12.3 | FC | 0.02 | 1.05 | 1.24 | 1.8 1 | 11.9 | 1:31 | 0.354375 | 52 | alkali silicate | 2 | Spraying | very good |
| Inv. Example1509 | 0.8 | FC | 27.89 | 1.12 | 1.24 | 0.9 | 10.5 | 1:4 | 0.16 | 55 | alkali silicate | 20 | Spraying | very good |
| Inv. Example1510 | 1 | FC | 0.32 | 1.23 | 0.8 | 0.7 | 9.8 | 1:1 | 0.5 | 69 | alkali silicate | 5 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO No fracture facet and/or crack | | | | | | | | | | | | | | |

**Table82**

| | Zn-Alloy Particle Properties | | | | | | Mean Size of Mean Size Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example1511 | 2.3 | FC | 11.44 | 1.36 | 0 | 1.8 | 7.9 | 1:7 | 0.2875 | 79 | alkyl silicate | 20 | Spraying | very good |
| Inv. Example1512 | 15.6 | FC | 1.05 | 1.11 | 1.1 | 2.41 | 11.6 | 1:11 | 1.3 | 42 | alkali silicate | 15 | Brushing | very good |
| Inv. Example1513 | 6.7 | FC | 36.47 | 1.07 | 1.8 | 0.08 | 16.9 | 1:2 | 2.233333333 | 32 | alkyl silicate | 57 | Brushing | very good |
| Inv. Example1514 | 7.5 | FC | 5.07 | 1.42 | 3.8 | 2.23 | 20.34 | 1:7 | 0.9375 | 66 | alkali silicate | 13 | Brushing | very good |
| Inv. Example1515 | 8.4 | FC | 7.72 | 1.38 | 2.9 | 0.06 | 8.9 | 1:4 | 1.68 | 67 | alkyl silicate | 22 | Brushing | very good |
| Inv. Example1516 | 9.3 | FC | 6.32 | 1.22 | 10.5 | 0.02 | 7.5 | 1:5 | 1.55 | 64 | alkali silicate | 20 | Spraying | very good |
| Inv. Examp^{l}e1517 | 10.4 | FC | 10.05 | 1.14 | 2.9 | 0.02 | 10.9 | 1:10 | 0.345454545 | 74 | alkyl silicate | 27 | Spraying | very good |
| Inv. Example1519 | 11.2 | FC | 6.08 | 1.13 | 16.8 | 1.37 | 20.34 | 1:9 | 1.12 | 82 | alkali silicate | 15 | Spraying | very good |
| Inv. Example1519 | 11.7 | FC | 17.89 | 1.02 | 0 | 2.43 | 6.7 | 240:1 | 11.65145228 | 37 | alkyl silicate | 35 | Spraying | very good |
| Inv. Example1520 | 21.5 | FC | 19.54 | 1.06 | 3.6 | 0.02 | 7.9 | 1:120 | 0.17768595 | 42 | alkali silicate | 34 | Brushing | very good |
| Inv. Example1521 | 13.4 | FC | 21.08 | 1.05 | 2.1 | 1.5 | 5.6 | 99:1 | 13.256 | 66 | alkyl silicate | 45 | Brushing | very good |
| Inv. Example1522 | 14.6 | FC | 23.04 | 1.24 | 0.06 | 1.3 | 11.5 | 1:99 | 0.146 | 48 | alkali silicate | 52 | Brushing | very good |
| Inv. Example1523 | 25.8 | FC | 9.21 | 1.33 | 0.02 | 1.8 | 20.34 | 1:242 | 0.10617284 | 33 | alkyl silicate | 23 | Brushing | very good |
| Inv. Example1524 | 16.7 | FC | 0.12 | 1.27 | 1.6 | 0.9 | 10.5 | 1:6 | 2.385714286 | 75 | alkali silicate | 5 | Spraying | very good |
| Inv. Example1525 | 17.3 | FC | 29.24 | 1.37 | 3.5 | 0 | 7.6 | 1:1 | 8.65 | 77 | alkyl silicate | 52 | Brushing | very qood |
| Inv. Example1526 | 18.5 | FC | 128.74 | 1.10 | 9.8 | 1.8 | 8.2 | 1:7 | 2.3125 | 66 | alkali silicate | 150 | Brushing | very good |
| Inv. Example1527 | 19.3 | FC | 33.57 | 1.04 | 11.5 | 0.7 | 9.1 | 1:5 | 3.216666667 | 67 | alkyl silicate | 60 | Brushing | very good |
| Inv. Example1528 | 3.5 | FC | 3.04 | 1.02 | 0.4 | 1.5 | 10.6 | 1:2 | 1.166666667 | 45 | alkali silicate | 15 | Spraying | very good |
| Inv. Example1529 | 22.5 | FC | 7.54 | 1.01 | 0.6 | 1.3 | 8.4 | 1:221 | 0.101351351 | 48 | alkyl silicate | 24 | Spraying | very good |
| Inv. Example1530 | 23.7 | FC | 6.81 | 1.08 | 10.6 | 1.8 | 5.3 | 1:31 | 0.740625 | 68 | alkall silicate | 34 | Spraying | very good |
| Inv. Example1531 | 24.2 | FC | 5.25 | 1.14 | 9.5 | 0 | 20.34 | 1:4 | 4.84 | 35 | alkyl silicate | 20 | Brushing | very good |
| Inv. Example1532 | 0.2 | FC | 194.23 | 1.23 | 11.04 | 0.7 | 7.8 | 1:1 | 0.1 | 37 | alkali silicate | 200 | Brushing | very good |

| | | | | | | | | | | | | | | |
|---|---|---|---|---|---|---|---|---|---|---|---|---|---|---|
| (*1) F : fracture facets existing, FC : Fracture facets and/or cracks exiting, NO: No fracture facet and/or crack | | | | | | | | | | | | | | |

**Table93**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example1533 | 27.1 | FC | 26.74 | 1.33 | 0.01 | 1.8 | 10.5 | 1:7 | 5.3875 | 38 | alkyl silicate | 56 | Brushing | very good |
| Inv. Example1534 | 29.3 | FC | 13.57 | 1.37 | 0.07 | 0.7 | 20.34 | 400:1 | 29.22693257 | 41 | alkali silicate | 34 | Spraying | very good |
| Inv. Example1535 | 0.5 | FC | 0.65 | 1.44 | 1.6 | 1.5 | 7.9 | 1:2 | 0.166666667 | 54 | alkyl silicate | 2 | Spraying | very good |
| Inv. Example1536 | 2.7 | FC | 4.12 | 1.21 | 0 | 1.3 | 11.6 | 1:300 | 0.0089701 | 57 | alkali silicate | 15 | Spraying | very good |
| Inv. Example1537 | 28.4 | FC | 0.72 | 1.22 | 2.9 | 1.8 | 16.9 | 1:4 | 5.60 | 59 | alkali silicate | 10 | Spraying | very good |
| Inv. Example1538 | 8.7 | FC | 117.54 | 1.23 | 10.5 | 0.9 | 10.5 | 1:5 | 1.45 | 64 | alkyl silicate | 125 | Brushing | very good |
| Inv. Example1539 | 9.2 | FC | 7.81 | 1.47 | 2.9 | 0.7 | 8.9 | 1:10 | 0.936363636 | 65 | alkali silicate | 24 | Brushing | very good |
| Inv. Example1540 | 17.8 | FC | 60.25 | 1.01 | 16.8 | 1.8 | 7.5 | 1:9 | 1.78 | 67 | alkyl silicate | 110 | Brushing | very good |
| Inv. Example1541 | 20.2 | FC | 8.47 | 1.04 | 2.7 | 0.7 | 10.9 | 1:1 | 10.1 | 34 | alkali silicate | 24 | Brushing | very good |
| Inv. Example1542 | 0.4 | FC | 0.97 | 1.05 | 0.04 | 0.7 | 20.34 | 130:1 | 0.396946565 | 54 | alkyl silicate | 2 | Spraying | very good |
| Inv. Example1543 | 13.7 | FC | 25.78 | 1.12 | 0 | 0.04 | 6.7 | 130:1 | 13.59541985 | 62 | alkali silicate | 37 | Spraying | very good |
| Inv. Example1544 | 14.7 | FC | 93.45 | 1.11 | 1.24 | 0.05 | 7.9 | 1:31 | 0.459375 | 66 | alkyl silicate | 113 | Brushing | very good |
| Inv. Example1545 | 2.4 | FC | 0.97 | 1.08 | 0.05 | 1.24 | 5.6 | 1:1 | 1.2 | 67 | alkali silicate | 2 | Spraying | very good |
| Inv. Example1546 | 4.5 | FC | 54.89 | 1.47 | 1.24 | 0.06 | 20.34 | 2:1 | 3 | 68 | alkyl silicate | 75 | Brushing | very good |
| Inv. Example1547 | 0.1 | FC | 10.81 | 1.50 | 1.24 | 0.07 | 9.9 | 300:1 | 0.099667774 | 33 | alkali silicate | 30 | Brushing | very good |
| Inv. Example1546 | 30.0 | FC | 18.24 | 1.13 | 0 | 0.75 | 10.5 | 1:270 | 0.110701107 | 35 | alkyl silicate | 34 | Brushing | very good |
| Inv. Example1549 | 24.5 | FC | 114.78 | 1.04 | 0.9 | 1.5 | 7.6 | 1:115 | 0.211206897 | 43 | epoxy-based resin | 124 | Brushing | very good |
| Inv. Example1550 | 27.6 | FC | 3.37 | 1.02 | 0.03 | 1.3 | 45.33 | 1:29 | 0.92 | 44 | acryl-based resin | 15 | Spraying | very good |
| Inv. Example1551 | 4.1 | FC | 11.94 | 1.08 | 10.5 | 1.8 | 43.22 | 1:3 | 1.025 | 43 | urethane-based resin | 23 | Spraying | very good |
| Inv. Example1552 | 3.2 | FC | 142.58 | 1.15 | 2.9 | 0.9 | 10.6 | 1:9 | 0.32 | 44 | polyester resin | 157 | Brushing | very good |
| Inv. Example1553 | 2.7 | FC | 12.5 | 1.34 | 16.8 | 0.7 | 20.34 | 1:5 | 0.45 | 54 | epoxy-based resin | 26 | Spraying | very good |
| Inv. Example1554 | 0.12 | FC | 31.24 | 1.25 | 2.7 | 1.8 | 5.3 | 100:1 | 0.118811881 | 79 | acryl-based resin | 38 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table84**

| | Zn-Alloy Particle Properties | | | | | | Mean Size of Zn Metallic particle (µm) | Blend Ratio (Zn Alloy particle: Zn Metal Particle) | Mg Contents to Total Metal Particles (mass %) | coat Properties | | | | |
|---|---|---|---|---|---|---|---|---|---|---|---|---|---|---|
| | Mg (mass %) | Fracture Facet Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | Result of Corrosion Test |
| Inv. Example1555 | 0.22 | FC | 152.46 | 1.19 | 0.02 | 0.7 | 10.9 | 1:1 | 0.11 | 73 | urethane-based resin | 160 | Brushing | very good |
| Inv. Example1556 | 0.37 | FC | 13.4 | 1.15 | 0 | 1.5 | 7.9 | 99:1 | 0.3663 | 69 | polyester resin | 27 | Brushing | very good |
| Inv. Example1557 | 1.4 | FC | 160.57 | 1.24 | 7.42 | 1.3 | 10.5 | 1:6 | 0.2 | 63 | epoxy-based resin | 180 | Brushing | very good |
| Inv. Example1558 | 4.2 | FC | 14.1 | 1.11 | 0.02 | 1.8 | 20.34 | 1:12 | 0.323076923 | 35 | acryl-based resin | 26 | Spraying | very good |
| Inv. Example1559 | 4.8 | FC | 167.55 | 1.27 | 0.04 | 0.9 | 7.9 | 1:5 | 0.8 | 35 | urethane-based resin | 180 | Brushing | very good |
| Inv. Example1560 | 8.1 | FC | 1.45 | 1.31 | 17.5 | 0 | 11.6 | 1:33 | 0.238235294 | 66 | polyester resin | 15 | Spraying | very good |
| Inv. Example1561 | 7.6 | FC | 0.15 | 1.26 | 0.01 | 1.6 | 16.9 | 1:9 | 0.76 | 67 | epoxy-based resin | 2 | Spraying | very good |
| Inv. Example1562 | 9.9 | FC | 13.1 | 1.14 | 0.02 | 0.7 | 10.5 | 1:18 | 0.521052632 | 68 | acryl-based resin | 28 | Spraying | very good |
| Inv. Example1563 | 14.8 | FC | 15.5 | 1.34 | 3.8 | 0 | 8.9 | 1:38 | 0.379487179 | 33 | urethane-based resin | 30 | Spraying | very good |
| Inv. Example1564 | 16.7 | FC | 0.67 | 1.16 | 2.9 | 0 | 7.5 | 1:117 | 0.141525424 | 35 | polyester resin | 2 | Spraying | very good |
| Inv. Example1565 | 17.9 | FC | 137.89 | 1.47 | 10.5 | 1.8 | 20.34 | 1:42 | 0.41627907 | 43 | epoxy-based resin | 157 | Brushing | very good |
| Inv. Example1566 | 19.5 | FC | 16.3 | 1.46 | 2.9 | 0.9 | 9.9 | 1:1 | 9.75 | 44 | acryl-based resin | 28 | Brushing | very good |
| Inv. Example1567 | 22.4 | FC | 110.38 | 1.49 | 16.8 | 0.7 | 6.7 | 1:121 | 0.183606557 | 42 | urethane-based resin | 130 | Brushing | very good |
| Inv. Example1568 | 0.17 | FC | 12.4 | 1.34 | 2.7 | 1.6 | 45.33 | 120:1 | 0.168595041 | 33 | polyester resin | 29 | Brushing | very good |
| Inv. Example1569 | 3.3 | FC | 17.2 | 1.29 | 0.02 | 0.7 | 43.22 | 1:145 | 0.056849315 | 30 | epoxy-based resin | 30 | Brushing | very good |
| Tnv. Example1570 | 6.5 | FC | 105.23 | 1.18 | 0.02 | 0.7 | 11.5 | 1:31 | 0.203125 | 35 | acryl-based resin | 120 | Brushing | very good |
| Inv. Example1571 | 9.7 | FC | 177.89 | 1.23 | 0.04 | 0.02 | 9.9 | 1:95 | 0.101041667 | 37 | urethane-based resin | 187 | Brushing | very good |
| Inv. Example1572 | 11.4 | FC | 12.2 | 1.27 | 0.05 | 0.02 | 10.5 | 1:33 | 0.335294119 | 77 | polyester resin | 28 | Spraying | very good |
| Inv. Example1573 | 22.5 | FC | 1.04 | 1.17 | 1.24 | 1.37 | 7.6 | 120:1 | 22.31404959 | 41 | epoxy-based resin | 5 | Spraying | very good |
| Inv. Example1574 | 25.7 | FC | 16.02 | 1.16 | 0.05 | 0.02 | 8.2 | 1:29 | 0.886206897 | 35 | acryl-based resin | 35 | Spraying | very good |
| Inv. Example1575 | 17.8 | FC | 1.75 | 1.49 | 1.24 | 1.37 | 9.1 | 1:33 | 0.523529412 | 58 | urethare-based resin | 5 | Spraying | very good |
| Inv. Example1576 | 0.14 | FC | 198.78 | 1.34 | 1.24 | 1.37 | 10.6 | 200:1 | 0.139303483 | 37 | polyester resin | 200 | Brushing | very good |

| | | | | | | | | | | | | | | |
|---|---|---|---|---|---|---|---|---|---|---|---|---|---|---|
| (*1) F : Fracture facets existing, FC : Fracture facets and/or cracks existing. NO : No fracture facet and/or crack | | | | | | | | | | | | | | |

**Table85**

| | 2n-Alloy Particle Properties | | | | | | Mean Size of Zn Metallic particle (µm) | Blend Ratio (Zn alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | | | | Ratio of Metal Particle in Dry Coat (mass %) | Base Resin | coat Thickness (µm) | Coating Method | |
| Inv. Example1577 | 6.7 | FC | 13.1 | 1.16 | 0.8 | 1.5 | 8.4 | 1:4 | 1.34 | 68 | alkali silicate | 25 | Spraying | very good |
| Inv. Example1578 | 7.5 | FC | 15.5 | 1.47 | 0.9 | 1.3 | 5.3 | 1:18 | 0.394736842 | 55 | alkali silicate | 15 | Spraying | very good |
| Inv. Example1579 | 6.4 | FC | 0.67 | 1.48 | 1.1 | 1.8 | 10.9 | 1:7 | 1.05 | 77 | alkyl silicate | 20 | Spraying | very good |
| Inv. Example1580 | 9.3 | FC | 12.2 | 1.49 | 1.8 | 0.9 | 7.8 | 1:11 | 0.775 | 43 | alkali silicate | 18 | Spraying | very good |
| Inv. Example1581 | 1.4 | FC | 1.84 | 1.34 | 3.8 | 0.7 | 8.9 | 1:2 | 0.466666667 | 45 | alkyl silicate | 22 | Spraying | very good |
| Inv. Example1582 | 4.2 | FC | 16.02 | 1.29 | 2.9 | 1.8 | 7.5 | 1:7 | 0.525 | 66 | alkali silicate | 19 | Spraying | very good |
| Inv. Example1583 | 4.8 | FC | 1.75 | 1.18 | 10.5 | 0.7 | 10.9 | 1:2 | 2.4 | 33 | alkyl silicate | 29 | Spraying | very good |
| Inv. Example1584 | 8.1 | FC | 12.4 | 1.23 | 2.9 | 1.5 | 9.8 | 1:5 | 1.35 | 66 | alkali silicate | 23 | Spraying | very good |
| Inv. Example1585 | 7.6 | FC | 17.2 | 1.27 | 16.8 | 1.3 | 45.33 | 1:10 | 0.690909091 | 55 | alkyl silicate | 21 | Spraying | very good |
| Inv. Example1586 | 9.9 | FC | 13.1 | 1.17 | 2.7 | 1.8 | 43.22 | 1:9 | 0.99 | 49 | alkali silicate | 19 | Spraying | very good |
| Inv. Example1587 | 0.4 | FC | 29.9 | 1.16 | 3.6 | 0.9 | 5.6 | 240:1 | 3.398340249 | 77 | alkyl silicate | 15 | Spraying | very good |
| Inv. Example1588 | 10.5 | FC | 0.21 | 1.27 | 0 | 0.7 | 11.5 | 120:1 | 10.41322314 | 41 | alkali silicate | 18 | Spraying | very good |
| Inv. Example1589 | 0.4 | FC | 0.22 | 1.17 | 0.06 | 1.8 | 9.9 | 99:1 | 0.396 | 64 | alkyl silicate | 22 | Spraying | very good |
| Inv. Example1590 | 10.5 | FC | 29.5 | 1.27 | 0.02 | 0.7 | 10.5 | 1:99 | 0.105 | 59 | alkyl silicate | 21 | Spraying | very good |
| Inv. Example1591 | 0.51 | FC | 29.9 | 1.18 | 1.6 | 1.5 | 7.6 | 1:3 | 0.1275 | 33 | alkyl silicate | 29 | Spraying | very good |
| Inv. Example1592 | 9.8 | FC | 0.21 | 1.23 | 3.5 | 0 | 8.2 | 1:6 | 1.4 | 66 | alkali silicate | 23 | Spraying | very good |
| Inv. Example1593 | 0.52 | FC | 0.22 | 1.27 | 9.8 | 1.8 | 9.1 | 1:1 | 0.26 | 55 | alkyl silicate | 21 | Spraying | very good |
| Inv. Example1594 | 9.9 | FC | 29.5 | 1.17 | 11.5 | 0.9 | 10.6 | 1:7 | 1.2375 | 49 | alkali silicate | 19 | Spraying | very good |
| Inv. Example1595 | 14.8 | FC | 16.02 | 1.48 | 0.4 | 0.7 | 8.4 | 1:5 | 2.466666667 | 77 | alkyl silicate | 21 | Spraying | very good |
| Inv. Example1596 | 19.9 | FC | 1.75 | 1.4.9 | 0.6 | 1.8 | 5.3 | 1:150 | 0.131768079 | 43 | alkali silicate | 19 | Spraying | very good |
| Inv. Example1597 | 17.9 | FC | 12.4 | 1.34 | 10.6 | 0.7 | 10.9 | 1:55 | 0.319642857 | 45 | alkyl silicate | 15 | Spraying | very good |
| Inv. Example1598 | 19.5 | FC | 17.2 | 1.29 | 9.5 | 0.7 | 7.8 | 1:121 | 0.159836066 | 66 | alkali silicate | 18 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table86**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Comp. Example35 | 2.3 | FC | 205.6 | 1.23 | 12.5 | 0.05 | 10.5 | 1:5 | 0.383 | 77 | alkyl silicate | 25 | Spraying | poor |
| Comp. Example96 | 12.5 | FC | 0.005 | 1.36 | 2.1 | 0 | 12.6 | 1:3 | 3.125 | 77 | urethane-based resin | 25 | Spraying | poor |
| Comp. Example97 | 18.9 | FC | 205.6 | 1.11 | 1.5 | 0.05 | 7.8 | 1:19 | 0.945 | 43 | alkyl silicate | 105 | Brushing | poor |
| Comp. Example98 | 29.5 | FC | 0.005 | 1.07 | 0.05 | 2.29 | 16.8 | 1:100 | 0.292 | 52 | alkali silicate | 165 | Spraying | poor |
| Comp. Example99 | 14.5 | FC | 205.6 | 1.42 | 0 | 0 | 10.5 | 1;260 | 0.056 | 66 | alkyl silicate | 25 | Spraying | poor |
| Comp. Example100 | 12.5 | FC | 0.005 | 1.38 | 0 | 0 | 12.6 | 1:3 | 3.125 | 72 | alkyl silicate | 25 | Spraying | poor |
| Comp. Example101 | 18.9 | NO | 205.6 | 1.22 | 0.07 | 0 | 7.9 | 1:19 | 0.945 | 40 | alkyl silicate | 105 | Brushing | poor |
| Comp. Example102 | 29.5 | NO | 0.005 | 1.14 | 0 | 0.07 | 16.8 | 1:100 | 0.292 | 36 | alkali silicate | 165 | Spraying | poor |
| Comp. Example103 | 2.3 | FC | 10.6 | 1.13 | 0 | 0.02 | 10.5 | 1:256 | 0.009 | 32 | alkyl silicate | 25 | Spraying | poor |
| Comp. Example104 | 12.5 | FC | 5.7 | 1.02 | 22.1 | 0 | 12.6 | 1:200 | 0.062 | 53 | alkyl silicate | 25 | Spraying | poor |
| Comp. Example105 | 0.5 | NO | 6.4 | 1.06 | 25.8 | 0.05 | 7.8 | 1:167 | 0.003 | 67 | alkyl silicate | 105 | Brushing | poor |
| Comp. Example106 | 29.5 | NO | 3.2 | 1.23 | 22.1 | 0 | 16.6 | 1:300 | 0.096 | 53 | urethane-based resin | 165 | Spraying | poor |
| Comp. Example107 | 14.5 | NO | 4.5 | 1.36 | 21.5 | 0.05 | 10.5 | 1:260 | 0.056 | 67 | alkyl silicate | 25 | Spraying | poor |
| Comp. Example108 | 9.8 | NO | 5.2 | 1.11 | 0.05 | 2.29 | 12.6 | 1:100 | 0.097 | 72 | alkyl silicate | 25 | Spraying | poor |
| Comp. Example109 | 4.6 | NO | 1.9 | 1.07 | 0 | 0 | 7.8 | 1:47 | 0.096 | 77 | alkyl silicate | 105 | Brushing | poor |
| Comp. Example110 | 3.2 | FC | 18.5 | 1.42 | 0 | 0 | 16.8 | 1:32 | 0.097 | 34 | urethane-base resin | 55 | Spraying | poor |
| Comp. Example111 | 29.9 | FC | 12.5 | 1.38 | 0.07 | 0 | 12.6 | 1:345 | 0.086 | 43 | alkyl silicate | 28 | Spraying | poor |
| Comp. Example112 | 7.6 | FC | 9.8 | 1.22 | 0 | 0.07 | 7.8 | 1:390 | 0.019 | 52 | alkyl silicate | 15 | Spraying | poor |
| Comp. Example113 | 29.9 | FC | 7.6 | 1.14 | 0 | 0.007 | 16.8 | 1:301 | 0.099 | 66 | alkyl silicate | 14 | Spraying | poor |
| Cpmp. Example114 | 0.6 | FC | 6.9 | 1.13 | 36.5 | 3.25 | 10.5 | 1:333 | 0.002 | 72 | urethane-based resin | 118 | Brushing | poor |
| Comp. Example115 | 4.5 | FC | 10.5 | 1.02 | 0.005 | 0 | 12.6 | 1:325 | 0.014 | 40 | alkyl silicate | 22 | Spraying | poor |
| Comp. Example116 | 3.7 | FC | 12.6 | 1.06 | 22.1 | 0 | 7.8 | 1:456 | 0.008 | 36 | alkyl silicate | 54 | Spraying | poor |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table87**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example2467 | 7.5 | FC | 5.07 | 1.42 | 0 | 0 | 23.43 | 0.65 | 10.5 | 74 | alkali silicate | 24 | Brushing | very good |
| Inv. Example2468 | 8.06 | FC | 7.72 | 1.38 | 0 | 0 | 5.96 | 0.60 | 12.5 | 82 | alkyl silicate | 25 | Spraying | very good |
| Inv. Example2469 | 9.3 | FC | 8.32 | 1.22 | 0 | 0 | 10.64 | 3.12 | 1.5 | 37 | alkali silicate | 14 | Spraying | very good |
| Inv. Example2470 | 3.5 | FC | 3.04 | 1.02 | 0 | 0 | 16.5 | 1.84 | 0.9 | 48 | alkali silicate | 15 | Spraying | very good |
| Inv. Example2471 | 2.7 | FC | 4.12 | 1.21 | 0 | 0 | 7.95 | 0.23 | 10.5 | 32 | alkali silicate | 15 | Spraying | very good |
| Inv. Example2472 | 9.2 | FC | 7.81 | 1.47 | 0 | 0 | 7.95 | 0.03 | 299.5 | 45 | alkyl silicate | 15 | Brushing | very good |
| Inv. Example2473 | 8.1 | FC | 1.45 | 1.31 | 0 | 0 | 9.64 | 5.40 | 0.5 | 37 | epoxy-based resin | 5 | Spraying | good |
| Inv. Example2474 | 7.5 | FC | 9.6 | 1.07 | 0 | 0 | 0.96 | 5.95 | 0.26 | 72 | urethane-based resin | 150 | Spraying | very good |
| Inv. Example2475 | 4.5 | FC | 8.5 | 1.42 | 0 | 0 | 5.26 | 3.46 | 0.3 | 40 | alkali silicate | 18 | Spraying | very good |
| Inv. Example2476 | 3.6 | FC | 3.2 | 1.05 | 0 | 0 | 13.5 | 0.90 | 3 | 40 | alkali silicate | 18 | Spraying | very good |
| Inv. Example2477 | 4.2 | FC | 5.7 | 1.02 | 1.5 | 0 | 13.5 | 0.20 | 20.5 | 72 | alkyl silicate | 58 | Spraying | very good |
| Inv. Example2478 | 4.3 | FC | 6.4 | 1.06 | 5.5 | 1.6 | 9.64 | 0.83 | 4.2 | 40 | alkyl silicate | 21 | Spraying | very good |
| Inv. Example2479 | 4 | FC | 3.2 | 1.05 | 0 | 0 | 16.5 | 1.60 | 1.5 | 36 | alkali silicate | 19 | Brushing | very good |
| Inv. Example2480 | 6.4 | FC | 5.2 | 1.33 | 0 | 0 | 20.59 | 1.07 | 5 | 53 | alkyl silicate | 77 | Spraying | very good |
| Inv. Example2481 | 9.8 | FC | 5.2 | 1.33 | 0 | 0 | 0.96 | 0.59 | 15.6 | 53 | alkyl silicate | 77 | Spraying | very good |
| Inv. Example2482 | 7.5 | FC | 5.07 | 1.42 | 0 | 0 | 6.54 | 5.00 | 0.5 | 66 | alkali silicate | 13 | Brushing | very good |
| Inv. Example2483 | 8.4 | FC | 7.72 | 1.38 | 0.5 | 0 | 5.26 | 2.90 | 1.9 | 67 | alkyl silicate | 22 | Brushing | very good |
| Inv. Example2484 | 2.7 | FC | 4.12 | 1.21 | 0 | 0 | 10.64 | 1.04 | 1.6 | 57 | alkali silicate | 15 | Spraying | very good |
| Inv. Example2485 | 2.64 | FC | 5.5 | 1.22 | 0 | 0 | 9.64 | 0.76 | 2.5 | 43 | alkyl silicate | 16 | Spraying | very good |
| Inv. Example2486 | 1.59 | FC | 6.7 | 1.14 | 0 | 0 | 6.9 | 1.06 | 0.5 | 76 | alkyl silicate | 5 | Spraying | very good |
| Inv. Example2487 | 2.58 | FC | 8.9 | 1.13 | 0 | 0 | 10.5 | 0.43 | 5 | 49 | alkyl silicate | 22 | Spraying | very good |
| Inv. Example2488 | 7.55 | FC | 2.15 | 1.14 | 0 | 0 | 13.5 | 3.43 | 1.2 | 75 | alkyl silicate | 18 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table88**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Site (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example2489 | 8.01 | FC | 2.54 | 1.13 | 0 | 0 | 20.59 | 0.84 | 8.5 | 73 | alkyl sllicate | 16 | Spraying | very good |
| Inv. Example2490 | 1.06 | FC | 3.4 | 1.38 | 0 | 0 | 7.82 | 0.34 | 2.1 | 49 | alkyl silicate | 8 | Spraying | very good |
| Inv. Example2491 | 2.64 | FC | 5.5 | 1.22 | 0 | 0 | 5.26 | 2.11 | 0.25 | 43 | alkyl silicate | 16 | Spraying | very good |
| Inv. Example2492 | 1.59 | FC | 8.7 | 1.14 | 0 | 0 | 7.06 | 0.80 | 1 | 76 | alkyl silicate | 5 | Spraying | very good |
| Inv. Example2493 | 20.5 | FC | 2.15 | 1.14 | 1.5 | 0 | 0.64 | 5.86 | 2.5 | 75 | alkyl silicate | 18 | Spraying | very good |
| Inv. Example2494 | 18.5 | FC | 2.54 | 1.13 | 5.5 | 1.6 | 46.8 | 3.09 | 5 | 73 | alkyl silicate | 16 | Spraying | very good |
| Inv. Example2495 | 9.51 | FC | 2.77 | 1.38 | 4.5 | 0 | 16.5 | 1.46 | 5.5 | 55 | alkyl silicate | 5 | Spraying | very good |
| Inv. Example2496 | 10.01 | FC | 3.68 | 1.22 | 0 | 1.6 | 13.5 | 1.33 | 6.5 | 48 | alkyl silicate | 22 | Spraying | very good |
| Inv. Example2497 | 3.54 | FC | 5.5 | 1.22 | 0 | 0 | 0.96 | 1.42 | 1.5 | 78 | alkyl silicate | 18 | Spraying | very good |
| Inv. Example2498 | 4.05 | FC | 2.06 | 1.13 | 0 | 0 | 0.96 | 0.68 | 5 | 52 | alkyl silicate | 8 | Spraying | very good |
| Inv. Example2499 | 8.57 | FC | 4.99 | 1.02 | 0 | 0 | 8.45 | 1.30 | 5.6 | 61 | alkyl silicate | 16 | Spraying | very good |
| Inv. Example2500 | 0.02 | FC | 6.4 | 1.06 | 1.2 | 0.6 | 2.9 | 0.02 | 0.05 | 77 | polyester resin | 47 | Spraying | very good |
| Inv. Example2501 | 25.5 | FC | 3.09 | 1.07 | 0 | 0 | 5.4 | 2.22 | 10.5 | 49 | alkyl silicate | 22 | Spraying | very good |
| Inv. Example2502 | 2.36 | FC | 3.99 | 1.22 | 0 | 0 | 10.6 | 1.57 | 0.5 | 80 | alkyl silicate | 21 | Spraying | very good |
| Inv. Example2503 | 0.05 | FC | 7.72 | 1.38 | 4.5 | 0 | 2.32 | 0.03 | 0.75 | 36 | alkyl silicate | 19 | Brushing | very good |
| Inv. Example2504 | 0.04 | FC | 8.32 | 1.22 | 0.01 | 0 | 7.8 | 0.03 | 0.2 | 32 | alkyl silicate | 24 | Spraying | very good |
| Inv. Example2505 | 5.22 | FC | 3.55 | 1.12 | 0 | 0 | 7.95 | 0.45 | 10.5 | 55 | alkyl silicate | 19 | Spraying | very good |
| Inv. Example2506 | 4.01 | FC | 2.64 | 1.23 . | 0 | 0 | 20.59 | 2.86 | 0.4 | 40 | alkyl silicate | 8 | Spraying | very good |
| Inv. Example2507 | 0.05 | FC | 5.2 | 1.33 | 0 | 0.6 | 22.5 | 0.03 | 0.9 | 53 | urethane-based resin | 20 | Brushing | very good |
| Inv. Example2508 | 10.5 | FC | 1.9 | 1.27 | 0 | 1.2 | 4.6 | 2.33 | 3.5 | 60 | polyester resin | 200 | Brushing | very good |
| Inv. Example2509 | 0.05 | FC | 2.5 | 1.05 | 5.5 | 1.6 | 4.9 | 0.05 | 0.01 | 38 | alkali silicate | 19 | Spraying | very good |
| Inv. Example2510 | 10.5 | FC | 0.09 | 1.12 | 0 | 0.01 | 10.5 | 2.33 | 3.5 | 49 | alkyl silicate | 11 | Spraying | very goog |
| Inv. Example2511 | 2.64 | FC | 5.5 | 1.22 | 0 | 0.01 | 8.45 | 0.88 | 2 | 43 | alkyl silicate | 16 | Spraying | very good |

| | | | | | | | | | | | | | | |
|---|---|---|---|---|---|---|---|---|---|---|---|---|---|---|
| (*1) F : Fracture facets exiting, FC : Fracture facets and/or cracks existing, NO : No fracture facet and/or crack | | | | | | | | | | | | | | |

**Table89**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | A1 (mass %) | Si (mass %) | | | | Ratio of Metal Particle in Dry Coat (mass %) | Base Resin | Coat Tnickness (µm) | Coating Method | |
| Inv. Example2512 | 0.08 | FC | 5.6 | 1.36 | 0.5 | 0 | 30.5 | 0.08 | 0.04 | 66 | alkyl silicate | 16 | Brushing | very good |
| Inv. Example2513 | 0.09 | FC | 11.5 | 1.11 | 5.5 | 1.6 | 49.5 | 0.05 | 1 | 67 | alkali silicate | 33 | Brushing | very good |
| Inv. Example2514 | 0.05 | FC | 19.5 | 1.07 | 0.5 | 0 | 5.9 | 0.03 | 0.5 | 54 | alkyl silicate | 8 | Brushing | good |
| Inv. Example2515 | 1.59 | FC | 6.7 | 1.14 | 0 | 0.1 | 4.52 | 0.27 | 5 | 76 | alkyl silicate | 5 | Spraying | very good |
| Inv. Example2516 | 2.59 | FC | 8.9 | 1.13 | 0.01 | 0 | 5.96 | 0.23 | 10 | 49 | alkyl silicate | 22 | spraying | very good |
| Inv. Example2517 | 9.8 | FC | 8.32 | 1.22 | 3.2 | 0.9 | 5.5 | 2.10 | 3.5 | 32 | alkyl silicate | 23 | spraying | very good |
| Inv. Example2518 | 0.15 | FC | 10.05 | 1.14 | 0 | 0.5 | 3.6 | 0.09 | 0.9 | 53 | epoxy-based resin | 30 | Spraying | very good |
| Inv. Example2519 | 7.55 | FC | 2.15 | 1.14 | 0.2 | 0.1 | 16.5 | 1.68 | 3.5 | 75 | alkyl silicate | 18 | Spraying | very good |
| Inv. Example2520 | 0.01 | FC | 0.06 | 1.23 | 1.5 | 0 | 12.5 | 0.01 | 0.0005 | 75 | alkali silicate | 5 | Spraying | good |
| Inv. Example2521 | 12.5 | FC | 2.54 | 1.13 | 0.5 | 0 | 16.5 | 0.06 | 205.7 | 73 | alkyl silicate | 16 | Spraying | very good |
| Inv. Example2522 | 1.06 | FC | 3.4 | 1.38 | 1.5 | 0.3 | 10.9 | 0.71 | 0.5 | 49 | alkyl silicate | 8 | Spraying | very good |
| Inv. Example2523 | 0.04 | FC | 9.5 | 1.42 | 0 | 0 | 5.6 | 0.02 | 1.2 | 40 | alkali silicate | 2 | Spraying | very good |
| Inv. Example2524 | 0.06 | FC | 7.72 | 1.38 | 0 | 0.5 | 22.5 | 0.06 | 0.02 | 36 | alkyl silicate | 18 | Spraying | very good |
| Inv. Example2525 | 9.51 | FC | 2.77 | 1.38 | 0 | 0.01 | 20.59 | 0.81 | 10.8 | 55 | alkyl silicate | 5 | Spraying | very good |
| Inv. Example2526 | 15.5 | FC | 3.68 | 1.22 | 1.5 | 0 | 20.59 | 0.10 | 152.3 | 48 | alkyl silicate | 22 | Spraying | very good |
| Inv. Example2527 | 0.05 | FC | 10.6 1 | 1.13 | 0 | 0 | 9.56 | 0.03 | 0.5 | 67 | acry-based resin | 77 | Brushing | very good |
| Inv. Example2528 | 8.8 | FC | 5.7 | 1.02 | 0.2 | 0.1 | 5.9 | 2.51 | 2.5 | 72 | urethane-based resin | 54 | Brushing | very good |
| Inv. Example2529 | 3.54 | FC | 5.5 | 1.22 | 0 | 0.1 | 6.54 | 0.59 | 5 | 79 | alkyl silicate | 18 | Spaying | very good |
| Inv. Example2530 | 10.5 | FC | 3.2 | 1.05 | 5.5 | 1.6 | 21.4 | 1.05 | 9 | 34 | epoxy-based resin | 43 | Spraying | very good |
| Inv. Example2531 | 0.07 | FC | 4.5 | 1.24 | 4.5 | 0 | 9.8 | 0.06 | 0.1 | 43 | acryl-based resin | 52 | Brushing | very good |
| Inv. Example2532 | 15.5 | FC | 2.54 | 1.14 | 0 | 0.5 | 6.59 | 8.16 | 0.9 | 45 | alkyl silicate | 19 | Spraying | very good |
| Inv. Example2533 | 4.05 | FC | 2.06 | 1.13 | 0.2 | 0.1 | 6.54 | 0.36 | 10.2 | 52 | polyester resin | 8 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table 96**

| | Zn-Alloy Particle Properties | | | | | | Mean Size of Zn Metallic particle (µm) | Blend ratio (Zn Alloy particle : Zn Ketal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example2534 | 8.57 | FC | 4.99 | 1.02 | 1.2 | 0.6 | 16.5 | 0.07 | 120.5 | 61 | polyester resin | 16 | Spraying | very good |
| Inv. Example2535 | 5.8 | FC | 6.4 | 1.06 | 0 | 0 | 7.8 | 1.66 | 2.5 | 77 | alkyl silicate | 20 | Spraying | very good |
| Inv. Example2536 | 4.59 | FC | 3.09 | 1.07 | 1.5 | 0.9 | 16.5 | 0.62 | 6.4 | 49 | alkyl silicate | 22 | Spraying | very good |
| Inv. Example2537 | 9.88 | FC | 4.66 | 1.42 | 0 | 1.2 | 6.54 | 0.46 | 20.4 | 79 | alkyl silicate | 18 | Spraying | very good |
| Inv. Example2538 | 4.55 | FC | 4.09 | 1.38 | 0 | 0.6 | 8.45 | 0.48 | 8.5 | 76 | alkyl silicate | 18 | Spraying | very good |
| Inv. Example2539 | 2.36 | FC | 3.99 | 1.22 | 0 | 0.01 | 8.5 | 1.18 | 1 | 80 | alkyl silicate | 21 | Spraying | very good |
| Inv. Example2540 | 0.05 | FC | 7.72 | 1.38 | 1.5 | 0 | 13.6 | 0.05 | 0.07 | 36 | alkyl silicate | 19 | Brushing | very good |
| Inv. Example2541 | 0.04 | FC | 8.32 | 1.22 | 5.5 | 1.6 | 12.33 | 0.02 | 1.1 | 32 | alkyl silicate | 24 | Spraying | very good |
| Inv. Example2542 | 2.64 | FC | 4.55 | 1.11 | 4.5 | 0 | 16.5 | 0.48 | 4.5 | 43 | alkyl silicate | 5 | Spraying | very good |
| Inv. Example2543 | 0.06 | FC | 10.6 | 1.13 | 0 | 0.1 | 7.9 | 0.04 | 0.5 | 67 | alkyl silicate | 7 | Spraying | very good |
| Inv. Example2544 | 0.18 | FC | 5.7 | 1.02 | 0.01 | 0 | 10.5 | 0.11 | 0.7 | 72 | epoxy-based resin | 100 | Spraying | very good |
| Inv. Example2545 | 6.31 | FC | 3.52 | 1.27 | 3.2 | 0.9 | 16.5 | 4.21 | 0.5 | 51 | alkyl silicate | 21 | Spraying | very good |
| Inv. Example2546 | 5.22 | FC | 3.55 | 1.12 | 0 | 0.5 | 10.64 | 1.49 | 2.5 | 55 | alkyl silicate | 19 | Spraying | very good |
| Inv. Example2547 | 26.5 | FC | 2.64 | 1.23 | 0.2 | 0.1 | 10.5 | 0.90 | 30.5 | 40 | alkyl silicate | 8 | Spraying | very good |
| Inv. Example2548 | 3.52 | FC | 3.15 | 1.36 | 1.2 | 0.6 | 20.59 | 2.82 | 0.25 | 51 | alkyl silicate | 16 | Spraying | very good |
| Inv. Example2549 | 9.5 | FC | 5.2 | 1.33 | 0 | 0 | 8.5 | 2.79 | 2.4 | 53 | alkyl silicate | 20 | Brushing | very good |
| Inv. Example2550 | 0.04 | FC | 1.9 | 1.27 | 0 | 0 | 0.5 | 0.00 | 7.5 | 60 | polyester resin | 200 | Brushing | very good |
| Inv. Example2551 | 0.06 | FC | 10.5 | 1.12 | 0 | 1.2 | 10.5 | 0.01 | 3.5 | 77 | alkyl silicate | 25 | Spraying | very good |
| Inv. Example2552 | 0.05 | FC | 12.5 | 1.23 | 0.5 | 0 | 11.5 | 0.01 | 3.9 | 43 | alkali silicate | 14 | Spraying | very good |
| Inv. Example2553 | 5.6 | FC | 18.5 | 1.36 | 3.2 | 0.9 | 36.5 | 1.60 | 2.5 | 52 | urethane-based resin | 112 | Spraying | very good |
| Inv. Example2554 | 0.01 | FC | 11.5 | 1.11 | 0.5 | 0 | 1.5 | 0.01 | 0.7 | 66 | alkali silicate | 24 | Spraying | very good |
| Inv. Example2555 | 0.08 | FC | 9.6 | 1.07 | 1.5 | 0 | 8.7 | 0.03 | 1.9 | 72 | urethane-based resin | 150 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

**Table91**

| | Zn-Alloy Particle Properties | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|
| | Mg (mass %) | Fracture Facet &/or Cracks (*1) | Mean Size (µm) ) | Average Value of Aspect Ratio | Al (mass %) | Si (mass %) | | | | Ratio of Metal Particle in Dry Coat (mass %) | Base Resin | Coat Thickness (µm) | Coating Method | |
| Inv. Example2556 | 0.03 | FC | 8.5 | 1.42 | 4.5 | 0 | 7.8 | 0.01 | 4.5 | 40 | alkali silicate | 18 | Spraying | very good |
| Inv. Example2557 | 4.25 | FC | 2.36 | 1.33 | 0 | 0.1 | 5.96 | 3.27 | 0.3 | 44 | alkyl silicate | 18 | Spraying | very good |
| Inv. Example2558 | 0.04 | FC | 23.5 | 1.42 | 1.5 | 0.9 | 0.06 | 0.04 | 0.08 | 44 | alkali silicate | 39 | Spraying | very good |
| Inv. Example2559 | 0.06 | FC | 101.5 | 1.38 | 1.5 | 0.9 | 0.9 | 0.06 | 0.05 | 36 | alkyl silicate | 18 | Spraying | very good |
| Inv. Example2560 | 0.06 | FC | 55.4 | 1.33 | 3.2 | 0.9 | 3.6 | 0.06 | 0.005 | 76 | alkyl silicate | 10 | Spraying | very good |
| Inv. Example2561 | 0.07 | FC | 10.5 | 1.12 | 0 | 0.6 | 10.5 | 0.02 | 2.8 | 77 | alkyl silicate | 37 | Spraying | very good |
| Inv. Example2562 | 0.01 | FC | 12.5 | 1.23 | 1.2 | 0.6 | 0.05 | 0.01 | 0.6 | 43 | alkali silicate | 2 | Spraying | good |
| Inv. Example2563 | 0.08 | FC | 18.5 | 1.36 | 0.01 | 0 | 2.32 | 0.04 | 1 | 52 | alkyl silicate | 160 | Brushing | very good |
| Inv. Example2564 | 0.09 | FC | 11.5 | 1.11 | 1.5 | 0.9 | 20.4 | 0.08 | 0.09 | 66 | alkali silicate | 5 | Brushing | very good |
| Inv. Example2565 | 0.05 | FC | 9.6 | 1.07 | 0 | 1.2 | 7.34 | 0.01 | 3.4 | 72 | alkyl silicate | 56 | Brushing | very good |
| Inv. Example2566 | 0.06 | FC | 10.05 | 1.14 | 0 | 0.6 | 9.4 | 0.02 | 1.5 | 53 | urethane-based resin | 99 | Spraying | very good |
| Inv. Example2567 | 29.9 | FC | 10.5 | 1.36 | 0 | 0 | 16.5 | 0.15 | 200 | 55 | urethane-based resin | 700 | Spraying | very good |
| Inv. Example2568 | 16.5 | FC | 7.5 | 1.11 | 0.01 | 0 | 7.9 | 1.03 | 15 | 47 | alkyl silicate | 554 | Spraying | very good |
| Inv. Example2569 | 12.5 | FC | 2.6 | 1.07 | 3.2 | 0.9 | 10.5 | 2.08 | 5 | 79 | urethane-based resin | 688 | Brushing | very good |
| Inv. Example2570 | 9.8 | FC | 3.5 | 1.42 | 0 | 0.5 | 15.5 | 3.92 | 1.5 | 42 | urethane-based resin | 421 | Spraying | very good |
| Inv. Example2571 | 9.5 | FC | 4.5 | 1.33 | 0.2 | 0.1 | 8.5 | 0.12 | 78 | 36 | urethane-based resin | 651 | Spraying | very good |
| Inv. Example2572 | 7.5 | FC | 1.6 | 1.42 | 0 | 0.5 | 10.5 | 1.25 | 5 | 53 | urethane-based resin | 402 | Brushing | very good |
| Inv. Example2573 | 4.6 | FC | 2.5 | 1.12 | 5.8 | 0.1 | 5.8 | 0.40 | 10.5 | 55 | alkali silicate | 354 | Spraying | very good |
| Inv. Example2574 | 3.8 | FC | 23.5 | 1.23 | 1.2 | 0.6 | 1.2 | 1.09 | 2.5 | 42 | urethane-base3 resin | 504 | Brushing | very good |
| Inv. Example2575 | 0.05 | FC | 9.8 | 1.27 | 15.5 | 0 | 15.5 | 0.03 | 1 | 76 | urethane-based resin | 666 | Spraying | very good |

| | | | | | | | | | | | | | | |
|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | |

### Example 7

Zn alloy particles with the chemical ingredients shown in Tables 92 to 108 were produced in the same way as in Example 5. At the time of preparing the paint, four commercially available organic-based binders were used. The rest is the same as Example 5.

The Mg solid solution phase was identified by the X-ray diffraction method. The Zn-Mg intermetallic compounds were identified by analysis of the ratio of composition of the Mg and Zn at the physical fracture facets or crack surfaces by the X-ray diffraction method or by observation by a scanning electron microscopy with an energy dispersion type X-ray analyzer. The composition was MgZn₂, Mg₂Zn₁₁, Mg₂Zn₃, MgZn, or Mg₇Zn₃.

From Tables 92 to 108, it is learned that due to the surfaces of the particles including fractured parts and/or cracks having a Mg solid solution phase and Zn-Mg intermetallic compounds, the painting test pieces using the Zn alloy particles of the present invention are improved in corrosion resistance and rust protection.

**Table92**

| | Zn-Alloy Particle Properties | | | | | | | | Mean Size of Zn Metallic particles (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Kg₂Zn₁₁ | | | | Ratio of Metal Particle in Dry Coat (mass %) | Base Resin | Coat Thickness (µm) | Coating Method | |
| Inv. Example277 | 17.3 | F | 29.24 | 1.37 | 11.4 | 0.24 | Existence | No | 37.45 | 300:1 | 17.24 | 44 | alkali silicate | 35 | Spraying | very good |
| Inv. Example278 | 18.5 | F | 1.28 | 1.10 | 0.04 | 0.03 | Existence | No | 2.56 | 65:1 | 18.22 | 54 | alkyl silicate | 15 | Spraying | very good |
| Inv. Example279 | 19.3 | F | 33.57 | 1.04 | 0.25 | 0.07 | Existence | No | 17.87 | 300:1 | 19.24 | 79 | alkali silicate | 45 | Spraying | very good |
| Inv. Example280 | 3.5 | F | 3.04 | 1.02 | 5.43 | 0.65 | Existence | No | 6.87 | 65:1 | 3.49 | 73 | alkyl silicate | 12 | Splaying | very good |
| Inv. Example281 | 22.5 | F | 7.54 | 1.01 | 17.5 | 2.41 | Existence | No | 22.54 | 300:1 | 22.43 | 69 | alkali silicate | 16 | Brushing | very good |
| Inv. Example282 | 23.7 | F | 68.12 | 1.03 | 0.01 | 0.08 | Existence | No | 29.54 | 150:1 | 23.54 | 63 | alkyl silicate | 70 | Brushing | very good |
| Inv. Example283 | 24.2 | F | 0.52 | 1.14 | 0.02 | 2.23 | Existence | No | 3.89 | 300:1 | 24.12 | 35 | alkali silicate | 2 | Brushing | very good |
| Inv. Example284 | 0.2 | F | 0.12 | 1.23 | 0.02 | 0.06 | Existence | No | 4.56 | 65:1 | 0.20 | 35 | alkyl silicate | 65 | Brushing | very good |
| Inv. Example285 | 27.1 | F | 58.74 | 1.33 | 0.04 | 0.02 | Existence | No | 35.64 | 300:1 | 27.01 | 72 | alkali silicate | 29 | Spraying | very good |
| Inv. Example286 | 29.3 | F | 13.57 | 1.37 | 0.05 | 0.02 | Existence | No | 26.41 | 150:1 | 29.11 | 46 | alkyl silicate | 26 | Spraying | very good |
| Inv. Example287 | 0.5 | F | 6.4 | 1.44 | 1.24 | 1.37 | Existence | No | 7.85 | 300:1 | 0.50 | 34 | alkali silicate | 14 | Spraying | very good |
| Inv. Example288 | 2.7 | F | 41.23 | 1.21 | 27.5 | 2.43 | Existence | No | 17.54 | 70:1 | 2.66 | 66 | alkyl silicate | 62 | Brushing | vary good |
| Inv. Example289 | 28.4 | F | 0.72 | 1.22 | 0.01 | 0.02 | Existence | No | 7.78 | 300:1 | 28.31 | 72 | alkali silicate | 4 | Brushing | very good |
| Inv. Example290 | 8.7 | F | 1.18 | 1.23 | 0.01 | 0.01 | Existence | No | 6.54 | 100.1 | 8.61 | 40 | alkyl silicate | 6 | Brushing | very good |
| Inv. Example291 | 9.2 | F | 7.12 | 1.47 | 0.02 | 0.05 | Existence | No | 10.28 | 250:1 | 9.16 | 36 | alkali silicate | 15 | Spraying | very good |
| Inv. Example292 | 17.8 | F | 8.01 | 1.01 | 0.03 | 0.04 | Existence | No | 9.98 | 150:1 | 17.68 | 32 | alkyl silicate | 17 | Spraying | very good |
| Inv. Example293 | 20.2 | F | 0.84 | 1.04 | 7.78 | 0.24 | Existence | No | 5.64 | 170:1 | 20.08 | 53 | alkali silicate | 2 | Spraying | very good |
| Inv. Example294 | 0.4 | F | 67.65 | 1.05 | 0.04 | 0.06 | Existence | No | 31.24 | 300:1 | 0.40 | 67 | alkyl silicate | 90 | Brushing | very good |
| Inv. Example295 | 13.7 | F | 2.59 | 1.12 | 11.21 | 0.74 | Existence | No | 18.54 | 200:1 | 13.63 | 72 | alkali silicate | 12 | Brushing | very good |
| Inv. Example296 | 14.7 | F | 93.45 | 1.11 | 0.09 | 0.01 | Exisitence | No | 16.78 | 300:1 | 14.65 | 77 | alkali silicate | 110 | Brushing | very good |
| Inv. Example297 | 2.4 | F | 9.84 | 1.08 | 5.41 | 1.27 | Existence | No | 3.65 | 150:1 | 2.38 | 54 | alkali silicate | 27 | Spraying | very good |
| Inv. Example298 | 4.5 | F | 5.45 | 1.47 | 0.02 | 0.03 | Existence | No | 8.54 | 300:1 | 4.49 | 62 | alkyl silicate | 16 | Spraying | very good |
| Inv. Example299 | 0.1 | F | 1.08 | 1.50 | 0.02 | 0.07 | Existence | No | 3.45 | 65:1 | 0.10 | 66 | alkali silicate | 15 | Spraying | very good |
| Inv. Example300 | 30.0 | F | 180.24 | 1.13 | 0.03 | 0.09 | Existence | Existence | 34.87 | 80:1 | 29.63 | 67 | alkyl silicate | 198 | Brushing | very good |
| Inv. Example301 | 24.5 | F | 11.4 | 1.04 | 11.04 | 0.21 | Existence | Existence | 22.14 | 1:15 | 1.53 | 68 | alkali silicate | 25 | Brushing | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table93**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase 6 Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example302 | 27.6 | F | 38.75 | 1.02 | 0.01 | 0.02 | Existence | Existence | 25.87 | 200:1 | 27.46 | 33 | alkyl silicate | 45 | Brushing | very good |
| Inv. Example303 | 4.1 | F | 119.87 | 1.08 | 0.07 | 0.04 | Existence | Existence | 38.74 | 65:1 | 4.04 | 35 | epoxy-based resin | 130 | Brushing | very good |
| Inv. Example304 | 3.2 | F | 1.42 | 1.15 | 0.08 | 0.01 | Existence | Existence | 3.64 | 300:1 | 3.19 | 43 | acryl-based resin | 15 | Spraying | very good |
| Inv. Example305 | 2.7 | F | 12.5 | 1.34 | 0.04 | 0.03 | Existence | Existence | 24.5 | 70:1 | 2.66 | 44 | urethane-based resin | 18 | Spraying | very good |
| Inv. Example306 | 0.12 | F | 31.24 | 1.25 | 0.02 | 0.04 | Existence | Existence | 38.5 | 65:1 | 0.12 | 42 | polyester resin | 41 | Spraying | very good |
| Inv. Example307 | 0.22 | F | 152.46 | 1.19 | 0.02 | 0.02 | Existence | Existence | 36.42 | 65:1 | 0.22 | 33 | epoxy-based resin | 170 | Brushing | very good |
| Inv. Example308 | 0.37 | F | 13.4 | 1.18 | 4.12 | 0.61 | Existence | Existence | 5.87 | 50:1 | 0.36 | 30 | acryl-based resin | 22 | Brushing | very good |
| Inv. Example309 | 1.4 | F | 1.61 | 1.24 | 0.05 | 0.02 | Existence | Existence | 3.46 | 30:1 | 1.35 | 35 | urethane-based resin | 6 | Brushing | very good |
| Inv. Example310 | 4.2 | F | 14.1 | 1.11 | 2.14 | 0.74 | Existence | Existence | 17.45 | 20:1 | 4.00 | 37 | polyester resin | 21 | Spraying | very good |
| Inv. Example311 | 4.8 | F | 1.67 | 1.27 | 0.03 | 0.02 | Existence | Existence | 3.66 | 100:1 | 4.75 | 30 | epoxy-based resin | 7 | Spraying | very good |
| Inv. Example312 | 8.1 | F | 1.45 | 1.31 | 0.03 | 0.04 | Existence | Existence | 6.45 | 80:1 | 6.00 | 80 | acryl-based resin | 5 | Spraying | very good |
| Inv. Example313 | 7.6 | F | 14.8 | 1.26 | 0.04 | 0.05 | Existence | Existence | 21.7 | 200:1 | 1.56 | 35 | urethane-based resin | 21 | Spraying | very good |
| Inv. Example314 | 9.9 | F | 1.31 | 1.14 | 7.54 | 1.24 | Existence | Existence | 7.14 | 150:1 | 9.83 | 43 | polyester resin | 12 | Spraying | very good |
| Inv. Example315 | 14.8 | F | 15.5 | 1.34 | 0.08 | 0.06 | Existence | Existence | 2.45 | 85:1 | 14.63 | 55 | epoxy-based resin | 24 | Spraying | very good |
| Inv. Example316 | 16.7 | F | 0.67 | 1.16 | 0.01 | 0.07 | Existence | Existence | 8.55 | 70:1 | 15.46 | 76 | acryl-based resin | 2 | Spraying | very good |
| Inv. Example317 | 17.9 | F | 137.89 | 1.47 | 29.8 | 0.75 | Existence | Existence | 24.78 | 1:99 | 0.18 | 65 | urethane-based resin | 154 | Brushing | very good |
| Inv. Example316 | 19.5 | F | 1.63 | 1.48 | 0.01 | 0.02 | Existence | Existence | 3.78 | 1:60 | 0.32 | 73 | polyester resin | 12 | Brushing | very good |
| Inv. Example319 | 22.4 | F | 1.12 | 1.49 | 0.03 | 0.01 | Existence | Existence | 6.54 | 1:15 | 1.40 | 54 | epoxy-based resin | 8 | Brushing | very good |
| Inv. Example320 | 0.17 | F | 169.88 | 1.34 | 0.02 | 0.01 | Existence | Existence | 33.79 | 90:1 | 0.17 | 62 | acryl-based resin | 180 | Brushing | very good |
| Inv. Example321 | 8.3 | F | 1.72 | 1.29 | 8.04 | 1.24 | Existence | Existence | 3.25 | 120:1 | 8.23 | 68 | urethane-based resin | 5 | Spraying | very good |
| Inv. Example322 | 6.5 | F | 10.5 | 1.18 | 0.06 | 0.04 | Existence | Existence | 19.84 | 100:1 | 6.44 | 35 | polyester resin | 23 | Spraying | very good |
| Inv. Example323 | 9.7 | F | 17.7 | 1.23 | 0.08 | 0.02 | Existence | Existence | 26.78 | 1:60 | 0.16 | 37 | epoxy-based resin | 35 | Spraying | very good |
| Inv. Example324 | 11.4 | F | 122.54 | 1.27 | 0.03 | 0.01 | Existence | Existence | 37.54 | 130:1 | 11.31 | 38 | acryl-based resin | 138 | Brushing | very good |
| Inv. Example325 | 22.5 | F | 1.84 | 1.17 | 0.04 | 0.03 | Existence | Existence | 5.47 | 160:1 | 22.36 | 41 | urethane-based resin | 5 | Spraying | very good |
| Inv. Example326 | 25.7 | F | 19.1 | 1.16 | 7.42 | 1.22 | Existence | Existence | 24.51 | 100:1 | 25.45 | 54 | polyester resin | 28 | Spraying | very good |
| Inv. Example327 | 17.8 | F | 1.15 | 1.49 | 0.02 | 0.01 | Existence | Existence | 5.55 | 50:1 | 17.45 | 57 | spoxy-based resin | 7 | Brushing | very good |
| Inv. Example328 | 0.14 | F | 198.78 | 1.34 | 0.08 | 0.02 | Existence | Existence | 39.47 | 1:60 | 0.00 | 33 | acryl-based resin | 199 | Brushing | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table94**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | coating Method | |
| Inv. Example1599 | 0.15 | FC | 0.02 | 1.05 | 0.1 | 0.07 | Existence | Existence | 2.04 | 5:2 | 0.11 | 35 | alkali silicate | 2 | Spraying | very good |
| Inv. Example1600 | 0.19 | FC | 10.5 | 1.12 | 0.04 | 0.1 | Existence | Existence | 50.00 | 7:1 | 0.17 | 77 | alkyl silicate | 37 | Spraying | very good |
| Inv. Example1601 | 0.18 | FC | 12.5 | 1.23 | 30.0 | 0.01 | Existence | No | 2.45 | 68:1 | 0.18 | 43 | alkali silicate | 2 | Spraying | good |
| Inv. Example1602 | 0.11 | FC | 18.5 | 1.36 | 0.02 | 3 | Existence | Existence | 5.33 | 10:1 | 0.10 | 52 | alkyl silicate | 160 | Brushing | very good |
| Inv. Example1603 | 0.15 | FC | 11.5 | 1.11 | 0 | 0 | Existence | No | 2.41 | 25:7 | 0.12 | 66 | alkali silicate | 5 | Brushing | very good |
| Inv. Example1604 | 0.24 | FC | 9.6 | 1.07 | 0 | 0 | Existence | Existence | 23.43 | 300:9 | 0.23 | 72 | alkyl silicate | 56 | Brushing | very good |
| Inv. Example1605 | 0.18 | FC | 8.5 | 1.42 | 10.4 | 0.57 | Existence | No | 6.03 | 180:1 | 0.19 | 40 | alkali silicate | 2 | Spraying | very good |
| Inv. Example1606 | 0.12 | FC | 7.72 | 1.38 | 4.65 | 2.67 | Existence | Existence | 24.5 | 23:1 | 0.12 | 36 | alkyl silicate | 18 | Spraying | very good |
| Inv. Example1607 | 0.19 | FC | 8.32 | 1.22 | 24.8 | 2.4 | Existence | No | 5.32 | 165:1 | 0.19 | 32 | alkyl silicate | 23 | Spraying | very good |
| Inv. Example1608 | 0.18 | FC | 10.05 | 1.14 | 4.52 | 0.57 | Existence | No | 14.34 | 300:1 | 0.18 | 53 | epoxy-based resin | 30 | Brushing | very good |
| Inv. Example1609 | 0.21 | FC | 10.6 | 1.13 | 17.5 | 2.45 | Existence | Existence | 5.04 | 120:1 | 0.21 | 67 | acryl-based resin | 77 | Brushing | very good |
| Inv. Example1610 | 0.76 | FC | 5.7 | 1.02 | 0 | 0 | Existence | No | 2.32 | 2:9 | 0.14 | 72 | urethane-based resin | 54 | Brushing | very good |
| Inv. Example1611 | 0.11 | FC | 6.4 | 1.06 | 11.05 | 0.23 | Existence | Existence | 20.34 | 119:3 | 0.11 | 77 | polyester resin | 47 | Spraying | very good |
| Inv. Example1612 | 0.14 | FC | 3.2 | 1.05 | 2.65 | 0.74 | Existence | Existence | 12.33 | 233:1 | 0.14 | 34 | epoxy-based resin | 43 | Spraying | very good |
| Inv. Example1613 | 15 | FC | 4.5 | 1.24 | 6.45 | 2.14 | Existence | No | 17.84 | 1:132 | 0.11 | 43 | acryl-based resin | 52 | Brushing | very good |
| Inv. Example1614 | 14.5 | FC | 5.2 | 1.33 | 0 | 0 | Existence | No | 6.65 | 1:55 | 10.24 | 53 | urethane-based resin | 20 | Brushing | very gcod |
| Inv. Example1615 | 18.5 | FC | 1.9 | 1.27 | 0 | 0 | Existence | Existence | 3.65 | 1:23 | 0.77 | 60 | polyester resin | 200 | Brushing | very good |
| Inv. Example1616 | 15.1 | FC | 0.02 | 1.05 | 0.05 | 0.03 | Existence | No | 22.62 | 200:1 | 15.02 | 35 | alkali silicate | 22 | Spraying | very good |
| Inv. Example1617 | 15.6 | FC | 10.5 | 1.12 | 0 | 0.08 | Existence | No | 45.33 | 1:15 | 0.98 | 77 | alkyl silicate | 25 | Spraying | very good |
| Inv. Example1618 | 12.5 | FC | 12.5 | 1.23 | 0.05 | 0 | Existence | Existence | 43.22 | 1:10 | 1.14 | 43 | alkali silicate | 14 | Spraying | very good |
| Inv. Example1619 | 18.7 | FC | 13.5 | 1.36 | 0.44 | 0.07 | Existence | Existence | 12.33 | 1:6 | 2.67 | 52 | urethane-based resin | 112 | Spraying | very good |
| Inv. Example1620 | 14.5 | FC | 11.5 | 1.11 | 0.08 | 0.07 | Existence | Existence | 13.42 | 1:45 | 0.32 | 66 | alkali silicate | 24 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table95**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ cr Mg₂Zn₁₁ | | | | Ratio of Metal Particle in Dry Coat (mass %) | Base Resin | Coat Thickness (µm) | Coating Method | |
| Inv. Example1621 | 7.5 | FC | 9.6 | 1.07 | 0.1 | 0.2 | Existence | No | 22.32 | 1:50 | 0.15 | 72 | urethane-based resin | 150 | Spraying | very good |
| Inv. Example1622 | 4.5 | FC | 8.5 | 1.42 | 0 | 0 | Existence | Existence | 7.34 | 1:9 | 0.45 | 40 | alkali silicate | 18 | Spraying | very good |
| Inv. Example1623 | 1.5 | FC | 7.72 | 1.38 | 0 | 0 | Existence | Existence | 44.54 | 1:7 | 0.19 | 36 | alkyl silicate | 19 | Brushing | very good |
| Inv. Example1624 | 4.8 | FC | 8.32 | 1.22 | 0 | 0.07 | Existence | Existence | 32.87 | 1:4 | 0.96 | 32 | alkyl silicate | 24 | Spraying | very goad |
| Inv. Example1625 | 9.6 | FC | 10.05 | 1.14 | 0 | 0.02 | Existence | No | 20.32 | 1:14 | 0.64 | 53 | urethane-based resin | 99 | Spraying | very good |
| Inv. Example1626 | 11.5 | FC | 10.6 | 1.13 | 25.8 | 0.05 | Existence | Existence | 2.03 | 1:11 | 0.96 | 67 | alkyl silicate | 7 | Spraying | very good |
| Inv. Example1627 | 9.8 | FC | 5.7 | 1.02 | 22.1 | 0 | Existence | Existence | 5.33 | 1:28 | 0.34 | 72 | epoxy-based resin | 100 | Spraying | very good |
| Inv. Example1628 | 7.6 | FC | 6.4 | 1.06 | 21.5 | 0.05 | Existence | Existence | 2.33 | 1:4 | 1.52 | 77 | alkyl silicate | 27 | Brushing | very good |
| Inv. Example1629 | 3.2 | FC | 3.2 | 1.05 | 0.05 | 2.29 | Existence | No | 27.44 | 250:1 | 3.19 | 34 | alkali silicate | 15 | Spraying | very good |
| Inv. Example1630 | 1.9 | FC | 4.5 | 1.24 | 0.05 | 0.03 | Existence | Existence | 12.33 | 1:1 | 0.95 | 43 | alkyl silicate | 14 | Spraying | very good |
| Inv. Example1631 | 11.5 | FC | 5.2 | 1.33 | 0 | 0.09 | Existence | Existence | 36.43 | 1:4 | 2.30 | 53 | urethane-based resin | 55 | Spraying | very good |
| Inv. Example1632 | 8.7 | FC | 1.9 | 1.27 | 0 | 0 | Existence | No | 12.33 | 1:12 | 0.67 | 35 | alkyl silicate | 8 | Spraying | very good |
| Inv. Example1633 | 9.6 | FC | 0.02 | 1.05 | 0 | 0 | Existence | Existence | 3.21 | 70:1 | 9.46 | 77 | urethane-based resin | 122 | Brushing | very good |
| Inv. Example1634 | 9.4 | FC | 10.5 | 1.12 | 0.08 | 0.07 | Existence | No | 26.33 | 1:3 | 2.35 | 43 | alkyl silicate | 54 | Spraying | very good |
| Inv. Example1635 | 10.5 | FC | 12.5 | 1.23 | 0.1 | 0.2 | Existence | Existence | 44.21 | 1:24 | 0.42 | 52 | alkali silicate | 19 | Spraying | very good |
| Inv. Example1636 | 12.6 | FC | 18.5 | 1.36 | 0.05 | 0.2 | Existence | No | 3.43 | 1:10 | 1.15 | 66 | alkyl silicate | 25 | Brushing | very good |
| Inv. Example1637 | 29.5 | FC | 11.5 | 1.12 | 0.07 | 0 | Existence | Existence | 47.32 | 300:1 | 29.40 | 72 | alkyl silicate | 58 | Spraying | very good |
| Inv. Example1638 | 29.4 | FC | 9.6 | 1.07 | 0 | 0.07 | Existence | Existence | 12.33 | 1:65 | 0.44 | 40 | alkyl silicate | 21 | Spraying | very good |
| Inv. Example1639 | 27.5 | FC | 8.5 | 1.42 | 0 | 0.02 | Existence | Existence | 17.44 | 120:1 | 27.27 | 36 | alkali silicate | 19 | Brushing | very good |
| Inv. Example1640 | 0.8 | FC | 7.72 | 1.38 | 25.8 | 0.05 | Existence | Existence | 42.21 | 6:5 | 0.44 | 32 | urethane-based resin | 36 | Spraying | very good |
| Inv. Exemple1641 | 1.6 | FC | 8.32 | 1.22 | 22.1 | 0 | Existence | No | 12.34 | 1:1 | 0.80 | 53 | alkyl silicate | 77 | spraying | very good |
| Inv. Example1642 | 22.9 | FC | 10.05 | 1.14 | 21.5 | 0.05 | Existence | No | 20.32 | 1:1 | 11.45 | 67 | alkyl silicate | 54 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table96**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1643 | 28.5 | FC | 10.6 | 1.13 | 0.05 | 2.29 | Existence | No | 23.44 | 1:76 | 0.37 | 72 | alkyl silicate | 54 | Spaying | very good |
| Inv. Example1644 | 29.5 | FC | 5.7 | 1.02 | 0.1 | 0.2 | Existence | Existence | 23.45 | 1:6 | 4.21 | 77 | alkyl silicate | 34 | Brushing | very good |
| Inv. Example1645 | 18.7 | FC | 6.4 | 1.06 | 0.05 | 0.2 | Existence | No | 23.21 | 1:35 | 0.52 | 34 | alkali silicate | 28 | Spraying | very good |
| Inv. Example1646 | 19.5 | FC | 3.2 | 1.05 | 0.07 | 0 | Existence | Existence | 39.44 | 1:5 | 3.25 | 43 | urethane-based resin | 109 | Brushing | very good |
| Inv. Example1647 | 20.4 | FC | 4.5 | 1.24 | 0 | 0.07 | Existence | Existence | 12.34 | 1:62 | 0.32 | 53 | alkyl silicate | 15 | Spraying | very good |
| Inv. Example1648 | 0.6 | FC | 5.2 | 1.33 | 0 | 0.02 | Existence | Existence | 29.93 | 1:4 | 0.12 | 72 | alkyl silicate | 14 | Spraying | very good |
| Inv. Example1649 | 0.8 | FC | 1.9 | 1.27 | 22.1 | 0 | Exisitence | Existence | 15.21 | 5:9 | 0.29 | 77 | alkyl silicate | 18 | Spraying | very good |
| Inv. Example1550 | 22.5 | FC | 0.02 | 1.05 | 0.1 | 0.07 | Existence | Existence | 23.34 | 1:220 | 0.10 | 35 | alkali silicate | 2 | Spraying | very good |
| Inv. Example1651 | 20.6 | FC | 10.5 | 1.12 | 0.04 | 0.1 | Existence | Existence | 2.32 | 1:80 | 0.25 | 77 | alkyl silicate | 37 | Spraying | very good |
| Inv. Example1652 | 21.6 | FC | 12.5 | 1.23 | 30.0 | 0.01 | Existence | No | 4.21 | 1:50 | 0.42 | 43 | alkali silicate | 2 | Spraying | good |
| Inv. Example1653 | 20.8 | FC | 7.72 | 1.38 | 0 | 0 | Existence | Existence | 15.21 | 1:10 | 1.89 | 52 | alkyl silicate | 160 | Brushing | very good |
| Inv. Example1654 | 23.6 | FC | 8.32 | 1.22 | 0 | 0 | Existence | Existence | 23.34 | 1:1 | 11.80 | 66 | alkali silicate | 5 | Brushing | very good |
| Inv. Example1655 | 24.5 | FC | 10.05 | 1.14 | 4.52 | 0.57 | Existence | No | 2.32 | 1:78 | 0.31 | 72 | alkyl silicate | 56 | Brushing | very good |
| Inv. Example1656 | 18.6 | FC | 10.6 | 1.13 | 17.5 | 2.45 | Existence | Existence | 4.21 | 1:10 | 1.69 | 40 | alkali silicate | 2 | Spraying | very good |
| Inv. Example1657 | 17.8 | FC | 5.2 | 1.33 | 27.6 | 2.4 | Existence | No | 29.99 | 1:50 | 0.35 | 36 | alkyl silicate | 18 | Spraying | very good |
| Inv. Example1658 | 16.5 | FC | 1.9 | 1.27 | 4.32 | 1.07 | Existence | Existence | 15.21 | 1:10 | 1.50 | 32 | alkyl silicate | 23 | Spraying | very good |
| Inv. Example1659 | 14.5 | FC | 0.02 | 1.05 | 0.05 | 0.03 | Existence | No | 23.34 | 1:1 | 7.25 | 53 | epoxy-based resin | 30 | Brushing | very good |
| Inv. Example1660 | 19 | FC | 10.5 | 1.12 | 0 | 0.08 | Existence | No | 2.32 | 1:3 | 4.75 | 67 | acryl-based resin | 77 | Brushing | very good |
| Inv. Example1661 | 15 | FC | 12.5 | 1.23 | 0.05 | 0 | Existence | Existence | 4.21 | 1:7 | 1.86 | 72 | urethane-based resin | 54 | Brushing | very good |
| Inv. Example1662 | 16.4 | FC | 18.5 | 1.36 | 0.44 | 0.07 | Existence | Existence | 15.21 | 1:50 | 0.32 | 77 | polyester resin | 47 | Spraying | very good |
| Inv. Example1663 | 13.5 | FC | 11.5 | 1.11 | 0.08 | 0.07 | Existence | Existence | 23.34 | 1:10 | 1.23 | 34 | epoxy-based resin | 43 | Spraying | very good |
| Inv. Example1664 | 10.6 | FC | 11.5 | 1.11 | 8.02 | 2.04 | Existence | No | 13.45 | 1:3 | 2.65 | 43 | acryl-based resin | 52 | Brushing | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table97**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1665 | 10.7 | FC | 9.6 | 1.07 | 15.6 | 1.27 | Existence | Existence | 2.34 | 1:10 | 0.97 | 53 | urethane-based resin | 20 | Brushing | very good |
| Inv. Example1666 | 10.9 | FC | 8.5 | 1.42 | 10.4 | 0.57 | Existence | No | 28.34 | 1:5 | 1.82 | 60 | polyester resin | 200 | Brushing | very good |
| Inv. Example1667 | 11.6 | FC | 7.72 | 1.38 | 4.65 | 2.67 | Existence | Existence | 19.87 | 200:1 | 11.54 | 35 | alkali silicate | 22 | Spraying | very good |
| Inv. Example1668 | 14.7 | FC | 8.32 | 1.22 | 24.8 | 2.4 | Existence | No | 39.74 | 1:8 | 1.63 | 77 | alkyl silicate | 25 | Spraying | very good |
| Inv. Example1669 | 19.5 | FC | 10.05 | 1.14 | 4.52 | 0.57 | Existence | No | 24.32 | 1:1 | 9.75 | 43 | alkali silicate | 14 | Spraying | very good |
| Inv. Example1670 | 10.2 | FC | 10.6 | 1.13 | 0 | 0 | Existence | Existence | 22.33 | 1:7 | 1.28 | 52 | urethane-based resin | 112 | Spraying | very good |
| Inv. Example1671 | 4 | FC | 5.7 | 1.02 | 0 | 0 | Existence | No | 48.54 | 1:3 | 1.00 | 66 | alkali silicate | 24 | Spraying | very good |
| Inv. Example1672 | 7.2 | FC | 6.4 | 1.06 | 11.05 | 0.23 | Existence | Existence | 23.75 | 1:7 | 0.90 | 72 | urethane-based resin | 150 | Spraying | very good |
| Inv. Example1673 | 3.6 | FC | 3.2 | 1.05 | 2.65 | 0.74 | Existence | Existence | 15.62 | 1:2 | 1.20 | 40 | alkali silicate | 18 | Spraying | very good |
| Inv. Example1674 | 26.9 | FC | 4.5 | 1.24 | 6.45 | 2.14 | Existence | No | 2.34 | 117:1 | 26.67 | 36 | alkyl silicate | 19 | Brushing | very good |
| Inv. Example1675 | 27.9 | FC | 5.2 | 1.33 | 27.6 | 2.4 | Existence | No | 23.04 | 1:270 | 0.10 | 32 | alkyl silicate | 24 | Spraying | very good |
| Inv. Example1676 | 28.9 | FC | 1.9 | 1.27 | 4.32 | 1.07 | Existence | Existence | 3.05 | 1:117 | 0.24 | 53 | urethane-based resin | 99 | Spraying | very good |
| Inv. Example1677 | 23.8 | FC | 0.02 | 1.05 | 0.05 | 0.03 | Existence | No | 43.23 | 1:66 | 0.36 | 67 | alkyl silicate | 7 | Spraying | very good |
| Inv. Example1678 | 26.8 | FC | 10.5 | 1.12 | 0 | 0.08 | Existence | No | 2.04 | 1:109 | 0.24 | 72 | epoxy-based resin | 100 | Spraying | very good |
| Inv. Example1679 | 25.6 | FC | 12.5 | 1.23 | 0.05 | 0 | Existence | Existence | 50.00 | 250:1 | 25.50 | 77 | alkyl silicate | 27 | Brushing | very gocd |
| Inv. Example1680 | 29.8 | FC | 18.5 | 1.36 | 0.44 | 0.07 | Existence | Existence | 2.45 | 70:1 | 29.38 | 34 | alkali silicate | 15 | Spraying | very good |
| Inv. Example1681 | 18.9 | FC | 11.5 | 1.11 | 0.08 | 0.07 | Existence | Existence | 5.33 | 1:15 | 1.18 | 43 | alkyl silicate | 14 | Spraying | very good |
| Inv. Example1682 | 5.6 | FC | 9.6 | 1.07 | 0.1 | 0.2 | Existence | No | 2.41 | 1:5 | 0.93 | 53 | urethane-based resin | 55 | Spraying | very good |
| Inv. Example1683 | 4.7 | FC | 8.5 | 1.42 | 0.05 | 0.2 | Existence | Existence | 23.43 | 2:3 | 1.88 | 35 | alkyl silicate | 8 | Spraying | very good |
| Inv. Example1684 | 6.8 | FC | 7.72 | 1.38 | 0.07 | 0 | Existence | Existence | 6.03 | 1:9 | 0.68 | 77 | urethane-based resin | 122 | Brushing | very good |
| Inv. Example1685 | 9 | FC | 8.32 | 1.22 | 0 | 0.07 | Existence | Existence | 24.5 | 1:10 | 0.82 | 43 | alkyl silicate | 54 | Spraying | very good |
| Inv. Example1686 | 2.1 | FC | 10.05 | 1.14 | 0 | 0.02 | Existence | No | 5.32 | 1:14 | 0.14 | 52 | alkali silicate | 19 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table98**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1687 | 4.8 | FC | 10.6 | 1.13 | 0 | 0 | Existence | Existence | 14.34 | 1:7 | 0.60 | 66 | alkyl silicate | 25 | Brushing | very good |
| Inv. Example1689 | 4.2 | FC | 5.7 | 1.02 | 0 | 0 | Existence | Existence | 5.04 | 1:12 | 0.32 | 72 | alkyl silicate | 58 | Spraying | very good |
| Inv. Example1689 | 4.3 | FC | 5.4 | 1.06 | 21.5 | 0.05 | Existence | Existence | 2.32 | 1:3 | 1.08 | 40 | alkyl silicate | 21 | Spraying | very good |
| Inv. Examplel1690 | 4 | FC | 3.2 | 1.05 | 0.05 | 2.29 | Existence | No | 20.34 | 1:7 | 0.50 | 36 | alkali silicate | 19 | Brushing | very good |
| Inv. Example1691 | 3.7 | FC | 4.5 | 1.24 | 0.05 | 0.03 | Existence | Existence | 12.33 | 1:10 | 0.34 | 32 | urethane-based resin | 56 | Spraying | very good |
| Inv. Example1692 | 6.4 | FC | 5.2 | 1.33 | 0 | 0.08 | Existence | Existence | 17.84 | 1:1 | 3.20 | 53 | alkyl silicate | 77 | Spraying | very good |
| Inv. Example1693 | 6.9 | FC | 1.9 | 1.27 | 0.05 | 0 | Existence | No | 6.66 | 1:3 | 1.73 | 67 | alkyl silicate | 54 | Spraying | very good |
| Inv. Example1694 | 16.9 | FC | 0.02 | 1.05 | 0.44 | 0.07 | Existence | Existence | 3.65 | 2:3 | 6.76 | 72 | alkyl silicate | 64 | Spraying | very good |
| Inv. Example1695 | 18.7 | FC | 10.5 | 1.12 | 0.08 | 0.07 | Existence | No | 22.52 | 1:2 | 6.23 | 77 | alkyl silicate | 34 | Brushing | very good |
| Inv. Example1696 | 24.4 | FC | 12.5 | 1.23 | 0.1 | 0.2 | Existence | Existence | 45.33 | 1:4 | 4.88 | 34 | alkali silicate | 28 | Spraying | very good |
| Inv. Example1697 | 10.6 | FC | 18.5 | 1.36 | 0 | 0 | Existence | No | 43.22 . | 1:6 | 1.51 | 43 | urethane-based resin | 109 | Brushing | very good |
| Inv. Example1698 | 15.8 | FC | 11.5 | 1.11 | 0 | 0 | Existence | Existence. | 12.33 | 1:115 | 0.14 | 53 | alkyl silicate | 15 | Spraying | very good |
| Inv. Example1699 | 19.5 | FC | 9.6 | 1.07 | 0 | 0.07 | Existence | Existence | 13.42 | 1:23 | 0.81 | 72 | alkyl silicate | 14 | Spraying | very good |
| Inv. Example1700 | 7.8 | FC | 8.5 | 1.42 | 0 | 0.02 | Existence | Existence | 22.32 | 1:12 | 0.60 | 77 | alkyl silicate | 18 | Spraying | very good |
| Inv. Example1701 | 4.9 | FC | 7.72 | 1.38 | 25.8 | 0.05 | Existence | Existence | 7.34 | 1:10 | 0.45 | 77 | urethane-based resin | 122 | Brushing | very gooo |
| Inv. Example1702 | 10.8 | FC | 8.32 | 1.22 | 22.1 | 0 | Existence | No | 44.54 | 1:3 | 2.70 | 43 | alkyl silicate | 54 | Spraying | very good |
| Inv. Example1703 | 3.8 | FC | 10.05 | 1.14 | 21.5 | 0.05 | Existence | No | 32.87 | 1:5 | 0.63 | 52 | alkali silicate | 19 | Spraying | very good |
| Inv. Example1704 | 22.6 | FC | 10.6 | 1.13 | 0.05 | 2.29 | Existence | No | 20.32 | 1:25 | 0.87 | 66 | alkyl silicate | 25 | Brushing | very good |
| Inv. Example1705 | 27.9 | FC | 5.7 | 1.02 | 0 | 0 | Existence | Existence | 2.03 | 4:5 | 12.40 | 72 | alkyl silicate | 58 | Spraying | very good |
| Inv. Example1706 | 24.8 | FC | 6.4 | 1.06 | 0 | 0 | Existence | No | 5.33 | 3:8 | 6.76 | 40 | alkyl silicate | 21 | Spraying | very good |
| Inv. Example1707 | 26.8 | FC | 3.2 | 1.05 | 0.07 | 0 | Existence | Existence | 2.33 | 9:34 | 5.6i | 36 | alkali silicate | 19 | Brushing | very good |
| Inv. Example1708 | 25.9 | FC | 4.5 | 1.29 | 0 | 0.07 | Existence | Existence | 27.44 | 7:8 | 12.09 | 32 | urethane-based resin | 56 | Spraying | very good |
| Inv. Example1709 | 9.8 | FC | 5.2 | 1.33 | 0 | 0.02 | Existence | Existence | 12.33 | 9:17 | 3.39 | 53 | alkyl silicate | 77 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table99**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1710 | 5.6 | FC | 1.9 | 1.27 | 22.1 | 0 | Existence | Existence | 36.43 | 1:1 | 2.80 | 67 | alkyl silicate | 54 | Spraying | very good |
| Inv. Exampme1711 | 12.3 | FC | 0.02 | 1.05 | 1.24 | 1.8 | Existence | Existence | 11.9 | 1:31 | 0.38 | 52 | alkali silicate | 2 | Spraying | very good |
| Inv. Example1712 | 0.8 | FC | 27.89 | 1.12 | 1.24 | 0.9 | Existence | Existence | 10.5 | 1:4 | 0.16 | 55 | alkali silicate | 20 | Spraying | very good |
| Inv. Example1713 | 1 | FC | 0.32 | 1.23 | 0.8 | 0.7 | Existence | No | 9.8 | 1:1 | 0.50 | 69 | alkali silicate | 5 | Spraying | very good |
| Inv. Example1714 | 2.3 | FC | 11.44 | 1.36 | 0 | 1.8 | Existence | Existence | 7.9 | 1:7 | 0.29 | 78 | alkyl silicate | 20 | Spraying | very good |
| Inv. Example1715 | 15.6 | FC | 1.05 | 1.11 | 1.1 | 2.41 | Existence | Existence | 11.6 | 1:11 | 1.30 | 42 | alkali silicate | 15 | Brushing | very good |
| Inv. Example1716 | 6.7 | FC | 36.47 | 1.07 | 1.8 | 0.08 | Existence | Existence | 16.9 | 1:2 | 2.23 | 32 | alkyl silicate | 57 | Brushing | very good |
| Inv. Example1717 | 7.5 | FC | 5.07 | 1.42 | 3.8 | 2.23 | Existence | No | 20.34 | 1:7 | 0.94 | 66 | alkali silicate | 13 | Brushing | very good |
| Inv. Example1718 | 8.4 | FC | 7.72 | 1.38 | 2.9 | 0.06 | Existence | Existence | 8.9 | 1:4 | 1.68 | 67 | alkyl silicate | 22 | Brushing | very good |
| Inv. Example1719 | 9.3 | FC | 8.32 | 1.22 | 10.5 | 0.02 | Existence | Existence | 7.5 | 1:5 | 1.55 | 64 | alkali silicate | 20 | Spraying | very good |
| Inv. Example1720 | 10.4 | FC | 10.05 | 1.14 | 2.9 | 0.02 | Existence | Existence | 10.9 | 1:10 | 0.95 | 74 | alkyl silicate | 27 | Spraying | very good |
| Inv. Example1721 | 11.2 | FC | 6.08 | 1.13 | 16.8 | 1.37 | Existence | No | 20.34 | 1:9 | 1.12 | 82 | alkali silicate | 15 | Spraying | very good |
| Inv. Example1722 | 11.7 | FC | 17.89 | 1.02 | 0 | 2.43 | Existence | Existence | 6.7 | 240:1 | 11.65 | 37 | alkyl silicate | 35 | Spraying | very good |
| Inv. Example1723 | 21.5 | FC | 19.54 | 1.06 | 3.6 | 0.02 | Existence | Existence | 7.9 | 1:120 | 0.18 | 42 | alkali silicate | 34 | Brushing | very good |
| Inv. Exemple1724 | 13.4 | FC | 21.08 | 1.05 | 2.1 | 1.5 | Existence | No | 5.6 | 99:1 | 13.27 | 66 | alkyl silicate | 45 | Brushing | very good |
| Inv. Example1725 | 14.6 | FC | 23.04 | 1.24 | 0.06 | 1.3 | Existence | Existence | 11.5 | 1:99 | 0.15 | 48 | alkali silicate | 52 | Brushing | very good |
| Inv. Example1726 | 25.8 | FC | 9.21 | 1.33 | 0.02 | 1.8 | Existence | Existence | 20.34 | 1:242 | 0.11 | 33 | alkyl silicate | 23 | Brushing | very good |
| Inv. Example1727 | 16.7 | FC | 0.12 | 1.27 | 1.6 | 0.9 | Existence | Existence | 10.5 | 1:6 | 2.39 | 75 | alkali silicate | 5 | Spraying | very good |
| Inv. Example1728 | 17.3 | FC | 29.24 | 1.37 | 3.5 | 0 | Existence | Existence | 7.6 | 1:1 | 8.65 | 77 | alkyl silicate | 52 | Brushing | very good |
| Inv. Example1729 | 18.5 | FC | 128.74 | 1.10 | 3.8 | 1.8 | Existence | No | 8.2 | 1:7 | 2.31 | 66 | alkali silicate | 150 | Brushing | very good |
| Inv. Example1730 | 19.3 | FC | 33.87 | 1.04 | 11.5 | 0.7 | Existence | Existence | 9.1 | 1:5 | 3.22 | 67 | alkyl silicate | 60 | Brushing | very good |
| Inv. Example1731 | 3.5 | FC | 3.04 | 1.02 | 0.4 | 1.5 | Existence | Existence | 10.6 | 1:2 | 1.17 | 45 | alkali silicate | 15 | Spraying | very good |
| Inv. Example1732 | 22.5 | FC | 7.54 | 1.01 | 0.6 | 1.3 | Existence | Existence | 8.4 | 1:221 | 0.10 | 48 | alkyl silicate | 24 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table100**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1733 | 23.7 | FC | 6.91 | 1.08 | 10.6 | 1.8 | Existence | No | 5.3 | 1:31 | 0.74 | 68 | alkali silicate | 34 | Spraying | very good |
| Inv. Example1734 | 24.2 | FC | 5.25 | 1.14 | 9.5 | 0 | Existence | Existence | 20.34 | 1:4 | 4.84 | 35 | alkyl silicate | 20 | Brushing | very good |
| Inv. Example1735 | 0.2 | FC | 194.23 | 1.23 | 11.04 | 0.7 | Existence | Existence | 7.8 | 1:1 | 0.10 | 37 | alkali silicate | 200 | Brushing | very good |
| Inv. Example1736 | 27.1 | FC | 28.74 | 1.33 | 0.01 | 1.8 | Existence | Existence | 10.5 | 1:7 | 3.39 | 38 | alkyl silicate | 56 | Brushing | very good |
| Inv. Examplel1737 | 29.3 | PC | 13.57 | 1.37 | 0.07 | 0.7 | Existence | Existence | 20.34 | 400:1 | 29.23 | 41 | alkali silicate | 34 | Spraying | very good |
| Inv. Example1738 | 0.5 | FC | 0.65 | 1.44 | 1.8 | 1.5 | Existence | Existence | 7.9 | 1:2 | 0.17 | 54 | alkyl silicate | 2 | Spraying | very good |
| Inv. Example1739 | 2.7 | FC | 4.12 | 1.21 | 0 | 1.3 | Existence | Existence | 11.6 | 1:300 | 0.01 | 57 | alkali silicate | 15 | Spraying | very good |
| Inv. Example1740 | 28.4 | FC | 0.72 | 1.22 | 2.9 | 1.8 | Existence | Existence | 16.9 | 1:4 | 5.68 | 59 | alkali silicate | 10 | Spraying | very good |
| Inv. Example1741 | 8.7 | FC | 117.54 | 1.23 | 10.5 | 0.9 | Existence | Existence | 10.5 | 1:5 | 1.45 | 64 | alkyl silicate | 125 | Brushing | very good |
| Inv. Examplel1742 | 9.2 | FC | 7.81 | 1.47 | 2.9 | 0.7 | Existence | Existence | 8.9 | 1:10 | 0.34 | 66 | alkali silicate | 24 | Brushing | very good |
| Inv. Example1743 | 17.8 | FC | 80.25 | 1.01 | 16.8 | 1.8 | Existence | No | 7.5 | 1:9 | 1.78 | 67 | alkyl silicate | 110 | Brushing | very good |
| Inv. Example1744 | 20.2 | FC | 8.47 | 1.04 | 2.7 | 0.7 | Existence | Existence | 10.9 | 1:1 | 10.10 | 34 | alkali silicate | 24 | Brushing | very good |
| Inv. Example1745 | 0.4 | FC | 0.87 | 1.05 | 0.04 | 0.7 | Existence | Existence | 20.34 | 130:1 | 0.40 | 54 | alkyl silicate | 2 | Spraying | very good |
| Inv. Example1746 | 13.7 | FC | 25.78 | 1.12 | 0 | 0.04 | Existence | Existence | 6.7 | 130:1 | 13.60 | 62 | alkali silicate | 37 | Spraying | very good |
| Inv. Example1747 | 14.7 | FC | 93.45 | 1.11 | 1.24 | 0.05 | Existence | Existence | 7.3 | 1:31 | 0.46 | 66 | alkyl silicate | 113 | Brushing | very good |
| Inv. Example1746 | 2.4 | FC | 0.97 | 1.08 | 0.05 | 1.24 | Existence | Existence | 5.6 | 1:1 | 1.20 | 67 | alkali silicate, | 2 | Spraying | very good |
| Inv. Example1749 | 4.5 | FC | 54.89 | 1.47 | 1.24 | 0.06 | Existence | Existence | 20.34 | 2:1 | 3.00 | 68 | alkyl silicate | 75 | Brushing | very good |
| Inv. Example1750 | 0.1 | FC | 10.81 | 1.50 | 1.24 | 0.07 | Existence | Existence | 9.9 | 300:1 | 0.10 | 33 | alkali silicate | 30 | Brushing | very good |
| Inv. Example1751 | 30.0 | FC | 18.24 | 1.13 | 0 | 0.75 | Existence | Existence | 10.5 | 1:270 | 0.11 | 35 | alkyl silicate | 34 | Brushing | very good |
| Inv. Example1752 | 24.5 | FC | 114.78 | 1.04 | 0.9 | 1.5 | Existence | Existence | 7.6 | 1:115 | 0.21 | 43 | epoxy-based resin | 124 | Brushing | very good |
| Inv. Example1753 | 27.6 | FC | 3.87 | 1.02 | 0.03 | 1.3 | Existence | Existence | 45.33 | 1:29 | 0.92 | 44 | acryl-based resin | 15 | Spraying | very good |
| Inv. Example1754 | 4.1 | FC | 11.94 | 1.08 | 10.5 | 1.8 | Existence | No | 43.22 | 1:3 | 1.03 | 43 | urethane-based resin | 23 | Spraying | very good |
| Inv. Example1755 | 3.2 | FC | 142.58 | 1.15 | 2.9 | 0.9 | Existence | Existence | 10.6 | 1:9 | 0.32 | 44 | polyester resin | 157 | Brushing | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks exiting, NO : No fracture facet and/or crack | | | | | | | | | | | | | | | | |

**Table101**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (maas %) | Mg Solid-Solution Phase & Zn-Mg Intermetallic compounds on Surface of Particles | MgZn₂ or Mg₂Zn₁₁ | | | | Ratio of Metal Particle in Dry Coat (mass %) | Base Resin | Coat Thickness (µm) | Coating Method | |
| Inv. Example1756 | 2.7 | FC | 12.5 | 1.34 | 16.8 | 0.7 | Existence | Exisitence | 20.34 | 1:5 | 0.45 | 54 | epoxy-based resin | 26 | Spraying | very good |
| Inv. Example1757 | 0.12 | FC | 31.24 | 1.25 | 2.7 | 1.8 | Existence | Existence | 5.3 | 100:1 | 0.12 | 79 | acryl-based resin | 39 | Spraying | very good |
| Inv. Example1758 | 0.22 | FC | 152.46 | 1.19 | 0.02 | 0.7 | Existence | Existence | 10.9 | 1:1 | 0.11 | 73 | urethane-based resin | 160 | Brushing | very good |
| Inv. Example1759 | 0.37 | FC | 13.4 | 1.18 | 0 | 1.5 | Existence | Existence | 7.8 | 99:1 | 0.37 | 69 | polyester resin | 27 | Brushing | very good |
| Inv. Example1760 | 1.4 | FC | 160.57 | 1.24 | 7.42 | 1.3 | Existence | Existence | 10.5 | 1:6 | 0.20 | 63 | epoxy-based resin | 180 | Brushing | very good |
| Inv. Example1761 | 4.2 | FC | 14.1 | 1.11 | 0.02 | 1.8 | Existence | Existence | 20.34 | 1:12 | 0.32 | 35 | acryl-based resin | 26 | Spraying | very good |
| Inv. Example1762 | 4.8 | FC | 167.55 | 1.27 | 0.04 | 0.9 | Existence | Existence | 7.9 | 1:5 | 0.80 | 35 | urethane-based resin | 180 | Brushing | very good |
| Inv. Example1763 | 8.1 | FC | 1.45 | 1.31 | 17.5 | 0 | Existence | Existence | 11.6 | 1:33 | 0.24 | 66 | polyester resin | 15 | Spraying | very good |
| Inv. Example1764 | 7.6 | FC | 0.15 | 1.26 | 0.01 | 1.8 | Existence | Existence | 16.9 | 1:9 | 0.76 | 67 | epoxy-based resin | 2 | Spraying | very good |
| Inv. Example1765 | 9.9 | FC | 13.1 | 1.14 | 0.02 | 0.7 | Existence | Existence | 10.5 | 1:18 | 0.52 | 68 | acryl-based resin | 28 | Spraying | very good |
| Inv. Example1766 | 14.8 | FC | 15.5 | 1.34 | 3.8 | 0 | Existence | Existence | 3.9 | 1:38 | 0.36 | 33 | urethane-based resin | 30 | Spraying | very good |
| Inv. Example1767 | 16.7 | FC | 0.67 | 1.16 | 2.9 | 0 | Existence | Existence | 7.5 | 1:117 | 0.14 | 35 | polyester resin | 2 | Spraying | very good |
| Inv. Example1768 | 17.9 | FC | 137.89 | 1.47 | 10.5 | 1.8 | Existence | Existence | 20.34 | 1:42 | 0.42 | 43 | epoxy-based resin | 157 | Brushing | very good |
| Inv. Example1769 | 19.5 | FC | 16.3 | 1.48 | 2.9 | 0.9 | Existence | Existence | 9.8 | 1:1 | 9.75 | 44 | acryl-based resin | 28 | Brushing | very good |
| Inv. Example1770 | 22.4 | FC | 110.38 | 1.49 | 16.8 | 0.7 | Existence | Existence | 6.7 | 1:121 | 0.18 | 42 | urethane-based resin | 130 | Brushing | very good |
| Inv. Example1771 | 0.17 | FC | 12.4 | 1.34 | 2.7 | 1.8 | Existence | Existence | 45.33 | 120:1 | 0.17 | 33 | polyester resin | 29 | Brushing | very good |
| Inv. Example1772 | 8.3 | FC | 17.2 | 1.29 | 0.02 | 0.7 | Existence | No | 43.22 | 1:145 | 0.06 | 30 | epoxy-based resin | 30 | Brushing | very good |
| Inv. Example1773 | 6.5 | FC | 105.23 | 1.18 | 0.02 | 0.7 | Existence | Existence | 11.5 | 1:31 | 0.20 | 35 | acryl-based resin | 120 | Brushing | very good |
| Inv. Example1774 | 9.7 | FC | 177.89 | 1.23 | 0.04 | 0.02 | Existence | Existence | 9.9 | 1:95 | 0.10 | 37 | urethane-based resin | 187 | Brushing | very good |
| Inv. Example1775 | 11.4 | FC | 12.2 | 1.27 | 0.05 | 0.02 | Existence | Existence | 10.5 | 1:33 | 0.34 | 77 | polyester resin | 28 | Spraying | very good |
| Inv. Example1776 | 22.5 | FC | 1.84 | 1.17 | 1.24 | 1.37 | Existence | Existence | 7.6 | 120:1 | 22.31 | 41 | epoxy-based resin | 5 | Spraying | very good |
| Inv. Example1777 | 25.7 | FC | 16.02 | 1.16 | 0.05 | 0.02 | Existence | Existence | 8.2 | 1:28 | 0.89 | 35 | acryl-based resin | 35 | Spraying | very good |
| Inv. Example1778 | 17.9 | FC | 1.75 | 1.49 | 1.24 | 1.37 | Existence | Existence | 9.1 | 1:33 | 0.52 | 58 | urethane-based resin | 5 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table102**

| | Zn-Alloy Particle Properties | | | | | | | | Mean size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base Resin | Ccat Thickness (µm) | Coating Method | |
| Inv. Example1779 | 0.14 | FC | 198.78 | 1.34 | 1.24 | 1.37 | Existence | Existence | 10.6 | 200:1 | 0.14 | 37 | polyester resin | 200 | Brushing | very good |
| Inv, Example1760 | 6.7 | FC | 13.1 | 1.16 | 0.8 | 1.5 | Existence | Existence | 8.4 | 1:4 | 1.34 | 68 | alkali silicate | 25 | Spraying | very good |
| Inv. Example1781 | 7.5 | FC | 15.5 | 1.47 | 0.9 | 1.3 | Existence | Existence | 5.3 | 1:13 | 0.39 | 55 | alkali silicate | 15 | Spraying | very good |
| Inv. Example1782 | 8.4 | FC | 0.67 | 1.48 | 1.1 | 1.8 | Existence | No | 10.9 | 1:7 | 1.05 | 77 | alkyl silicate | 20 | Spraying | very good |
| Inv. Example1783 | 9.3 | FC | 12.2 | 1.49 | 1.8 | 0.9 | Existence | Existence | 7.8 | 1:11 | 0.78 | 43 | alkali silicate | 18 | Spraying | very good |
| Inv. Example1784 | 1.4 | FC | 1.84 | 1.34 | 3.8 | 0.7 | Existence | Existence | 8.9 | 1:2 | 0.47 | 45 | alkyl silicate | 22 | Spaying | very good |
| Inv. Example1785 | 4.2 | FC | 16.02 | 1.29 | 2.9 | 1.8 | Existence | Existence | 7.5 | 1:7 | 0.53 | 66 | alkali silicate | 19 | Spraying | very good |
| Inv. Example1786 | 4.8 | FC | 1.75 | 1.18 | 10.5 | 0.7 | Existence | Existence | 10.9 | 1:2 | 2.40 | 33 | alkyl silicate | 29 | Spraying | very good |
| Inv. Example1787 | 8.1 | FC | 12.4 | 1.23 | 2.9 | 1.5 | Existence | Existence | 9.8 | 1:5 | 1.35 | 56 | alkyli silicate | 23 | Spraying | very good |
| Inv. Example1788 | 7.6 | FC | 17.2 | 1.27 | 16.8 | 1.3 | Existence | Existence | 45.33 | 1:10 | 0.69 | 55 | alkyl silicate | 21 | Spraying | very good |
| Inv. Examle1789 | 9.9 | FC | 13.1 | 1.17 | 2.7 | 1.8 | Existence | Existence | 43.22 | 1:9 | 0.99 | 49 | alkali silicate | 19 | Spraying | very good |
| Inv. Example1790 | 0.4 | FC | 29.9 | 1.16 | 3.6 | 0.9 | Existence | Existence | 5.6 | 240:1 | 0.40 | 77 | alkyl silicate | 15 | Spraying | very good |
| Inv. Example1791 | 10.5 | FC | 0.21 | 1.27 | 0 | 0.7 | Existence | Existence | 11.5 | 120:1 | 10.41 | 41 | alkali silicate | 18 | Spraying | very good |
| Inv. Example1792 | 0.4 | FC | 0.22 | 1.17 | 0.06 | 1.8 | Existence | Existence | 9.9 | 99:1 | 0.40 | 64 | alkyl silicate | 22 | Spraying | very good |
| Inv. Example1793 | 10.5 | FC | 29.5 | 1.27 | 0.02 | 0.7 | Existence | Existence | 10.5 | 1:99 | 0.11 | 58 | alkyl silicate | 21 | Spraying | very good |
| Inv. Example1794 | 0.51 | FC | 29.9 | 1.18 | 1.6 | 1.5 | Existence | Existence | 7.6 | 1:3 | 0.13 | 33 | alkyl silicate | 29 | Spraying | very good |
| Inv. Example1795 | 9.8 | FC | 0.21 | 1.23 | 3.5 | 0 | Existence | Existence | 8.2 | 1:6 | 1.40 | 66 | alkali silicate | 23 | Spraying | very good |
| Inv. Example1796 | 0.52 | FC | 0.22 | 1.27 | 9.8 | 1.8 | Existence | Existence | 9.1 | 1:1 | 0.26 | 55 | alkyl silicate | 21 | Spraying | very good |
| Inv. Example1797 | 9.9 | FC | 29.5 | 1.17 | 11.5 | 0.9 | Existence | No | 10.5 | 1:7 | 1.24 | 49 | alkali silicate | 19 | Spraying | very good |
| Inv. Example1798 | 14.8 | FC | 16.02 | 1.48 | 0.4 | 0.7 | Existence | Existence | 8.4 | 1:5 | 2.47 | 77 | alkyl silicate | 21 | Spraying | very good |
| Inv. Example1799 | 19.9 | FC | 1.75 | 1.49 | 0.6 | 1.8 | Existence | Existence | 5.3 | 1:150 | 0.13 | 43 | alkali silicate | 19 | Spraying | very good |
| Inv. Example1800 | 17.9 | FC | 12.4 | 1.34 | 10.6 | 0.7 | Existence | Existence | 10.9 | 1:55 | 0.32 | 45 | alkyl silicate | 15 | Spraying | very good |
| Inv. Example1801 | 19.5 | FC | 17.2 | 1.29 | 9.5 | 0.7 | Existence | Existence | 7.8 | 1:121 | 0.16 | 66 | alkali silicate | 18 | Spraying | very good |

| | | | | | | | | | | | | | | | | |
|---|---|---|---|---|---|---|---|---|---|---|---|---|---|---|---|---|
| (*1) F : Fracture facets existing, FC ; Fracture facets and/or cracks existing, NO : No fracture facet and/or crack | | | | | | | | | | | | | | | | |

**Table103**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Mg Solid-Solution Phase & Zn-Mg Intermetallic Compounds on Surface of Particles | MgZn₂ or Mg₂Zn₁₁ | | | | Ratio of Metal Particle in Dry Coat (mass %) | Base resin | Coat Thickness (µm) | Coating Method | |
| Comp. Example117 | 2.3 | FC | 205.6 | 1.23 | 12.5 | 0.05 | Existence | No | 10.5 | 1:5 | 0.38 | 77 | alkyl silicate | 25 | Spraying | poor |
| Comp. Example118 | 12.5 | FC | 0.005 | 1.36 | 2.1 | 0 | Existence | Existence | 12.6 | 1:3 | 3.13 | 77 | urethane-based resin | 25 | Spraying | poor |
| Comp. Example119 | 18.9 | FC | 205.6 | 1.11 | 1.5 | 0.05 | Existence | Existence | 7.8 | 1:19 | 0.95 | 43 | alkyl silicate | 105 | Brushing | poor |
| Comp. Example120 | 29.5 | FC | 0.005 | 1.07 | 0.05 | 2.29 | Existence | Existence | 16.8 | 1:100 | 0.29 | 52 | alkali silicate | 165 | Spaying | poor |
| Comp. Example121 | 14.5 | FC | 205.6 | 1.42 | 0 | 0 | Existence | Existence | 10.5 | 1;260 | 0.06 | 66 | alkyl silicate | 25 | Spraying | poor |
| Comp. Example122 | 12.5 | FC | 0.005 | 1.38 | 0 | 0 | Existence | No | 12.6 | 1:3 | 3.13 | 72 | alkyl silicate | 25 | spraying | poor |
| Comp. Example123 | 18.9 | FC | 205.6 | 1.22 | 0.07 | 0 | Existence | Existence | 7.8 | 1:19 | 0.95 | 40 | alkyl silicate | 105 | Brushing | poor |
| Comp. Example124 | 29.5 | FC | 0.005 | 1.14 | 0 | 0.07 | Existence | No | 16.8 | 1:100 | 0.29 | 36 | alkali silicate | 165 | Spraying | poor |
| Comp. Example125 | 2.3 | FC | 10.6 | 1.13 | 0 | 0.02 | Existence | Existence | 10.5 | 1:256 | 0.01 | 32 | alkyl silicate | 25 | Spraying | poor |
| Comp. Example126 | 12.5 | FC | 5.7 | 1.02 | 22.1 | 0 | Existence | Existence | 12.6 | 1:200 | 0.06 | 53 | silicate | 25 | Spraying | poor |
| Comp. Example127 | 0.5 | FC | 6.4 | 1.06 | 25.8 | 0.05 | Existence | No | 7.8 | 1:167 | 0.00 | 67 | alkyl silicate | 105 | Brushing | poor |
| Comp. Example128 | 29.5 | FC | 3.2 | 1.23 | 22.1 | 0 | Existence | Existence | 16.8 | 1:300 | 0.10 | 53 | urethane-based resin | 165 | Spraying | poor |
| Comp. Example129 | 14.5 | FC | 4.5 | 1.36 | 21.5 | 0.05 | Existence | Existence | 10.5 | 1:260 | 0.06 | 67 | alkyl silicate | 25 | Spraying | poor |
| Comp. Example130 | 9.8 | FC | 5.2 | 1.11 | 0.05 | 2.29 | No | No | 12.6 | 1:100 | 0.10 | 72 | alkyl silicate | 25 | Spraying | poor |
| Comp. Example131 | 4.6 | NO | 1.9 | 10.07 | 0 | 0 | Existence | Existence | 7.8 | 1:47 | 0.10 | 77 | alkyl silicate | 105 | Bushing | poor |
| Comp. Example132 | 3.2 | FC | 18.5 | 1.42 | 0 | 0 | Existence | No | 26.8 | 1:32 | 0.10 | 34 | urethane-based resin | 55 | Spraying | poor |
| Comp. Example133 | 29.9 | FC | 12.5 | 1.38 | 0.07 | 0 | Existence | Existence | 12.6 | 1:345 | 0.09 | 43 | alkyl silicate | 28 | Spraying | poor |
| Comp. Example136 | 7.6 | NO | 9.8 | 1.22 | 0 | 0.07 | Existence | Existence | 7.8 | 1:390 | 0.02 | 52 | alkyl silicate | 15 | Spraying | poor |
| Comp. Example135 | 29.9 | FC | 7.6 | 1.14 | 0 | 0.C07 | Existence | Existence | 16.8 | 1:301 | 0.10 | 66 | alkyl silicate | 14 | Spraying | poor |
| Comp. Example136 | 0.6 | FC | 6.9 | 1.13 | 36.5 | 3.25 | Existence | Existence | 10.5 | 1:333 | 0.00 | 72 | urethane-based resin | 118 | Brushing | poor |
| Comp. Example137 | 4.5 | FC | 10.5 | 1.02 | 0.005 | 0 | Existence | Existence | 12.6 | 1:325 | 0.01 | 40 | alkyl silicate | 22 | Spraying | poor |
| Comp. Example138 | 3.7 | FC | 12.6 | 1.06 | 22.1 | 0 | Existence | Existence | 7.8 | 1:456 | 0.01 | 36 | alkyl silicate | 54 | Spraying | poor |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table104**

| | Zn-Alloy Particle Properties | | | | | | | | Mean Size of Zn Metallic particle (µm) | Blend Ratio (Zn Alloy particle : Zn Ketal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₂Zn₃ | | | | Ratio of Metal Particle in Dry Coat (mass %) | Base Resin | Coat Thickness (µm) | Coating Method | |
| Inv. Example2576 | 7.5 | FC | 5.07 | 1.42 | 0 | 0 | Existence | Existence | 23.43 | 0.71 | 10.5 | 74 | alkali silicate | 24 | Brushing | very good |
| Inv. Example2577 | 8.06 | FC | 7.72 | 1.38 | 0 | 0 | Existence | Existence | 5.96 | 0.64 | 12.5 | 82 | alkyl silicate | 25 | Spraying | very good |
| Inv. Example2576 | 9.3 | FC | 8.32 | 1.22 | 0 | 0 | Existence | No | 10.64 | 6.20 | 1.5 | 37 | alkali silicate | 14 | Spraying | very good |
| Inv. Example2579 | 3.5 | FC | 3.04 | 1.02 | 0 | 0 | Existence | Existence | 16.5 | 3.89 | 0.9 | 48 | alkali silicate | 15 | Spraying | very good |
| Inv. Example2580 | 2.7 | FC | 4.12 | 1.21 | 0 | 0 | Existence | No | 7.95 | 0.26 | 10.5 | 32 | alkali silicate | 15 | Spraying | very good |
| Inv. Example2581 | 9.2 | FC | 7.81 | 1.47 | 0 | 0 | Existence | Existence | 7.95 | 0.03 | 299.5 | 45 | alkyl silicate | 15 | Brushing | very good |
| Inv. Example2582 | 8.1 | FC | 1.45 | 1.31 | 0 | 0 | Existence | No | 9.64 | 15.20 | 0.5 | 37 | epoxy-based | 5 | Spraying | good |
| Inv. Example2583 | 7.5 | FC | 9.6 | 1.07 | 0 | 0 | Existence | Existence | 0.96 | 28.85 | 0.26 | 72 | urethane-based resin | 150 | Spraying | very good |
| Inv. Example2584 | 4.6 | FC | 8.5 | 1.42 | 0 | 0 | Existence | No | 5.26 | 15.00 | 0.3 | 40 | alkali silicate | 18 | Spraying | very good |
| Inv. Example2585 | 3.6 | FC | 3.2 | 1.05 | 0 | 0 | Existence | No | 13.5 | 1.20 | 3 | 40 | alkali silicate | 18 | Spraying | very good |
| Inv. Example2586 | 4.2 | FC | 5.7 | 1.02 | 1.5 | 0 | Existence | Exisitence | 13.5 | 0.20 | 20.5 | 72 | alkyl silicate | 58 | Spraying | verygood |
| Inv. Example2587 | 4.3 | FC | 6.4 | 1.05 | 5.5 | 1.6 | Existence | No | 9.64 | 1.02 | 4.2 | 40 | alkyl silicate | 21 | Spraying | very good |
| Inv. Example2588 | 4 | FC | 3.2 | 1.05 | 0 | 0 | Existence | Existence | 15.5 | 2.67 | 1.5 | 36 | alkali silicate | 19 | Brushing | very good |
| Inv. Example2589 | 6.4 | FC | 5.2 | 1.33 | 0 | 0 | Exisitence | Existence | 20.59 | 1.28 | 5 | 53 | alkyl silicate | 77 | Spraying | very good |
| Inv. Example2590 | 9.8 | FC | 5.2 | 1.33 | 0 | 0 | Existence | No | 0.96 | 0.63 | 15.6 | 53 | alkyl silicate | 77 | Spraying | very good |
| Inv. Example2591 | 7.5 | FC | 5.07 | 1.42 | 0 | 0 | Existence | No | 6.54 | 15.00 | 0.5 | 66 | alkali silicate | 13 | Brushing | very good |
| Inv. Example2592 | 8.4 | FC | 7.72 | 1.33 | 0.5 | 0 | Existence | Existence | 5.26 | 4.42 | 1.9 | 67 | alkyl silicate | 22 | Brushing | very good |
| Inv. Example2593 | 2.7 | FC | 4.12 | 1.21 | 0 | 0 | Existence | No | 10.64 | 1.69 | 1.6 | 57 | alkali silicate | 15 | Spraying | very good |
| Inv. Example2534 | 2.64 | FC | 5.5 | 1.22 | 0 | 0 | Existence | No | 9.64 | 1.06 | 2.5 | 43 | alkyl silicate | 16 | Spraying | very good |
| Inv. Example2595 | 1.59 | FC | 6.7 | 1.14 | 0 | 0 | Existence | Existence | 6.9 | 3.18 | 0.5 | 76 | alkyl silicate | 5 | Spraying | very good |
| Inv. Example2596 | 2.58 | FC | 8.9 | 1.13 | 0 | 0 | Existence | Existence | 10.5 | 0.52 | 5 | 49 | alkyl silicate | 22 | Spraying | very good |
| Inv. Example2597 | 7.55 | FC | 2.15 | 1.14 | 0 | 0 | Existence | Existence | 13.5 | 6.29 | 1.2 | 75 | alkyl silicate | 18 | Spraying | very good |

| | | | | | | | | | | | | | | | | |
|---|---|---|---|---|---|---|---|---|---|---|---|---|---|---|---|---|
| (*1) F: Fracture facets existing, FC : Fracture facets and/or cracks existing, NO : No fracture facet and/or crack | | | | | | | | | | | | | | | | |

**Table105**

| | Zn-Alloy Particles Properties | | | | | | | | Mean Size of Zn Metallic particle (µm) | Blend Ratio (Zn Alloy particule: Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₂Zn₃ | | | | Ratio of Metal Particle in Dry Coat (mass %) | Base Resin | Coat Thickness (µm) | Coating Method | |
| Inv. Example2598 | 8.01 | FC | 2.54 | 1.13 | 0 | 0 | Existence | No | 20.59 | 0.94 | 8.5 | 73 | alkyl silicate | 16 | Spraying | very good |
| Inv. Example2599 | 1.06 | FC | 3.4 | 1.38 | 0 | 0 | Existence | Existence | 7.82 | 0.50 | 2.1 | 49 | alkyl silicate | 8 | Spraying | very good |
| Inv. Example2600 | 2.64 | FC | 5.5 | 1.22 | 0 | 0 | Existence | Existence | 5.26 | 10.56 | 0.25 | 43 | alkyl silicate | 16 | Spraying | very good |
| Inv. Example2601 | 1.59 | FC | 6.7 | 1.14 | 0 | 0 | Exisitence | Exisitence | 7.06 | 1.59 | 1 | 76 | alkyl silicate | 5 | Spraying | very good |
| Inv. Example2602 | 20.5 | FC | 2.15 | 1.14 | 1.5 | 0 | Existence | No | 0.64 | 8.20 | 2.5 | 75 | alkyl silicate | 18 | Spraying | very good |
| Inv. Example2603 | 18.5 | FC | 2.54 | 1.13 | 5.5 | 1.6 | Existence | Existence | 46.8 | 3.70 | 5 | 73 | alkyl silicate | 16 | Spraying | very good |
| Inv. Example2604 | 9.51 | FC | 2.77 | 1.38 | 4.5 | 0 | Existence | Existence | 16.5 | 1.73 | 5.5 | 55 | alkyl silicate | 5 | Spraying | very good |
| Inv. Example2605 | 10.01 | FC | 3.68 | 1.22 | 0 | 1.6 | Existence | Existence | 13.5 | 1.54 | 6.5 | 48 | alkyl silicate | 22 | Spraying | very good |
| Inv. Example2606 | 3.54 | FC | 5.5 | 1.22 | 0 | 0 | Existence | No | 0.96 | 2.36 | 1.5 | 78 | alkyl silicate | 18 | Spraying | very good |
| Inv. Example2607 | 4.05 | FC | 2.06 | 1.13 | 0 | 0 | Existence | Existence | 0.96 | 0.81 | 5 | 52 | alkyl silicate | 8 | Spraying | very good |
| Inv. Example2609 | 8.57 | FC | 4.99 | 1.02 | 0 | 0 | Existence | Existence | 8.45 | 1.53 | 5.6 | 61 | alkyl silicate | 16 | Spraying | very good |
| Inv. Example2609 | 0.02 | FC | 6.4 | 1.06 | 0 | 0 | Existence | No | 2.9 | 0.20 | 0.05 | 77 | polyester resin | 47 | Spraying | very good |
| Inv. Example2610 | 25.5 | FC | 3.09 | 1.07 | 0 | 0 | Existence | Existence | 5.4 | 2.43 | 10.5 | 49 | alkyl silicate | 22 | Spraying | very good |
| Inv. Example2611 | 2.36 | FC | 3.99 | 1.22 | 0 | 0 | Existence | No | 10.6 | 4.72 | 0.5 | 80 | alkyl silicate | 21 | Spraying | very good |
| Inv. Example2612 | 0.05 | FC | 7.72 | 1.38 | 0 | 0 | Existence | Existence | 2.32 | 0.07 | 0.75 | 36 | alkyl silicate | 19 | Brushing | very good |
| Inv. Example2613 | 0.04 | FC | 9.32 | 1.22 | 0 | 0 | Existence | No | 7.6 | 0.20 | 0.2 | 32 | alkyl silicate | 24 | Spraying | very good |
| Inv. Example2614 | 5.22 | FC | 3.55 | 1.12 | 0 | 0 | Existence | Existence | 7.95 | 0.50 | 10.5 | 55 | alkyl silicate | 19 | Spraying | very good |
| Inv. Example2615 | 4.01 | FC | 2.64 | 1.23 | 0 | 0 | Existence | Existence | 20.59 | 10.03 | 0.4 | 40 | alkyl silicate | 8 | Spraying | very good |
| Inv. Example2616 | 0.05 | FC | 5.2 | 1.33 | 0 | 0 | Existence | Existence | 22.5 | 0.06 | 0.9 | 53 | urethane-based resin | 20 | Brushing | very good |
| Inv. Example2617 | 10.5 | FC | 1.9 | 1.27 | 0 | 0 | Existence | Existence | 4.6 | 0.08 | 3.5 | 60 | polyester resin | 200 | Brushing | very good |
| Inv. Example2618 | 0.05 | FC | 2.5 | 1.05 | 0 | 1.2 | Existence | No | 4.9 | 5.00 | 0.01 | 38 | alkali silicate | 19 | Spraying | very good |
| Inv. Example2619 | 10.5 | FC | 0.09 | 1.12 | 0 | 0.6 | Existence | No | 10.5 | 0.08 | 3.5 | 49 | alkyl silicate | 11 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table106**

| | Zn-Alloy Particle Properties | | | | | | | | Mean Size of Zn Metallic particle (µm) | Blend Ratio (Zn Alloy particle: Zn Metal Particle) | Mg Contents to Total Metal Particle (masa %) | Coat Properties | | | | Result Of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass%) | Mg Solid-Solution Phase a Zn-Mg Intermetallic Compounds on Surface of Particles | MgZn₁, Mg₂Zn₁₁, Mg₂Zn₃, ₂Zn_{5/} MgZn, or Mg₂Zn₃ | | | | Ratio of Metal Particle in Dry Coat (mass %) | Base Resin | Coat Thickness (µm) | Coating Method | |
| Inv. Example2620 | 2.64 | FC | 5.5 | 1.22 | 0 | 0.01 | Existence | No | 8.45 | 1.32 | 2 | 43 | alkyl silicate | 15 | Spraying | very good |
| Inv. Example2621 | 0.08 | FC | 5.6 | 1.35 | 1.5 | 0 | Exisitence | Existence | 30.5 | 2.00 | 0.04 | 66 | alkyl silicate | 16 | Brushing | very good |
| Inv. Example2622 | 0.09 | FC | 11.5 | 1.11 | 5.5 | 1.6 | Exisitence | No | 49.5 | 0.09 | 1 | 67 | alkali silicate | 33 | Brushing | very good |
| Inv. Example2623 | 0.05 | FC | 19.5 | 1.07 | 4.5 | 0 | Existence | Existence | 5.9 | 0.10 | 0.5 | 54 | alkyl silicate | 8 | Brushing | good |
| Inv. Example2624 | 1.59 | FC | 6.7 | 1.14 | 0 | 0.1 | Existence | Existence | 4.52 | 0.32 | 5 | 76 | silicate | 5 | Spraying | very good |
| Inv. Example2625 | 2.58 | FC | 8.9 | 1.13 | 0.01 | 0 | Existence | Existence | 5.96 | 0.26 | 10 | 49 | alkyl | 22 | Spraying | very good |
| Inv. Example2626 | 9.8 | FC | 9.32 | 1.21 | 3.2 | 0.9 | Existence | Existence | 5.5 | 0.15 | 3.5 | 32 | alkyl silicate | 23 | Spraying | very good |
| Inv. Example2627 | 0.18 | FC | 10.05 | 1.14 | 0 | 0.5 | Existence | Existence | 3.6 | 0.20 | 0.9 | 53 | epoxy-based resin | 30 | Spraying | very good |
| Inv. Example2628 | 7.55 | FC | 2.15 | 1.14 | 0.2 | 0.1 | Existence | Existence | 16.5 | 2.16 | 3.5 | 75 | alkyl silicate | 18 | Spraying | very good |
| Inv. Example2629 | 0.01 | FC | 0.06 | 1.23 | 1.2 | 0.6 | Existence | No | 12.5 | 20.00 | 0.0005 | 75 | alkali silicate | 5 | Spraying | good |
| Inv. Example2630 | 12.5 | FC | 2.54 | 1.13 | 0.5 | 0 | Existence | Existence | 16.5 | 0.06 | 205.7 | 73 | alkyl silicate | 16 | Spraying | very good |
| Inv. Example2631 | 1.06 | FC | 3.4 | 1.38 | 1.5 | 0.9 | Existence | Existence | 10.9 | 2.12 | 0.5 | 48 | alkyl silicate | 8 | Spraying | very good |
| Inv. Example2632 | 0.04 | FC | 8.5 | 1.42 | 0 | 1.2 | Existence | No | 5.6 | 0.03 | 1.2 | 40 | alkali silicate | 2 | Spraying | very good |
| Inv. Example2633 | 0.06 | FC | 7.72 | 1.38 | 0 | 0.6 | Existence | Existence | 22.6 | 3.00 | 0.02 | 36 | alkyl silicate | 18 | Spraying | very good |
| Inv. Example2634 | 9.51 | FC | 2.77 | 1.38 | 0 | 0.01 | Existence | No | 20.59 | 0.88 | 10.8 | 55 | alkyl silicate | 5 | Spraying | very good |
| Inv. Example2635 | 15.5 | FC | 3.68 | 1.22 | 1.5 | 0 | Existence | Existence | 20.59 | 0.10 | 152.3 | 48 | alkyl silicate | 22 | Spraying | very good |
| Inv. Example2636 | 0.05 | FC | 10.6 | 1.13 | 5.5 | 1.6 | Existence | No | 9.56 | 0.10 | 0.5 | 67 | acryl-based resin | 77 | Brushing | very good |
| Inv. Example2637 | 8.8 | FC | 5.7 | 1.02 | 4.5 | 0 | Existence | No | 5.9 | 0.12 | 2.5 | 72 | urethane-based resin | 54 | Brushing | very good |
| Inv. Example2638 | 3.54 | FC | 5.5 | 1.22 | 0 | 0.1 | Existence | Existence | 6.54 | 0.71 | 5 | 78 | alkyl silicate | 19 | Spraying | very good |
| Inv. Example2639 | 10.5 | FC | 3.2 | 1.05 . | 0.01 | 0 | Existence | Existence | 21.4 | 0.20 | 9 | 34 | epoxy-based resin | 43 | Spraying | very good |
| Inv. Example2640 | 0.07 | FC | 4.5 | 1.24 | 3.2 | 0.9 | Existence | Existence | 9.8 | 0.70 | 0.1 | 43 | acryl-based resin | 52 | Brushing | very good |
| Inv. Example2641 | 15.5 | FC | 2.54 | 1.14 | 0 | 0.5 | Existence | No | 6.59 | 17.22 | 0.9 | 45 | alkyl silicate | 19 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table107**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₂Zn₃ | | | | Ratio of Metal Particle in Dry Coat (mass %) | Base Resin | Coat Thickness (µm) | Coating Method | |
| Inv. Example2642 | 4.05 | FC | 2.06 | 1.13 | 0.2 | 0.1 | Existence | Existence | 6.54 | 0.40 | 10.2 | 52 | polyester resin | 8 | Spraying | very good |
| Inv. Example2643 | 8.57 | FC | 4.99 | 1.02 | 1.2 | 0.6 | Existence | No | 16.5 | 0.07 | 120.5 | 61 | polyester resin | 16 | Spraying | very good |
| Inv. Example2644 | 5.8 | FC | 6.4 | 1.06 | 0.5 | 0 | Existence | Existence | 7.8 | 0.05 | 2.5 | 77 | alkyl silicate | 20 | Spraying | very good |
| Inv. Example2645 | 4.59 | FC | 3.09 | 1.07 | 1.5 | 0.9 | Existence | No | 16.5 | 0.72 | 6.4 | 49 | alkyl silicate | 22 | Spraying | very good |
| Inv. Example2646 | 9.88 | FC | 4.66 | 1.42 | 0 | 1.2 | Existence | No | 6.54 | 0.48 | 20.4 | 79 | alkyl silicate | 18 | Spraying | very good |
| Inv. Example2647 | 4.55 | FC | 4.09 | 1.38 | 0 | 0.6 | Existence | Existence | 8.45 | 0.54 | 8.5 | 76 | alkyl silicate | 18 | Spraying | very good |
| Inv. Example2648 | 2.36 | FC | 3.99 | 1.22 | 0 | 0.01 | Existence | No | 8.5 | 2.36 | 1 | 80 | alkyl silicate | 21 | Spraying | very good |
| Inv. Example2543 | 0.05 | FC | 7.72 | 1.38 | 1.5 | 0 | Existence | Existence | 13.6 | 0.71 | 0.07 | 36 | alkyl silicate | 19 | Brushing | very good |
| Inv. Example2650 | 0.04 | FC | 8.32 | 1.22 | 5.5 | 1.6 | Existence | Existence | 12.33 | 0.04 | 1.1 | 32 | alkyl silicate | 24 | Spraying | very good |
| Inv. Example2651 | 2.64 | FC | 4.55 | 1.11 | 4.5 | 0 | Existence | No | 16.5 | 0.59 | 4.5 | 43 | alkyl silicate | 5 | Spraying | very good |
| Inv. Example2652 | 0.96 | FC | 10.6 | 1.13 | 0 | 0.1 | Existence | No | 7.9 | 0.12 | 0.5 | 67 | alkyl silicate | 7 | Spraying | very good |
| Inv. Example2653 | 0.18 | FC | 5.7 | 1.02 | 0.01 | 0 | Existence | Existence | 10.5 | 0.26 | 0.7 | 72 | epoxy-based resin | 100 | Spraying | very good |
| Inv. Example2654 | 6.31 | FC | 3.52 | 1.27 | 3.2 | 0.9 | Existence | No | 16.5 | 12.62 | 0.5 | 51 | alkyl silicate | 21 | Spraying | very good |
| Inv. Example2655 | 5.22 | FC | 3.55 | 1.12 | 0 | 0.5 | Existence | No | 10.64 | 2.09 | 2.5 | 55 | alkyl silicate | 19 | Spraying | very good |
| Inv. Example2656 | 28.5 | FC | 2.64 | 1.23 | 0.2 | 0.1 | Existence | Existence | 10.5 | 0.93 | 30.5 | 40 | alkyl silicate | 8 | Spraying | very good |
| Inv. Example2657 | 3.52 | FC | 3.15 | 1.36 | 1.2 | 0.6 | Existence | Existence | 20.59 | 14.08 | 0.25 | 51 | alkyl silicate | 16 | Spaying | very good |
| Inv. Example2658 | 9.5 | FC | 5.2 | 1.33 | 0.5 | 0 | Existence | Existence | 8.5 | 5.00 | 2.4 | 53 | alkyl silicate | 20 | Brushing | very good |
| Inv. Example2659 | 0.04 | FC | 1.9 | 1.27 | 1.5 | 0.9 | Existence | No | 0.5 | 0.01 | 7.5 | 60 | polyester resin | 200 | Brushing | very good |
| Inv. Example2660 | 0.06 | FC | 10.5 | 1.12 | 0 | 1.2 | Existence | Existence | 10.5 | 0.02 | 3.5 | 77 | alkyl silicate | 25 | Spraying | very good |
| Inv. Example2661 | 0.05 | FC | 12.5 | 1.23 | 0 | 0.6 | Existence | Existence | 11.5 | 0.01 | 3.3 | 43 | alkali silicate | 14 | Spraying | very good |
| Inv. Example2662 | 5.6 | FC | 18.5 | 1.36 | 0 | 0.01 | Existence | Existence | 36.5 | 0.09 | 2.5 | 52 | urethane-based resin | 112 | Spraying | very good |
| Inv. Example2663 | 0.01 | FC | 11.5 | 1.11 | 1.5 | 0 | Existence | No | 1.5 | 0.01 | 0.7 | 66 | alkali silicate | 24 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

**Table108**

| | Zn-Alloy Particle Properties | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₁Zn₁₁, Mg₂Zn₃, MgZn, or Mg₁Zn₃ | | | | Ratio of Metal Particle in Dry Coat (mass %) | Base Resin | Coat Thickness (µm) | Coating Method | |
| Inv. Example2664 | 0.08 | FC | 9.6 | 1.07 | 5.5 | 1.6 | Existence | Existence | 8.7 | 0.04 | 1.9 | 72 | urethane-based resin | 150 | Spraying | very good |
| Inv. Example2665 | 0.03 | FC | 8.5 | 1.42 | 4.5 | 0 | Existence | Existence | 7.8 | 0.01 | 4.5 | 40 | alkali silicate | 18 | Spraying | very good |
| Inv. Example2666 | 4.25 | FC | 2.36 | 1.33 | 0 | 0.1 | Existence | Existence | 5.96 | 14.17 | 0.3 | 44 | alkyl silicate | 18 | Spraying | very good |
| Inv. Example2667 | 0.04 | FC | 23.5 | 1.42 | 0.01 | 0 | Existence | No | 0.06 | 0.50 | 0.08 | 44 | alkali silicate | 38 | Spraying | very good |
| Inv. Example2668 | 0.06 | FC | 101.5 | 1.38 | 3.2 | 0.9 | Existence | Existence | 0.9 | 1.20 | 0.05 | 36 | alkyl silicate | 18 | Spraying | very good |
| Inv. Example2669 | 0.06 | FC | 55.4 | 1.38 | 0 | 0.5 | Existence | Existence | 3.6 | 12.00 | 0.005 | 76 | alkyl silicate | 10 | Spraying | very good |
| Inv. Example2670 | 0.07 | FC | 10.5 | 1.12 | 0.2 | 0.1 | Existence | No | 10.5 | 0.03 | 2.8 | 77 | alkyl silicate | 37 | Spraying | verygood |
| Inv. Example2671 | 0.01 | FC | 12.5 | 1.23 | 1.2 | 0.6 | Existence | Existence | 0.05 | 0.02 | 0.6 | 43 | alkali silicate | 2 | Spraying | good |
| Inv. Example2672 | 0.08 | FC | 18.5 | 1.36 | 0.5 | 0 | Existence | No | 2.32 | 0.08 | 1 | 52 | alkyl silicate | 160 | Brushing | very good |
| Inv. Example2673 | 0.08 | FC | 11.5 | 1.11 | 1.5 | 0.9 | Existence | Existence | 20.4 | 1.00 | 0.09 | 66 | alkali silicate | 5 | Brushing | very good |
| Inv. Example2674 | 0.05 | FC | 9.6 | 1.07 | 0.5 | 0 | Existence | No. | 7.34 | 0.01 | 3.4 | 72 | alkyl silicate | 56 | Brushing | very good |
| Inv. Example2675 | 0.06 | FC | 10.05 | 1.14 | 1.5 | 0.9 | Existence | Existence | 9.4 | 0.04 | 1.5 | 53 | urethane-based resin | 99 | Spraying | very good |
| Inv. Example2676 | 29.9 | FC | 10.5 | 1.36 | 0 | 0 | Existence | Existence | 16.5 | 0.15 | 200 | 55 | urethane-based resin | 700 | Spraying | very good |
| Inv. Example2677 | 16.5 | FC | 7.5 | 1.11 | 0.01 | 0 | Existence | Existence | 7.9 | 1.10 | 15 | 47 | alkyl silicate | 554 | Spraying | very good |
| Inv. Example2678 | 12.5 | FC | 2.6 | 1.07 | 3.2 | 0.9 | Existence | No | 10.5 | 2.50 | 5 | 79 | urethane-based resin | 688 | Brushing | very good |
| Inv. Example2679 | 9.8 | FC | 3.5 | 1.42 | 0 | 0.5 | Existence | Existence | 16.5 | 6.53 | 1.5 | 42 | urethane-based resin | 421 | Spraying | very good |
| Inv. Example2680 | 9.6 | FC | 4.5 | 1.33 | 0.2 | 0.1 | Existence | No | 8.5 | 0.12 | 78 | 36 | urethane-based resin | 651 | Spraying | very good |
| Inv. Example2681 | 7.5 | FC | 1.6 | 1.42 | 0 | 0.5 | Existence | Existence | 10.5 | 1.50 | 5 | 53 | urethane-based resin | 402 | Brushing | very good |
| Inv. Example2682 | 4.6 | FC | 2.5 | 1.12 | 5.8 | 0.1 | Existence | Existence | 5.8 | 0.44 | 10.5 | 55 | alkali silicate | 354 | Spraying | very good |
| Inv. Example2683 | 3.8 | FC | 23.5 | 1.23 | 1.2 | 0.6 | Existence | Existence | 1.2 | 1.52 | 2.5 | 42 | urethane-based resin | 504 | Brushing | very good |
| Inv. Example2684 | 0.05 | FC | 9.9 | 1.27 | 15.5 | 0 | Existence | Existence | 15.5 | 0.05 | 1 | 76 | urethane-based resin | 666 | Spraying | very good |

| | | | | | | | | | | | | | | | | |
|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | |

### Example 8

Zn alloy particles with the chemical ingredients shown in Tables 109 to 125 were produced in the same way as in Example 5. The rest is the same as Example 5.

MgZn₂, Mg₂Zn₁₁, Mg₂Zn₃, MgZn, and Mg₇Zn₃ were identified by analysis of the ratio of composition of the Mg and Zn at the physical fracture facets or crack surfaces by the X-ray diffraction method or by observation by a scanning electron microscopy with an energy dispersion type X-ray analyzer.

The number of facets of the Zn alloy particles was identified by observation of 50 to 100 randomly extracted particles using a scan type electron microscope.

From Tables 109 to 125, it is learned that due to the surfaces of the particles including fractured parts and/or cracks having as intermetallic compounds one or more types of compounds of MgZn₂, Mg₂Zn₁₁, Mg₂Zn₃, MgZn, and Mg₇Zn₃ or due to the number of facets being two facets or more, the painting test pieces using the Zn alloy particles and Zn metal particles of the present invention are improved in corrosion resistance and rust protection regardless of the type of base resin, that is, both for inorganic-based and organic-based binders.

**Table109**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facat &/or Cracks | Mean Size (µm) | Average Value of Aspect Ratio | Al (mass %) | Si (mass %) | Phase & Zn-Mg Intermetallic Compounds on Surface of Particles | MgZn₂ or Mg₂Zn₁₁ | # of facets | | | | Ratio of Metal Particle in Dry Coat (mass %) | Base Resin | Coat Thickness (µm) | Coating Method | |
| Inv. Example329 | 17.3 | F | 29.24 | 1.37 | 11.4 | 0.24 | Existence | No | 6 | 18.54 | 70:1 | 17.06 | 52 | alkali silicate | 30 | Spraying | very good |
| Inv. Example330 | 18.5 | F | 1.28 | 1.10 | 0.04 | 0.03 | Existence | No | 7 | 5.42 | 300:1 | 18.44 | 34 | alkyl silicate | 15 | Spraying | very good |
| Inv. Example331 | 19.3 | F | 33.57 | 1.04 | 0.25 | 0.07 | Existence | No | 7 | 7.54 | 100:1 | 19.11 | 43 | alkali silicate | 42 | Brushing | very good |
| Inv. Example332 | 3.5 | F | 3.04 | 1.02 | 5.43 | 0.65 | Existence | No | 6 | 2.04 | 250:1 | 3.49 | 53 | alkyl silicate | 5 | Brushing | very good |
| Inv. Example333 | 22.5 | F | 7.54 | 1.01 | 17.5 | 2.41 | Existence | No | 6 | 8.54 | 50:1 | 22.06 | 60 | alkali silicate | 12 | Brushing | very good |
| Inv. Example334 | 23.7 | F | 68.12 | 1.08 | 0.01 | 0.08 | Existence | No | 6 | 38.54 | 30:1 | 22.94 | 68 | alkyl silicate | 75 | Brushing | very good |
| Inv. Example335 | 24.2 | F | 0.52 | 1.14 | 0.02 | 2.23 | Existence | No | 6 | 2.05 | 20:1 | 23.05 | 61 | alkali silicate | 2 | Spraying | very good |
| Inv. Example336 | 0.2 | F | 0.12 | 1.23 | 0.02 | 0.06 | Existence | No | 7 | 6.04 | 65:1 | 0.20 | 59 | alkyl silicate | 10 | Spraying | very good |
| Inv. Example337 | 27.1 | F | 58.74 | 1.33 | 0.04 | 0.02 | Existence | No | 6 | 27.85 | 300:1 | 27.01 | 39 | alkali silicate | 75 | Brushing | very good |
| Inv. Example338 | 29.3 | F | 13.57 | 1.37 | 0.05 | 0.02 | Existence | No | 7 | 5.44 | 150:1 | 29.11 | 42 | alkyl silicate | 20 | Spraying | very good |
| Inv. Example339 | 0.5 | F | 6.4 | 1.44 | 1.24 | 1.37 | Existence | No | 7 | 7.55 | 70:1 | 0.49 | 48 | alkali silicate | 18 | Spraying | very good |
| Inv. Example340 | 2.7 | F | 41.23 | 1.21 | 27.5 | 2.43 | Existence | No | 6 | 31.47 | 65:1 | 2.66 | 44 | alkyl silicate | 52 | Brushing | very good |
| Inv. Example341 | 28.4 | F | 0.72 | 1.22 | 0.01 | 0.02 | Existence | No | 7 | 3.24 | 65:1 | 27.97 | 72 | alkali silicate | 5 | Spraying | very good |
| Inv. Example342 | 8.7 | F | 1.18 | 1.23 | 0.01 | 0.01 | Existence | No | 6 | 6.54 | 160:1 | 8.65 | 40 | alkyl silicate | 13 | Spraying | very good |
| Inv. Example343 | 9.2 | F | 7.12 | 1.47 | 0.02 | 0.05 | Existence | No | 7 | 13.45 | 100:1 | 9.11 | 36 | alkali silicate | 24 | Spraying | very good |
| Inv. Example344 | 17.8 | F | 8.01 | 1.01 | 0.03 | 0.04 | Existence | No | 6 | 5.64 | 50:1 | 17.45 | 32 | alkyl silicate | 19 | Spraying | very good |
| Inv. Example345 | 20.2 | F | 0.34 | 1.04 | 7.78 | 0.24 | Existence | No | 7 | 3.48 | 85:1 | 19.97 | 53 | alkali silicate | 6 | Spraying | very good |
| Inv. Example346 | 0.4 | F | 87.65 | 1.05 | 0.04 | 0.06 | Existence | No | 6 | 36.47 | 70:1 | 0.39 | 67 | alkyl silicate | 95 | Brushing | very good |
| Inv. Example347 | 13.7 | F | 2.59 | 1.12 | 11.21 | 0.74 | Existence | No | 6 | 7.44 | 1:99 | 0.16 | 72 | alkali silicate | 15 | Brushing | very good |
| Inv. Example348 | 14.7 | F | 93.45 | 1.11 | 0.09 | 0.01 | Existence | No | 7 | 6.21 | 1:60 | 0.24 | 73 | alkyl silicate | 100 | Brushing | very good |
| Inv. Example349 | 2.4 | F | 9.84 | 1.08 | 5.41 | 1.27 | Existence | No | 6 | 3.33 | 1:15 | 0.15 | 54 | alkali silicate | 20 | Brushing | very good |
| Inv. Example350 | 4.5 | F | 5.45 | 1.47 | 0.02 | 0.03 | Existence | No | 6 | 4.56 | 90:1 | 4.45 | 62 | alkyl silicate | 18 | Spraying | very good |
| Inv. Example351 | 0.1 | F | 1.08 | 1.50 | 0.02 | 0.07 | Existence | No | 6 | 4.57 | 120:1 | 0.10 | 68 | alkali silicate | 13 | Spraying | very good |
| Inv. Example352 | 30.0 | F | 180.24 | 1.13 | 0.03 | 0.08 | Existence | Existence | 7 | 33.47 | 100:1 | 29.70 | 35 | alkyl silicate | 11 | Spraying | very good |
| Inv. Example353 | 24.5 | F | 11.4 | 1.04 | 11.04 | 0.21 | Existence | Existence | 6 | 7.41 | 1:99 | 0.25 | 37 | alkali silicate | 23 | Spraying | very good |
| Inv. Example354 | 27.6 | F | 38.75 | 1.02 | 0.01 | 0.02 | Existence | Existence | 6 | 12.54 | 1:60 | 0.45 | 38 | alkyl silicate | 45 | Brushing | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table110**

| | Zn-Alloy Particle Properties Mg Solid-Solution | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Rg Solid-Solution Phase & Zn-Mg Intermetallic Compounds on Surface of Articles | MgZn₂ or Mg₂Zn₂₂ | % of facets | | | | Ratio of Metal Particle in Dry Coat (mass %) | Base Resin | Coat Thickness (µm) | Coating Method | |
| Inv. Example355 | 4.1 | F | 119.37 | 1.08 | 0.07 | 0.04 | Existence | Existence | 6 | 2.37 | 1:15 | 0.26 | 35 | alkali silicate | 130 | Brushing | very good |
| Inv. Example356 | 3.2 | F | 1.42 | 1.15 | 0.08 | 0.01 | Existence | Existence | 7 | 6.65 | 90:1 | 3.16 | 37 | alkyl silicate | 17 | Brushing | very good |
| Inv. Example357 | 2.7 | F | 12.5 | 1.34 | 0.04 | 0.03 | Existence | Existence | 6 | 8.14 | 120:1 | 2.68 | 38 | alkali silicate | 19 | Brushing | very good |
| Inv. Example358 | 0.12 | F | 31.24 | 1.25 | 0.02 | 0.04 | Existence | Existence | 6 | 8.88 | 100:1 | 0.12 | 41 | alkyl silicate | 45 | Brushing | very good |
| Inv. Example359 | 0.22 | F | 152.46 | 1.19 | 0.02 | 0.02 | Existence | Existence | 5 | 24.79 | 1:60 | 0.00 | 54 | epoxy-based resin | 160 | Brushing | very good |
| Inv. Example360 | 0.37 | F | 13.4 | 1.18 | 4.12 | 0.61 | Existence | Existence | 6 | 9.54 | 130:1 | 0.37 | 57 | acryl-based resin | 21 | Spraying | very good |
| Inv. Example361 | 1.4 | F | 1.61 | 1.24 | 0.05 | 0.02 | Existence | Existence | 6 | 3.54 | 160:1 | 1.39 | 59 | urethane-based resin | 15 | Spraying | very good |
| Inv. Example362 | 4.2 | F | 14.1 | 1.11 | 2.14 | 0.74 | Existence | Existence | 7 | 4.11 | 100:1 | 4.16 | 64 | polyester resin | 7 | Spraying | very good |
| Inv. Example363 | 4.8 | F | 1.67 | 1.27 | 0.03 | 0.02 | Existence | Existence | 6 | 3.87 | 50:1 | 4.71 | 66 | epoxy-based resin | 12 | Spraying | very good |
| Inv. Example364 | 8.1 | F | 1.45 | 1.31 | 0.03 | 0.04 | Existence | Existence | 6 | 5.54 | 1:80 | 0.10 | 67 | acryl-based resin | 19 | Spraying | very good |
| Inv. Example365 | 7.6 | F | 14.8 | 1.26 | 0.04 | 0.05 | Existence | Existence | 7 | 11.14 | 1:60 | 0.12 | 75 | urethane-based resin | 25 | Spraying | very good |
| Inv. Example366 | 9.9 | F | 1.31 | 1.14 | 7.54 | 1.24 | Existence | Existence | 6 | 5.78 | 1:15 | 0.62 | 74 | polyester resin | 18 | Spraying | very good |
| Inv. Example367 | 14.8 | F | 15.5 | 1.34 | 0.08 | 0.06 | Existence | Existence | 6 | 22.14 | 90:1 | 14.64 | 77 | epoxy-based resin | 30 | Spraying | very good |
| Inv. Example368 | 16.7 | F | 0.67 | 1.16 | 0.01 | 0.07 | Existence | Existence | 6 | 2.04 | 120:1 | 16.56 | 41 | acryl-based resin | 2 | Bushing | very good |
| Inv. Example369 | 17.9 | F | 137.89 | 1.47 | 29.8 | 0.75 | Existence | Existence | 7 | 38.47 | 100:1 | 17.72 | 34 | urethane-based resin | 157 | Brushing | very good |
| Inv. Example370 | 19.5 | F | 1.63 | 1.48 | 0.01 | 0.02 | Existence | Existence | 6 | 6.47 | 170:1 | 19.39 | 43 | polyester resin | 13 | Brushing | very good |
| Inv. Example371 | 22.4 | F | 1.12 | 1.49 | 0.03 | 0.01 | Existence | Existence | 7 | 5.22 | 300:1 | 22.33 | 53 | epoxy-based resin | 24 | Brushing | very good |
| Inv. Example372 | 0.17 | F | 169.89 | 1.34 | 0.02 | 0.01 | Existence | Existence | 6 | 32.14 | 200:1 | 0.17 | 60 | acryl-based resin | 180 | Bushing | very good |
| Inv. Example373 | 8.3 | F | 1.72 | 1.29 | 8.04 | 1.24 | Existence | Existence | 6 | 5.22 | 300:1 | 8.27 | 35 | urethane-based resin | 14 | Brushing | very good |
| Inv. Example374 | 6.5 | F | 10.5 | 1.18 | 0.06 | 0.04 | Existence | Existence | 6 | 10.45 | 150:1 | 6.46 | 37 | polyester resin | 22 | Brushing | very good |
| Inv. Example375 | 9.7 | F | 17.7 | 1.23 | 0.08 | 0.02 | Existence | Existence | 6 | 6.87 | 65:1 | 9.55 | 30 | epoxy-based resin | 27 | Brushing | very good |
| Inv. Example376 | 11.4 | F | 122.54 | 1.27 | 0.03 | 0.01 | Existence | Existence | 6 | 24.45 | 300:1 | 11.36 | 80 | acryl-based resin | 135 | Brushing | very good |
| Inv. Example377 | 22.5 | F | 1.84 | 1.17 | 0.04 | 0.03 | Existence | Existence | 6 | 4.47 | 150:1 | 22.35 . | 35 | urethane-based resin | 28 | Spraying | very good |
| Inv. Example378 | 25.7 | F | 19.1 | 1.16 | 7.42 | 1.22 | Existence | Existence | 7 | 12.47 | 70:1 | 25.34 | 42 | polyester resin | 31 | Spraying | very good |
| Inv. Example379 | 17.8 | F | 1.75 | 1.49 | 0.02 | 0.01 | Existence | Existence | 6 | 6.45 | 300:1 | 17.74 | 66 | epoxy-based resin | 16 | Spraying | very good |
| Inv. Example380 | 0.14 | F | 198.78 | 1.34 | 0.08 | 0.02 | Existence | Existence | 6 | 39.45 | 100:1 | 0.14 | 35 | acryl-based resin | 199 | Brushing | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table111**

| | Zn-Alloy Particle Properties | | | | | | | | | Mean Size of Zn Metallic particle (µm) | Blend Ratio (Zr. Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | # of facets | | | | Ratio of Metal Particle in Dry coat (mass %) | Base Resin | Coat Thickness (µm) | Coating Method | |
| Inv. Example1802 | 0.15 | FC | 0.02 | 1.05 | 0.1 | 0.07 | Existence | Existence | 6 | 2.04 | 5:2 | 0.11 | 35 | alkali silicate | 2 | Spraying | very good |
| Inv. Example1803 | 0.19 | FC | 10.5 | 1.12 | 0.04 | 0.1 | Existence | Existence | 6 | 50.00 | 7:1 | 0.17 | 77 | alkyl silicate | 37 | Spraying | very good |
| Inv. Example1804 | 0.18 | FC | 12.5 | 1.23 | 30.0 | 0.01 | Existence | No | 7 | 2.45 | 68:1 | 0.18 | 43 | alkali silicate | 2 | Spraying | good |
| Inv. Example1805 | 0.11 | FC | 18.5 | 1.36 | 0.02 | 3 | Existence | Existence | 7 | 5.33 | 10:1 | 0.10 | 52 | alkyl silicate | 160 | Brushing | very good |
| Inv. Example1806 | 0.15 | FC | 11.5 | 1.11 | 0 | 0 | Existence | No | 6 | 2.41 | 25:7 | 0.12 | 66 | alkali silicate | 5 | Brushing | very good |
| Inv. Example1807 | 0.24 | FC | 9.6 | 1.07 | 0 | 0 | Existence | Existence | 6 | 23.43 | 300:9 | 0.23 | 72 | alkyl silicate | 56 | Brushing | very good |
| Inv. Example1808 | 0.18 | FC | 9.5 | 1.42 | 10.4 | 0.57 | Existence | No | 6 | 6.03 | 180: 1 | 0.18 | 40 | alkali silicate | 2 | Spraying | very good |
| Inv. Example1809 | 0.12 | FC | 7.72 | 1.38 | 4.65 | 2.67 | Existence | Existence | 7 | 24.5 | 23:1 | 0.12 | 36 | alkyl silicate | 18 | Spraying | very good |
| Inv. Example1810 | 0.19 | FC | 8.32 | 1.22 | 24.8 | 2.4 | Existence | No | 6 | 5.32 | 165:1 | 0.19 | 32 | alkyl silicate | 23 | Spraying | very good |
| Inv. Example1811 | 0.18 | FC | 10.05 | 1.14 | 4.52 | 0.57 | Existence | No | 6 | 14.34 | 300:1 | 0.18 | 53 | epoxy-based resin | 30 | Brushing | very good |
| Inv. Example1812 | 0.21 | FC | 10.6 | 1.13 | 17.5 | 2.45 | Existence | Existence | 6 | 3.04 | 120:1. | 0.21 | 67 | acryl-based resin | 77 | Brushing | very good |
| Inv. Example1813 | 0.76 | FC | 5.7 | 1.02 | 0 | 0 | Existence | No | 7 | 2.32 | 2:9 | 0.14 | 72 | urethane-based resin | 54 | Brushing | very good |
| Inv. Example1814 | 0.11 | FC | 6.4 | 1.06 | 11.05 | 0.23 | Existence | existence | 6 | 20.34 | 119:3 | 0.11 | 77 | polyester resin | 47 | Spraying | very good |
| Inv. Example1815 | 0.14 | FC | 3.2 | 1.05 | 2.65 | 0.74 | Existence | Existence | 7 | 12.33 | 233:1 | 0.14 | 34 | epoxy-based resin | 43 | Spaying | very good |
| Inv. Example1816 | 15 | FC | 4.5 | 1.24 | 6.45 | 2.14 | Existence | No | 6 | 17.84 | 1:132 | 0.11 | 43 | acryl-based resin | 52 | Brushing | very good |
| Inv. Example1817 | 14.5 | FC | 5.2 | 1.33 | 0 | 0 | Existence | No | 6 | 6.66 | 1:55 | 10.24 | 53 | urethane-based resin | 20 | Brushing | very good |
| Inv. Example1818 | 18.5 | FC | 1.9 | 1.27 | 0 | 0 | Existence | Existence | 6 | 3.65 | 1:23 | 0.77 | 60 | polyester resin | 200 | Brushing | very good |
| Inv. Example1819 | 15.1 | FC | 0.02 | 1.05 | 0.05 | 0.03 | Existence | No | 7 | 22.62 | 200:1 | 15.02 | 35 | alkali silicate | 22 | Spraying | very good |
| Inv. Example1820 | 15.6 | FC | 10.5 | 1.12 | 0 | 0.08 | Existence | No | 6 | 45.33 | 1:15 | 0.98 | 77 | alkyl silicate | 25 | Spraying | very good |
| Inv. Example1821 | 12.5 | FC | 12.5 | 1.23 | 0.05 | 0 | Existence | Existence | 6 | 43.22 | 1:10 | 1.14 | 43 | alkali silicate | 14 | Spraying | very good |
| Inv. Example1822 | 18.7 | FC | 18.5 . | 1.36 | 0.44 | 0.07 | Existence | Existence | 7 | 12.33 | 1:6 | 2.67 | 52 | urethane-based resin | 112 | Spraying | very good |
| Inv. Example1823 | 14.5 | FC | 11.5 | 1.11 | 0.08 | 0.07 | Existence | Existence | 6 | 13.42 | 1:45 | 0.32 | 66 | alkali silicate | 24 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table112**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | HgZn₂ or Mg₂Zn₁₁ | # of facets | | | | Ratio of Metal Particle in Dry Coat (mass %) | Base Resin | Coat Thickness (µm) | Coating Method | |
| Inv. Example1824 | 7.5 | FC | 9.6 | 1.07 | 0.1 | 0.2 | Existence | No | 7 | 22.32 | 1:50 | 0.15 | 72 | urethane-based resin | 150 | Spraying | very good |
| Inv. Example1825 | 4.5 | FC | 8.5 | 1.42 | 0 | 0 | Existence | Existence | 6 | 7.34 | 1:9 | 0.45 | 40 | alkali silicate | 18 | Spraying | very good |
| Inv. Example1826 | 1.5 | FC | 7.72 | 1.38 | 0 | 0 | Existence | Existence | 6 | 44.54 | 1:7 | 0.19 | 36 | alkyl silicate | 19 | Brushing | very good |
| Inv. Example1827 | 4.8 | FC | 8.32 | 1.22 | 0 | 0.07 | Existence | Existence | 6 | 32.87 | 1:4 | 0.96 | 32 | alkyl silicate | 24 | Spraying | very good |
| Inv. Example1828 | 9.6 | FC | 10.05 | 1.14 | 0 | 0.02 | Existence | No | 6 | 20.32 | 1:14 | 0.64 | 53 | urethane-based resin | 99 | Spraying | very good |
| Inv. Example1829 | 11.5 | FC | 10.6 | 1.13 | 25.8 | 0.05 | Existence | Existence | 7 | 2.03 | 1:11 | 0.96 | 67 | alkyl silicate | 7 | Spraying | very good |
| Inv. Example1830 | 9.8 | FC | 5.7 | 1.02 | 22.1 | 0 | Existence | Existence | 6 | 5.33 | 1:28 | 0.34 | 72 | epoxy-based resin | 100 | Spraying | very good |
| Inv. Example1831 | 7.6 | FC | 6.4 | 1.06 | 21.5 | 0.05 | Existence | Existence | 6 | 2.33 | 1:4 | 1.52 | 77 | alkyl silicate | 27 | Brushing | very good |
| Inv. Example1832 | 3.2 | FC | 3.2 | 1.05 | 0.05 | 2.29 | Existence | No | 6 | 27.44 | 250:1 | 3.19 | 34 | alkali silicate | 15 | Spraying | very good |
| Inv. Example1833 | 1.9 | FC | 4.5 | 1.24 | 0.05 | 0.03 | Existence | Existence | 7 | 12.33 | 1:1 | 0.95 | 43 | alkyl silicate | 14 | Spraying | very good |
| Inv. Examle1834 | 11.5 | FC | 5.2 | 1.33 | 0 | 0.08 | Existence | Existence | 6 | 36.43 | 1:4 | 2.30 | 53 | urethane-based resin | 55 | Spraying | very good |
| Inv. Example1835 | 8.7 | FC | 1.9 | 1.27 | 0 | 0 | Existence | No | 6 | 12.33 | 1:22 | 0.67 | 35 | alkyl silicate | 8 | Spraying | very good |
| Inv. Example1836 | 9.6 | FC | 0.02 | 1.05 | 0 | 0 | Existence | Existence | 7 | 3.21 | 70:1 | 9.46 | 77 | urethane-based resin | 122 | Brushing | very good |
| Inv. Example1837 | 9.4 | FC | 10.5 | 1.12 | 0.08 | 0.07 | Existence | No | 6 | 26.33 | 1:3 | 2.35 | 43 | alkyl silicate | 54 | Spraying | very good |
| Inv. Example1838 | 10.5 | FC | 12.5 | 1.23 | 0.1 | 0.2 | Existence | Existence | 6 | 44.21 | 1:24 | 0.42 | 52 | alkali silicate | 19 | Spraying | very good |
| Inv. Example1839 | 12.6 | FC | 18.5 | 1.36 | 0.05 | 0.2 | Existence | No | 6 | 3.43 | 1:10 | 1.15 | 66 | alkyl silicate | 25 | Brushing | very good |
| Inv. Example1840 | 29.5 | FC | 11.5 | 1.11 | 0.07 | 0 | Existence | Existence | 7 | 47.32 | 300:1 | 29.40 | 72 | alkyl silicate | 58 | Spraying | very good |
| Inv. Example1841 | 29.4 | FC | 9.6 | 1.07 | 0 | 0.07 | Existence | Existence | 7 | 12.33 | 1:66 | 0.44 | 40 | alkyl silicate | 21 | Spraying | very good |
| Inv. Example1842 | 27.5 | FC | 8.5 | 1.42 | 0 | 0.02 | Existence | Existence | 6 | 17.44 | 120:1 | 27.27 | 36 | alkali silicate, | 19 | Brushing | very good |
| Inv. Example1843 | 0.8 | FC | 7.72 | 1.38 | 25.8 | 0.05 | Existence | Existence | 6 | 42.21 | 6:5 | 0.44 | 32 | urethane-based resin | 56 | Spraying | very good |
| Inv. Example1844 | 1.6 | FC | 8.32 | 1.22 | 22.1 | 0 | Existence | No | 7 | 12.34 | 1:1 | 0.80 | 53 | alkyl silicate | 77 | Spraying | very good |
| Inv. Example1845 | 22.9 | FC | 10.05 | 1.14 | 21.5 | 0.05 | Existence | No | 6 | 20.32 | 1:1 | 11.45 | 67 | alkyl silicate | 54 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table113**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solod-Solution Phase & Zn-Mg Intermetallic Compounds on Surface of Particules | MgZn₂ or Kg₂Zn₁₁ | # of facets | | | | Ratio of Metal Particles in Dry Coat (mass %) | Base Resin | Coat Thickness (µm) | Coating Method | |
| Inv. Example1846 | 28.5 | FC | 10.6 | 1.13 | 0.05 | 2.29 | Existence | No | 6 | 23.44 | 1:76 | 0.37 | 72 | alkyl silicate | 54 | Spraying | very good |
| Inv. Example1847 | 29.5 | FC | 5.7 | 1.02 | 0.1 | 0.2 | Existence | Existence | 6 | 23.45 | 1:6 | 4.21 | 77 | alkyl silicate | 34 | Brushing | very good |
| Inv. Example1848 | 18.7 | FC | 6.4 | 1.06 | 0.05 | 0.2 | Existence | No | 7 | 23.21 | 1:35 | 0.52 | 34 | alkali silicate | 28 | Spraying | very good |
| Inv. Example1849 | 19.5 | FC | 3.2 | 1.05 | 0.07 | 0 | Existence | Existence | 6 | 39.44 | 1:5 | 3.25 | 43 | urethene-based resin | 109 | Brushing | very good |
| Inv. Example1850 | 20.4 | FC | 4.5 | 1.24 | 0 | 0.07 | Existence | Existence | 6 | 12.34 | 1:62 | 0.32 | 53 | alkyl silicate | 15 | Spraying | very good |
| Inv. Example1851 | 0.6 | FC | 5.2 | 1.33 | 0 | 0.02 | Existence | Existence | 6 | 29.99 | 1:4 | 0.12 | 72 | alkyl silicate | 14 | Spraying | very good |
| Inv. Example1852 | 0.8 | FC | 1.3 | 1.27 | 22.1 | 0 | Existence | Existence | 7 | 15.21 | 5:9 | 0.29 | 77 | alkyl silicate | 18 | Spraying | very good |
| Inv. Example1853 | 22.5 | FC | 0.02 | 1.05 | 0.1 | 0.07 | Existence | Existence | 6 | 23.34 | 1:220 | 0.10 | 35 | alkali silicate | 2 | Spraying | very good |
| Inv. Example1854 | 20.6 | FC | 10.5 | 1.12 | 0.04 | 0.1 | Existence | Existence | 6 | 2.32 | 1:80 | 0.25 | 77 | alkyl silicate | 37 | Spraying | very good |
| Inv. Example1855 | 21.6 | FC | 12.5 | 1.23 | 30.0 | 0.01 | Existence | No | 7 | 4.21 | 1:50 | 0.42 | 43 | alkali silicate | 2 | Spraying | good |
| Inv. Example1856 | 20.8 | FC | 7.72 | 1.38 | 0 | 0 | Existence | Existence | 7 | 15.21 | 1:10 | 1.89 | 52 | alkyl silicate | 160 | Brushing | very good |
| Inv. Example1857 | 23.6 | FC | 8.32 | 1.22 | 0 | 0 | Existence | Existence | 6 | 23.34 | 1:1 | 11.80 | 66 | alkali silicate | 5 | Brushing | very good |
| Inv. Example1858 | 24.5 | FC | 10.05 | 1.14 | 4.52 | 0.57 | Existence | No | 6 | 2.32 | 1:79 | 0.31 | 72 | alkyl silicate | 56 | Brushing | very good |
| Inv. Example1859 | 18.6 | FC | 10.6 | 1.13 | 17.5 | 2.45 | Existence | Existence | 7 | 4.21 | 1:10 | 1.69 | 40 | alkali silicate | 2 | Spraying | very good |
| Inv. Example1860 | 17.8 | FC | 5.2 | 1.33 | 27.6 , | 2.4 | Existence | No | 6 | 29.99 | 1:50 | 0.35 | 36 | alkyl silicate | 18 | Spraying | very good |
| Inv. Example1861 | 16.5 | FC | 1.9 | 1.27 | 4.32 | 1.07 | Existence | Existence | 6 | 15.21 | 1:10 | 1.50 | 32 | alkyl silicate | 23 | Spaying | very good |
| Inv. Example1862 | 14.5 | FC | 0.02 | 1.05 | 0.05 | 0.03 | Existence | No | 7 | 23.34 | 1:1 | 7.25 | 53 | epoxy-based resin | 30 | Brushing | very good |
| Inv. Example1863 | 19 | FC | 10.5 | 1.12 | 0 | 0.08 | Existence | No | 6 | 2.32 | 1:3 | 4.75 | 67 | acryl-based resin | 77 | Bushing | very good |
| Inv. Example1864 | 15 | FC | 12.5 | 1.23 | 0.05 | 0 | Existence | Existence | 6 | 4.21 | 1:7 | 1.88 | 72 | urethane-based resin | 54 | Brushing | very good |
| Inv. Example1865 | 16.4 | FC | 18.5 | 1.36 | 0.44 | 0.07 | Existence | Existence | 7 | 15.21 | 1:50 | 0.32 | 77 | polyester resin | 47 | Spraying | very good |
| Inv. Example1866 | 13.5 | FC | 11.5 | 1.11 | 0.08 | 0.07 | Existence | Exisitence | 6 | 23.34 | 1:10 | 1.23 | 34 | epoxy-based resin | 43 | Spraying | very good |
| Inv. Example1867 | 10.6 | FC | 11.5 | 1.11 | 8.02 | 2.04 | Existence | No | 6 | 13.45 | 1:3 | 2.65 | 43 | acryl-based resin | 52 | Brushing | very good |

| | | | | | | | | | | | | | | | | | |
|---|---|---|---|---|---|---|---|---|---|---|---|---|---|---|---|---|---|
| (*1) F : Fracture facets exiting, FC : Fracture facets and/or cracks existing, NO : No fracture facet and/or crack | | | | | | | | | | | | | | | | | |

**Table114**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | # of facets | | | | Ratio of Metal Particle in Dry Coat (mass %) | Base Resin | Coat Thiciness (µm) | Coating Method | |
| Inv. Example1863 | 10.7 | FC | 9.6 | 1.07 | 15.6 | 1.27 | Existence | Existence | 6 | 2.34 | 1:10 | 0.97 | 53 | urethhane-based resin | 20 | Brushing | very good |
| Inv. Example1869 | 10.9 | FC | 8.5 | 1.42 | 10.4 | 0.57 | Existence | No | 6 | 28.34 | 1:5 | 1.82 | 60 | polyester resin | 200 | Brushing | very good |
| Inv. Example1870 | 11.6 | FC | 7.72 | 1.38 | 4.65 | 2.67 | Existence | Existence | 7 | 19.87 | 200:1 | 11.54 | 35 | alkali silicate | 22 | Spraying | very good |
| Inv. Example1871 | 14.7 | FC | 8.32 | 1.22 | 24.8 | 2.4 | Existence | No | 6 | 39.74 | 1:8 | 1.63 | 77 | alkyl silicate | 25 | Spraying | very good |
| Inv. Example1872 | 19.5 | FC | 10.05 | 1.14 | 4.52 | 0.57 | Existence | No | 6 | 24.32 | 1:1 | 9.75 | 43 | alkali silicate | 14 | Spraying | very good |
| Inv. Example1873 | 10.2 | FC | 10.6 | 1.13 | 0 | 0 | Existence | Existence | 6 | 22.33 | 1:7 | 1.28 | 52 | urethane-based resin | 112 | Spraying | very good |
| Inv. Example1874 | 4 | FC | 5.7 | 1.02 | 0 | 0 | Existence | No | 7 | 68.54 | 1:3 | 1.00 | 66 | alkali silicate | 24 | Spraying | very good |
| Inv. Example1875 | 7.2 | FC | 6.4 | 1.06 | 11.05 | 0.23 | Existence | Existence | 6 | 23.75 | 1:7 | 0.90 | 72 | urethane-based resin | 150 | Spraying | very good |
| Inv. Example1876 | 3.6 | FC | 3.2 | 1.05 | 2.65 | 0.74 | Existence | Existence | 7 | 15.62 | 1:2 | 1.20 | 40 | alkali silicate | 18 | Spraying | very good |
| Inv. Example1877 | 26.9 | FC | 4.5 | 1.24 | 6.45 | 2.14 | Existence | No | 6 | 2.34 | 117:1 | 26.67 | 36 | alkyl silicate | 19 | Brushing | very good |
| Inv. Example1878 | 27.9 | FC | 5.2 | 1.33 | 27.6 | 2.4 | Existence | No | 6 | 23.04 | 1:270 | 0.10 | 32 | alkyl silicate | 24 | Spraying | very good |
| Inv. Example1879 | 28.9 | FC | 1.9 | 1.27 | 4.32 | 1.07 | Existence | Existence | 6 | 3.05 | 1:117 | 0.24 | 53 | urethane-based resin | 99 | Spraying | very good |
| Inv. Example1880 | 23.8 | FC | 0.02 | 1.05 | 0.05 | 0.03 | Existence | No | 7 | 43.23 | 1:66 | 0.36 | 67 | alkyl silicate | 7 | Spraying | very good |
| Inv. Example1881 | 26.8 | FC | 10.5 | 1.12 | 0 | 0.08 | Existence | No | 6 | 2.04 | 1:109 | 0.24 | 72 | epoxy-based resin | 100 | Spraying | very good |
| Inv. Example1882 | 25.6 | FC | 12.5 | 1.23 | 0.05 | 0 | Existence | Existence | 6 | 50.00 | 250:1 | 25.50 | 77 | alkyl silicate | 27 | Brushing | very good |
| Inv. Example1883 | 29.8 | FC | 18.5 | 1.36 | 0.44 | 0.07 | Existence | Existence | 7 | 2.45 | 70:1 | 29.38 | 34 | alkali silicate | 15 | Spraying | very good |
| Inv. Example1884 | 18.9 | FC | 11.5 | 1.11 | 0.08 | 0.07 | Existence | Existence | 6 | 5.33 | 1:15 | 1.18 | 43 | alkyl silicate | 14 | Spraying | very good |
| Inv. Example1885 | 5.6 | FC | 9.6 | 1.07 | 0.1 | 0.2 | Existence | No | 7 | 2.41 | 1:5 | 0.93 | 53 | urethane-based resin | 55 | Spraying | very good |
| Inv. Example1886 | 4.7 | FC | 8.5 | 1.42 | 0.05 | 0.2 | Existence | Existence | 6 | 23.43 | 2:3 | 1.88 | 35 | alkyl silicate | 8 | Spraying | very good |
| Inv. Example1887 | 6.8 | FC | 7.72 | 1.38 | 0.07 | 0 | Existence | Existence | 6 | 6.03 | 1:9 | 0.68 | 77 | urethane-based resin | 122 | Brushing | very good |
| Inv. Example1888 | 9 | FC | 8.32 | 1.22 | 0 | 0.07 | Existence | Existence | 6 | 24.5 | 1:10 | 0.82 | 43 | alkyl silicate | 54 | Spraying | very good |
| Inv. Example1889 | 2.1 | FC | 10.05 | 1.14 | 0 | 0.02 | Existence | No | 6 | 5.32 | 1:14 | 0.14 | 52 | alkali silicate | 19 | Spraying | very good |

| | | | | | | | | | | | | | | | | | |
|---|---|---|---|---|---|---|---|---|---|---|---|---|---|---|---|---|---|
| (*1) F ; fracture facets existing, FC : Fracture facets and/or cracks existing, NO : No. fracture facet and/or crack | | | | | | | | | | | | | | | | | |

**Table115**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Yg Intermetallic Compounds on Surface of Particles | MgZn₂ or Mg₂Zn₁₂ | # of facets | | | | Ratio of Metal Particle in Dry Coat (mass %) | Base Resin | Coat Thickness (µm) | Coating Method | |
| Inv. Example1890 | 4.8 | FC | 10.6 | 1.13 | 0 | 0 | Existence | Existence | 7 | 14.34 | 1:7 | 0.60 | 66 | alkyl silicate | 25 | Brushing | very good |
| Inv. Example1891 | 4.2 | FC | 5.7 | 1.02 | 0 | 0 | Existence | Existence | 5 | 5.04 | 1:12 | 0.32 | 72 | alkyl silicate | 58 | Spraying | very good |
| Inv. Example1892 | 4.3 | FC | 6.4 | 1.06 | 21.5 | 0.05 | Existence | Existence | 6 | 2.32 | 1:3 | 1.08 | 40 | alkyl silicate | 21 | Spraying | very good |
| Inv. Example1893 | 4 | FC | 3.2 | 1.05 | 0.05 | 2.29 | Existence | No | 6 | 20.34 | 1:7 | 0.50 | 36 | alkali silicate | 19 | Brushing | very good |
| Inv. Example1894 | 3.7 | FC | 4.5 | 1.24 | 0.05 | 0.03 | Existence | Existence | 7 | 12.33 | 1:10 | 0.34 | 32 | urethane-based resin | 56 | Spaying | very good |
| Inv. Example1895 | 6.4 | FC | 5.2 | 1.33 | 0 | 0.08 | Existence | Existence | 6 | 17.84 | 1:1 | 3.20 | 53 | alkyl silicate | 77 | Spraying | very good |
| Inv. Example1896 | 6.9 | FC | 1.9 | 1.27 | 0.05 | 0 | Existence | No | 6 | 6.66 | 1:3 | 1.73 | 67 | silicate | 54 | Spraying | very good |
| Inv. Example1897 | 16.9 | FC | 0.02 | 1.05 | 0.44 | 0.07 | Existence | Existence | 7 | 3.65 | 2:3 | 6.76 | 72 | alkyl silicate | 64 | Spraying | very good |
| Inv. Example1898 | 18.7 | FC | 10.5 | 1.12 | 0.08 | 0.07 | Existence | No | 6 | 22.62 | 1:2 | 6.23 | 77 | alkyl silicate | 34 | Brushing | very good |
| Inv. Example1899 | 24.4 | FC | 12.5 | 1.23 | 0.1 | 0.2 | Existence | Existence | 6 | 45.33 | 1:4 | 4.88 | 34 | silicate silicae | 28 | Spraying | very good |
| Inv. Example1900 | 10.6 | FC | 18.5 | 1.36 | 0 | 0 | Existence | No | 6 | 43.22 | 1:6 | 1.51 | 43 | urethane-based resin | 109 | Brushing | very good |
| Inv. Example1901 | 15.8 | FC | 11.5 | 1.11 | 0 | 0 | Existence | Existence | 7 | 12.33 | 1:115 | 0.14 | 53 | alkyl silicate | 15 | Spraying | very good |
| Inv. Example1902 | 19.5 | FC | 9.6 | 1.07 | 0 | 0.07 | Existence | Existence | 7 | 13.42 | 1:23 | 0.81 | 72 | alkyl silicate | 14 | Spraying | very good |
| Inv. Example1903 | 7.8 | FC | 8.5 | 1.42 | 0 | 0.02 | Existence | Existence | 6 | 22.32 | 1:12 | 0.60 | 77 | alkyl silicate | 18 | Spraying | very good |
| Inv. Example1904 | 4.9 | FC | 7.72 | 1.38 | 25.8 | 0.05 | Existence | Existence | 6 | 7.34 | 1:110 | 0.45 | 77 | urethane-based resin | 122 | Brushing | very good |
| Inv. Example1905 | 10.8 | FC | 8.32 | 1.22 | 22.1 | 0 | Existence | No | 7 | 44.54 | 1:3 | 2.70 | 43 | alkyl silicate | 54 | Spraying | very good |
| Inv. Example1906 | 3.8 | FC | 10.05 | 1.14 | 21.5 | 0.05 | Existence | No | 6 | 32.87 | 1:5 | 0.63 | 52 | alkali silicate | 19 | Spraying | very good |
| Inv. Example1907 | 22.6 | FC | 10.6 | 1.13 | 0.05 | 2.29 | Existence | No | 6 | 20.32 | 1:25 | 0.87 | 66 | alkyl silicate | 25 | Brushing | very good |
| Inv. Example1908 | 27.9 | FC | 5.7 | 1.02 | 0 | 0 | Existence | Existence | 6 | 2.03 | 4:5 | 12.40 | 72 | alkyl silicate | 58 | Spraying | very good |
| Inv. Example1909 | 24.8 | FC | 6.4 | 1.06 | 0 | 0 | Existence | No | 7 | 5.33 | 3:8 | 8.76 | 40 | alkyl silicate | 21 | Spraying | very good |
| Inv. Example1910 | 26.8 | FC | 3.2 | 1.05 | 0.07 | 0 | Existence | Existence | 6 | 2.33 | 9:34 | 5.61 | 36 | alkali silicate | 19 | Brushing | very good |
| Inv. Example1911 | 25.9 | FC | 4.5 | 1.24 | 0 | 0.07 | Existence | Existence | 6 | 27.44 | 7:8 | 12.09 | 32 | urethane-based resin | 56 | Spraying | very good |
| Inv. Example1912 | 9.8 | FC | 5.2 | 1.33 | 0 | 0.02 | Existence | Existence | 6 | 12.33 | 9:17 | 3.39 | 53 | alkyl silicate | 77 | Sprnying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table116**

| | Zn-Alloy Particle Properties | | | | | | | | | Mean Size of Zn Metallic particle (µm) | Blend Ratio (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₁ or Mg₂Zn₁₁ | # of facets | | | | Ratio of Metal Particle in Dry Coat (mass %) | Base Resin | Coat Thickness (µm) | Coating Method | |
| Inv. Example1913 | 5.6 | FC | 1.9 | 1.27 | 22.1 | 0 | Existence | Existence | 7 | 36.43 | 1:1 | 2.80 | 67 | alkyl silicate | 54 | Spraying | very good |
| Inv. Example1914 | 12.3 | FC | 0.02 | 1.05 | 1.24 | 1.8 | Existence | Existence | 7 | 11.9 | 1:31 | 0.38 | 52 | alkali silicate | 2 | Spraying | very good |
| Inv. Example1915 | 0.8 | FC | 27.89 | 1.12 | 1.24 | 0.9 | Existence | Existence | 6 | 10.5 | 1:4 | 0.16 | 55 | alkali silicate | 20 | Spraying | very good |
| Inv. Example1916 | 1 | FC | 0.32 | 1.23 | 0.8 | 0.7 | Existence | No | 7 | 9.8 | 1:1 | 0.50 | 69 | alkali silicate | 5 | Spraying | very good |
| Inv. Example1917 | 2.3 | FC | 11.44 | 1.36 | 0 | 1.8 | Existence | Existence | 6 | 7.9 | 1:7 | 0.29 | 78 | alkyl silicate | 20 | Spraying | very good |
| Inv. Example1918 | 15.6 | FC | 1.05 | 1.11 | 1.1 | 2.41 | Existence | Exisitence | 6 | 11.6 | 1:11 | 1.30 | 42 | alkali silicate | 15 | Brushing | very good |
| Inv. Example1919 | 6.7 | FC | 36.47 | 1.07 | 1.8 | 0.08 | Existence | Existence | 6 | 16.9 | 1:2 | 2.23 | 32 | alkyl silicate | 57 | Brushing | very good |
| Inv. Example1920 | 7.5 | FC | 5.07 | 1.42 | 3.8 | 2.23 | Existence | No | 6 | 20.34 | 1:7 | 0.94 | 66 | alkali silicate | 13 | Brushing | very good |
| Inv. Example1921 | 8.4 | FC | 7.72 | 1.38 | 2.9 | 0.06 | Existence | Existence | 7 | 8.9 | 1:4 | 1.68 | 67 | alkyl silicate | 22 | Brushing | very good |
| Inv. Example1922 | 9.3 | FC | 8.32 | 1.22 | 10.5 | 0.02 | Existence | Existence | 6 | 7.5 | 1:5 | 1.55 | 64 | alkali silicate | 20 | Spraying | very good |
| Inv. Example1923 | 10.4 | FC | 10.05 | 1.14 | 2.9 | 0.02 | Existence | Existence | 6 | 10.9 | 1:10 | 0.95 | 74 | alkyl silicate | 27 | Spraying | very good |
| Inv. Example1924 | 11.2 | FC | 6.08 | 1.13 | 16.8 | 1.37 | Existence | No | 7 | 20.34 | 1:9 | 1.12 | 82 | alkali silicate | 15 | Spraying | very good |
| Inv. Example1925 | 11.7 | FC | 17.89 | 1.02 | 0 | 2.43 | Existence | Existence | 6 | 6.7 | 240:1 | 11.65 | 37 | alkyl silicate | 35 | Spraying | very good |
| Inv. Example1926 | 21.5 | FC | 19.54 | 1.06 | 3.6 | 0.02 | Existence | Existence | 6 | 7.9 | 1:120 | 0.18 | 42 | alkali silicate | 34 | Brushing | very good |
| Inv. Examplel127 | 13.4 | FC | 21.08 | 1.05 | 2.1 | 1.5 | Existence | No | 6 | 5.6 | 99:1 | 13.27 | 66 | alkyl silicate | 45 | Brushing | very good |
| Inv. Example1928 | 14.6 | FC | 23.04 | 1.24 | 0.06 | 1.3 | Existence | Existence | 6 | 11.5 | 1:99 | 0.15 | 48 | alkali silicate | 52 | Brushing | very good |
| Inv. Example1929 | 25.6 | FC | 9.21 | 1.33 | 0.02 | 1.8 | Existence | Existence | 7 | 20.34 | 1:242 | 0.11 | 33 | alkyl silicate | 23 | Brushing | very good |
| Inv. Example1930 | 16.7 | FC | 0.12 | 1.27 | 1.6 | 0.9 | Existence | Existence | 6 | 10.5 | 1:6 | 2.39 | 75 | alkali silicate | 5 | Spraying | very good |
| Inv. Example1931 | 17.3 | FC | 29.24 | 1.37 | 3.5 | 0 | Existence | Existence | 6 | 7.6 | 1:1 | 9.65 | 77 | alkyl silicate | 52 | Brushing | very good |
| Inv. Example1932 | 18.5 | FC | 128.74 | 1.10 | 9.8 | 1.8 | Existence | No | 7 | 8.2 | 1:7 | 2.31 | 66 | alkali silicate | 150 | Brushing | very good |
| Inv. Example1933 | 19.3 | FC | 33.57 | 1.04 | 11.5 | 0.7 | Existence | Existence | 6 | 9.1 | 1:5 | 3.22 | 67 | alkyl silicate | 60 | Brushing | very good |
| Inv. Example1934 | 3.5 | FC | 3.04 | 1.02 | 0.4 | 1.5 | Existence | Existence | 6 | 10.6 | 1:2 | 1.17 | 45 | alkali silicate | 15 | Spraying | very good |
| Inv. Example1935 | 22.5 | FC | 7.54 | 1.01 | 0.6 | 1.3 | Existence | Existence | 6 | 8.4 | 1:221 | 0.10 | 48 | alkyl silicate | 24 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table117**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass | Phase & Si (mass %) | Mg Solid-Solution Phase & Zn-Mg Intermetallic Compounds on Surface of Particles | MgZn₂ or Mg₂Zn₁₁ | # of facets | | | | Ratio of Metal Particle in Dry Coat (mass %) | Base Resin | Coat Thickness (µm) | Coating Method | |
| Inv. Example1936 | 23.7 | FC | 6.91 | 1.08 | 10.6 | 1.8 | Existence | No | 6 | 5.3 | 1:31 | 0.74 | 68 | alkali silicate | 34 | Spraying | very good |
| Inv. Example1937 | 24.2 | FC | 5.25 | 1.14 | 9.5 | 0 | Existence | Existence | 7 | 20.34 | 1:4 | 4.84 | 35 | alkyl silicate | 20 | Brushing | very good |
| Inv. Example1938 | 0.2 | FC | 194.23 | 1.23 | 11.04 | 0.7 | Existence | Existence | 6 | 7.8 | 1:1 | 0.10 | 37 | alkali silicate | 200 | Brushing | very good |
| Inv. Example1939 | 27.1 | FC | 28.74 | 1.33 | 0.01 | 1.8 | Existence | Existence | 6 | 10.5 | 1:7 | 3.39 | 38 | alkyl silicate | 56 | Brushing | very good |
| Inv. Example1940 | 29.3 | FC | 13.57 | 1.37 | 0.07 | 0.7 | Existence | Existence | 7 | 20.34 | 400:1 | 29.23 | 41 | alkali silicate | 34 | Spraying | very good |
| Inv. Example1941 | 0.5 | FC | 0.65 | 1.44 | 1.8 | 1.5 | Existence | Existence | 6 | 7.9 | 1:2 | 0.17 | 54 | alkyl silicate | 2 | Spraying | very good |
| Inv. Example1942 | 2.7 | FC | 4.12 | 1.21 | 0 | 1.3 | Existence | Existence | 6 | 11.6 | 1:300 | 0.01 | 57 | alkali silicate | 15 | Spraying | very good |
| Inv. Example1943 | 28.4 | FC | 0.72 | 1.22 | 2.9 | 1.8 | Existence | Existence | 6 | 16.9 | 1:4 | 5.68 | 59 | alkali silicate | 10 | Spraying | very good |
| Inv. Example1944 | 8.7 | FC | 117.54 | 1.23 | 10.5 | 0.9 | Existence | Existence | 6 | 10.5 | 1:5 | 1.45 | 64 | alkyl silicate | 125 | Brushing | very good |
| Inv. Example1945 | 9.2 | FC | 7.81 | 1.47 | 2.9 | 0.7 | Existence | Existence | 7 | 8.9 | 1:10 | 0.84 | 66 | alkali silicate | 24 | Brushing | very good |
| Inv. Example1946 | 17.8 | FC | 80.25 | 1.01 | 16.8 | 1.8 | Existence | No | 6 | 7.5 | 1:9 | 1.78 | 67 | alkyl silicate | 110 | Brushing | very good |
| Inv. Example1947 | 20.2 | FC | 8.47 | 1.04 | 2.7 | 0.7 | Existence | Existence | 6 | 10.9 | 1:1 | 10.10 | 34 | alkali silicate | 24 | Brushing | very good |
| Inv. Example1948 | 0.4 | FC | 0.87 | 1.05 | 0.04 | 0.7 | Existence | Existence | 7 | 20.34 | 130:1 | 0.40 | 54 | alkyl silicate | 2 | Spraying | very good |
| Inv. Example1949 | 13.7 | FC | 25.78 | 1.12 | 0 | 0.04 | Existence | Existence | 6 | 6.7 | 130:1 | 13.60 | 62 | alkali silicate | 37 | Spraying | very good |
| Inv. Example1950 | 14.7 | FC | 93.45 | 1.11 | 1.24 | 0.05 | Existence | Existence | 6 | 7.9 | 1:31 | 0.46 | 66 | alkyl silicate | 113 | Brushing | very good |
| Inv. Example1951 | 2.4 | FC | 0.97 | 1.08 | 0.05 | 1.24 | Existence | Existence | 6 | 5.6 | 1:1 | 1.20 | 67 | alkali silicate | 2 | Spraying | very good |
| Inv. Example1952 | 4.5 | FC | 54.89 | 1.47 | 1.24 | 0.06 | Existence | Existence | 6 | 20.34 | 2:1 | 3.00 | 68 | alkyl silicate | 75 | Brushing | very good |
| Inv. Example1953 | 0.1 | FC | 10.81 | 1.50 | 1.24 | 0.07 | Existence | Existence | 7 | 9.9 | 300:1 | 0.10 | 33 | alkali silicate | 30 | Brushing | very good |
| Inv. Example1954 | 30.0 | FC | 18.24 | 1.13 | 0 | 0.75 | Existence | Existence | 6 | 10.5 | 1:270 | 0.11 | 35 | alkyl silicate | 34 | Brushing | very good |
| Inv. Example1955 | 24.5 | FC | 114.78 | 1.04 | 0.9 | 1.5 | Existence | Existence | 6 | 7.6 | 1:115 | 0.21 | 43 | epoxy-based resin | 124 | Brushing | very good |
| Inv. Example1956 | 27.6 | FC | 3.87 | 1.02 | 0.03 | 1.3 | Existence | Existence | 7 | 45.33 | 1:29 | 0.92 | 44 | acryl-based resin | 15 | Spraying | very good |
| Inv. Example1957 | 4.1 | FC | 11.94 | 1.08 | 10.5 | 1.8 | Existence | No | 6 | 43.22 | 1:3 | 1.03 | 43 | urethane-based resin | 23 | Spraying | very good |
| Inv. Example1958 | 3.2 | FC | 142.58 | 1.15 | 2.9 | 0.9 | Existence | Existence | 6 | 10.6 | 1:9 | 0.32 | 44 | polyester resin | 157 | Brushing | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table118**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | # of facets | | | | Ratio of Metal Particle in Dry Coat (mass %) | Base Resin | Coat Thickness (µm) | Coating Method | |
| Inv. Example1959 | 2.7 | FC | 12.5 | 1.34 | 16.8 | 0.7 | Existence | Existence | 6 | 20.34 | 1:5 | 0.45 | 54 | epoxy-based resin | 26 | Spraying | very good |
| Inv. Example1960 | 0.12 | FC | 31.24 | 1.25 | 2.7 | 1.8 | Existence | Exisitence | 6 | 5.3 | 100:1 | 0.12 | 79 | acryl-based resin | 38 | Spraying | very good |
| Inv. Example1961 | 0.22 | FC | 152.46 | 1.19 | 0.02 | 0.7 | Existence | Existence | 7 | 10.9 | 1:1 | 0.11 | 73 | urethane-based resin | 160 | Brushing | very good |
| Inv. Example1962 | 0.37 | FC | 13.4 | 1.18 | 0 | 1.5 | Existence | Existence | 6 | 7.8 | 99:1 | 0.37 | 69 | polyester resin | 27 | Brushing | very good |
| Inv. Example1963 | 1.4 | FC | 160.57 | 1.24 | 1.42 | 1.3 | Existence | Existence | 6 | 10.5 | 1:6 | 0.20 | 63 | epoxy-based resin | 180 | Brushing | very good |
| Inv. Example1964 | 4.2 | FC | 14.1 | 1.11 | 0.02 | 1.8 | Existence | Existence | 7 | 20.34 | 1:12 | 0.32 | 35 | acryl-based resin | 26 | Spraying | very good |
| Inv. Example1965 | 4.8 | FC | 167.55 | 1.27 | 0.04 | 0.9 | Existence | Existence | 6 | 7.9 | 1:5 | 0.80 | 35 | urethane-based resin | 180 | Brushing | very good |
| Inv. Example1986 | 8.1 | FC | 1.45 | 1.31 | 17.5 | 0 | Existence | Existence | 6 | 11.6 | 1:33 | 0.24 | 66 | polyester resin | 15 | Spraying | very good |
| Inv. Example1967 | 7.6 | FC | 0.15 | 1.26 | 0.01 | 1.8 | Existence | Existence | 6 | 18.9 | 1:9 | 0.76 | 67 | epoxy-based resin | 2 | Spraying | very good |
| Inv. Example1968 | 9.9 | FC | 13.1 | 1.14 | 0.02 | 0.7 | Existence | Existence | 6 | 10.5 | 1:18 | 0.52 | 68 | acryl-based resin | 28 | Spraying | very good |
| Inv. Example1969 | 14.8 | FC | 15.5 | 1.34 | 3.8 | 0 | Existence | Existence | 7 | 8.9 | 1:38 | 0.38 | 33 | urethane-based resin | 30 | Spraying | very good |
| Inv. Example1970 | 16.7 | FC | 0.67 | 1.16 | 2.9 | 0 | Existence | Existence | 6 | 7.5 | 1:117 | 0.14 | 35 | polyester resin | 2 | Spraying | very good |
| Inv. Example1971 | 17.9 | FC | 137.89 | 1.47 | 10.5 | 1.8 | Existence | Existence | 6 | 20.34 | 1:42 | 0.42 | 43 | epoxy-based resin | 157 | Brushing | very good |
| Inv. Example1972 | 19.5 | FC | 16.3 | 1.48 | 2.9 | 0.9 | Existence | Existence | 7 | 9.8 | 1:1 | 9.75 | 44 | acryl-based resin | 28 | Brushing | very good |
| Inv. Example1973 | 22.4 | FC | 110.38 | 1.49 | 16.8 | 0.7 | Existence | Existence | 6 | 6.7 | 1:121 | 0.18 | 42 | urethane-based resin | 130 | Brushing | very good |
| Inv. Example1974 | 0.17 | FC | 12.4 | 1.34 | 2.7 | 1.8 | Existence | Existence | 6 | 45.33 | 120:1 | 0.17 | 33 | polyester resin | 29 | Brushing | very good |
| Inv. Example1975 | 8.3 | FC | 17.2 | 1.29 | 0.02 | 0.7 | Existence | No | 6 | 43.22 | 1:145 | 0.06 | 30 | epoxy-based resin | 30 | Brushing | very good |
| Inv. Example1976 | 6.5 | FC | 105.23 | 1.18 | 0.02 | 0.7 | Existence | Existence | 6 | 11.5 | 1:31 | 0.20 | 35 | acryl-based resin | 120 | Brushing | very good |
| Inv. Example1977 | 9.7 | FC | 177.89 | 1.23 | 0.04 | 0.02 | Existence | Existence | 7 | 9.9 | 1:95 | 0.10 | 37 | urethane- based resin | 187 | Brushing | very good |
| Inv. Example1978 | 11.4 | FC | 12.2 | 1.27 | 0.05 | 0.02 | Existence | Existence | 6 | 10.5 | 1:33 | 0.34 | 77 | polyester resin | 28 | Spraying | very good |
| Inv. Example1979 | 22.5 | FC | 1.84 | 1.17 | 1.24 | 1.37 | Existence | Existence | 6 | 7.6 | 120:1 | 22.31 | 41 | epoxy-based resin | 5 | Spraying | very good |
| Inv. Example1980 | 25.7 | FC | 16.02 | 1.16 | 0.05 | 0.02 | Existence | Existence | 7 | 8.2 | 1:23 | 0.89 | 35 | acryl-based resin | 35 | Spraying | very good |
| Inv. Example1981 | 17.8 | FC | 1.75 | 1.49 | 1.24 | 1.37 | Existence | Existence | 6 | 9.1 | 1:33 | 0.52 | 58 | urethane-based resin | 5 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table119 Zn-Alloy Particle Properties Coat. Properties**

| | Zn-Alloy Particle Properties | | | | | | | | | Mean Size of Zn Metallic particle (µm) | Blend Ratic (Zn Alloy particle: Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₁₁ | # of facets | | | | Ratio of Metal Particle in Dry Coat (mass %) | Base Resin | Coat Thickness (µm) | Coating Method | |
| Inv. Example1982 | 0.14 | FC | 198.78 | 1.34 | 1.24 | 1.37 | Existence | Existence | 6 | 10.6 | 200:1 | 0.14 | 37 | polyester resin | 200 | Brushing | very good |
| Inv. Example1983 | 6.7 | FC | 13.1 | 1.16 | 0.8 | 1.5 | Existence | Existence | 6 | 8.4 | 1:4 | 1.34 | 68 | alkali silicate | 25 | Spraying | very good |
| Inv. Example1984 | 7.5 | FC | 15.5 | 1.47 | 0.9 | 1.3 | Existence | Existence | 6 | 5.3 | 1:18 | 0.39 | 55 | alkali silicate | 15 | Spraying | very good |
| Inv. Example1935 | 8.4 | FC | 0.67 | 1.48 | 1.1 | 1.8 | Existence | No | 7 | 10.9 | 1:7 | 1.05 | 77 | alkyl silicate | 20 | Spraying | very good |
| Inv. Example1986 | 9.3 | FC | 12.2 | 1.49 | 1.8 | 0.9 | Existence | Existence | 6 | 7.8 | 1:11 | 0.78 | 43 | alkali silicate | 18 | Spraying | very good |
| Inv. Example1987 | 1.4 | FC | 1.84 | 1.34 | 3.8 | 0.7 | Existence | Existence | 6 | 8.9 | 1:2 | 0.47 | 45 | alkyl silicate | 22 | Spraying | very good |
| Inv. Example1988 | 4.2 | FC | 16.02 | 1.29 | 2.9 | 1.8 | Existence | Existance | 7 | 7.5 | 1:7 | 0.53 | 66 | alkali silicate | 19 | Spraying | very good |
| Inv. Example1989 | 4.8 | FC | 1.75 | 1.18 | 10.5 | 0.7 | Existence | Existence | 6 | 10.9 | 1:2 | 2.40 | 33 | alkyl silicate | 29 | Spraying | very good |
| Inv. Example1990 | 8.1 | FC | 12.4 | 1.23 | 2.9 | 1.5 | Existence | Existence | 6 | 9.8 | 1:5 | 1.35 | 66 | alkali silicate | 23 | Spraying | very good |
| In. Example1991 | 7.6 | FC | 17.2 | 1.27 | 16.8 | 1.3 | Existence | Existence | 6 | 45.33 | 1:10 | 0.69 | 53 | alkyl silicate | 21 | Spraying | very good |
| Inv. Example1992 | 9.9 | FC | 13.1 | 1.17 | 2.7 | 1.8 | Existence | Existence | 6 | 43.22 | 1:9 | 0.99 | 49 | alkali silicate | 19 | Spraying | very good |
| Inv. Example1993 | 0.4 | FC | 29.9 | 1.16 | 3.6 | 0.9 | Exisitence | Existence | 7 | 5.6 | 240:1 | 0.40 | 77 | alkyl silicate | 15 | Spraying | very good |
| Inv. Example1994 | 10.5 | FC | 0.21 | 1.27 | 0 | 0.7 | Existence | Existence | 6 | 11.5 | 120:1 | 10.41 | 41 | alkali silicate | 18 | Spraying | very good |
| Inv. Example1995 | 0.4 | FC | 0.22 | 1.11 | 0.05 | 1.0 | Existence | Existence | 7 | 9.9 | 99:1 | 0.40 | 64 | alkyl silicate | 22 | Spraying | very good |
| Inv. Example1996 | 10.5 | FC | 29.5 | 1.27 | 0.02 | 0.7 | Existence | Existence | 6 | 10.5 | 1:99 | 0.11 | 56 | alkyl silicate | 21 | Spraying | very good |
| Inv. Example1997 | 0.51 | FC | 29.9 | 1.18 | 1.6 | 1.5 | Existence | Existence | 6 | 7.6 | 1:3 | 0.13 | 33 | alkyl silicate | 29 | Spraying | very good |
| Inv. Example1998 | 9.8 | FC | 0.21 | 1.23 | 3.5 | 0 | Existence | Existence | 6 | 8.2 | 1:6 | 1.40 | 66 | alkali silicate | 23 | Spraying | very good |
| Inv. Example1999 | 0.52 | FC | 0.22 | 1.27 | 9.8 | 1.8 | Existence | Existence | 6 | 9.1 | 1:1 | 0.26 | 55 | alkyl silicate | 21 | Spraying | very good |
| Inv. Example2000 | 9.9 | FC | 29.5 | 1.17 | 11.5 | 0.9 | Existence | No | 7 | 10.6 | 1:7 | 1.24 | 49 | alkali silicate | 19 | Spraying | very good |
| Inv. Example2001 | 14.8 | FC | 16.02 | 1.49 | 0.4 | 0.7 | Existence | Existence | 6 | 8.4 | 1:5 | 2.47 | 77 | alkyl silicate | 21 | Spraying | very good |
| Inv. Example2002 | 19.9 | FC | 1.75 | 1.49 | 0.6 | 1.8 | Existence | Existence | 6 | 5.3 | 1:1550 | 0.13 | 43 | alkali silicate | 19 | Spraying | very good |
| Inv. Example2003 | 17.9 | FC | 12.4 | 1.34 | 10.6 | 0.7 | Existence | Existence | 7 | 10.9 | 1:55 | 0.32 | 45 | alkyl silicate | 15 | Spraying | very good |
| Inv. Example2004 | 19.5 | FC | 17.2 | 1.29 | 9.5 | 0.7 | Existence | Existence | 6 | 7.8 | 1:121 | 0.16 | 66 | alkali silicate | 19 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table120**

| | Zn-Alloy Particle Properties | | | | | | | | | Mean Size of Zn Metallic particle (µm) | Blond Ratic (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂ or Mg₂Zn₂₁ | # of facets | | | | Ratio of Metal Particle in Dry Coat (mass %) | Base Resin | Coat Thickness inicnwes (µm) | Coating Method | |
| Comp. Example119 | 2.3 | FC | 205.6 | 1.23 | 12.5 | 0.05 | Existence | No | 6 | 10.5 | 1:5 | 0.38 | 77 | alkyl silicate | 25 | Spraying | poor |
| Comp. Example120 | 12.5 | FC | 0.005 | 1.36 | 2.1 | 0 | Existence | Existence | 6 | 12.6 | 1:3 | 3.13 | 77 | urethane-based resin | 25 | Spraying | poor |
| Comp. Example121 | 18.9 | FC | 205.6 | 1.11 | 1.5 | 0.05 | Existence | Existence | 7 | 7.8 | 1:19 | 0.95 | 43 | alkyl silicate | 105 | Brushing | poor |
| Comp. Example122 | 29.5 | FC | 0.005 | 1.07 | 0.05 | 2.29 | Existence | Existence | 6 | 16.8 | 1:100 | 0.29 | 52 | alkali silicate | 165 | Spraying | poor |
| Comp. Example123 | 14.5 | FC | 205.6 | 1.42 | C | 0 | Existence | Existence | 7 | 10.5 | 1:260 | 0.06 | 66 | alkyl silicate | 25 | Spraying | poor |
| Comp. Example124 | 12.5 | FC | 0.005 | 1.38 | 0 | 0 | Existence | No | 6 | 12.6 | 1:3 | 3.13 | 72 | alkyl silicate | 25 | Spraying | poor |
| Comp. Example125 | 18.9 | FC | 205.6 | 1.22 | 0.07 | 0 | Existence | Existence | 6 | 7.8 | 1:19 | 0.95 | 40 | alkyl silicate | 105 | Brushing | poor |
| Comp. Example126 | 29.5 | FC | 0.005 | 1.14 | 0 | 0.07 | Existence | No | 6 | 16.8 | 1:100 | 0.29 | 36 | alkali silicate | 165 | Spraying | poor |
| Comp. Example127 | 2.3 | NO | 10.6 | 1.13 | 0 | 0.02 | Existence | Existence | 7 | 10.5 | 1:256 | 0.01 | 32 | alkyl silicate | 25 | Spraying | poor |
| Comp. Example128 | 12.5 | FC | 5.7 | 1.02 | 22.1 | 0 | Existence | Existence | 6 | 12.6 | 1:200 | 0.06 | 53 | alkyl silicate | 25 | Spraying | poor |
| Comp. Example129 | 0.5 | FC | 6.4 | 1.06 | 25.8 | 0.05 | Existence | No | 6 | 7.6 | 1:167 | 0.00 | 67 | alkyl silicate | 105 | Brushing | poor |
| Comp. Example130 | 23.5 | FC | 3.2 | 1.23 | 22.1 | 0 | Existence | Existence | 7 | 16.8 | 1:300 | 0.10 | 53 | urethane-based resin | 165 | Spraying | poor |
| Comp. Example131 | 14.5 | NO | 4.5 | 1.36 | 21.5 | 0.05 | Existence | Existence | 6 | 10.5 | 1:260 | 0.06 | 67 | alkyl silicate | 25 | Spraying | poor |
| Comp. Example132 | 9.8 | FC | 5.2 | 1.11 | 0.05 | 2.29 | No | No | 7 | 12.6 | 1:100 | 0.10 | 72 | alkyl silicata | 25 | Spraying | poor |
| Comp. Example133 | 4.6 | FC | 1.9 | 1.07 | 0 | 0 | Existence | Existence | 6 | 7.8 | 1:47 | 0.10 | 77 | alkyl silicate | 105 | Brushing | poor |
| Comp. Example134 | 3.2 | FC | 18.5 | 1.42 | 0 | 0 | Existence | No | 6 | 16.8 | 1:32 | 0.10 | 34 | urethane-based resin | 55 | Spraying | poor |
| Comp. Example135 | 29.9 | FC | 12.5 | 1.38 | 0.07 | 0 | Existence | Existence | 6 | 12.6 | 1:345 | 0.09 | 43 | alkyl silicate | 28 | Spraying | poor |
| Comp. Example135 | 7.6 | FC | 9.8 | 1.22 | 0 | 0.07 | Existence | Existence | 7 | 7.8 | 1:390 | 0.02 | 52 | alkyl silicate | 15 | Spraying | poor |
| Comp. Example137 | 29.9 | FC | 7.6 | 1.14 | 0 | 0.007 | Existence | Existence | 6 | 16.8 | 1:301 | 0.10 | 66 | alkyl silicate | 14 | Spraying | poor |
| Comp. Example138 | 0.6 | FC | 6.3 | 1.13 | 36.5 | 3.25 | Existence | Existence | 6 | 10.5 | 1:333 | 0.00 | 72 | urethane-based resin | 118 | Brushing | poor |
| Comp. Example139 | 4.5 | FC | 10.5 | 1.02 | 0.005 | 0 | Existence | Existence | 7 | 12.6 | 1:325 | 0.01 | 40 | alkyl silicate | 22 | Spraying | poor |
| Comp. Example140 | 3.7 | FC | 12.6 | 1.06 | 22.1 | 0 | Existence | Existence | 6 | 7.9 | 1:456 | 0.01 | 36 | alkyl silicate | 54 | Spraying | poor |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table121**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm)m) | Average Value of Aspect Ratio | A1 (mass %) | Si (mass %) | Mg Solid-Solution Phase & Zn-Hg Intermetallic Compounds on Surface of Particles | MgZn₂, Mg₂Zn₁₁, Mg₂Zn₃, facets MgZZn, or Mg₂Zn₃ | # of facets | | | | Ratio of Metal Particle in Dry Coat (mass %) | Base Res in | Coat Thickness (µm) | Coating Method | |
| Inv. Example2699 | 7.5 | FC | 5.07 | 1.42 | 0 | 0 | Existence | Existence | 2 | 23.43 | 0.71 | 10.5 | 74 | alkali silicate | 24 | Brushing | very good |
| Inv. Example2690 | 8.06 | Fc | 7.72 | 1.38 | 0 | 0 | Existence | Existence | 2 | 5.96 | 0.64 | 12.5 | 82 | alkyl silicate | 25 | Spraying | very good |
| Inv. Example2691 | 9.3 | FC | 8.32 | 1.22 | 0 | 0 | Existence | No | 2 | 10.64 | 6.20 | 1.5 | 37 | alkali silicate | 14 | Spraying | very good |
| Inv. Example2692 | 3.5 | FC | 3.04 | 1.02 | 0 | 0 | Existence | Existence | 2 | 16.5 | 3.89 | 0.9 | 48 | alkali silicate | 15 | Spraying | very good |
| Inv. Example2693 | 2.7 | FC | 4.12 | 1.21 | 0 | 0 | Existence | No | 6 | 7.95 | 0.26 | 10.5 | 32 | alkali silicate | 15 | Spraying | very good |
| Inv. Example2694 | 9.2 | FC | 7.81 | 1.47 | 0 | 0 | Existence | Existence | 6 | 7.95 | 0.03 | 299.5 | 45 | alkyl silicate | 15 | Brushing | very good |
| Inv. Example2695 | 9.1 | FC | 1.45 | 1.31 | 0 | 0 | Existence | No | 7 | 9.64 | 16.20 | 0.5 | 37 | epoxy-based resin | 5 | Spraying | good |
| Inv. Example2696 | 7.5 | FC | 9.6 | 1.07 | 0 | 0 | Existence | Existence | 6 | 0.96 | 28.85 | 0.26 | 72 | urethane-based resin | 150 | Spraying | very good |
| Inv. Example2697 | 4.5 | FC | 8.5 | 1.42 | 0 | 0 | Existence | No | 2 | 5.26 | 15.00 | 0.3 | 40 | alkali silicate | 18 | Spraying | very good |
| Inv. Example2698 | 3.6 | FC | 3.2 | 1.05 | 0 | 0 | Existence | No | 7 | 13.5 | 1.20 | 3 | 40 | alkali silicate | 18 | Spraying | very good |
| Inv. Example2699 | 4.2 | FC | 5.7 | 1.02 | 1.5 | 0 | Existence | Existence | 2 | 13.5 | 0.20 | 20.5 | 72 | alkyl silicate | 58 | Spraying | very good |
| Inv. Example2700 | 4.3 | FC | 6.4 | 1.06 | 5.5 | 1.6 | Existence | No | 6 | 9.64 | 1.02 | 4.2 | 40 | alkyl silicate | 21 | Spraying | very good |
| Inv. Example2701 | 4 | FC | 3.2 | 1.05 | 0 | 0 | Existence | Existence | 6 | 16.5 | 2.67 | 1.5 | 36 | alkali silicate | 19 | Brushing | very good |
| Inv. Example2702 | 6.4 | FC | 5.2 | 1.33 | 0 | 0 | Existence | Existence | 2 | 20.59 | 1.26 | 5 | 53 | alkyl silicate | 77 | Spraying | very good |
| Inv. Example2703 | 9.8 | FC | 5.2 | 1.33 | 0 | 0 | Existence | No | 2 | 0.96 | 0.63 | 15.6 | 53 | alkyl silicate | 77 | Spraying | very good |
| Inv. Example2704 | 7.5 | FC | 5.07 | 1.42 | 0 | 0 | Existence | No | 7 | 6.54 | 15.00 | 0.5 | 66 | alkali silicate | 13 | Brushing | very good |
| Inv. Example2705 | 8.4 | FC | 7.72 | 1.38 | 0.5 | 0 | Existence | Existence | 6 | 5.26 | 4.42 | 1.9 | 67 | alkyl silicate | 22 | Brushing | very good |
| Inv. Example2706 | 2.7 | FC | 4.12 | 1.21 | 0 | 0 | Existence | No | 7 | 10.64 | 1.69 | 1.6 | 57 | alkali silicate | 15 | Spraying | very good |
| Inv. Example2707 | 2.64 | FC | 5.5 | 1.22 | 0 | 0 | Existence | No | 2 | 9.64 | 1.06 | 2.5 | 43 | alkyl silicate | 16 | Spraying | very good |
| Inv. Example2708 | 1.59 | FC | 6.7 | 1.14 | 0 | 0 | Existence | Exisitence | 7 | 6.9 | 3.18 | 0.5 | 76 | alkyl silicate | 5 | Spraying | very good |
| Inv. Example2709 | 2.58 | FC | 8.9 | 1.13 | 0 | 0 | Existence | Existence | 6 | 10.5 | 0.52 | 5 | 49 | alkyl silicate | 22 | Spraying | very good |
| Inv. Example2710 | 7.55 | FC | 2.15 | 1.14 | 0 | 0 | Existence | Existence | 7 | 13.5 | 6.29 | 1.2 | 75 | alkyl silicate | 18 | Spraying | very good |
| Inv. Example2711 | 8.01 | FC | 2.54 | 1.13 | 0 | 0 | Existence | No | 6 | 20.59 | 0.94 | 8.5 | 73 | alkyl silicate | 16 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table122**

| | Zn-Alloy Particle Properties | | | | | | | | | Mean Size of Zn metallic particle (µm) | Blend Ratio (Zn Alloy particle Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg1Zn₃ | # of facets | | | | Ratio of Metal Particle in Dry Coat (mass %) | Base Resin | Coat Thickness (µm) | Coating Method | |
| Inv. Example2712 | 1.06 | FC | 3.4 | 1.39 | 0 | 0 | Existence | Existence | 7 | 7.82 | 0.50 | 2.1 | 49 | alkyl silicate | 8 | Spraying | very good |
| Inv. Example2713 | 2.64 | FC | 5.5 | 1.22 | 0 | 0 | Existence | Existence | 6 | 5.26 | 10.56 | 0.25 | 43 | alkyl silicate | 16 | Spraying | very good |
| Inv. Example2714 | 1.53 | FC | 6.7 | 1.14 | 0 | 0 | Existence | Existence | 2 | 7.06 | 1.59 | 1 | 76 | alkyl silicate | 5 | Spraying | very good |
| Inv. Example2715 | 20.5 | FC | 2.15 | 1.14 | 1.5 | 0 | Existence | No | 7 | 0.64 | 8.20 | 2.5 | 75 | alkyl silicate | 18 | Spraying | very good |
| Inv. Example2716 | 19.5 | PC | 2.54 | 1.13 | 5.5 | 1.6 | Existence | Existence | 6 | 46.8 | 3.70 | 5 | 73 | alkyl silicate | 16 | Spraying | very good |
| Inv. Example2717 | 9.51 | FC | 2.77 | 1.38 | 4.5 | 0 | Existence | Existence | 6 | 16.5 | 1.73 | 5.5 | 55 | alkyl silicate | 5 | Spraying | very good |
| Inv. Example2718 | 10.01 | FC | 3.68 | 1.22 | 0 | 1.6 | Existence | Existence | 6 | 13.5 | 1.54 | 6.5 | 48 | alkyl silicate | 22 | Spraying | very good |
| Inv. Example2719 | 3.54 | FC | 5.5 | 1.22 | 0 | 0 | Existence | No | 2 | 0.96 | 2.36 | 1.5 | 78 | alkyl silicate | 18 | Spraying | very good |
| Inv.Example2720 | 4.05 | FC | 2.06 | 1.13 | 0 | 0 | Existence | Existence | 6 | 0.96 | 0.81 | 5 | 52 | alkyl silicate | 8 | Spraying | very good |
| Inv. Example2721 | 8.57 | FC | 4.99 | 1.02 | 0 | 0 | Existence | Existence | 7 | 8.45 | 1.53 | 5.6 | 61 | alkyl silicate | 16 | Spraying | very good |
| Inv. Example2722 | 0.02 | FC | 6.4 | 1.06 | 0 | 0 | Existence | No | 2 | 2.9 | 0.20 | 0.05 | 77 | polyester resin | 47 | Spraying | very good |
| Inv. Example2723 | 25.5 | FC | 3.09 | 1.07 | 0 | 0 | Existence | Existence | 6 | 5.4 | 2.43 | 10.5 | 49 | alkyl silicate | 22 | Spraying | very good |
| Inv. Example2724 | 2.36 | FC | 3.99 | 1.22 | 0 | 0 | Existence | No | 2 | 10.6 | 4.72 | 0.5 | 80 | alkyl silicate | 21 | Spraying | very good |
| Inv. Example2725 | 0.05 | FC | 7.72 | 1.38 | 0 | 0 | Existence | Existence | 6 | 2.32 | 0.07 | 0.75 | 36 | alkyl silicate | 19 | Brushing | very good |
| Inv. Example2726 | 0.04 | FC | 8.32 | 1.22 | 0 | 0 | Existence | No | 7 | 7.8 | 0.20 | 0.2 | 32 | alkyl silicate | 24 | Spraying | very good |
| Inv. Example2727 | 3.22 | FC | 3.55 | 1.12 | 0 | 0 | Existence | Existence | 7 | 7.95 | 0.50 | 10.5 | 55 | alkyl silicate | 19 | Spraying | very good |
| Inv. Example2728 | 4.01 | FC | 2.64 | 1.23 | 0 | 0 | Existence | Existence | 2 | 20.59 | 10.03 | 0.4 | 40 | alkyl silicate | 8 | Spraying | very good |
| Inv. Example2729 | 0.05 | FC | 5.2 | 1.33 | 0 | 0 | Existence | Existence | 2 | 22.5 | 0.06 | 0.9 | 53 | urethane-based resin | 20 | Brushing | very good |
| Inv. Example2730 | 10.5 | FC | 1.9 | 1.27 | 0 | 0 | Existence | Existence | 6 | 4.6 | 0.06 | 3.5 | 60 | polyester resin | 200 | Brushing | very good |
| Inv. Example2731 | 0.05 | FC | 2.5 | 1.05 | 0 | 1.2 | Existence | No | 7 | 4.9 | 5.00 | 0.01 | 38 | alkali silicate | 19 | Spraying | very good |
| Inv. Example2732 | 10.5 | FC | 0.09 | 1.12 | 0 | 0.6 | Existence | No | 6 | 10.5 | 0.08 | 3.5 | 49 | alkyl silicate | 11 | Spraying | very good |
| Inv. Example2733 | 2.54 | FC | 5.5 | 1.22 | 0 | 0.01 | Existence | No | 7 | 8.45 | 1.32 | 2 | 43 | alkyl silicate | 16 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table123**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al mass %) | Si (mass %) | Mg Solid-Solution Phase & Zn-Mg Intermetallic Compounds on Surface of Particles | MgZn₂, Mg₂Zn₁₁, Mg₂Zn₂, MgZn, or Mg₃Zn₃ | # of facets | | | | Ratio of Metal Particle in Dry Coat (mass %) | Base Résin | Coat Thickness (µm) | Coating Method | |
| Inv. Example2734 | 0.08 | FC | 5.6 | 1.36 | 1.5 | 0 | Existence | Existence | 6 | 30.5 | 2.00 | 0.04 | 66 | alkyl silicate | 16 | Brushing | very good |
| Inv. Example2735 | 0.09 | FC | 11.5 | 1.11 | 5.5 | 1.6 | Existence | No | 2 | 49.5 | 0.09 | 1 | 67 | alkali silicate | 33 | Brushing | very good |
| Inv. Example2736 | 0.05 | FC | 19.5 | 1.07 | 4.5 | 0 | Existence | Existence | 2 | 5.9 | 0.10 | 0.5 | 54 | alkyl silicate | 8 | Brushing | good |
| Inv. Example2737 | 1.59 | FC | 6.7 | 1.14 | 0 | 0.1 | Existence | Existence | 6 | 4.52 | 0.32 | 5 | 76 | alkyl silicate | 5 | Spraying | very good |
| Inv. Example2738 | 2.58 | FC | 3.9 | 1.13 | 0.01 | 0 | Existence | Existence | 7 | 5.96 | 0.26 | 10 | 49 | alkyl silicate | 22 | Spraying | very good |
| Inv. Example2739 | 9.8 | FC | 6.32 | 1.22 | 3.2 | 0.9 | Existence | Existence | 6 | 5.5 | 0.15 | 3.5 | 32 | alkyl silicate | 23 | Spraying | very good |
| Inv. Example2740 | 0.18 | FC | 10.05 | 1.14 | 0 | 0.5 | Existence | Existence | 6 | 3.6 | 0.20 | 0.9 | 53 | epoxy-based resin | 30 | Spraying | very good |
| Inv. Example2741 | 7.55 | FC | 2.15 | 1.14 | 0.2 | 0.1 | Existence | Existence | 2 | 16.5 | 2.16 | 3.5 | 75 | alkyl silicate | 18 | Spraying | very good |
| Inv. Example2742 | 0.01 | FC | 0.06 | 1.23 | 1.2 | 0.6 | Existence | No | 7 | 12.5 | 20.00 | 0.0005 | 75 | alkali silicate | 5 | Spraying | good |
| Inv. Example2743 | 12.5 | FC | 2.54 | 1.13 | 0.5 | 0 | Existence | Existence | 2 | 16.5 | 0.06 | 205.7 | 73 | alkyl silicate | 16 | Spraying | very good |
| Inv. Example2744 | 1.06 | FC | 3.4 | 1.38 | 1.5 | 0.9 | Existence | Existence | 2 | 10.9 | 2.12 | 0.5 | 49 | silicate | 8 | Spraying | very good |
| Inv. Example2745 | 0.04 | FC | 8.5 | 1.42 | 0 | 1.2 | Existence | No | 6 | 5.6 | 0.03 | 1.2 | 40 | alkali silicate | 2 | Spraying | very good |
| Inv. Example2746 | 0.06 | FC | 7.72 | 1.38 | 0 | 0.6 | Existence | Existence | 7 | 22.6 | 3.00 | 0.02 | 36 | alkyl silicate | 18 | Spraying | very good |
| Inv. Example2747 | 9.51 | FC | 2.77 | 1.38 | 0 | 0.01 | Existence | No | 7 | 20.59 | 0.88 | 10.8 | 55 | alkyl silicate | 5 | Spraying | very good |
| Inv. Example2748 | 15.5 | FC | 3.68 | 1.22 | 1.5 | 0 | Existence | Existence | 6 | 20.59 | 0.10 | 152.3 | 48 | alkyl silicate | 22 | Spraying | very good |
| Inv. Example2749 | 0.05 | FC | 10.6 | 1.13 | 5.5 | 1.6 | Existence | No | 7 | 9.56 | 0.10 | 0.5 | 67 | acryl-based resin | 77 | Brushing | very good |
| Inv. Example2750 | 8.8 | FC | 5.7 | 1.02 | 4.5 | 0 | Existence | No | 7 | 5.9 | 0.12 | 2.5 | 72 | urethane-based resin | 54 | Brushing | very good |
| Inv. Example2751 | 3.54 | FC | 5.5 | 1.22 | 0 | 0.1 | Existence | Existence | 6 | 6.54 | 0.71 | 5 | 78 | alkyl silicate | 18 | Spraying | very good |
| Inv. Example2752 | 10.5 | FC | 3.2 | 1.05 | 0.01 | 0 | Existence | Existence | 7 | 21.4 | 0.20 | 9 | 34 | epoxy-based resin | 43 | Spraying | very good |
| Inv. Example2753 | 0.07 | FC | 4.5 | 1.24 | 3.2 | 0.9 | Existence | Existence | 2 | 9.8 | 0.70 | 0.1 | 43 | acryl-based resin | 52 | Brushing | very good |
| Inv. Example2754 | 15.5 | FC | 2.54 | 1.14 | 0 | 0.5 | Existence | No | 7 | 6.59 | 17.22 | 0.9 | 45 | alkyl silicate | 19 | Spraying | very good |
| Inv. Example2755 | 4.05 | FC | 2.06 | 1.13 | 0.2 | 0.1 | Existence | Existence | 7 | 6.54 | 0.40 | 10.2 | 52 | polyester resin | 8 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table124**

| | Zn-Alloy Particle Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₁Zn₃ | # of facets | | | | Ratio of Metal Particle in Dry Coat (mass %) | Base Resin | Coat Thickness (µm) | Coating Method2 | |
| Inv. Example2756 | 8.57 | FC | 4.99 | 1.02 | 1.2 | 0.6 | Existence | No | 2 | 16.5 | 0.07 | 120.5 | 61 | polyester resin | 16 | Spraying | very good |
| Inv. Example2757 | 5.8 | FC | 6.4 | 1.06 | 0.5 | 0 | Existence | Existence | 6 | 7.8 | 0.05 | 2.5 | 77 | alkyl silicate | 20 | Spraying | very good |
| Inv. Example2758 | 4.59 | FC | 3.09 | 1.07 | 1.5 | 0.9 | Existence | No | 6 | 16.5 | 0.72 | 6.4 | 49 | alkyl silicate | 22 | Spraying | very good |
| Inv. Example2759 | 9.88 | FC | 4.66 | 1.42 | 0 | 1.2 | Existence | No | 7 | 6.54 | 0.48 | 20.4 | 79 | alkyl silicate | 18 | Spraying | very good |
| Inv. Example2760 | 4.55 | FC | 4.09 | 1.38 | 0 | 0.6 | Existence | Existence | 7 | 6.45 | 0.54 | 9.5 | 76 | alkyl silicate | 19 | Spraying | very good |
| Inv. Example2761 | 2.36 | FC | 3.99 | 1.22 | 0 | 0.01 | Existence | No | 6 | 8.5 | 2.36 | | 80 | alkyl silicate | 21 | Spraying | very good |
| Inv. Example2762 | 0.05 | FC | 7.72 | 1.38 | 1.5 | 0 | Existence | Existence | 7 | 13.6 | 0.71 | 0.07 | 36 | alkyl silicate | 19 | Brushing | very good |
| Inv. Example2763 | 0.04 | FC | 8.32 | 1.22 | 5.5 | 1.6 | Existence | Existence | 2 | 12.33 | 0.04 | 1.1 | 32 | alkyl silicate | 24 | Spraying | very good |
| Inv. Example2764 | 2.64 | FC | 4.55 | 1.11 | 4.5 | 0 | Existence | No | 2 | 16.5 | 0.59 | 4.5 | 43 | alkyl silicate | 5 | Spraying | very good |
| Inv. Example2765 | 0.06 | FC | 10.6 | 1.13 | 0 | 0.1 | Existence | No | 6 | 7.9 | 0.12 | 0.5 | 67 | alkyl silicate | 7 | Spraying | very good |
| Inv. Example2766 | 0.18 | FC | 5.7 | 1.02 | 0.01 | 0 | Existence | Existence | 7 | 10.5 | 0.26 | 0.7 | 72 | epoxy-based resin | 100 | Spraying | very good |
| Inv. Example2767 | 6.31 | FC | 3.52 | 1.27 | 3.2 | 0.9 | Existence | No | 6 | 16.5 | 12.62 | 0.5 | 51 | alkyl silicate | 21 | Spraying | very good |
| Inv. Example2768 | 5.22 | FC | 3.55 | 1.12 | 0 | 0.5 | Existence | No | 2 | 10.64 | 2.09 | 2.5 | 55 | alkyl silicate | 19 | Spraying | very good |
| Inv. Example2769 | 28.5 | FC | 2.64 | 1.23 | 0.2 | 0.1 | Existence | Existence | 2 | 10.5 | 0.93 | 30.5 | 40 | alkyl silicate | 8 | Spraying | very good |
| Inv. Example2770 | 3.52 | FC | 3.15 | 1.36 | 1.2 | 0.6 | Existence | Existence | 7 | 20.59 | 14.08 | 0.25 | 51 | alkyl silicate | 16 | Spraying | very good |
| Inv. Example2771 | 9.5 | FC | 5.2 | 1.33 | 0.5 | 0 | Existence | Existence | 6 | 8.5 | 5.00 | 2.4 | 53 | alkyl silicate | 20 | Brushing | very good |
| Inv. Example2772 | 0.04 | FC | 1.9 | 1.27 | 1.5 | 0.9 | Existence | No | 7 | 0.5 | 0.01 | 7.5 | 60 | polyester resin | 200 | Brushing | very good |
| Inv. Example2773 | 0.06 | FC | 10.5 | 1.12 | 0 | 1.2 | Existence | Existence | 7 | 10.5 | 0.02 | 3.5 | 77 | alkyl silicate | 25 | Spraying | very good |
| Inv. Example2774 | 0.05 | FC | 12.5 | 1.23 | 0 | 0.6 | Existence | Existence | 6 | 11.5 | 0.01 | 3.9 | 43 | alkali silicate | 14 | Spraying | very good |
| Inv. Example2775 | 5.6 | FC | 18.5 | 1.36 | 0 | 0.01 | Existence | Existence | 2 | 36.5 | 0.09 | 2.5 | 52 | urethane-based resin alkali | 112 | Spraying | very good |
| Inv. Example2776 | 0.01 | FC | 11.5 | 1.11 | 1.5 | 0 | Existence | No | 7 | 1.5 | 0.01 | 0.7 | 66 | silicate | 24 | Spraying | very good |
| Inv. Example2777 | 0.08 | FC | 9.6 | 1.07 | 5.5 | 1.6 | Existence | Existence | 2 | 8.7 | 0.04 | 1.9 | 72 | urethane-based resin | 150 | Spraying | very goad |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

**Table125**

| | Zn-Alloy article Properties | | | | | | | | | Mean Size of Zn Metallic particle (µm) | Blend Ratio (Zn Alloy particle : Zn Metal Particle) | Mg Contents to Total Metal Particle (mass %) | Coat Properties | | | | Result of Corrosion Test |
|---|---|---|---|---|---|---|---|---|---|---|---|---|---|---|---|---|---|
| | Mg (mass %) | Fracture Facet &/or Cracks (*1) | Mean Size (µm) | Average Value of Aspect Ratio | Al (mass %) | Si (mass %) | Mg Solid-Solution Phase & Zn-Mg Intermetallic Compounds on Surface of Particles | MgZn₂, Mg₂Zn₁₁, Mg₂Zn₃, MgZn, or Mg₂Zn₃ | # of facets | | | | Ratio of Metal Particle in Dry Coat (mass %) | Base Resin | Coat Thickness (µm) | Coating Method | |
| Inv. Example2778 | 0.03 | FC | 9.5 | 1.42 | 4.5 | 0 | Existence | Existence | 2 | 7.8 | 0.01 | 4.5 | 40 | alkali silicate | 18 | Spaying | very good |
| Inv. Example2779 | 4.25 | FC | 2.36 | 1.33 | 0 | 0.1 | Existence | Existence | 7 | 5.96 | 14.17 | 0.3 | 44 | alkyl silicate | 18 | Spraying | very good |
| Inv. Example2780 | 0.04 | FC | 23.5 | 1.42 | 0.01 | 0 | Existence | No | 2 | 0.06 | 0.50 | 0.08 | 44 | alkali silicate | 39 | Spraying | very good |
| Inv. Example2781 | 0.06 | FC | 101.5 | 1.38 | 3.2 | 0.9 | Existence | Exisitence | 7 | 0.9 | 1.20 | 0.05 | 36 | alkyl silicate | 18 | Spraying | very good |
| Inv. Example2782 | 0.06 | FC | 55.4 | 1.38 | C | 0.5 | Existence | Existence | 2 | 3.5 | 12.00 | 0.005 | 76 | alkyl silicate | 10 | Spraying | very good |
| Inv. Example2783 | 0.07 | FC | 10.3 | 1.12 | 0.2 | 0.1 | Existence | No | 6 | 10.5 | 0.03 | 2.8 | 77 | alkyl silicate | 37 | Spraying | very good |
| Inv. Example2784 | 0.01 | FC | 12.5 | 1.23 | 1.2 | 0.6 | Existence | Existence | 6 | 0.05 | 0.02 | 0.6 | 43 | alkali silicate | 2 | Spraying | good |
| Inv. Example2785 | 0.08 | FC | 18.5 | 1.36 | 0.5 | 0 | Existence | No | 7 | 2.32 | 0.08 | 1 | 52 | alkyl silicate | 160 | Brushing | very good |
| Inv. Example2786 | 0.09 | FC | 11.5 | 1.11 | 1.5 | 0.9 | Existence | Existence | 6 | 20.4 | 1.00 | 0.09 | 66 | alkali silicate | 5 | Brushing | very good |
| Inv. Example2787 | 0.05 | FC | 9.6 | 1.07 | 0.5 | 0 | Existence | No | 2 | 7.34 | 0.01 | 3.4 | 72 | alkyl silicate | 55 | Brushing | very good |
| Inv. Example2788 | 0.06 | FC | 10.05 | 1.14 | 1.5 | 0.9 | Existence | Existence | 2 | 9.4 | 0.04 | 1.5 | 53 | urethane-based resin | 99 | Spraying | very good |
| Inv. Example2789 | 29.9 | FC | 10.5 | 1.36 | 0 | 0 | Existence | Existence | 2 | 16.5 | 0.15 | 200 | 55 | Urethane-based resin | 700 | Spraying | very good |
| Inv. Example2790 | 16.5 | FC | 7.5 | 1.11 | 0.01 | 0 | Existence | Existence | 7 | 7.9 | 1.10 | 15 | 47 | alkyl silicate | 554 | Spraying | very good |
| Inv. Example2791 | 12.5 | FC | 2.6 | 1.07 | 3.2 | 0.9 | Existence | No | 2 | 10.5 | 2.50 | 5 | 79 | urethane-based resin | 688 | Brushing | very good |
| Inv. Example2792 | 9.0 | FC | 3.5 | 1.42 | 0 | 0.5 | Existence | Existence | 6 | 16.5 | 6.53 | 1.5 | 42 | urethane-based resin | 421 | Spraying | very good |
| Inv. Example2793 | 9.6 | FC | 4.5 | 1.33 | 0.2 | 0.1 | Existence | No | 6 | 8.5 | 0.12 | 78 | 36 | urethane-based resin | 651 | Spraying | very good |
| Inv. Example2794 | 7.5 | FC | 1.6 | 1.42 | 0 | 0.5 | Existence | Existence | 2 | 10.5 | 1.50 | 5 | 53 | urethane-based resin | 402 | Brushing | very good |
| Inv. Example2795 | 4.6 | FC | 2.5 | 1.12 | 5.8 | 0.1 | Existence | Existence | 7 | 5.8 | 0.44 | 10.5 | 55 | alkali silicate | 354 | Spraying | very good |
| Inv. Example2796 | 3.8 | FC | 23.5 | 1.23 | 1.2 | 0.6 | Existence | Exisitence | 6 | 1.2 | 1.52 | 2.5 | 42 | urethane-based resin | 504 | Brushing | very good |
| Inv. Example2797 | 0.05 | FC | 9.8 | 1.27 | 15.5 | 0 | Existence | Existence | 6 | 15.5 | 0.05 | 1 | 76 | urethane-based resin | 666 | Spraying | very good |

| | | | | | | | | | | | | | | | | | |
|---|---|---|---|---|---|---|---|---|---|---|---|---|---|---|---|---|---|
| (*1) F : Fracture facets existing, FC : Fracture facets and/or cracks existing, NO : No fracture facet and/or crack | | | | | | | | | | | | | | | | | |

### Example 9

Table 126 shows a method of production of Zn alloy particles. The primary particles were prepared by the gas atomization method. Furthermore, in accordance with the present invention, Zn alloy particles were made to impact each other or Zn alloy particles were made to impact a solid to prepare secondary particles. Further, Zn alloy particles were added to toluene or xylene with a moisture content of 0.3% or less to make slurry and the method of making the particles impact each other or impact a solid was used to prepare secondary particles.

The methods of measurement of the average particle size of the Zn alloy particles and the average value of the aspect ratio are the same as in Example 1. Further, the methods of identification of the Mg solid solution phase and Zn-Mg intermetallic compounds are the same as in Example 3. The method of identification of MgZn₂, Mg₂Zn₁₁, Mg₂Zn₃, MgZn, and Mg₇Zn₃ and the method of measurement of the number of facets are the same as in Example 4.

From Table 126, it is learned that Zn alloy particles of the range of the present invention are prepared.

**Table126**

| | Diameter of Primary Particle (µm) | Mg (mass %) | Al (mass %) | Si (mass %) | Fructure Method | Slurry & Solvent | Mean Diameter of After-Treated Alloy Particle (µm) | Mean Value of Aspect Ratio (Max. D / Min. D) of Alter-treated Alloy Particle | Mg Solid-Solution Phase & Zn-Mg Intermetallic Compounds on Surface of Particles | MgZn₂ or Mg₂Zn₁₁ | Min. # of facets |
|---|---|---|---|---|---|---|---|---|---|---|---|
| Inv. Method1 | 125 | 0.1 | 0.05 | 0.03 | Impact each ether of alloy particles | No | 10.81 | 1.50 | No | No | 4 |
| Inv. Method2 | 3 | 12.3 | 0.1 | 0.07 | Impact each other of alloy particles | Exisitence (Solvent:toluene) | 0.02 | 1.05 | Exisitence | Exisitence | 4 |
| Inv. Method3 | 340 | 19.3 | 0.05 | 0.05 | Impact with solid | Existence (Solvent:xylene) | 33.57 | 1.04 | Exisitence | Exisitence | 6 |
| Inv. Method4 | 60 | 2.7 | 0.05 | 0.05 | Impact | No | 4.12 | 1.21 | Exisitence | Existence | 6 |
| Inv. Method5 | 1000 | 16.7 | 4.32 | 0.03 | Impact | Exisitence (Solvent:toluene) | 194.23 | 1.27 | Exisitence | Exisitence | 6 |
| Inv. Method6 | 30 | 3.5 | 5.43 | 0.65 | Impact with solid | Exisitence (Solvent:xylene) | 3.04 | 1.02 | Exisitence | Exisitence | 6 |
| Inv. Method7 | 80 | 7.5 | 0.05 | 0.05 | Impact with solid | No | 5.07 | 1.42 | Exisitence | Exisitence | 6 |
| Inv. Method8 | 230 | 21.5 | 11.05 | 0.23 | Impact | Exisitence (Solvent:toluene) | 19.54 | 1.06 | Exisitence | Exisitence | 6 |
| Inv. Method9 | 500 | 2.3 | 0.03 | 2.4 | Impact | Exisitence (Solvent:xylene) | 147.23 | 1.35 | Exisitence | Exisitence | 6 |
| Inv. Method1 | 125 | 0.1 | 0.05 | 0.03 | Impact each other of alloy particles | No | 10.81 | 1.50 | No | No | 4 |
| Inv. Method2 | 3 | 12.3 | 0.1 | 0.07 | Impact each other of alloy particles | Exisitence (Solvent:toluene) | 0.02 | 1.05 | Exisitence | Exisitence | 4 |
| Inv. Method3 | 340 | 19.3 | 0.05 | 0.05 | Impact with solid | Exisitence (Solvent:xylene) | 33.57 | 1.04 | Exisitence | Exisitence | 6 |
| Inv. Method4 | 60 | 2.7 | 0.05 | 0.05 | Impact | No | 4.12 | 1.21 | Exisitence | Exisitence | 6 |
| Inv. Method5 | 1000 | 16.7 | 4.32 | 0.03 | Impact | Exisitence (Solvent:toluene) | 194.23 | 1.27 | Exisitence | Exisitence | 6 |
| Inv. Method6 | 30 | 3.5 | 5.43 | 0.65 | Impact with solid | Exisitence (Solvent:xylene) | 3.04 | 1.02 | Exisitence | Exisitence | 6 |
| Inv. Method7 | 80 | 7.5 | 0.05 | 0.05 | Impact with solid | No | 5.07 | 1.42 | Exisitence | Exisitence | 6 |
| Inv. Method8 | 230 | 21.5 | 11.05 | 0.23 | Impact | Exisitence (Solvent:toluene) | 19.54 | 1.06 | Exisitence | Exisitence | 6 |
| Inv. Method9 | 500 | 2.3 | 0.03 | 2.4 | Impact | Exisitence (Solvent:xylene) | 147.23 | 1.35 | Exisitence | Exisitence | 6 |
| Comp. Method1 | 300 | 0.6 | 0.02 | 0.03 | Ball mill | No | 35.45 | 4.3 | Exisitence | Exisitence | 6 |
| Comp. Method2 | 70 | 4.5 | 11.05 | 0.25 | Ball mill | Exisitence (Solvent:toluene) | 6.54 | 5.6 | Exisitence | Exisitence | 6 |
| Comp. Method3 | 500 | 12.5 | 0.03 | 2.45 | Ball mill | Exisitence (Solvent:xylene) | 194.35 | 2.7 | No | No | 6 |
| Comp. Method4 | 60 | 2.7 | 0.05 | 0.05 | Ball mill | No | 15.78 | 5.7 | Exisitence | Exisitence | 6 |
| Comp. Method5 | 800 | 16.7 | 4.32 | 0.03 | Ball mill | Exisitence (Solvent:toluene) | 137.54 | 2.3 | No | No | 6 |
| Comp. Method6 | 30 | 3.5 | 5.43 | 0.65 | Beads mill | Exisitence (Solvent:xylene) | 7.45 | 6.2 | Exisitence | Exisitence | 6 |
| Comp. Method7 | 80 | 7.5 | 0.05 | 0.05 | Beads mill | No | 6.87 | 6.3 | Exisitence | Exisitence | 6 |
| Comp. Method8 | 230 | 21.5 | 11.05 | 0.23 | Beads mill | Exisitence (Solvent:toluene) | 28.74 | 4.1 | Exisitence | No | 6 |
| Comp. Method9 | 500 | 2.3 | 0.03 | 2.4 | Beads mill | Exisitence (Solvent:xylene) | 168.74 | 2.1 | No | No | 6 |

### INDUSTRIAL APPLICABILITY

If coating the high corrosion resistance rust prevention paint containing Zn alloy particles having physical fracture facets and/or cracks of the present invention, it is possible to impart to a ferrous metal material etc. an unprecedented long-lasting, superior corrosion resistance and rust prevention without impairing the coatability and economy. Further, as a result, it is possible to provide a high corrosion resistance ferrous metal material and steel structure enabling the maintenance cycles to be greatly extended.

According, the present invention has high applicability in the ferrous metal industry.

## Claims

1. Zn alloy particles for high corrosion resistance rust prevention paint containing, by mass%, Mg: 0.01 to 30% and optionally one or both of A1: 0.01 to 30% and Si: 0.01 to 3% and having a balance of Zn and unavoidable impurities, having physical fracture facets and/or cracks of a length of 0.01 µm or more or cracks of a depth of 0.01 µm or more, having an average particle size of 0.05 to 200 µm, and having an aspect ratio of maximum size and minimum size (maximum size/minimum size) of an average value of 1 tc 1.5.

2. Zn alloy particles for high corrosion resistance rust prevention paint as set forth in claim 1, **characterized by** having an Mg solid solution phase and Zn-Mg intermetallic compounds on the surface of said Zn alloy particles.

3. Zn alloy particles for high corrosion resistance rust prevention paint as set forth in claim 2, **characterized in that** said Zn-Mg intermetallic compounds include at least one type of compound of MgZn₂, Mg₂Zn₁₁, Mg₂Zn₃, MgZn, and Mg₇Zn₃.

4. Zn alloy particles for high corrosion resistance rust prevention paint as set forth in any one of claims 1 to 3, **characterized in that** said Zn alloy particles are shaped as aspherical polyhedrons with two or more facets.

5. A method of production of Zn alloy particles for high corrosion resistance rust prevention paint as set forth in any one of claims 1 to 4, said method of production of Zn alloy particles for high corrosion resistance rust prevention paint **characterized by** making primary particles comprised of the composition of ingredients as described in claim 1 and having an average particle size of 0.05 to 1000 µm impact teach other or making said primary particles impact a solid to fracture said primary particles to produce Zn alloy particles having physical fracture facets and/or cracks.

6. A method of production of Zn alloy particles for high corrosion resistance rust prevention paint as set forth in claim 5 **characterized by** making said primary particles disperse in an organic solvent to make a slurry, then making the slurry impact itself or making said slurry impact a solid to fracture the primary particles.

7. A high corrosion resistance rust prevention paint **characterized by** containing Zn alloy particles for high corrosion resistance rust protection paint as set forth in any of claims 1 to 4 in 30 mass% or more converted to dry coat.

8. A high corrosion resistance rust prevention paint as set forth in claim 7 **characterized by** comprising a high corrosion resistance rust prevention paint containing, in addition to said Zn alloy particles, Zn metal particles having an average particle size of 0.05 to 50 µm comprised of Zn and unavoidable impurities and by having an x of 300.0 or less when defining, by mass%, (mass% of said Zn alloy particles): (mass% of said Zn metal particles) as 1/x.

9. A high corrosion resistance rust prevention paint as set forth in claim 8 **characterized by** having, by mass%, a content of Mg of 0.01 to less than 30% when the total of said Zn alloy particles and said Zn metal particles is defined as 100%.

10. A high corrosion resistance rust prevention paint as set forth in any one of claims 7 to 9 **characterized in that** a binder of said high corrosion resistance rust protection paint is an inorganic binder or organic binder.

11. A ferrous metal material coated with a high corrosion resistance rust prevention paint as set forth in any one of claims 7 to 9 on its surface, said high corrosion resistance ferrous metal material **characterized in that** a coating thickness is 2 to 700 µm and **in that** Zn alloy particles, or Zn alloy particles and Zn metal particles, are dispersed in the coat.

12. A steel structure **characterized by** being provided with a high corrosion resistance ferrous metal material as set forth in claim 11 as part or all of the same.

## Patentansprüche

1. Zn-Legierungsteilchen für hoch korrosionsschützende, rosthemmende Farbe, enthaltend, in Massen-%,
Mg: 0,01 bis 30% und
gegebenenfalls eines oder beide von
Al: 0,01 bis 30% und
Si: 0,01 bis 3%
und einen Rest von Zn und unvermeidbaren Verunreinigungen,
mit physischen Bruchfacetten und/oder Rissen mit einer Länge von 0,01 µm oder mehr oder Rissen mit einer Tiefe von 0,01 µm oder mehr, mit einer mittleren Teilchengröße von 0,05 bis 200 µm und einem Längenverhältnis von maximaler Größe und minimaler Größe (maximale Größe/minimale Größe) mit einem durchschnittlichen Wert von 1 bis 1,5.

2. Zn-Legierungsteilchen für hoch korrosionsschützende, rosthemmende Farbe gemäß Anspruch 1, **gekennzeichnet durch** eine Mg-Mischkristallphase und Zn-Mgintermetallische Verbindungen auf der Oberfläche der Zn-Legierungsteilchen.

3. Zn-Legierungsteilchen für hoch korrosionsschützende, rosthemmende Farbe gemäß Anspruch 2, **dadurch gekennzeichnet, dass** die Zn-Mg-intermetallischen Verbindungen mindestens eine Art von Verbindung aus MgZn₂, Mg₂Zn₁₁, Mg₂Zn₃, MgZn und Mg₇Zn₃ enthalten.

4. Zn-Legierungsteilchen für hoch korrosionsschützende, rosthemmende Farbe gemäß einem der Ansprüche 1 bis 3, **dadurch gekennzeichnet, dass** die Zn-Legierungsteilchen als asphärische Polyeder mit zwei oder mehr Facetten geformt sind.

5. Ein Verfahren zur Herstellung von Zn-Legierungsteilchen für hoch korrosionsschützende, rosthemmende Farbe gemäß einem der Ansprüche 1 bis 4, wobei das Verfahren der Herstellung der Zn-Legierungsteilchen für hoch korrosionsschützende, rosthemmende Farbe **dadurch gekennzeichnet ist, dass** Primärteilchen, die die Zusammensetzung der Bestandteile wie in Anspruch 1 beschrieben umfassen und eine mittlere Teilchengröße von 0,05 bis 1000 µm aufweisen, aufeinanderprallen gelassen werden oder, dass diese Primärteilchen mit einem Feststoff zusammenprallen gelassen werden, um die Primärteilchen zerbrechen zu lassen und Zn-Legierungsteilchen zu erzeugen, die physische Bruchfacetten und/oder Risse aufweisen.

6. Ein Verfahren zur Herstellung von Zn-Legierungsteilchen für hoch korrosionsschützende, rosthemmende Farbe gemäß Anspruch 5, **dadurch gekennzeichnet, dass** die Primärteilchen in einem organischen Lösungsmittel dispergiert werden, um eine Aufschlämmung zu erzeugen, und dann die Aufschlämmung mit sich selbst oder mit einem Feststoff aufeinanderprallen gelassen wird, um die Primärteilchen zu zerbrechen.

7. Eine hoch korrosionsschützende, rosthemmende Farbe, **dadurch gekennzeichnet, dass** sie Zn-Legierungsteilchen für hoch korrosionsschützende, rosthemmende Farbe gemäß einem der Ansprüche 1 bis 4 zu 30 Massen-% oder mehr, bezogen auf die trockene Beschichtung, enthält.

8. Eine hoch korrosionsschützende, rosthemmende Farbe gemäß Anspruch 7, **dadurch gekennzeichnet, dass** sie eine hoch korrosionsschützende, rosthemmende Farbe umfasst, die, zusätzlich zu den Zn-Legierungsteilchen, Zn-Metallteilchen mit einer durchschnittlichen Teilchengröße von 0,05 bis 50 µm enthält, die Zn und unvermeidbare Verunreinigungen umfassen, und die einen Wert x von 300,0 oder weniger aufweist, wenn (Massen-% der Zn-Legierungsteilchen):(Massen-% der Zn-Metallteilchen), in Massen-%, als 1/x definiert ist.

9. Eine hoch korrosionsschützende, rosthemmende Farbe gemäß Anspruch 8, **dadurch gekennzeichnet, dass** sie, in Massen-%, einen Mg-Gehalt von 0,01 bis weniger als 30% aufweist, wenn die Gesamtmenge der Zn-Legierungsteilchen und der Zn-Metallteilchen als 100% definiert ist.

10. Eine hoch korrosionsschützende, rosthemmende Farbe gemäß einem der Ansprüche 7 bis 9, **dadurch gekennzeichnet, dass** ein Bindemittel der hoch korrosionsschützenden, rosthemmenden Farbe ein anorganisches Bindemittel oder ein organisches Bindemittel ist.

11. Ein Eisenmetallmaterial, das an der Oberfläche mit einer hoch korrosionsschützenden, rosthemmenden Farbe gemäß einem der Ansprüche 7 bis 9 beschichtet ist, wobei das hoch korrosionsschützende Eisenmetallmaterial **dadurch gekennzeichnet ist, dass** es eine Beschichtungsdicke von 2 bis 700 µm aufweist und dass die Zn-Legierungsteilchen, oder Zn-Legierungsteilchen und Zn-Metallteilchen auf der Beschichtung dispergiert sind.

12. Eine Stahlstruktur, **dadurch gekennzeichnet, dass** sie mit einem hoch korrosionsschützenden Eisenmetallmaterial gemäß Anspruch 11 teilweise oder vollständig ausgestattet ist.

## Revendications

1. Particules d'alliage de Zn pour une peinture anti-rouille ayant une résistance élevée à la corrosion, contenant en % en poids, du Mg : 0,01 à 30 % et éventuellement l'un ou les deux éléments parmi l'Al : 0,01 à 30 % et le Si : 0,01 à 3 %, et un restant étant constitué de Zn et d'inévitables impuretés, présentant des facettes de fracture physique et/ou des fissures d'une longueur de 0,01 µm ou plus ou des fissures d'une profondeur de 0,01 µm ou plus, ayant une taille moyenne de particule de 0,05 à 200 µm, et présentant un rapport d'aspect entre la taille maximale et la taille minimale (taille maximale/taille minimale) d'une valeur moyenne de 1 à 1,5.

2. Particules d'alliage de Zn pour une peinture anti-rouille ayant une résistance élevée à la corrosion selon la revendication 1, **caractérisées en ce qu'**elles possèdent une phase de solution solide de Mg et des composés intermétalliques Zn - Mg à la surface desdites particules d'alliage de Zn.

3. Particules d'alliage de Zn pour une peinture anti-rouille ayant une résistance élevée à la corrosion selon la revendication 2, **caractérisées en ce que** lesdits composés intermétalliques Zn - Mg comprennent au moins un type de composé parmi MgZn₂, Mg₂Zn₁₁, Mg₂Zn₃, MgZn et Mg₇Zn₃.

4. Particules d'alliage de Zn pour une peinture anti-rouille ayant une résistance élevée à la corrosion selon l'une quelconque des revendications 1 à 3, **caractérisées en ce que** lesdites particules d'alliage de Zn prennent la forme de polyèdres asphériques à deux facettes ou plus.

5. Méthode de production de particules d'alliage de Zn pour une peinture anti-rouille ayant une résistance élevée à la corrosion selon l'une quelconque des revendications 1 à 4, ladite méthode de production de particules d'alliage de Zn pour une peinture anti-rouille ayant une résistance élevée à la corrosion étant **caractérisée en ce que** l'on fait entrer en collision les unes avec les autres des particules primaires, comprenant la composition d'ingrédients tel que décrite dans la revendication 1 et ayant une taille moyenne de particule de 0,05 à 1000 µm, ou bien **en ce que** l'on fait entrer en collision lesdites particules primaires avec un solide pour les fracturer dans le but de produire des particules d'alliage de Zn ayant des facettes et/ou des fissures de fracture physique.

6. Méthode de production de particules d'alliage de Zn pour une peinture anti-rouille ayant une résistance élevée à la corrosion selon la revendication 5, **caractérisée en ce que** l'on disperse lesdites particules primaires dans un solvant organique pour constituer une suspension, puis **en ce que** l'on fait entrer la suspension en collision avec elle-même ou bien **en ce que** l'on fait entrer en collision ladite suspension avec un solide pour fracturer les particules primaires.

7. Peinture anti-rouille ayant une résistance élevée à la corrosion, **caractérisée en ce qu'**elle contient des particules d'alliage de Zn pour une peinture anti-rouille ayant une résistance élevée à la corrosion selon l'une quelconque des revendications 1 à 4 à un taux de 30 % en poids ou plus, convertis en un revêtement sec.

8. Peinture anti-rouille ayant une résistance élevée à la corrosion selon la revendication 7, **caractérisée en ce qu'**elle comprend une peinture anti-rouille ayant une résistance élevée à la corrosion contenant, en plus desdites particules d'alliage de Zn, des particules métalliques de Zn ayant une taille moyenne de particule de 0,05 à 50 µm, comprenant du Zn et d'inévitables impuretés, et ayant un x de 300,0 ou moins, si on définit, en % en poids, le rapport (% en poids desdites particules d'alliage de Zn) : (% en poids desdites particules métalliques de Zn) comme étant de 1/x.

9. Peinture anti-rouille ayant une résistance élevée à la corrosion selon la revendication 8, **caractérisée en ce qu'**elle comprend, en % en poids, une teneur en Mg de 0,01 à moins de 30 %, quand le total desdites particules d'alliage de Zn et desdites particules métalliques de Zn est défini comme étant de 100 %.

10. Peinture anti-rouille ayant une résistance élevée à la corrosion selon l'une quelconque des revendications 7 à 9, **caractérisée en ce qu'**un liant de ladite peinture anti-rouille ayant une résistance élevée à la corrosion est un liant inorganique ou un liant organique.

11. Matériau métallique ferreux revêtu d'une peinture anti-rouille ayant une résistance élevée à la corrosion selon l'une quelconque des revendications 7 à 9 sur sa surface, ledit matériau métallique ferreux ayant une résistance élevée à la corrosion étant **caractérisé en ce qu'**une épaisseur du revêtement est de 2 à 700 µm et **en ce que** les particules d'alliage de Zn, ou les particules d'alliage de Zn et les particules métalliques de Zn sont dispersées dans le revêtement.

12. Structure en acier, **caractérisée en ce qu'**elle est munie d'un matériau métallique ferreux ayant une résistance élevée à la corrosion selon la revendication 11, en partie ou en totalité.
